(19) **Europäisches Patentamt**

**European Patent Office**

**Office européen des brevets**

(11) **EP 0 847 661 B2**

(12) **NEW EUROPEAN PATENT SPECIFICATION**

(45) Date of publication and mention
of the opposition decision:
**17.11.2004 Bulletin 2004/47**

(45) Mention of the grant of the patent:
**10.11.1999 Bulletin 1999/45**

(21) Application number: **96929390.1**

(22) Date of filing: **02.09.1996**

(51) Int Cl.⁷: **H04R 1/02**, H04R 5/02,
H04R 7/06, H04R 9/06,
H04R 17/00, H04R 1/42,
H04N 5/64, B65D 79/00,
G06F 1/16, G10H 1/32,
G03B 21/56

(86) International application number:
**PCT/GB1996/002145**

(87) International publication number:
**WO 1997/009842 (13.03.1997 Gazette 1997/12)**

(54) **ACOUSTIC DEVICE**

AKUSTISCHES GERÄT

DISPOSITIF ACOUSTIQUE

(84) Designated Contracting States:
**AT BE CH DE DK ES FI FR GB GR IE IT LI LU MC
NL PT SE**
Designated Extension States:
**AL LT LV SI**

(30) Priority: **02.09.1995 GB 9517918
31.10.1995 GB 9522281
30.03.1996 GB 9606836**

(43) Date of publication of application:
**17.06.1998 Bulletin 1998/25**

(73) Proprietor: **New Transducers Limited
Huntingdon, Cambs PE29 6FW (GB)**

(72) Inventors:
• **AZIMA, Henry**
**Cambridge CB2 2TT (GB)**
• **COLLOMS, Martin**
**London NW2 2DA (GB)**
• **HARRIS, Neil**
**Great Shelford Cambridge CB2 5JF (GB)**

(74) Representative: **Maguire, Peter Albert et al
Maguire Boss,
5 Crown Street
St. Ives, Cambridgeshire PE27 5EB (GB)**

(56) References cited:
EP-A- 0 510 814          EP-B- 0 054 945
WO-A-92/03024           WO-A-95/31805
DE-A- 4 121 686          GB-A- 1 447 588
GB-A- 2 010 637          US-A- 2 063 945
US-A- 2 172 066          US-A- 3 247 925
US-A- 3 311 712          US-A- 3 347 335
US-A- 3 422 921          US-A- 3 423 543
US-A- 3 449 531          US-A- 3 636 281
US-A- 4 392 027          US-A- 4 506 117
US-A- 5 025 474          US-A- 5 333 202
US-A- 5 349 575

• PATENT ABSTRACTS OF JAPAN vol. 007, no.
080 (E-168), 2 April 1983 & JP 58 008000 A
(MURATA SEISAKUSHO:KK), 17 January 1983,
• SOVIET PHYSICS TECHNICAL PHYSICS, vol. 37,
no. 3, 1 March 1992, pages 347-350,
XP000335744 DREIDEN G V ET AL:
"INTERFERENCE-HOLOGRAPHIC STUDY OF
OSCILLATIONS OF HONEYCOMB
DIAPHRAGMS"

**Description**

FIELD OF THE INVENTION

The invention relates to acoustic devices for use in or as loudspeakers when driven or excited, usually by electrical signals via electrodynamic means; or in or as microphones when driven by incident acoustic energy, usually to produce a corresponding electrical signal; or in or for other acoustic devices or purposes.

GENERAL BACKGROUND

Conventional loudspeakers in widespread use employ acoustic air-driving elements of so-called "cone" type. The or each cone element is mechanically driven at its smaller end in a pistonic manner, normally by a moving coil of electromagnetic means having an operatively associated fixed magnet assembly mounted to a frame or chassis of the loudspeaker in accurate registration with the moving coil and cone assembly. Antiphase air-excitation to rear of this assembly needs careful baffle/enclosure design to avoid cancellation effects in desired acoustic output from the front of the cone element. Naturally stiff light-weight sheet materials have been used for such cones, as well as very stiff composite sandwich structures that do not bend at all over the working frequency range; even cone elements with tailored reduction of stiffness outwardly with the aim of reducing the effective radiating area with increasing frequency to improve acoustic pistonic effects, including combating increasingly narrow directivity at high frequency. Excellent results are obtainable, e.g. using different sizes/types of cone elements and associated drive units for different frequency ranges, with appropriate electronic "cross-over" circuitry, often all in one loudspeaker housing. However, mass and bulk tend to be substantial. Moreover, sound produced is constrained by its origin with one or more cone elements whose axiality imposes unavoidably high directionality, particularly the higher the frequency; and loudness very noticeably follows the inverse square law of radiation relative to distance, as though from a point-source.

Not surprisingly, much interest and effort has long been directed to use of flatter acoustic elements or diaphragms to occupy less space, hopefully be less directional, and preferably be less weighty. Many proposals have resulted. Some use stretched webs or films of flexible material clamped at their edges in frames, e.g. along with bonded-on current-carrying strips or wires for electro-magnetic drive using large and heavy arrays of perforated magnets, or with applied surface conduction for electrostatic drive from fixed perforated polarised electrode plates requiring large high-voltage transformers and subject to loudness being limited by voltage break-down. Drive operation of these stretched film loudspeakers is inherently pistonic, and there tend to be unwanted modal "drum" and related resonances at discrete frequencies requiring specific damping provisions for satisfactory performance.

Other prior proposals have been based on using panels of expanded or foamed polystyrene edge-mounted in housings and also rely primarily on pistonic action. One example, known under the trade name 'Polyplanar', has conventional moving coil drive. Another, known as "Orthophase" has an array of magnets and coils disposed over its surface to try to achieve uniphase drive. Yet others, as available from Sound Advance Systems of California, have variously shaped flat surface polystyrene panels with complex rear ribbing and thinned edge profiling with a conventional moving coil driver mechanisms mounted to a chassis. Bertagni, from Argentina, has patented such proposals made from bonded expanded polystyrene beads, ostensibly based on how musical instruments produce sound, and requiring complex edge-clamped structures of variable thickness/flexibility, but also understood to rely basically on pistonic action. Yamaha of Japan made a large loudspeaker using a thick polystyrene diaphragm of "earshape" suspended at its perimeter, with moving coil drive requiring a large chassis for registering powerful magnet provision, effectively as a very large solid-cone, pistonic-action loudspeaker with a degree of self-baffling.

In a sense, these other proposals can be seen as being variations on the simple theme of almost any panel having potential for sound amplification, as long-known relative to musical boxes placed on a table top. In the 1970's, this theme was the basis for a self-contained electrodynamic unit known as "Sonance" (see US Patent 3,728,497) and intended for screwing or gluing to virtually any surface, including under a table top. Not surprisingly, absence of any design control over attachment surfaces/ panels, together with no better than moderate efficiency, led only to unpredictable results not satisfactory for high quality sound reproduction.

PARTICULAR BACKGROUND TO INVENTIVE CONCEPTS

It is one object of this invention to provide an acoustic element with non-pistonic action in an improved manner leading, inter alia, to ready implementation as more viable flat panel loudspeakers.

Our approach involved relies on exploiting resonance, i.e. departing radically from long and strongly established presumptions regarding quality of sound reproduction being critically reliant upon avoiding resonance effects.

Our approach involves use of materials capable of sustaining bending waves and generating sound from action of those bending waves. General theory for analysis and calculations concerning bending wave action and related resonances in two-dimensional panel structures is long known and understood, for various purposes. For purposes hereof, we find that finite element analysis is particularly suitable and useful in analysing bending wave action in panel-like structures; and arriving at remarkably effective and compact loudspeakers, including with capability for wide-band performance of great clarity/intelligibility, and well-suited to good quality sound reproduction. Moreover, other valuable passive as well as active acoustic devices and applications arise.

We know of a few prior proposals for sound reproduction based on bending wave action, though none appreciate or foreshadow the analysis, understanding and practical teaching hereof. Two of these proposals emphasise importance of "the coincidence frequency", where the speed of sound in panels subject to bending wave action matches the speed of sound in air. One, see US Patent No 3,347,335 (Watters), proposes a light stiff strip element of composite structure that is excited whilst clamped so that controlled intendedly substantially single-axis bending waves are generated over a specified frequency range for which the panel is deliberately designed for a constant velocity of sound. The particular intention is to produce a highly directional sound output, and operate the strip only above the coincidence frequency, stated as typically in the range 700Hz to 2KHz. A weakened shear property is said to help meet the constant sound velocity desideratum.

Another, see W092/03024, specifically illustrates and describes a one-metre square loudspeaker panel wholly of aluminium alloy having a honeycomb cellular core between facing sheets giving an extremely high stiffness in all orientations. This panel is required to be mounted to a support in a free undamped manner, and is shown mechanically excited at a corner by a vibrator device acting reactively from secure mounting to the support. Only limited working acoustic range is indicated, said to be suited to applications such as public address systems; and operation is again limited to being wholly above the coincidence frequency. Whilst very high mechanical efficiency is indicated for sound energy conversion, the described panel is so stiff that it is difficult to drive, requiring a very large and cumbersome moving-coil driver. In fact, overall efficiency from the viewpoint of electrical input is even less than for conventional loudspeakers. It is also very expensive to make; and rather heavy, particularly with its support frame. Limitations in operating frequency range of this proposal were confirmed, and at first appeared to preclude achieving practical loudspeakers, even for public address applications where there is acceptance of limited range/ quality of sound reproduction but expectation/requirement for quite low-cost units.

However, our own theoretical and practical research and development reveals, as just outlined above, ways of designing and operating a panel as a well-behaved acoustic element that can have a surprisingly wide frequency coverage and remarkable sound distribution and loudness capability, including with low or virtually no perceived directionality and reduced proximity effects as to loudness. Indeed, when appropriately driven by electro-mechanical transducers, a wide range of light-weight flat or curved loudspeakers can be produced, for a wide range of applications, to some of which such loudspeakers hereof seem uniquely suitable, whether or not with wide frequency coverage. It is noted again that other acoustic devices arise of profoundly novel and useful characteristics, as will become apparent. It is also noted that, in contrast to other mathematical techniques, specifically statistical energy analysis, use of finite element analysis could, at least as applied by us, have revealed structural problems as the reasons for frequency limitation of W092/03024 and its poor placement of its drive means being an inappropriate choice.

Essentially, our research reverted to seeking basic understanding of acoustic implications of the phenomenon by which any member with extent mainly transversely of its thickness and capable of bending wave action will have a characteristic complex natural bending wave vibration. Of particular acoustic relevance are contributions of resonant modes at frequencies related to inherent fundamental frequencies for the member concerned to such characteristic complex natural bending wave vibration. Each such resonant mode contributes a particular component of bending wave vibration ranging over said extent of the member between vibrationally most active subareas and vibrationally inactive subareas, corresponding to "anti-nodes" and "nodes"(or "dead-spots"), respectively. We found that combination of the bending wave vibration components from the totality of the natural resonant modes results in grouping of nodes and anti-nodes by superposition and clustering at subareas forming regions of substantially more and less vibrational bending wave activity that can be considered as "combined anti-nodes" and "combined dead-spots", respectively. It was confirmed that most such members have poor acoustical performance, especially at frequencies effectively excluded by W092/03024, i.e. at lower frequencies going below the coincidence frequency and down towards the largest or fundamental wavelengths of possible bending wave vibration for the member concerned.

However, further as foreshadowed above, we have specifically established how, by careful analysis and orderly design, some such members can very greatly out-perform the teaching of W092/03024 by reproducing a surprisingly wide audio frequency range with remarkable clarity when used in loudspeakers. Indeed, the acoustic characteristics of such members can be so well-ordered and/or prescribed that uses are seen for the members, in themselves, as passive acoustic devices for such purposes as providing reverberation or acoustic filtering or setting/altering, or generally improving, room etc acoustics.

Sounding boards are, of course, very well-known for stringed musical instruments such as pianos and the violin family. The making of successful such sounding boards is very old, and they are invariably held effectively rigidly at edges and/or clamped medially. To date, getting good/ acceptable results has tended to be very much of a "black-art" nature, involving quite complex shapes and generally achieved essentially pragmatically, typically by using quite complex proven templates. Indeed, even now, best results are generally accepted as involving highly skilled crafting by hand. This contrasts strongly with what is now put forward herein as being readily achievable, including for essentially free-standing or self-contained devices, by straightforward application of highly practical teachings, including what can be, or can include, very simple panel-like structures. Indeed, affording simpler alternatives to traditional sounding boards, particularly of calculated and orderly design as herein, is seen as an aspect of this invention.

The calculated and orderly design criteria we are now able to put forward, from analysis and experiment in the light of insights gained from profoundly improved explanation and understanding of acoustical bending wave action, are based on achieving beneficial distributions of bending wave vibrations associated with resonant modes in a said member. These improvements are achievable by the invention even for simple shapes of said members that satisfy proportioning criteria taking appropriate account of actual physical parameters relevant to bending wave action, see further below. Also, for any associated transducer means, highly effective location and other criteria are developed herein, see also further below. In relation to this invention herein, the term "transducer means" is intended to encompass, as appropriate, single and plural transducers, as well as any type and structure of transducer that will serve to excite bending waves, whether of electromagnetic or piezoelectric types specifically described later, or of other types, such as magnetostrictive.

Moreover, desired or required effective control of edge vibration effects is readily available by edge framing simply carried by the member itself, even, in some cases, relying only on holding edges or resting same on a surface; and selective damping can be applied at localised medial positions in operative areas of said members. Edge framing may be selective at positions affecting resonant modes at frequencies of interest, but more usually complete, though perhaps with selective enhancement of intermediate damping material. Generally, however, such intermediate damping material should not clamp the edges against desired vibrational action but should be at least in light contact, particular requirements necessarily being determined case-by-case in finalising any product design, but generally not being highly critical. Requirement(s) of or for edge-damping will depend on such factors as testing performance to assure avoidance of "ringing" in desired operation, materials of members hereof and size, including vibrational energy reaching edges. Localised medial damping will also be at areal positions appropriate to frequencies of interest and/or by way of affixed damping and/or stiffening material dimensioned to correspond with wave-length(s) of frequencies of interest.

## GENERAL ASPECTS OF INVENTION

Reverting to our research and development work, poor acoustic performance in said members, considered generally, appears to be influenced by presence and distribution of the above-mentioned dead-spots and combined dead-spots in the transverse extent of the member; and/or the converse, i.e. by spacing and distribution, or spread, of said anti-nodes and combined anti-nodes and/or complexity of combined anti-nodes.

We find, as aspects of invention, that inherently better acoustical performance or action arises from care taken to reduce, preferably as near as practicably eliminate, occurrence of combined dead-spots; and/or the converse of more evenly distributing the anti-nodes and combined anti-nodes over said transverse extent of the member, preferably at or approaching as evenly as practicable. At least in/for embodiments of the invention for application in audio frequency ranges, particular attention is directed to resonant modes at lower frequencies than considered to be of useful interest in W092/03024. It is found to be highly effective for attention to be directed to lower frequency resonant modes in a much broader frequency range of actual operational interest, even to resonant modes that may be below a high-starting such frequency range of interest, i.e. closer or closest to the lowest possible, or conceptual fundamentals, for natural bending wave vibration in the member. The normal variation of bending wave speed with frequency in practical materials and structures is fully accepted in members hereof without finding problems.

We further find, as an aspect of invention that best location of transducer means is at one or more positions coupling to one or more said combined anti-nodes whereby many, preferably a number considered to be a practical maximum or optimum, further preferably all, of said lower frequency resonant modes in an operational acoustic range of interest have vibrationally active anti-nodes -which can be by way of plural transducers on a combination basis using two or more said positions, advantageously in as com-plementary a manner as available relative to the resonant mode vibrations at the positions concerned. Such positions are different from all known prior art, and are even found to be advantageous in use beyond said members with pre-ferentially orderly distribution of said anti-nodes and combined anti-nodes.

A useful practical criterion, and aspect of this invention in relation to preferentially distributing said anti-nodes and combined anti-nodes for a said member, is for frequencies of natural resonant modes of interest to have a numerical sequence or spread that is more even, preferably at or approaching best available, seeking to reduce or avoid unduly close groupings and/or erratic or disparate spacings or differences, basically involving choosing or prescribing and using relevant parameters of said members that reduce clusterings or disparities of spacings of frequencies of natural resonant modes from what generally produces unsatisfactory acoustic action/performance towards better or improved, specifically more satisfactory or at least more acceptable, acoustic performance. Changes in frequencies of resonant modes, including in ordering thereof, can occur for different relative dimensions of said members but are readily calculable and taken into account. Generally, for resonant modes relatable with different conceptual fundamentals, this criterion/aspect is herein seen as "interleaving" of the resonant mode frequencies concerned.

Another useful criterion, and aspect of the invention relative to shape(s) and proportioning of said transverse extents of members hereof, and location(s) of transducer means of "active" acoustic devices, concerns desirability of only a small and orderly spread of transit times for bending waves at resonant mode frequencies relative to the transducer means and reflecting edges of the member, including taking account of the speed of sound, i.e. representative bending waves, being frequency dependent, whether or not in preferred sandwich-type laminated structures, see further below. Close orderly arrivals, say just short of coincidence, of such resonant mode bending waves back at the transducer means after relevant complete traversals of said member involving two edge reflections have highly beneficial effects as to rapid spreading or augmenting buildup of bending wave action out over the whole area of the member.

It is postulated and envisaged herein that acoustic performance of members will get better and better the nearer they approach a substantially uniform spread or distribution of natural resonance modes and related vibrational bending wave action over at least the intendedly operative area of the member. In practice, achievement to date has generally been rather less, though highly impressive as to acoustic results. Indeed, the advances hereof can be taken up to greater or lesser extents as a matter of choice, and at least transducer locating, design and mounting teachings hereof can have very useful application even where care is not taken to improve resonant mode distribution and localised complexity.

## FURTHER PRIOR PROPOSALS

It is believed to be convenient, at this point, to review two prior patent specifications first published after the priority dates for this application, perhaps particularly as it is found feasible, often advantageous, to implement the present invention for loudspeakers using piezoelectric transducers. WO 95/31805 and WO 96/01547 both concern, *inter alia*, loudspeaker proposals by way of piezoelectric driver patches, whether applied to panels of lids of lap-top computers or to fold-out panels of compact disc players, or within shells of video display units or disk drives of computers, or to light-weight polystyrene tiles, or supplied as an add-on sound unit for mounting to other surfaces. Illustrations of preferred embodiments show substantially centrally located paired piezoelectric drive patches: and much is made of such things as hollowness of associated lap-top lid, and other specific three-dimensional housings including a particularly preferred loudspeaker housing of triangular-section; also of various steps proposed for avoiding panel resonances. These latter steps are clearly merely of an *ad hoc* or "try-it-and-see" nature, involving the addition, as and where found to be effective, of damping and stiffening strips until sine-wave-sweep tests show unwanted vibration/resonance to have stopped. Compared with teaching hereof, there is no indication of any significant understanding of the mathematics and physics of the processes involved in generating sound by bending wave action in panels; and no appreciation of the contribution to be gained from orderly panel design and transducer location etc for good acoustic performance. At least mostly, the paired piezoelectric patches are applied to surfaces incapable of bending wave action as herein. It is not clear that significantly more is involved than was the case for the above-mentioned much older intendedly and herently pistonic acoustic driver units to be affixed to any surface. Certainly, teaching of these prior references appears to see beneficial contributions from hollow volumes of housings, usually with problems to be solved by reducing resonances. That conforms to historical presumptions, thus contrasts starkly with this invention, where resonances are basic mechanisms to be positively predetermined/encouraged, including optimised/maximised in an orderly manner, for useful acoustic performance/action of panels in themselves; also positively utilised in combination with predetermined asymmetric location of advantageous carefully designed electromagnetic transducers that include moving-coil as well as piezoelectric types.

## SUMMARY OF THE INVENTION

The understanding we have gained leads to many ways and view-points in and from which this invention is novel and can be characterised in various aspects, for itself and relative to the known prior art. Reference is directed to the claims, particularly to independent claims Nos. 1,6,10, 17,19,22,23,35,37,40,47,49,65,105 and 109, representing a selection of such aspects of this invention, though, as will become clear, there are more and other alternatives, both general and specific:-

## PRACTICAL IMPLEMENTATION OF THE INVENTION

Our basic research and development has particular relevance to practical implementation of this invention, and is now reviewed in more detail.

Many factors actually or potentially contribute to bending wave action, thus frequencies and distribution etc of vibration nodes associated with natural resonant modes in members hereof. As first done for members where relevant materials parameters contributing to actual bending wave action, specifically to bending stiffness, shear etc, were kept substantially the same in all or at least particular directions of interest, it was established that shape and dimensions of the members make particularly significant contributions of great value to realising inventive aspects and achieving practical device embodiments.

Dimensions, as such, for any particular shape, are mainly effective by their inherent contributions to determining lowest natural frequencies of possible actual bending wave vibration for the member, even to conceptual frequencies effectively as different fundamentals for related frequencies of natural resonant modes, including by reason of angled relation of directions of dimensions concerned.

As to shape, particularly proportions as to relative values of defining geometric parameters, it first proved useful to consider simple geometries, specifically members bounded by rectangles, or by closed conic sections, i.e. elliptical; and to do so in the above-mentioned context of a said member that is substantially isotropic in bending stiffness in all directions, or at least much the same parallel to sides of a rectangle or to major and minor axes of an ellipse or super-ellipse, though see further below regarding impact and utility of anisotropy.

SPECIFIC APPLICATIONS/FURTHER ASPECTS OF INVENTION

For a rectangular shape, an artificial first construct found to be of particular practical value concerns distributions of vibration anti-nodes associated with natural resonant modes, and of related dead-spots, that would theoretically arise for each of the different lengths of its sides when considered alone, i.e. each as a single axis for bending wave action, as if there could be no other bending action in the member. This is so great an over-simplification as to be surprising that any useful results arise. However, it is routine, mathematically, including for computer modelling by commercially available maths program packages, to generate data representing such artificially theory. Thus, frequencies of fundamental and natural resonant modes can be calculated/computed for any dimensional values, and corresponding patterns for vibrational energies at various positions or elemental sub-areas in the transverse extent of the member concerned generated individually for any mode, including usefully presented in tables/matrices, or graphically. Such individual patterns for related resonant modes can be superposed at will as components of a composite pattern of at least part of notional one-axis natural bending wave action that will have complementary distributions of vibrationally more/most active regions and vibrationally less/least active regions; and selection for such modes to be superposed, thus parts of notional one-axis natural bending wave actions to be considered, is proposed on the basis of proven effectiveness for purposes hereof. Such composite pattern generation were used to find orthogonally related dimensional values (corresponding to the different sides of a rectangular shape) for which respective said composite patterns will, as notionally superposed, produce at least some useful degree of "matching" between the vibrationally more/most active regions of one of the composite patterns concerned and the vibrationally less/ least active regions of the other of the composite patterns concerned, and *vice versa.*

This matching can be seen, albeit through admittedly artificially simplified/idealised approximation, as aimed to reduce the coincidences that would otherwise contribute to the afore-said combined dead-spots of members or panels to which teaching hereof has not been applied. Moreover, this matching can be sought to any achievable beneficial extent, including maximally or optimally for reducing or minimising notional such contributions to combined dead-spots, at least within limits of our approximations. The selected resonant mode frequencies for the two composite patterns involved can, preferably do, include the lower orders of interest or relevance in or to an acoustic range of desired operation, as outlined above, even including below same if beneficial.

In theory, perhaps, best matching should be sought for as many as possible of the resonant modes and corresponding composite patterns of our above construct. In practice, and as applies to the above modal frequency interleaving, very satisfactory results have been obtained from limiting attention individually and collectively to particular said lower orders of resonant modes, say up to the third orders of each conceptually fundamental frequency (making nine in all for said transverse extents of the two-dimensional said members), preferably up to at least the fifth orders (total twenty-five), perhaps up to or beyond the seventh orders, for maximising or optimising matching. Better modelling, as later done using finite element analysis, will usually show other resonance, including lowest modes affected or attributable to diagonal dimensions and/or non-bending wave modes, which are additional to considerations for this approximate construct. In successful actual development work, the resonant bending wave modes taken into account in these matching routines were at frequencies going consecutively, considered as a single combined sequence, from conceptual frequencies treated as fundamentals for the two sides of a rectangle up to over twenty, usually thirty or more, preferably at least twenty-five. Results show very satisfactory purely consequential orderliness, spread and acoustic action/performance for higher frequency resonant modes.

Interestingly, and valuably in practice, particular aspect ratios for side dimensions of a rectangular shape with isotropic bending stiffness emerged as being of use-fully general application. One such preferred and highly effective aspect ratio is at about 13.4% from square (i.e. out of equality of sides), specifically at 0.882 or 1.134; and much of our early development work has used this value. However, another potentially valuable aspect ratio has been noted at about 37% out of square, though damping control of at least some of lowest resonant modes may be particularly advisable/valuable. There are others that can be viable, too, at least if lower efficacy is acceptable, whether or not comparably effective, or merely adjudged acceptably so for particular applications/ devices and related desired operational frequency ranges, or (e.g. in specific loudspeaker implementations) utilised on a compromise basis including minimising contribution(s) to acoustic action/ performance of unwanted frequencies of resonant modes, perhaps particularly below desired operational frequency range, see also further below regarding location of transducer means.

As should be abundantly clear, the above construct involving superposition of composite patterns is not put forward as a true representation of actual natural bending wave vibration in any particular said member, only as an approximation found to have practical value. The actual natural bending wave vibration in any said member will be very complex, making effectiveness of the construct all the more surprising. Thus, there must be interactive effects between such main conceptually fundamental-related bending wave actions, as notionally considered in the above construct for two side dimensions and directions of substantially rectangular shapes, including localised bending for one affecting the other; also edge effects, including by way of reflection and damping, further to contribute to overall transverse bending wave vibration and distribution of vibrationally more/most active areas or combined anti-nodes. Whilst such effects can generally be expected to be helpful and/or of little impact for higher frequencies of resonant modes, with necessarily higher individual node populations of said transverse extent of the member, we have further established that particular unwanted vibrations and/or vibrational reinforcements can be dealt i.e. as overall or selective edge damping and/or selective localised medial damping at relevant position(s) of said extent.

There is, however, one effect that it has been found can be beneficial to take into specific account, at least as useful refinement, namely, for a substantially rectangular said member, the resonant modes associated with is diagonal dimension. Assuring at least mainly helpful contribution to desired distribution(s) of resonant modes can be aided by cropping or trimming or curving of corners, or forming to such shapes, though see further below regarding anisotropy of bending stiffness. Sensible practical limits for consideration of this refinement as to resulting shape and transverse area reduction arise naturally from approaching some other analysable shape, e.g. super-ellipses or at least regular polygons, say preferably not reducing the diagonal beyond larger or smaller of side dimensions. Useful, though not essential, further refinement is seen in such corner cropping or trimming being differential, at least for corners of different diagonals, whether to different extents for each, say in a mutual relationship producing a similar "matching" (for diagonals-related resonant modes) to that above for the side dimensions, and perhaps further relative to or effectively continuing or complementing or usefully compounding the sides-dimension matching ratio. Application of effective shortening to one diagonal only can be enough, in practice, say to each end equally for a resulting shortening to medially between full diagonal dimension and longer side dimension, preferably to attain progression of side and diagonal dimensions at or approaching maintaining or repeating above preferential aspect ratio for successively increasing values, conveniently so approaching by substantial even-ness of dimensional differences or a straight-line dimensional relationship. Satisfactory shortening of only one diagonal of a said rectangular member, at least idealised for isotropy of bending stiffness, is seen at about 15% or about 10% short for above about 13.4% and about 37% aspect ratios, respectively.

The aforesaid construct, involving generating/ using data for theoretical one-axis bending wave actions for each of differing boundary-defining sides of generally rectangular members, for selected natural resonant modes; and/or cumulative superposition as composite respective patterns; and/or combination of such composite patterns to determine viable respective dimensions and/or ratio(s) of sides to desirably reduce combined dead-spots and/or effectively place anti-nodes or combined anti-nodes of one in dead-spots or combined dead-spots of the other, afford individual and/or combination aspects of this invention: as does one or more of selected orders of resonant modes being low in the range of acoustic frequencies of interest. Indeed, wider inventive application is seen to other shapes for a said member and boundary- or shape-defining geometrical parameters therefor, along with corresponding constructs concerning at least notional fundamental frequencies and related resonant modes in particular directions or axes that need not be orthogonal nor directly related to such geometrical parameters, e.g. for straight-sided shapes such as unequal-sided quadrilateral or regular or irregular polygonal or parallelogram, or curved-sided shapes such as conic sections or circular with variable radial slotting, or super-elliptical (see below) with power factors as well as major/minor axes ratios; or combinations of such shapes, indeed anything otherthan a member of too narrow width to support useful two-dimensional resonant modal complexity.

Certainly, such extension is available from other more sophisticated mathematical techniques, e.g.

FEA, that are available, including computer program packages; and permits substantially full analysis of overall natural bending wave vibration including and according to identifiable causative resonant modes and generation of relevant data, including plotting, from appropriate definition of boundary shape, for inspection and manipulation for beneficial frequency inter-leaving and/or for pattern matching in distributions of vibrationally more/most active anti-nodes/combined anti-nodes and vibrationally less/least active deadspots/combi-ned dead-spots, for desirably more even distribution of resonant modes, thus reduction of at least combined dead-spots.

Such inspection and manipulation according to varia-tion of one or more of two or more geometrical parameters may be particularly readily facilitated using a table or matrix of vibration energy contents of a grid of elemental subareas of said transverse extent, particularly by changes that take place with parameter variation, preferably as one or more ratios of such parameters. Energy summations for the subareas and generally will give required information.

Further aspects of invention arise herein for such distributed, say grid-related, energy summation as method or means to achieve maximal or optimal or acceptable distribution of vibrational anti-nodes/combined anti-nodes associated with natural resonant modes transversely of said member.

Turning to elliptical shapes of members capable of bending wave action, also first considered where there is isotropy of bending stiffness at least in directions of its major and minor axes or universally, the natural bending wave vibration concerned includes resonant modes contribut-ed by hyperbolic and/or angled components from peripheral curving and going through the major and minor axes. The major and minor axes are found to be significant, particul-arly their ratio. A practical ratio of major and minor axes for true elliptical shapes has been determined at about 1.182, with a viable alternative (interestingly sim-ilarly to above for rectangular) at about 1.34.

It will be appreciated that super-ellipses effectively involve outwardly deforming the curved boundary of a true ellipse between its major and minor axes going so far as to produce shapes approaching, seemingly rather similar to curving of the above-mentioned diagonal-reducing corner treatment of a rectangular shape, though see further below regarding locating transducer means). There is an additional variable represented by power factor 2n as well as major and minor axes a and b and their ratio a/b in the relevant boundary-defining function

$$(x/a)^{2n} + (y/b)^{2n} = 1$$

which leads to two possibilities, namely determining preferred major/minor axis ratio $a/b$ for any particular value of $n$ or determining preferred value of $n$ for any particular ratio a/b. Examples we have processed up to the date of this Application are between 1 and 2 for $a/b$ and for $n$ (i.e. from 2 to 4 for $2n$); such processing again being for isotropy of bending stiffness and under the simplifying constraint of equality of area. Interestingly, the value 1.1 for $a/b$ appears unpromising. However, the value 1.15 is a good one, viz

    for $a/b = 1.15$, $n = 1.9$

    for $n = 1.8$, $a/b = 1.13$ to $1.22$ or $1.32$

indicating advantageous spreads or tolerances on practicable inter-relationships of $n$ and $a/b$. Also the value of 1.4 for $a/b$ represents a viable alternative, viz

    for $a/b = 1.4$, $n = 1.37$ to $1.40$.

Extensive, but essentially routine, processing work on other values of $n$ and $a/b$ could lead to other viable possibilities, and co-optimisation of $n$ and $a/b$ together may produce, whether much as in first-given above examples or going further, one or more particularly advantageous super-elliptical shape(s).

One composite shape investigated is of substantially super-elliptical and substantially true elliptical parts merged with a common major axis favouring said elliptical part by about 1.1 - 1.3:1, and with an aspect ratio of favouring said major axis by about 1.2:1 relative to width.

Interestingly, it has been established that regular limiting cases of rectangular and elliptical shapes in terms of sides and axes being equal, i.e. for respective square and circle shapes that are isotropic as to bending stiffness etc, result in members having significantly less good acoustic action or performance, though the teaching later as to location of transducer means has been found to have some useful gain for shapes proportioned other than as preferred above, including circular and square. However, for said members as particularly valuable and advantageous acoustic devices or elements, compelling desiderata, and aspects of invention, are seen in irregularity/inequality (as to shape) and asymmetry (as to locating transducer means below); also in having at least two angled axes/directions or dimensions giving rise to different conceptual frequencies of natural vibration, including for shapes with such axes/directions or dimensions not necessarily at right angles to each other, such as diagonals of a rectangle, and applicable generally, e.g. to sides and/or diagonals of other quadrilaterals or sides and angles and/or apex-to-apex lines; and in there being, for each of basic shape types, one or more predetermined relationships between conceptual frequencies that leads to beneficial inter-leaving of resonant mode frequencies and/or "filling" of at least some, preferably up to as many as practical, of what would, for other dimensional etc relationship, constitute combined dead-spots.

Significantly, it has further been established that said members with shape variations by different relative values or ratios of defining parameters than specifically put forward above can be used in a generally equivalent manner. Thus, the above analyses, including the construct, are equally applicable to members with any particular anisotropy of bending stiffness, i.e. different in directions along length and breadth of a rectangle or parallel to major and minor axes of true ellipses or a super-ellipses, and will produce corresponding preferential aspect ratios etc. Perhaps most interestingly in practice, the converse is likewise available, i.e. determining degree of anisotropy or ratio of bending stiffnesses that produces effective equivalence to, even "converts" or "mimics", for given variant shapes, the idealised isotropic cases we analysed first, thus use the same preferential aspect ratios etc as above, and gain some or most if not all the latter's beneficial acoustic action or operation, at least so long as the given shape is not too narrow to support useful complexity and interaction of its total resonant modes.

Desired anisotropy of bending stiffnesses can be achieved by different "grain", e.g. reinforcing fibres or lay or weave, of surfacing skins or sheets applied to a core in a said member of composite laminated sandwich structure, including differently oriented or relatively angled "grain" to each side or as multiple layers to either side. There are, of course, core-related parameters, such as directionally differential shear moduli or values, that can influence bending stiffnesses. Moreover, for a rectangular said member, diagonal effective bending stiffness(es) or resistance(s) can be likewise adjusted relative to length/width bending stiffnesses (which may be equal or unequal) so as to get some if not all of benefit otherwise obtainable from shortening at corners, e.g. trimming or cropping them. Another way to vary bending stiffness in any direction is by curvature of the member itself, whether in only one direction or even in two or more directions, and whether along or at an angle to or transversely of any particular direction, say one or other of directions associated with parameters defining shapes and/or conceptually fundamental frequencies (hereinafter, including in the Claims, most often referred to simply as "conceptual frequencies"). It is further possible to have varying bending stiffness along any axis or direction, including progressive or otherwise over area, whether by combinations of "grains" in skin layers of sandwich structures or differences areally in core properties, say thickness decreasing or increasing from edges inwardly or whatever.

Aspects of this invention arise from predetermining differential bending stiffnesses in different directions in a said member in order to achieve at least some useful results in terms of distribution(s) of vibrational nodes and combined nodes and/or dead-spots and combined dead-spots associated with natural resonant modes and acoustic action/performance.

Other aspects of invention arise from accepting, or seeking, or modifying, some effect(s), such as arising from augmenting due to edge-reflections or interaction from positional proximity or superposition of nodes for some resonant modes, or other differential effect(s) comparing one resonant mode with another; say in terms of having some particular "voicing " of the resulting acoustic performance/action of the member concerned. Modification can be by way of general or selective edge damping or localised medial addition of damping material, even by holes or slots formed in the member. An aspect of this invention also resides in seeking and assuring more even distribution of vibrational anti-nodes and/or combined anti-nodes being limited to lower orders of resonant modes, say at or up to at least third order and/or not more than seventh order (whether determined absolutely from conceptual frequencies or relative to lowest frequency modes within and/or below a frequency range of interest), including consequential effect(s) on operation at higher frequencies, and proving highly benef-icial in extending usefully achievable range of operation well above the upper frequencies considered limiting in WO/92/03024.

More specific aspects of invention include operating over a wider frequency range than W092/03024; and/or removing its limitations to operating only above the coincidence frequency, for example to operating frequency ranges that include the coincidence frequency and/or are wholly below coincidence frequency.

Members embodying aspects of this invention by having designedly distributed resonant modes of carefully related conceptual frequencies of natural bending wave vibration can, in themselves, serve as useful acoustic devices. One way is for reverberation purposes including to improve or desirably alter acoustic characteristics of some associated acoustic device, such as a conventional loudspeaker or driver unit or equipment including same. Another way is as an acoustic filter converting between incident and desired acoustic ranges. Further ways include for desirable environmental "colouring" or "voicing" purposes, say for a room, including effectively removing or compensating for unwanted effects (as could otherwise be due to room shape or proportions or contents. Such uses are referred to herein as "passive".

However, use of members embodying this invention is envisaged in or for what are referred to herein as "active" devices or purposes, requiring association with transducer means, and found to be dramatically beneficial for loudspeakers. Particularly, it has been established that location of the transducer means can greatly influence acoustic action or performance, leading to various more aspects of invention.

LOCATION OF TRANSDUCER MEANS

Specifically, we have established that there are much better positions for launching bending waves into a device as or for a loudspeaker and utilising a generally rectangular said member than what is shown in W092/03024, namely at a corner, or substantially centrally as in WO 95/31805 and 96/01547. This is the case even after above-discussed improvements as to substantially isotropic such members being designedly out of the square shape mentioned in WO92/03024, or predetermination of anisotropy for other square or out-of-square shapes.

Improvements hereof in determining location(s) for transducer means also began with the above construct concerning notionally unidirectional bending wave vibrations and their combination to obtain improved resonant mode distribution. A successful method and means for preferred transducer site identification resulted from finding those positions at which the number of dead-spots for any of the resonant modes concerned is low or least and/or the number of vibrationally active resonance anti-nodes concerned is high or highest, i.e. in terms of the resonant modes taken into account for "filling" of what would otherwise be combined dead-spots. Specific side dimension proportions, for a substantially rectangular said member with the above about 15% out-of-square aspect ratio, emerge readily from such further analysis as coordinates for transducer sites at about 3/7, 4/9 and 5/13, giving 24 possible sites from each corner and ignoring duplications. For any particular transducer means, it is preferred that each location for transducer means use two different ones of these proportional coordinates along different length sides, whether single transducer means or each of plural transducer means (as can be advantageous for power and/or frequency cover), further preferably combining 3/7 and 4/9. Close approximations to these proportionate coordinate sites came first from the above notional construct.

Interestingly, these same proportionate coordinate values apply preferentially and beneficially for location of transducer means in any member of substantially rectangular shape and capable of vibrational bending wave action involving resonant modes. Specifically, this includes such members not fully satisfying the above aspects of invention in terms of their dimensional proportions and corresponding isotropy/ anisotropy; and/or having "bulk" damping, i.e. limitation of distance of travel at significant or any energy levels of bending wave vibrations induced by transducer means due to losses in the material(s) of the member itself, that, in view of area or some dimension of that member, results only in low or no vibrational bending wave energy being reflected, even reaching, one or more edges of the member wherever the transducer means may be located in that area, thus without significant reflections from such edges. Whilst such members will not be as effective as members that are preferentially proportioned as in earlier aspects of this invention, whatever potential they have for operation as loudspeakers is much better realised by applying the above dimension proportioning criteria to locating transducer means relative to one or more corners (or notional corners if subject shortening ends of one or more of its diagonals), thus leading to minimum spacing from side edges of such members of at least about 5/13 or 38% of its width and length dimensions. In practice, quite surprisingly improved results arise, in terms of intelligible acoustic output, including in rather marginal and quite lossy materials/structures, at least compared with substantially central or edge-adjacent mounting of transducer means. Tolerances mentioned later apply regarding transducer location appear capable of further relaxing, the limits being inevitably materials-dependent and feasible materials being too great fully to investigate to date.

The criteria developed in these considerations for determining at least minimum spacings from edges of a substantially rectangular said member for mounting of transducer means, are beyond the teaching of the known prior art, even as to having arisen by serendipity alone.

Generally, analysis as taught herein leads not only to preferred locations for transducer means, but also to a further matter/aspect of great practical value, namely, relative to any particular appropriate location(s) for its transducer means, capability to identify actual locations where any selective damping should to be applied to deal with any particular undesired frequency or frequencies.

Regarding true elliptical shapes of said members, main series of resonant modes associated with major and minor axes are of elliptical and hyperbolic natures, as noted above, and preferential locations for transducer means are, for the above-noted 1.182 major/minor axes ratio, at coordinate positions relative to centre of about 0.43 and 0.20 along half-major and half-minor axes, respectively. It will be noted that orthogonal coordinates are not really appropriate, and it is only with appropriate coordinates, specifically elliptical/cylindrical, that values emerge for transducer locations that are of general application to other elliptical shapes, i.e. different major/minor axes ratios, including as arising from application of anisotropy of bending stiffness for non-ideal major/minor axes ratios (i.e. other than 1.182), and enable producing Cartesian equivalents in each case via trigonometric relationships.

As for substantially rectangular members hereof, more precise analysis, or experiment, can determine possible small adjustments that may be beneficial, also other site options for transducer means, including to concentrate on coupling particular resonance modes, though efficiency of operation is very much related to each transducer means coupling to as many resonant modes as practicable without adverse effects.

It is noted that above-specified preferred sites for transducer means are well off-centre for rectangular said members, including off centre-lines for width and length; and are further somewhat displaced from diagonals, i.e. truly asymmetric. Also preferred sites for transducer means of substantially elliptical shapes of members hereof are off-centre and off major and minor axes. Moreover, preferred proportionate coordinates are substantially maintained regardless of isotropy/anisotropy of bending stiffnesses, directly as Cartesian co-

ordinates for sides of substantially rectangular said members and indirectly relative to underlying elliptical/ cylindrical coordinates for substantially elliptical said members.

Indeed, it is an aspect of this invention that designated sites for at least one transducer means be of this nature, i.e. off-centre by reason of coupling at preferred combined anti-node positions, and off-axes for both substantially rectangular and substantially true elliptical shapes of members hereof, typically off-diagonal by between about 7% and about 12.5% of length and width from centre-lines, and by about 20% or more of major axis and about 10% of minor axis lengths, respectively.

For super-elliptical shapes, we got intuitively surprising results, in that preferential locations for transducer means, appear to be much more akin to what was found best for circles than for either of rectangles or true ellipses, specifically as a ring of possibilities at about 70% of distance from centre to boundary.

However, as for rectangular shapes, it is noteworthy and an aspect of invention hereof, that preferred sites for transducer means are not only plural in number, but are at positions well off major and minor axes or centre-lines, though generally more so, i.e. from about 10% (true ellipse minor axis) to about 35% (for super-ellipse), preferably in prescribed or prescribable manner.

Whilst there may be complex shapes for which preferred locating sites for transducer means may be otherwise, it is an aspect of this invention, at least for preferred embodiments of generally simple shapes, to have such possible sites individually at asymmetric positions off axes or lines that join points of maximum/minimum dimensions or directions of defining geometrical parameters, and that may be in related one or more sets that, in themselves, are in centre-symmetrical or other orderly arrangement as a group for each set. The above relatively beneficial results from geometrical location of transducer means as herein for substantially rectangular shapes are seen as having general inventive application to panel members not proportioned etc as preferred herein.

When used with one or more transducer means in panel loudspeakers, preferred said members hereof operative over their whole areas, i.e. up to edge boundaries as above, have bending wave vibration well distributed substantially over such whole areas from the transducer means to the edge boundaries. Moreover, resulting acoustic action need not be directional (as in US 3,347,335 above), but may be for at least part of such output of loudspeakers, e.g. if desired or required. This areal spread of bending wave vibration greatly reduces perceived proximity-dependent loud-speaker loudness effects; and, where not deliberately operative with directionality, with perceptibly much better spread than typically rather narrow and narrowing beam effect above lowest frequencies, in loudspeakers using cone elements. Moreover, resulting vibration action can, except for lowest frequencies, be used from both front and back of a said member as there will be little or none of the anti-phase problems attaching to cone element loudspeakers.

## TRANSDUCER MEANS

Reverting to transducer means, as such, highest powers and best quality of sound reproduction from loudspeakers are achieved using magnet-and-coil drivers, ratherthan the piezoelectric types so eminently suited to lower power and/ or quality performance. Interestingly, in principle, it is immaterial which of coil or magnet parts move for imparting bending wave action, though the art of moving coil drivers is so well known and developed (for cone loudspeakers) that various specifically useful/advantageous novel designs to be described further and illustrated are within the natural context of developing moving coil types. Detail investigation and development indicates particular merit arising from assuring that size and/or mass criteria are met for the moving parts concerned. In principle, maximum size is subject to conforming with preferred mechanical coupling to the member being at least primarily resistive and with exciting higher and lower frequency resonant modes as desired, particularly for audio usage. Whilst approximations have indicated theoretical maximum sizes at about 9% - 10% of length/width and/or major/minor axes dimensions for rectangular or elliptical/ super-elliptical shapes of said member, i.e. up to about 1% of operative transverse area, that can be exceeded at least by such as piezoelectric transducer patch-type transducers, at least up to 2% (each if plural). A particularly useful criterion, in practice, is that, for any particular said member or panel, there will be a size at which frequency roll-off is caused, basically as corresponding wavelengths in the panel approach and reach similar order to the size of transducer. These factors need further to be considered alongside mass considerations for moving parts of transducer means, including electromagnetic, for which a viable guide is maxima at about 1 - 2 times the mass of the part of the member that is removed for hole-mounting such active moving part or is covered by surface-mounting same.

## OTHER STRUCTURE ETC FACTORS

It is possible for conditions at edges of said members to allow sub-fundamental acoustic action/performance, e.g. from resilience/elastic vibration relative to self-carried framing or to other edge support, even selective clamping, or in a sense reactive to constraint of up/down, forward/ backward, sideways and twisting freedoms of movement. Such components can further arise from mounting transducer means to said members, by reason of compliance etc in or of the mounting, particularly for moving-coil type electromagnetic transducers and resilience in mounting its relatively stationary magnet part(s) to the member (and against which the moving coil vibrates) as beneficial to lower frequency responses. Whether such sub-fundamental effects are as variations to effective dimensions, or as additional pistonic action, is immaterial to contribution(s) to overall acoustic action/response.

Reverting to said members, as such, applications are envisaged where, for various reasons, less than the whole of the overall transverse extent thereof is to be, or needs to be, acoustically operational for purposes embodying this invention, e.g. where the member overall is substantially over-sized or out of proportion for desired or practicable adjustment by anisotropy of bending stiffness compared with desired or acceptably effective acoustic action/output, at least as a loudspeaker. Conveniently, for full application of above proportioning and location etc criteria, there can then be inboard definition of such desired etc operational area, for example by way of cutting at the boundary of such operational area and mounting both parts on some carrier sheet or panel that will not usually meet the above requirements hereof, or partial cutting or deformation at such boundary, or ribbing or add-on damping or stiffening material at or outside such boundary, etc. Proportioning and siting for transducer means can, of course, then be applicable as above to the inner operational area.

As will later be more specifically indicated, a very wide range and variety of materials can be used for said members in embodiments and applications of this invention. Thus, as active sound sources, or loudspeakers, the range in size and/or quality can be from impressive results for such as greetings etc cards or in books etc, note-book or lap-top computers; in-car etc audio, ceiling etc tiles or wall panels, and high clarity public address systems etc; to general stereo and surround sound systems, home-movie, and hi-fi quality sound reproduction; even to such large scale applications as cinema screens and high power for outdoor or stadium concerts, including use of multiple side-by-side modules for largest applications. Also, there will be further specific guidance for selection from a wide variety of materials, including for actual or effectively multiple-ply structures, particularly for appropriately matching skins or facing sheets and cores of preferred sandwich structures, including as to core shear requirements particularly affecting propagation losses for bending wave vibration, so that shear values may be to some extent dependent on sizes of said members for particular acoustic devices. However, at least minimum structural requirements of members for the above range of applications also range from lower to higher structural strength/integrity and/or bending stiffness, typically for lower to higher power of driving or exciting transducer means. At the lower part of such range, bending wave propagation can be quite lossy, even single sheets used rather than otherwise preferred sandwich structures. Generally, tolerances for the above-developed dimensional proportioning and transducer location criteria will be quite tight for high performance said members, say up to about 3% off for proportioning and up to about 5% off for transducer location, but much higher, say up to 5% and 10% or more, respectively for higher loss and lower performance said members.

Whilst additional conventional low frequency loudspeakers, or woofers, may well be used with panel elements hereof, and combinations of such panel elements can be used for highest quality and widest frequency ranges handled, even combining additional pistonic action for some panel(s) hereof, it is a particular feature, aspect and advantage of embodiments this invention that a remarkably wide frequency range can be handled by a single panel element, ranging from up to about 100Hz, say about 50Hz if large and/or baffled, to in excess of 15KHz, even 25KHz and higher. The lower limits of such operating frequency ranges are above the lowest resonant mode frequencies. Certainly, operating acoustic bandwidths in excess of 4KHz are readily achieved.

In these connections, perhaps particularly for single member or panel loudspeakers, various options are available in terms of design etc, including setting the coincidence frequency above or below, or medially within, or at low or high ends of and assisting in defining actual suitable operating frequency ranges; and using electronic circuitry for selectively adjusting relative values of input audio electrical signals to be converted to sound etc, generally more simple than for hitherto conventional cone-element loudspeakers say resistive-inductive application of only about 3db of selective variation and/or capacitive raising of high frequencies. This will not, of course, be accompanied by the sort of "boxy" effects of related enclosures and baffling. Also, whilst sound output rearwardly of members hereof used as loudspeaker panels is not of inherently anti-phase nature requiring elimination, shallow rearward absorption/baffling provisions can be advantageous for loudspeaker units to be mounted directly against or closely adjacent solid/sound reflective surfaces.

Each particular design of member hereof for use in a loudspeaker will require inter-active decisions, usually involving compromises regarding physical and operational parameters and requirements. Thus, bending stiffness(es) and mass per unit area contribute (through square root of the quotient $B/\mu$ of the former and the latter) along with dimensions/area to setting lowest true bending wave frequencies, with Young's modulus (E) and thickness of skins of sandwich structures of the members as well as the square of their core thickness having particularly relevant effects on bending wave stiffness. Said bending wave stiffness(es) and mass per unit area also contribute, through square root of inverse $\mu/B$ of above quotient, along with the ratio of squares of speed of sound in air and (by bending waves) in the members, to setting the actual coincidence frequency, with core shear modulus (G) and core thickness (d) contributing to said ratio along with said of mass per

unit area (μ) being particularly influential as the actual coincidence frequency is always greater than results from much simpler notional calculation assuming no core shear thus no account taken of said ratio. Lowering or raising the coincidence frequency can be by raising or lowering said ratio.

Regarding core shear modulus (G), it is, in itself, a significant design factor that needs to be enough to hold the skins apart sufficiently rigidly for desired bending wave action. Relatively lower and higher values result in greater and lesser, respectively, transmission of energy applied by the transducer means in core shear waves rather than desired skin bending waves. Such shear waves do not radiate sound, and nett acoustic result of lower core shear modulus values is that the effective sound radiating areas of the members tends to reduce with frequency, though still substantially larger than any parallel with conventional cone-element tweeters resembling a highly directional point source. The underlying effect of shear causing fall-off of vibrational efficiency of operation with frequency can be used to advantage for piezoelectric transducer means as particularly suited to card or book, even notice-board, embodiments typically of the order of about A5 to about A4, even to A1, sizes preferably with coincidence frequency as high as 20KHz or more and operating frequency range going from between about 200Hz and 350Hz up to about 15Khz or so, and related lowest resonant modes concerned at about 100Hz to about 250Hz.

Regarding mass per unit area (μ), there is an inverse relationship with efficiency of any loudspeaker concerned, thus general benefit from having it as low as possible, i.e. consistent with operational goals and resulting requirements regarding other physical parameters, particularly at least reasonably high stiffness-to-mass ratio and specific modulus involving core shear modulus (G) along with ratio of mass per unit area (μ) and the core thickness (d), which makes composite skinned-core laminated structures particularly suitable for the members hereof.

In applying these factors to practical loudspeaker etc design, i.e. using available actual materials and values of their relevant parameters, satisfactory lightweight core materials will generally be of expanded foamed synthetic plastics materials or of honeycomb or other open-work form fabricated from sheet materials, see further later.

Such structures give rise to further factors involving skin and core properties, both alone and in conjunction with each other and/or with size and mass of active parts of transducer means, including the possibilities of further resonances such as affected by core compliance along with skin and/or transducer part mass(es), specifically resonances from size/volume of core cells and/or from compliant core compression/recovery and/or from skin portions overlying open core cells potentially with tiny drum-like subsidiary vibration effects, etc. Such further resonances can be useful, i.e. be positive factors in materials selection/specification, by contributing to, even extending, actual operating frequency range, usually at the higher end, typically approaching or above 20KhZ, say 19Khz - 22KHz. If those further resonances would not be useful, even be deleterious, to performance, that can be taken into account for avoidance in selection etc of materials.

Desired or effectively required sizes and shapes are obvious design factors, and bring in anisotropy, as to which it can be relevant that at least some of available honeycomb have, certainly can have, different shear moduli in different directions. Possibilities obviously arise as to incorporation of members hereof into host sheets or panels and as to defining operational areas by deformation or added defining material as mentioned above. Desired type etc of transducer means, even viability effectively forcing or limiting choice thereof, is/are further key consideration(s), including as to compliance of mounting at least active moving part(s) thereof to or into members hereof, as to normal requirement for predominantly resist; ive rather than reactive mechanical coupling of transducer part(s) to such members, and as to output power desiderata thus input power and forces applied by moving part(s) of transducer means being desirably consistent with buckling etc characteristics/resistance of core materials.

Generally, from the above, relevant factors including materials parameters available and required can be matched to extents resulting in achieving the afore-mentioned remarkably wide range of satisfactory loudspeakers and other acoustic devices, the scope for doing so relative to various materials parameters individually and in combinations and need to balance conflicting effects by now being self-evident.

Use of said members hereof with associated transducer means as microphones is, of course, feasible. Then, it is particularly preferred that multiple transducer means be used, preferably to get the best possible sampling of possible active resonant modes, say where appropriate, with transducer means at least one of each of progressively outward different ones of preferential locations. The reverse or inverse action compared with loudspeakers hereof can produce signals capable of intelligible reproduction and/or ready meaningful input to data processing machines. Moreover, capability of combining through additional transducer means on a member hereof also operating as a loudspeaker has advantages, as has provision or further combination with or as cladding or a casing.

Further regarding transducer means, two particular types have been mentioned, namely piezoelectric, and electromagnetic with specific reference to what is effectively continuation of long-established practice for cone-element loudspeakers by way of moving coil means being fixed/bonded -on, say acting against mass of magnet means also carried by the member, with passing reference to alternative use of moving magnet means the excitation purposes hereof. The Profound differences of the nature of mechanical coupling to panel-like members hereof, exciting bending waves rather than for pistonic action to reciprocate a cone element, have also been alluded to, particularly at least being predominantly mechanically resistive rather than reactive nature thereof, thus inherently more efficient. It is the case that light moving magnets and relatively heavy electric coils would be more reactive and less efficient, but nonetheless viable. Corresponding consequential differences become reflected in novel parts and their inter-relationships, including by reason of inherent capability for mounting intendedly stationary as well as moving parts to members hereof, rather than stationary magnet parts to fixed frames, though that can be done for members hereof if desired or preferred or even required to get additional pistonic action at lowest frequencies. Moreover, a radically fresh approach has been found to be notably capable of satisfactory and beneficial operation, namely by way of we call "inertial" contribution to inducing at least bending wave vibration.

So, in addition to aspects of invention arising from novel transducer parts, inter-relationships of parts, and mounting thereof, whether at and to surfaces or in wells or even through-apertures at and to sides thereof, another transducer means aspect of this invention concerns addition to operatively moving part(s) of transducer means of more mass, including where such addition is substantially medially of such parts actually mounted to members hereof beyond or outside such additional mass, say peripherally, preferably at or adjacent edges thereof at or adjacent edges of wells or apertures in members hereof with said additional mass projecting into such wells or apertures, further preferably with appropriate clearance therein, particularly advantageously mounted to skins and extending into cores of preferred laminated sandwich structures for members hereof.

BRIEF DESCRIPTION OF DRAWINGS

Particular device and applications embodiments will now be described in more detail, both by way of example and as leading to further device etc aspects of invention, with reference to the accompanying drawings.

Generally panel-like members embodying above concepts and aspects of this invention concerning areal distribution of bending wave vibration and, at least effectively, related natural resonant modes will be referred to variously as "distributed mode resonators" or "distributed mode resonating panels" or "distributed mode loudspeakers" or "DML" or "multi-mode resonating panel".

Also, the word "resonate" is used, as a descriptive and semantically accurate convenient short-hand term for such desired or acceptably achievable areally distributed and orderly natural resonant mode related bending wave vibration, involving the positive and deliberate encouragement by design of such resonance-based vibration; and is not to be confused with other usages of that word in other connections where any vibration is considered inherently problematic (and, perhaps, as often as not actually related to inaccuracies and/or wear of cooperating parts !).

In the drawings :-

Figure 1 is an outline view of a distributed mode loudspeaker;

Figure 2a is a partial section of Figure 1 on the line A-A ;

Figure 2b is an enlarged cross-section through a distributed mode radiator of the kind shown in Figure 2a and showing two alternative constructions;

Figure 3a indicates preferred transducer location(s) for a substantially rectangular panel;

Figures 3b and 3c likewise for substantially true elliptical and super-elliptical panels;

Figure 3d for a composite shaped panel;

Figure 4 shows a distributed-mode loudspeaker;

Figure 5a is a perspective view of another distributed mode loudspeaker;

Figure 5b is a partial cross-sectional view of the loudspeaker of Figure 4a;

Figure 6a is a perspective view of another distributed mode loudspeaker;

Figure 6b is a partial cross-sectional view of the loudspeaker of Figure 5a;

Figure 7a is a front view of a distributed-mode loudspeaker;

Figure 7b is a side view of the distributed-mode loudspeaker of Figure 7a;

Figure 7c is a rear view of the loudspeaker of Figure 7a;

Figure 8 shows a distributed-mode loudspeaker

Figure 9 is a sectional side view of a first electromagnetic transducer;

Figure 10 is a sectional side view of a second electromagnetic transducer;

Figure 11a is a sectional side view of a third electromagnetic transducer;

Figure 11b is a sectional side view of a fourth electromagnetic transducer;

Figure 11c is a sectional side view of a fifth electromagnetic transducer;

Figure 12 is a sectional side view of a sixth electromagnetic transducer;

Figure 13 shows a first piezoelectric transducer;

Figure 14 shows a second piezoelectric transducer;

Figure 15 shows a third piezoelectric transducer;

Figure 16 shows a further electromagnetic transducer;

Figure 17 shows another electromagnetic transducer;

Figure 18 shows a distributed-mode loudspeaker;

Figures 19 shows application of drive/excitation signals;

Figures 20 and 21 show variations;

Figure 22 is a diagram of an embodiment of distributed mode combination loudspeaker microphone;

Figure 23 is an outline view of a distributed-mode microphone;

Figure 24 shows crystalline disc type piezoelectric transducer;

Figure 25a is a perspective outline view of a room incorporating a suspended ceiling;

Figure 25b is a cross-sectioned side view of a distributed mode loudspeaker in the form of a ceiling tile;

Figure 27 is a perspective outline view of a visual display unit;

Figure 28 is a partial cross-sectional view, through the loudspeaker of Figure 22;

Figure 29 is a perspective view of a lap-top computer;

Figure 30 is a partial cross-sectional view of a detail of Figure 29;

Figure 31 is a perspective view of a first portable compact disc player in a storage position;

Figure 32 is a perspective view of the player of Figure 31 in a use position;

Figure 33 is a scrap view of part of the player of Figures 31 and 32;

Figure 34 is a perspective view of a second embodiment of portable compact disc player;

Figure 35 is a scrap view of part of the player of Figure 34;

Figure 36 is a perspective view of the passenger cabin of a vehicle;

Figure 37 is a partial cross-sectional view of a detail of Figure 36;

Figure 38 is a perspective view of a prior art automobile door;

Figure 39 is a perspective view of an automobile door;

Figure 40 is a partial cross-sectional view of a detail from Figure 6;

Figure 41 is a perspective view of an automobile;

Figure 42 is a partial cross-section view of a detail from Figure 41;

Figure 43 is a perspective diagram of a keyboard electronic instrument;

Figure 44 is a plan view of the underside of the instrument of Figure 3;

Figure 45 is a partial cross-sectional view of the instrument of Figures 3 and 4;

Figure 46 is a perspective view of a second musical instrument;

Figure 47 is a perspective view of a vending machine;

Figure 48 is a partial cross-sectional view of a detail of the vending machine of Figure 3;

Figure 49 is a perspective diagram of a modified form of vending machine;

Figure 50 is a perspective diagram of a first notice-board;

Figure 51 is a perspective view of a second notice-board;

Figure 52 is a partial cross-sectional view of the noticeboards shown in Figures 50 and 51;

Figure 53 is a perspective diagram of packaging;

Figure 54 is an outline perspective view of a greetings card embodiment of this present invention;

Figure 55 is a perspective outline view a projection screen;

Figure 56 is a partial view of a detail of the screen of Figure 55;

Figure 57 is a plan view of a room incorporating the projection screen of Figure 55;

Figure 58 is a perspective view of a loudspeaker panel member with edge slotting;

Figure 59a,b,c,d, are diagrams concerning circuits for input bandwidth control;

Figures 60a,b,c,d are diagrams concerning passive equalisation;

Figures 61a,b,c show curved diffusing and focussing panel loudspeakers hereof and their use in a room;

Figure 62 is an outline plan view of a five channel home movie system room using some panel loudspeakers;

Figure 63 is an outline inside view of a room with voicing by passive panels hereof;

Figure 64 is a perspective view of a passive panel hereof as a mounting base for an audio unit;

Figure 65 is a perspective view of passive panels hereof as an enclosure for a conventional loudspeaker;

Figures 66a,b are perspective and scrap section views of a piano with a passive panel hereof as a sounding board, and

Figure 67a,b are outline plan and enlarged scrap sectional views for making loudspeakere hereof.

Throughout the drawings, to aid correlation and understanding, the same references are used for _functionally_ similar parts, particularly for resonant panels (2), transducers (9), edge support frames (1) and intermediates (3) etc.

BEST MODES FOR CARRYING OUT THE INVENTION

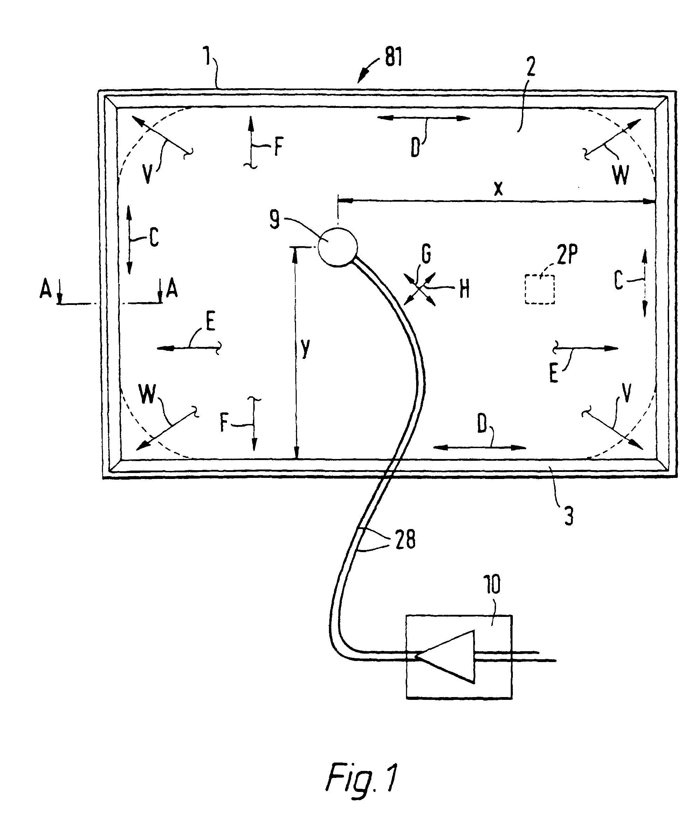

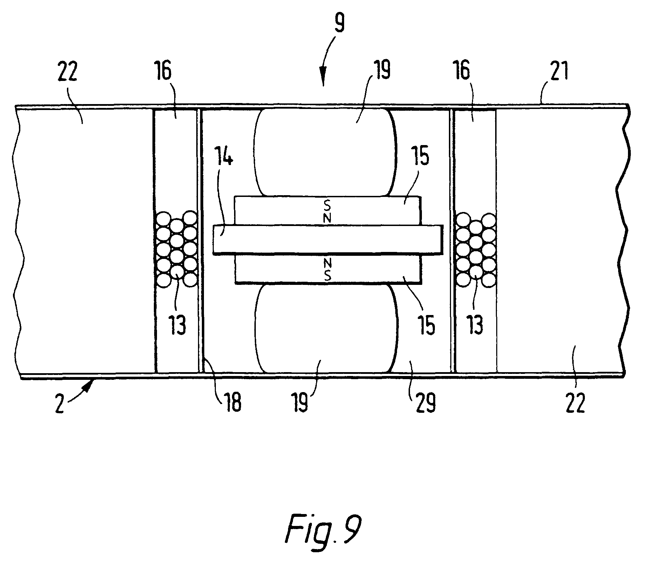

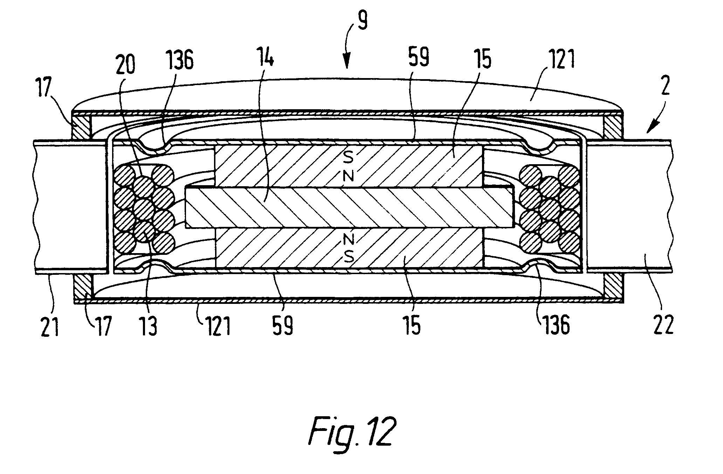

Referring to Figure 1 of the drawings, a panel-form loudspeaker (81) comprises a rectangular frame (1) carrying a resilient suspension (3) round its inner periphery which supports a distributed mode sound radiating panel (2) formed structurally and configured as variously developed above. A transducer (9), e.g. as described later with reference to Figures 9 - 17, is mounted wholly and exclusively on or in the panel (2) at a predetermined location defined by dimensions $\underline{x}$ and $\underline{y}$. The latter are, of course the proportionate side length coordinates (from any corner) as indicated above. Conversion to being centre-related coordinates could be of general value, e.g. where corners of the panel member (2) are trimmed or cropped or finished short as made, see dashed (2d) and above regarding refinement of acoustic action/performance. Alternative, or combiningly and cooperatingly, effectively analogous such refinement by prescribing diagonal bending stiffness is also indicated diagrammatically, see arrows (V, W).

The transducer (9) serves to launch or excite bending waves in the panel to cause the panel to resonate and radiate an acoustic output; and is shown driven by a signal amplifier (10), e.g. an audio amplifier, connected to the transducer by lead conductors (28). Amplifier loading and power requirements can be similar to conventional cone type speakers, sensitivity being of the order of 86 - 88dB/watt under room loaded conditions. Amplifier load impedance is largely resistive at 6 ohms, and power handling 20-80 watts. Where the panel core and/or skins are of metal, they may serve as a heat sink for the transducer, say to remove heat from a voice coil of the transducer, and thus improve power handling.

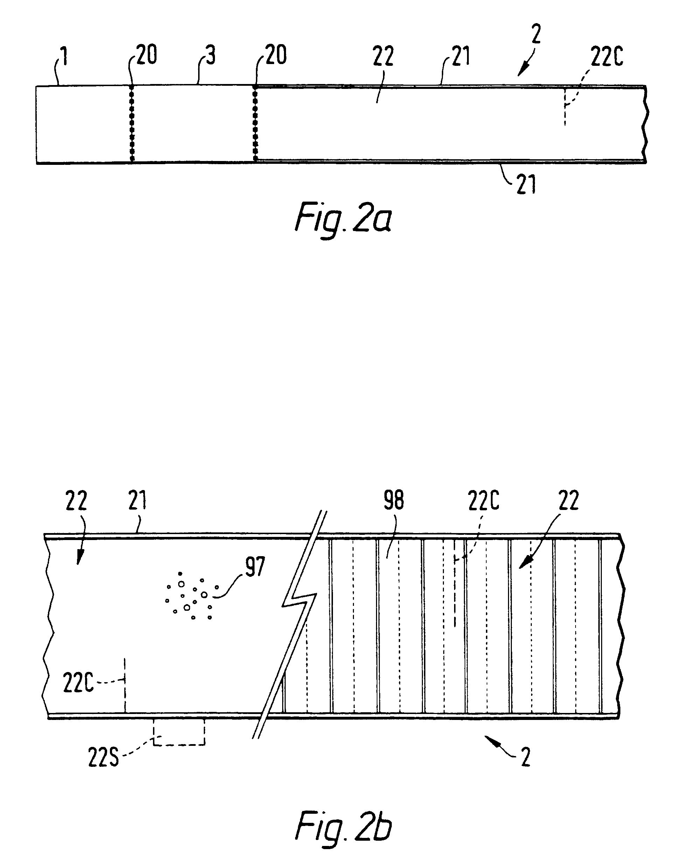

Figures 2a and 2b are partial typical cross-sections through the loudspeaker (81) of Figure 1. Figure 2a shows that the frame (1), surround (3) and panel (2) are connected together by respective adhesive-bonded joints (20). Suitable materials for the frame include such as used in picture framing, say of extruded metal (e.g. aluminium alloy) or plastics, etc. Suitable surround materials can meet desiderata above and include resilient materials such as foam rubber and foam plastics. Suitable adhesives for the joints (20) include epoxy, acrylic and cyano-acrylate etc. adhesives.

Figure 2b illustrates, to an enlarged scale, that the panel (2) is a rigid lightweight laminated sandwich-type panel having a core (22) e.g. of rigid plastics foam (97) or cellular matrix (98) such as a honeycomb matrix of metal foil, plastics or the like, with the cells extending transversely to the plane of the panel, and closed by opposed skins (21), e.g. of paper, card, plastics or metal foil or sheet.

Where the skins are of plastics, they may be reinforced with fibres e.g. of carbon, glass, Kevlar or the like in a manner known per se to improve their tensile properties. Envisaged skin layer materials and reinforcements thus include carbon, glass, Kevlar (RTM), Nomex (RTM) or aramid etc, fibres in various lays and weaves, as well as paper, bonded paper laminates, melamine, and various synthetic plastics films of high modulus, such as Mylar (RTM), Kaptan (RTM), polycarbonate, phenolic, polyester or related plastics, and fibre reinforced plastics, etc. and metal sheet or foil. Investigation of the Vectra grade of liquid crystal polymer thermoplastics shows that they may be useful for the injection moulding of ultra thin skins or shells of smaller size, say up to around 30cm diameter. This material self forms reinforcing striations in the direction of injection, a preferred orientation for the good propagation of treble energy from the driving point to the panel perimeter.

It is convenient to advert further to above-mentioned prescription of bending stiffness that can be directionally differential parallel to pairs of sides of the panel (9), see other arrows (C, D), or at any angle(s), including from lay or weave or directed reinforcement, see arrows (E, F); and/or by plural superposed sub-layers with their directionality at appropriate relative angles, see arrows (G, H) shown symmetrically at 45-degrees, though they could be otherwise as to angle and symmetry. Core shear can also contribute, as it is often directionally different in available materials.

Additional moulding for plain or reinforced plastics, usually thermoplastics materials, would allow for mould tooling to carry location and registration features, such as grooves or rings for the accurate location of transducer parts, e.g. excitation coil and/or magnet suspension. Additionally, with some weaker core materials, it is can be advantageous to increase the skin thickness locally, e.g. up to 15% of the transducer diameter, to reinforce that area and beneficially couple bending wave vibration inducing energy into the panel. High frequency response can be improved for some foam materials by this means.

Envisaged core layer materials include fabricated honeycombs or corrugations of aluminium alloy sheet or foil, or Kevlar (RTM), Nomex (RTM), plain or bonded papers, and various synthetic plastics films, as well as expanded or foamed plastics or pulp materials, even aerogel metals if of suitably low density. Some suitable core layer materials effectively exhibit usable self-skinning in their manufacture and/or otherwise have enough inherent stiffness for use without lamination between skin layers. A high performance cellular core material is known under the trade name 'Rohacell' which may be suitable as a radiator panel and which is without skins. In practical terms, the aim is for an overall lightness and stiffness suited to a particular purpose, specifically including optimising contributions from core and skin layers and transitions between them.

Several of the preferred formulations for the panel employ metal and metal alloy skins, or alternatively a carbon fibre reinforcement. Both of these, and also using an alloy Aerogel or metal honeycomb core, will have substantial radio frequency screening properties which should be important in several EMC applications. Conventional panel or cone type speakers have no inherent EMC screening capability.

Much has been said in the extensive preamble to this specification concerning materials parameters in relation to sandwich structures, as to cores and skins. Moreover, progress in materials technology is very swift indeed these days. However, it must be useful to say a little more, based on materials available to us to date, about useful practical criteria we have developed in relation to requirements in relation to materials selection. Thus, we use the following guidelines:-

(a) Cellular core has shear modulus of at least about 10 megapascals and adhered skin Young's modulus of at least about 1 gigapascal.

(b) For sizes of panel members below about 0.1 square metre, lowest bending wave frequencies above about 100Hz, a bending stiffness that can be below about 10 Newtonmetres, core shear modulus that can be as low as about 10 megapascals or less, and skins' Young's modulus in the range from about 0.5 to about 2.5 gigapascals.

(c) For sizes between about 0.1 and about 0.3 square metre, lowest bending wave frequencies as low as about 70Hz, bending stiffness between about 5 and about 50 or more Newtonmetres, core shear modulus that is usually above 10 megapascals typically about 15 megapascals up to about 80 or more megapascals, and skins' Young's modulus of at least about 2 gigapascals up to about 70 or more giga-pascals.

(d) For sizes between about 0.3 and about 1 square metres, lowest bending wave frequency as low as about 50Hz, a bending stiffness usually above about 20 Newtonmetres typically about 50 up to about 500 or more Newtonmetres, core shear modulus that is usually above about 10 typically about between about 20 and about 90 megapascals, and skins' Young's modulus of at least about 2 gigapascals feasibly up to at least about 70 gigapascals.

(e) For sizes over about 1 up to perhaps 5 square metres or more, a lowest bending wave frequency that can be as low as about 25 to 70Hz, a bending stiffness above about 25 Newtonmetres, core shear modulus usually over 30 megapascals, and skins' Young's modulus of at least about 20 gigapascals ranging up to at least about 1,000 gigapascals.

(f) Generally, bending stiffness between minima of about 0.1 to about 1,000 and maxima of about 4 to about 3,500 Newton-metres, and mass per unit area between minima of about 0.05 to about 1.5 and maxima of about 1 and about 4 kilograms/ square metre, depending on size/application.

These guidelines are given in good faith after extensive testing, calculation and investigation etc, but are not intended to be unduly limiting. Thus, we have succeeded in driving/exciting structures with bending stiffness as high as 7.5 Newton-metres, though not as efficiently as we would look for in purpose-designed loudspeakers. In principle, it is difficult to see any absolute upper limit, though necessary input power can get very high, and efficiency rather low; but, if such was acceptable, even preferred, say for matching existing structural and cladding materials, we could do so. Also, progress in materials technology seems certain to enable structures with combinations of properties that are beyond forecast; and our own knowledge cannot be truly comprehensive, having been gathered over quite a short time.

In addition, preferred forms of piezoelectric transducers and ferromagnetic electro-magnetic transducers have negligible electromagnetic radiation or stray magnetic fields. Conventional speakers have a large magnetic field, up to 1 metre extent unless specific compensating countermeasures are taken.

Where it is important to have or maintain screening in any application, electrical connection can be made to the conductive parts of an appropriate DML panel or an electrically conductive foam or similar interface may be used for the edge mounting.

The suspension (3) may damp the edges of the panel (2) to prevent excessive edge movement of the panel without generally preventing desired edge vibration. Additionally or alternatively, further damping may be applied, e.g. as patches, bonded to the panel in selected positions, see dashed at 2P, to control particular frequency modes in damping excessive movement, and help distribute resonance more equally over the panel. The patches may be of bitumen-based material, as commonly used in conventional loudspeaker enclosures or may be of a resilient or rigid polymeric sheet material. Some materials, notably paper and card, and some cores may be self-damping. Where desired, the damping may be increased in the construction of the panels by employing resiliently setting, rather than rigid setting adhesives.

Effective said selective damping includes specific application to the panel including its sheet material of means permanently associated therewith. Edges and corners can be particularly significant for dominant and less dispersable low frequency vibration modes of panels hereof. Edge-wise fixing of damping means can usefully lead to a panel with its said sheet material fully framed, though at least their corners can often be relatively free, say for desired extension to lower frequency operation. Attachment can be by adhesive or self-adhesive materials. Other forms of useful damping, particularly in terms of more subtle effects and/or mid- and higher frequencies can be by way of suitable mass or masses affixed to the sheet material at effective medial localised positions of said area.

An acoustic panel hereof is truly bi-directional. The sound energy from the back is not strongly phase-related to that from the front. Consequently there is the benefit of overall summation of acoustic power in the room, sound energy of uniform frequency distribution, reduced reflective and standing wave effects, and the advantage of good reproduction of the natural space and ambience in the reproduced sound recordings.

Whilst sound etc radiation from the acoustic panel is largely non-directional, the percentage of phase-related information increases off axis. For improved focus for so-called phantom stereo image, placement of the speakers like pictures, i.e. at the usual standing person height, confers the benefit of a moderate off-axis placement for a normally seated listener optimising the stereo effect. Likewise the triangular left/ right geometry with respect to the listener provides a further angular component. Good stereo is thus obtainable.

There is a further advantage for a group of listeners compared with conventional speaker reproduction. The intrinsically dispersed nature of acoustic panel sound radiation gives it a sound volume which is quite free of effects of the inverse square law for distance for an equivalent point source. Consequently for off-centre and poorly placed listeners the intensity field for the panel speaker promotes a superior stereo effect compared to conventional speakers. This is because the off-centre placed listener does not suffer the doubled problem due to proximity to the nearer speaker; firstly the excessive increase in loudness from the nearer speaker, and then the corresponding decrease in loudness from the further loudspeaker. With conventional speakers, the ear tends to favour earliest arriving sounds, so care tends to be taken that neither loud-speaker channel is nearest.

Whilst acoustic panel members hereof will normally be sized including adjustment as to differential bending stiffnesses to make a match with resonantly outer operative area, that is not essential. Other measures, indicated dashed in Figures 2a and 2b, include cutting partially (22C) into the core (22) through one skin 21 or adding damping or stiffening material/members (22S) as inner framing at least partially about the intended operative area, thereby reducing some of preferential size for the panel member structure concerned.

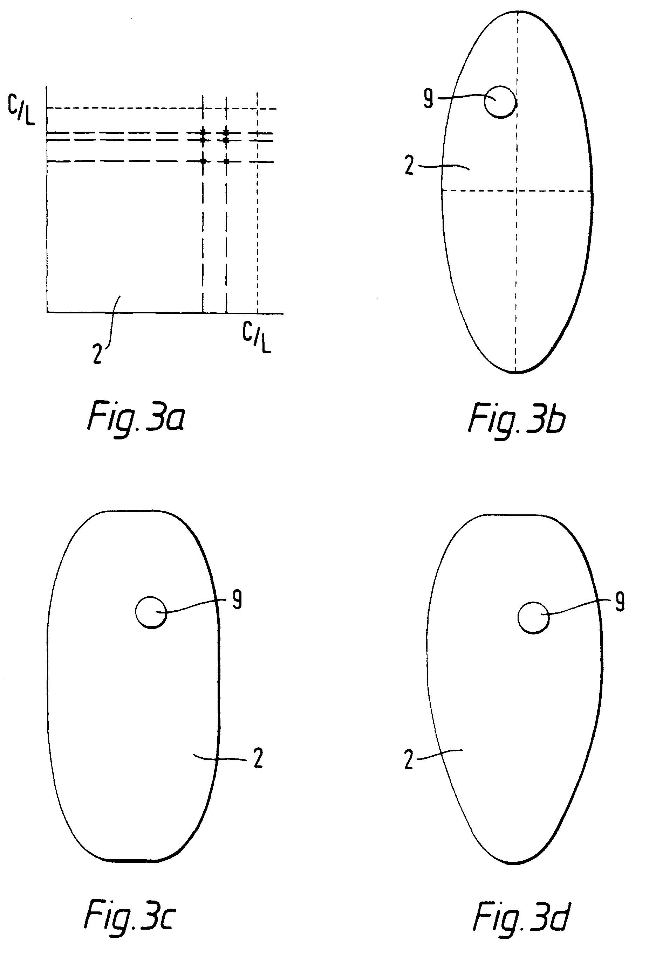

Regarding Figure 3, Figure 3a shows preferential transducer locations for a substantially rectangular panel member as indicated above, for isometric aspect ratio of 1.34:1, namely at crossings'x'of orthogonal coordinates taken from 3/7, 4/9 and 5/13 of lengths of sides from its comers, other corners being as illustrated for just one one quadrant. In other Figures, the six transducer locations for any corner on a reference are to be implied as represented either individually or collectively (but used individually within each "collection" relative to centring a transducer thereat).

Figure 3b shows one preferential transducer location as indicated above for substantially true elliptical panel member of aspect ratio 1.182:1, i.e. at 0.43 and 0.20 of major and minor axes from centre, as developed from elliptical cylindrical coordinates using the equations:

$$x = h.\cosh(u.um).\cos(v) \quad y = h.\sinh(u.um).\sin(v)$$

where $h \equiv \sqrt{(a2 - b^2)}$   $um \equiv q.\tanh(a/b)$ having constant values for $u$ (0...1) and $v$ (0...π/2) at (0.366, 0.239π).

Figures 3c and 3d likewise show substantially super-elliptical and part super-elliptical/part-elliptical panel shapes, each with the preferred transducer locations being as indicated above, but only shown in approximate outline.

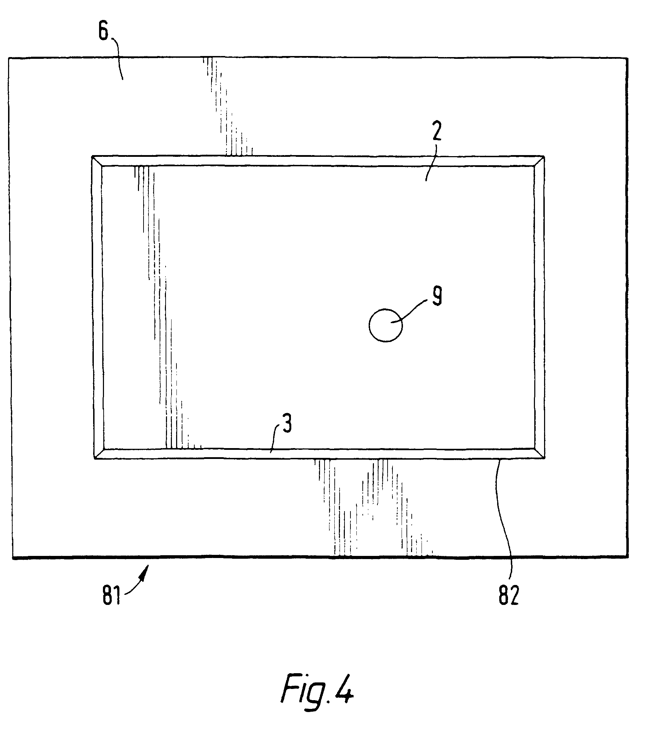

Regarding Figures 4 to 6, Figure 4 shows a first distributed mode panel-form loudspeaker (81) generally of the kind shown in Figures 1 and 2 and in which the frame (1) is 5 replaced by a baffle-board (6), e.g. of medium density fibreboard, having a rectangular aperture (82) in which a distributed mode radiator panel (2) is mounted with the interposition of a resilient suspension (3). The baffle-board (6) can help with low frequencies and/or if very close to a wall. A transducer (9) as described for Figures 9 - 17 is mounted wholly and exclusively on the panel (2) to excite the panel to cause it to resonate to produce an acoustic output.

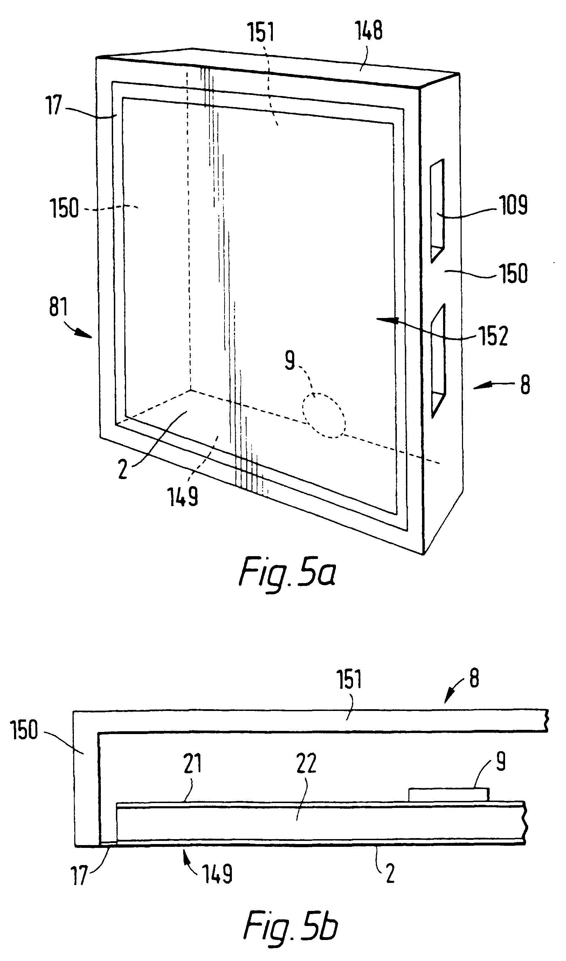

In Figure 5, the loudspeaker comprises a shallow box-like enclosure (8) having a top (148), a bottom (149), opposed sides (150); a back (151) and a front (152). The front (152) of the enclosure (8) consists of a rigid lightweight distributed mode radiator panel (2) of the kind described with reference to Figures 1 and 2 and comprising a core (22) enclosed by opposed skins (21). The panel (2) is supported in the enclosure (8) by means of a surrounding compliant suspension (17), e.g. a strip of latex rubber.

A transducer (9), e,g, of the kinds described for Figures 9 - 17 is mounted wholly and exclusively on the inwardly directed face of the panel (2) in a predetermined location as discussed above, to excite bending wave vibration in the panel to cause it to resonate to produce an acoustic output. The enclosure (8) may be formed with ports (109) e.g. in one side (150), to enhance bass performance of the loudspeaker, including of some pistonic action allowed by compliance of panel mounting in the box.

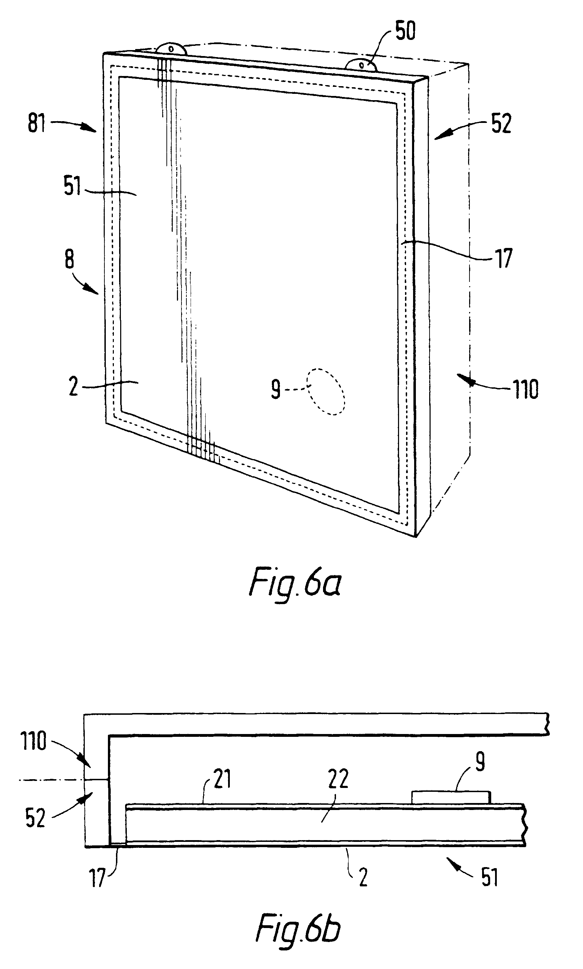

Figure 6 illustrates a further loudspeaker (81) generally similar to that described above with reference to Figure 5. The loudspeaker comprises a box-like enclosure (8) consisting of a front box portion (52) adapted to be mounted on a wall and a separable rear box portion (110) adapted to be set into a wall, e.g. a stud-work wall to further reduce the already shallow apparent depth of the loudspeaker enclosure. The front face (51) of the front box consists of a rigid lightweight multi-mode radiator (2) comprising, as for Figure 3, a core (22) enclosed by opposed skins (21 ). The panel (2) is supported in the enclosure (8) by means of a surrounding resilient suspension (17), e.g. of rubber latex strip. The loudspeaker is thus generally of the kind described with reference to Figures 1 and 2 above. A transducer (9), e.g. of the kind described for Figures 9 - 17 is mounted wholly and exclusively on the inwardly directed face of the panel (2) in a predetermined location as discussed above to excite and vibrate the panel in bending wave mode to cause it to resonate to produce an acoustic output.

Such loudspeakers are relatively simple to make and can be made to have a relatively shallow depth, or apparently shallow depth, in comparison to conventional loudspeakers; and have a wide angle of dispersion in comparison to conventional pistonic loudspeakers. Where the radiator panel is made from or is skinned with metal foil or sheet, the loudspeaker can be made to be shielded against radio-frequency emissions.

Accordingly, particular device aspects of this invention include a panel-form loudspeaker comprising a resonant multi-mode acoustic radiator, drive means mounted to the radiator to excite multi-mode resonance in the radiator, and a baffle surrounding and supporting the radiator: for which resilient suspension may be interposed between the radiator and the surround, typically an elastomeric material such as rubber, and may be sponge-like, e.g. foamed rubber; the baffle may be substantially planar or may be in the form of an enclosure, e.g. a box-like enclosure, and of any suitable rigid material, e.g. medium density fibreboard, including formed into an enclosure as of so-called 'infinite baffle' form and/or or ported; the transducer may be mounted wholly and exclusively on the radiator; the enclosure may comprise a rear box portion adapted to be buried in a wall or the like surface and a front box portion adapted to project from the wall or the like, and such two box portions may be physically separable and adapted to be connected together in desired fashion.

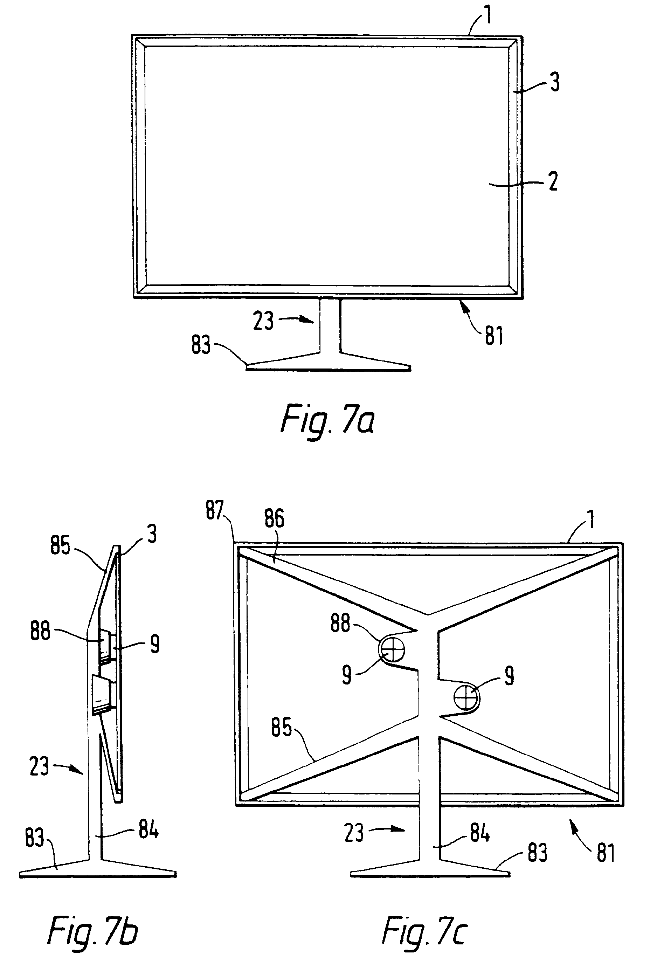

Figure 7 shows a floor-mounted panel-form loudspeaker (81), i.e. as generally shown in Figures 1 and 2, as a lightweight rigid rectangular distributed mode sound radiating panel (2) mounted in or on a resilient surround (3) shown supported in a rectangular frame (1) on a floor stand (23) having a ground-engaging foot (83) and an upright stem (84) to four generally horizontal arms (85) connected at their distal ends (86) to the respective corners (87) of the frame (1). A balanced pair of transducers (9) of the kind shown in Figures 9 - 17 are mounted at one respective end on the panel (2) with their other ends also supported on lugs (88) on the stem (84) to drive the panel.

The pair of transducers (9) are located on the panel (2) at predetermined locations as above. This arrangement is intended to operate to drive the panel (2) pistonically at low frequencies by reacting against the stem (84) which along with the arms (85) acts as the chassis of a conventional loudspeaker drive unit, but launch/excite bending wave vibration the panel at other than low frequencies of pistonic action, i.e. to resonate for corresponding acoustic output. The suspension (3) will be compliant, i.e. like the roll surround of a conventional pistonic loud-speaker cone driver. Such panel-form loudspeakers are relatively simple to make, and flatness makes them relatively easy to house, and there is a wide angle of acoustic dispersion in comparison to conventional loudspeakers.

Accordingly, particular device aspects of this invention include a panel-form loudspeaker as a resonant distributed mode acoustic radiator having a periphery, a transducer mounted to the radiator to excite distributed mode resonance in the radiator, and a frame supporting the radiator, the transducer being coupled between the radiator and the frame to vibrate the panel to cause it to resonate to produce an acoustic output, wherein frame means supports the radiator at its periphery, preferably for additional pistonic acoustic action, conveniently with resilient suspension means couples between the frame and the radiator periphery; and/or the frame having a portion surrounding the radiator panel and/or the resilient suspension of elastomeric material. The transducer being adapted both to cause the radiator to resonate and to move the radiator pistonically is a particular inventive feature, as is the frame comprising a floor stand having a ground engaging portion, a substantially upright portion extending from the ground engaging portion and a plurality of arms extending from the upright portion, the distal ends of which arms carry the resilient suspension. The radiator can be any shape preferably held peripherally by the arms, conveniently with transducer(s) mounted on or adjacent to the upright portion of the frame.

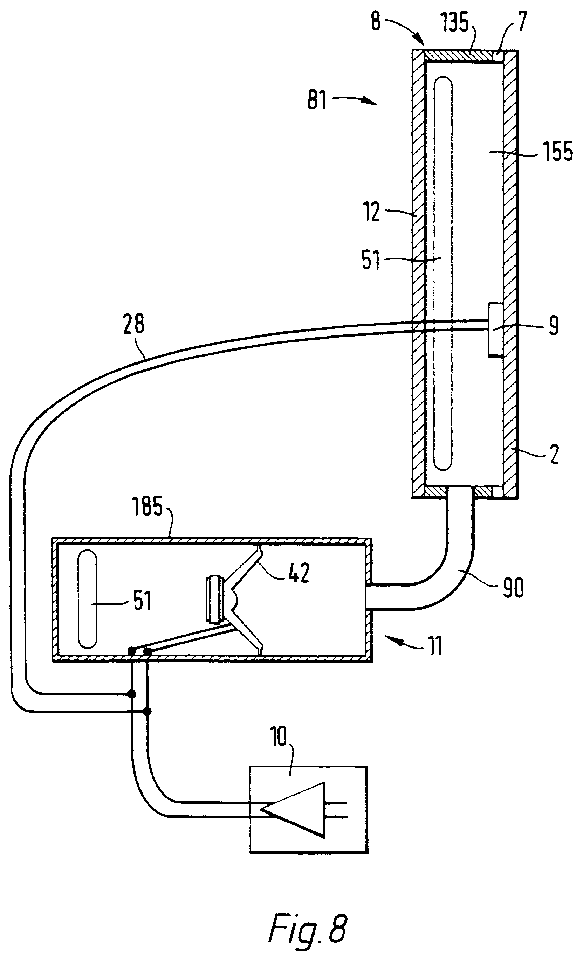

Figure 8 shows another way of combining pistonic and distributed mode resonant behaviour for a loudspeaker (81). Lightweight, rigid distributed mode sound radiator panel (2), as in Figures 1 and 2, forms a front wall of a box-like enclosure (8) having sides (135) and a rear wall (12), e.g. of medium density fibre-board, together defining a cavity (155). A panel (51) of acoustic absorption material is provided in the cavity (155). A panel (51) of acoustic absorption material is provided in the cavity to damp standing waves. The radiator panel (2) is mounted in the enclosure (8) by means of a compliant suspension (7) e.g. to emulate the roll surround of a conventional pistonic cone loudspeaker and carries a transducer (9) as in Figures 9 - 17 mounted wholly and exclusively on the panel (2) at a predetermined location as described above.

The interior cavity (155) of the enclosure (8) is coupled to a bass pump (11), that is to say to the interior of a box-like enclosure (185) containing a pistonic bass loudspeaker drive unit (42), by means of pipe-like conduit (90), whereby air pressure waves of acoustic frequency in the bass region are applied to the interior (155) of the enclosure to cause the panel (2) to move pistonically on its compliant suspension (7) to produce a low frequency acoustic output. In addition the panel is caused to resonate by the transducer (9) to cause the panel to radiate an acoustic output at higher frequencies. An amplifier (1) is arranged to feed an acoustic signal to the bass pump (11 ) and to the transducer (9) to drive the loudspeaker.

Accordingly, particular device aspects of this invention include a loudspeaker comprising an enclosure, an acoustic radiator in the enclosure, a compliant suspension mounting the radiator in the enclosure for limited pistonic movement relative thereto, and transducer means for driving the radiator, wherein the radiator is a panel-form distributed mode acoustic radiator, by a first transducer mounted wholly and exclusively on the radiator to vibrate the radiator to cause it to resonate, and by means for varying the air pressure in the enclosure to cause the radiator to move pistonically; where the air pressure varying means may comprise an air pump, say as a subsidiary enclosure, a pistonic driver mounted in the subsidiary enclosure and means coupling the interiors of the respective enclosures such that air pressure waves produced by motion of the pistonic driver are transmitted to the said enclosure; and acoustically absorbent means, e.g. wadding, may be provided in the said enclosure and/or in the subsidiary enclosure.

Regarding Figures 9-11, Figure 9 shows moving coil transducer (9) arranged to be embedded entirely within interior of stiff lightweight distributed mode panel (2) comprising a core (22) faced on both sides with skins (21) to excite/launch bending waves in the panel. The transducer comprises a coil (13) embedded in a fixing (16), e.g. of epoxy resin, in a cavity (29) in the core (22) of the panel (2), and surrounding a cylindrical coil former (18), the coil (13) and former (18) thus being rigidly fixed in the panel (2). Mounted in the portion of the cavity (29) defined by the coil former (18) is a magnet assembly comprising an opposed pair of magnets (15) separated by a pole-forming member (14), the magnet assembly being mounted on the inner faces of skins (21) of the panel (2) by means of opposed compliant suspension members (19) of rubber-like material, e.g. foam rubber, which are adhesively bonded to the magnet assembly and to the interior surfaces of the respective skins (21) of the panel. The magnet assembly (14,15) is thus mounted concentrically of the coil (13) and is axially movable on its suspension (19). The transducer (9) operates to launch/excite bending waves in the panel (2) by vibrating to cause local resilient deformation of the panel due to relative axial motion between the magnet assembly and the coil. The drive/excitation effect is enhanced by increasing the mass of the magnet assembly. In operation, at least at high frequencies, since the mass of the magnet assembly is relatively large in comparison to that of the panel, the inertia of the magnet assembly will tend to hold the magnet assembly stationary and to vibrate the panel relatively thereto.

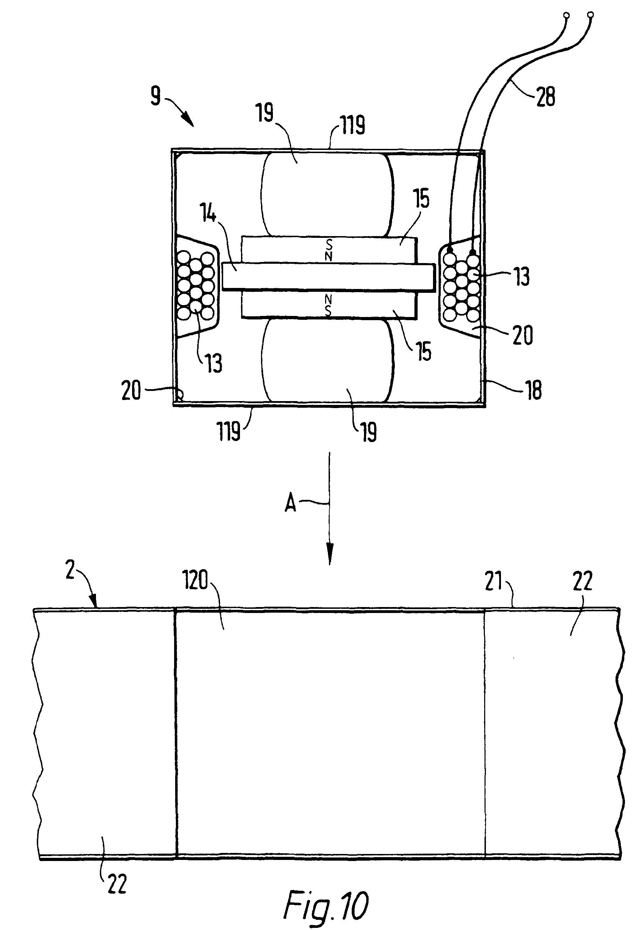

Figure 10 shows a moving coil transducer (9) similar to that shown in Figure 9 and arranged to be embedded entirely within the interior of a stiff lightweight distributed mode radiator panel (2) comprising a core (22) faced with skins (21) to launch bending waves into the panel. The transducer (9) is formed as a modular assembly to facilitate its assembly into a panel (2). As shown, the panel (2) is formed with a suitable cavity (120) to receive the transducer (9). The transducer comprises a coil (13) fixed to the interior wall of a cylindrical coil former (18) e.g. by means of a rigid adhesive potting (20), the former (18) providing the outer casing of the transducer and being closed at its opposite axial ends by lightweight end caps (119) which are rigidly fixed to the coil former in any desired fashion, e.g. by means of adhesive bonds (220). The assembly is arranged to be located in the transducer cavity (120) in a distributed mode panel (2), by movement in direction of arrow 'A' as indicated in. The transducer is fixed in the cavity by means of an adhesive. Mounted in the cavity (29) defined by the coil former (18) is a magnet assembly comprising an opposed pair of magnets (15) separated by a pole-forming member (14), the magnet assembly being mounted on the end caps (119) of the coil former (18) by means of opposed compliant suspension members (19) of rubber-like material, e.g. foam rubber, which are adhesively bonded to the magnet assembly and to the interior surfaces of the respective end caps. The magnet assembly (14, 15) is thus mounted concentrically of the coil (13) and is axially movable on its suspension (19). The transducer (9) operates to launch/excite bending waves in the panel (2) by vibrating to cause local resilient deformation of the panel in the same way as described above with reference to the embodiment of Figure 9.

The transducer (9) of Figure 10 is intended as a low profile device which can be buried substantially within the thickness of a distributed mode panel (2). The transducer comprises a cylindrical coil former (18) adapted to be fixed, e.g. by means of an adhesive, in a corresponding aperture (29) in the panel (2). A coil (13) is secured to the interior face of the former (18) e.g. with the aid of an adhesive. The opposed axial ends of the former (18) are closed by disc-like compliant suspension members (59), e.g. of rubber or the like, each of which is formed with an annular corrugation (136) near to its periphery to form a roll surround similar to that used on conventional pistonic cone loudspeaker drive units. The peripheries of the members (59) are secured to the axial ends of the coil former (18) e.g. by clamping, with the aid of an adhesive or in any suitable fashion. The centre portions of the members (59), which centre portions are defined by the annular corrugations (136) carry between them a magnet assembly comprising an opposed pair of magnets (15) sandwiching a pole piece (14). The outer faces of the magnets (15) are bonded or otherwise secured to the centre portions of the members (59), whereby the magnet assembly (14,15) is located concentrically with respect to the coil (13) and is capable of limited axial movement relative thereto. The magnet assembly is shielded by means of disc-like screens (121) mounted on annular resilient members (17) supported on the panel (2) to prevent or limit the stray magnet field surrounding the panel adjacent to the transducer.

The transducer arrangement (9) of Figure 11a comprises complementary push/pull drivers disposed on opposite sides of the panel (2) to launch bending waves into a rigid lightweight distributed mode radiator (2) comprising a core (22) enclosed by opposed skins (21), to cause the panel to resonate. Coils (13) are rigidly fixed, e.g. by means of an adhesive, on the outside of a coil former (18) to form a voice coil assembly which is rigidly bonded to the opposed surface skin (21) of the radiator panel (2), e.g. by means of an epoxy adhesive bond (16). Magnets (15) are enclosed by pairs of poles (14), one of which is disc-like and is disposed with its periphery close to the interior of each coil former (18), and the other of which has a peripheral flange (162) arranged to surround the coil (13). A fixing member (93) which is generally cylindrical in shape is arranged to pass freely through an aperture (29) in the panel (2). The fixing member (93) comprises opposed generally complementary parts each formed with a head (95) which are clamped against the axial extremities of the respective pair of transducers (9) to couple the drivers together. The complementary parts of the fixing member (93) are secured together by complementary screw-threaded portions (160, 161). The fixing member may be of any suitable material e.g. plastics or metal. The transducer arrangement (9) of Figure 11a is not rigidly clamped to the panel (2) adjacent to the aperture (29) but is instead coupled to the panel via resilient pads (17) e.g. of foam rubber positioned close to the panel aperture (29) in much the same manner as is shown with reference to Figures 3 and 3 whereby the transducer works to launch bending waves into the panel by inertial effects due to the combined mass of the respective drivers.

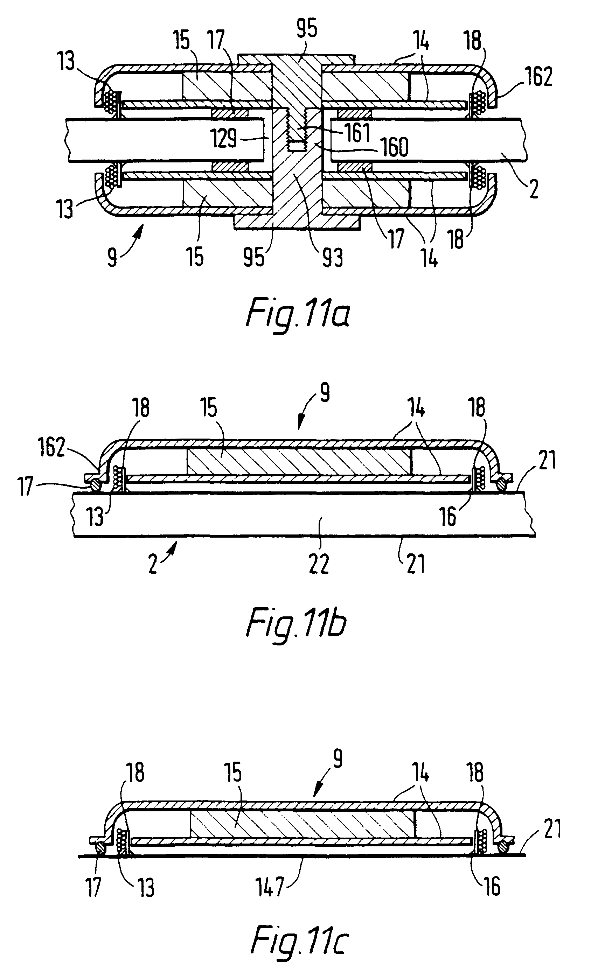

The transducer (9) of Figure 11b is generally similar to that of Figure 11a but is intended for attachment to only one side of a panel (2). Thus the magnet assembly (14,15) is secured to the surface of the panel (2) by means of a resilient suspension (17) e.g. of rubber, which is attachedtothe periphery of the flange (162) of the outer pole pieces (14). Figure 11c shown a transducer (9) of the kind shown in Figure 11b and intended for easy application to a panel surface. Thus the transducer (9) is mounted, by way of the former (18) and resilient suspension (17) on a thin substrate (147) formed with a self adhesive outer layer whereby the transducer can be mounted in position.

Accordingly, particular device aspects of this invention include an inertial vibration transducer comprising a voice coil assembly has a tubular member and a coil rigidly fixed to the tubular member, a magnet assembly disposed concentrically within the voice coil, and resilient means supporting the magnet assembly for axial movement relative to the voice coil, the voice coil being adapted to be rigidly mounted to a distributed mode radiator: where the resilient means may comprise opposed elastomeric members; the axial ends of the voice coil may be closed by caps; and the resilient means may be mounted on the caps; the coil may be mounted on the inner face of the tubular member to form the voice coil assembly and/or be adapted for reception in a correspondingly shaped cavity in the radiator; the caps may comprise the resilient means, say each comprise an annular compliant roll surround; and magnetic shields may be disposed over the caps to reduce stray magnetic fields. Further, the voice coil assembly may be adapted to be rigidly fixed to a face of the radiator and/or the magnet assembly may comprise opposed generally disc-like pole pieces, the periphery of one of which is disposed within and adjacent to the voice coil assembly, the periphery of the other of which pole pieces being formed with a flange arranged to lie adjacent to and to surround the voice coil assembly; and/or the resilient member may be sandwiched between one of the pole pieces and a face of the radiator and/or the transducer may comprise complementary magnet assemblies and voice coil assemblies on opposite faces of the radiator, and means tying the magnet assemblies together for push-pull operation. Another inventive aspect is a loudspeaker comprising an inertial transducer as indicated and/or described above, and a loudspeaker comprising a distributed mode acoustic radiator and the transducer being coupled to vibrate the radiator to cause it to resonate.

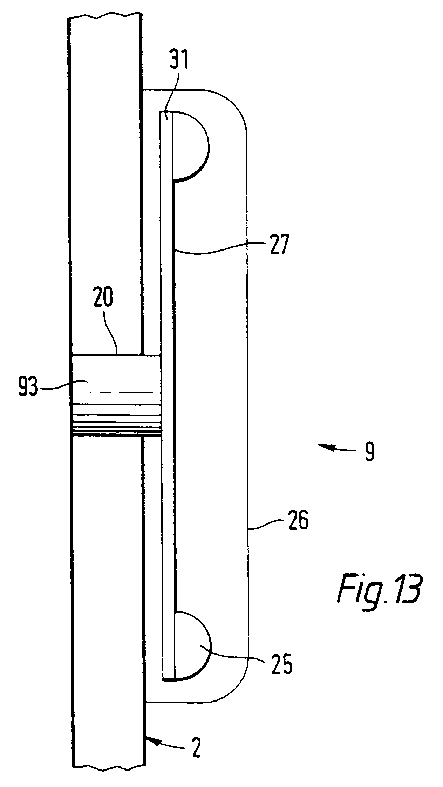

Figure 13 shows a piezo-electric transducer (9) in which a crystalline disc-like piezo bender (27) is mounted at its centre on one end of a lightweight rigid cylindrical block (93) of rigid foam plastics which is rigidly fixed in an aperture (20) in a distributed mode radiator panel (2) e.g. by means of an adhesive, the said one end of the block (28) projecting from the face of the panel (2) so that the periphery (31) of the bender (27) is freely suspended adjacent to a face of the panel (2). An annular ring (25) of plastics, e.g. mineral loaded polyvinylchloride is rigidly fixed to the periphery of the piezo bender (27) to add mass to the free periphery of the piezo bender. Thus when the transducer is energized with an acoustic signal, the piezo bender (27) vibrates and due to its mass launches bending waves into the panel (2) to cause the panel to resonate and produce and radiate an acoustic output. The transducer (9) may be covered by a domed housing (26) which is fixed to the panel (2) to protect the transducer.

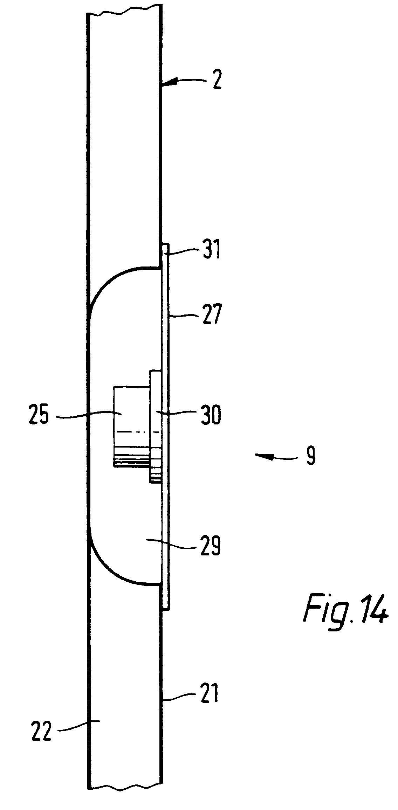

The piezo-electric transducer (9) of Figure 14 has a disc-like piezo bender (27) fixedly mounted by its periphery (31) on the surface of a panel (2) e.g. with the aid of an adhesive, with the central portion of the bender (27) freely suspended over a cavity (29) in the panel (2) such that only the periphery (31) of the bender (27) is in contact with the panel. A mass (25) e.g. of plastics material is attached to the centre of the bender (27) with the interposition of a damping pad (30) of resilient material, e.g. of an elastic polymer. Thus an acoustic signal applied to the piezo bender will cause the bender to vibrate and thus to launch bending waves into the panel. The drive effect of the transducer is enhanced by loading the driver (27) with the mass (25) to increase its inertia.

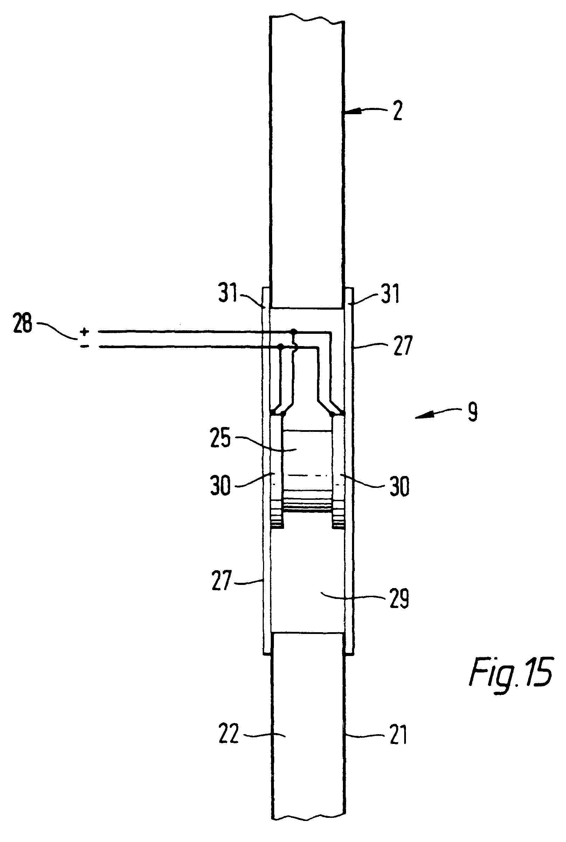

The transducer arrangement (9) of Figure 15 is similar to that of Figure 14 except that in this embodiment a pair of piezo benders (27) are attached on opposite sides of a cavity (29) through a panel (2) to operate in push/pull mode. In this arrangement, the centres of both benders (27) are connected together by a common mass (25) with resilient damping pads (30) positioned between each bender (27) and the mass (25). Such transducers are relatively simply in construction and are effective in use.

Accordingly, particular device aspect of this invention includes an inertial vibration transducer having a plate-like piezoelectric bender and means adapted to mount the bender on a member to be vibrated, the arrangement being such that a substantial part of the bender is spaced from the member for movement relative thereto; where a mass may be secured to the said substantial part of the bender, which may be of crystalline form, say disc-like; the mounting means may be disposed centrally thereof; and the mass may be secured to the periphery of the bender. Alternatively the peripheral margin of the disc-like bender may be fixed to the member, and the mass may be secured to the centre of the bender. A resilient member may be employed to attach the mass to the bender; and benders as described may be attached to opposite sides of the member to be bending wave vibrated and coupled together by a common mass to operate in push/pull mode. From another inventive aspect, a loudspeaker has a distributed mode acoustic radiator with a transducer as described above coupled to vibrate/excite the radiator in bending wave mode.

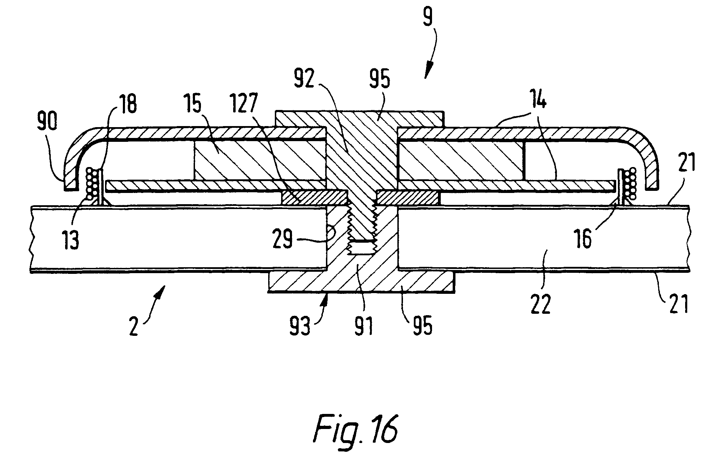

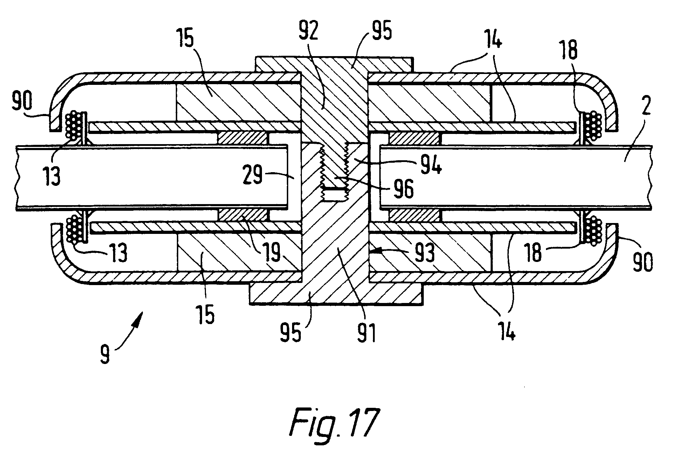

Turning to Figures 16 and 17, Figure 16 shows a transducer (9) for exciting/launching bending waves in rigid lightweight distributed mode radiator panel (2), as shown in Figures 1 and 2, comprising a core (22) enclosed by opposed skins (21), to cause the panel to resonate. The transducer comprises a coil (13) rigidly fixed, e.g. by means of an adhesive, on the outside of a coil former (18) which is rigidly bonded to a surface skin (21) of the radiator panel (2), e.g. by means of an epoxy adhesive bond (16). A magnet (15) is enclosed by a pair of poles (14), one of which is disc-like and is disposed with its periphery close to the interior of the coil former (18), and the other of which has a peripheral flange (90) arranged to surround the coil (13). The magnet assembly including the magnet (15) and poles (14) is mounted on the panel (2) by means of a fixing (93), e.g. of metal or hard plastics, which passes through a cavity (29) extending through the panel (2). The fixing (93) comprises a complementary pair of threaded members (91,92) each having heads (95), one of which heads bears against an outer face of the transducer (9) and the other of which heads bear against a face of the panel (2) on the side of the panel opposite to that on which the transducer is mounted. A spacer (127) is trapped between the transducer (9) and the panel (2) to spruce the transducer from the panel. This transducer (9) operates by locally resiliently bending the panel between the fixing (93) and the former (18) when an acoustic signal is applied to the transducer to launch/excite bending waves in the panel to cause it to resonate.

The transducer arrangement (9) of Figure 17 is similar to that described in Figure 16, except that the transducer comprises complementary push/pull drivers of the kind shown in Figure 16 disposed on opposite sides of the panel. A fixing member (93) is arranged to pass through an aperture (29) in the panel (2) to tie the two transducers together and to the panel. The fixing member (93) comprises opposed generally complementary parts each formed with a head (95) which are clamped against the axial extremities of the respective pair of transducers (9) to couple the drivers together. The complementary parts of the fixing member (93) are secured together by complementary screw-threaded portions (94,96). The fixing member may be of any suitable material e.g. plastics or metal. In this case, the transducer device (9) is rigidly clamped to the panel (2) by means of rigid pads (19), e.g. of hard plastics, positioned between the panel and the poles (14) adjacent to the aperture (29), whereby the transducer works to launch bending waves into the panel by local resilient bending of the panel between the pads and the coil former (18).

Accordingly, particular device aspects of this invention include a vibration transducer to vibrate a member, such as inducing bending wave action in a said member hereof, having a face, wherein a voice coil assembly has a coil rigidly fixed to a tubular member, the assembly being adapted to be fixed to the said face of the member, and by a magnet assembly comprising opposed disc-like pole pieces, the periphery of one of which pole pieces is arranged to be disposed with and adjacent to the voice coil assembly, and the periphery of the other of which pole pieces is formed with a surrounding flange adapted to surround and to be disposed adjacent to the voice coil assembly; and wherein the magnet assembly is adapted to be secured at its centre to the said member to be vibrated; and/or the transducer may comprise fixing means to secure the magnet assembly to the member, and/or the fixing means may comprise a fastener adapted to engage in a cavity in the member, and/or the fastener may comprise a spacer for spacing the peripheries of the pole pieces from the said member; and/or the vibration transducer may comprise complementary voice coil assemblies and magnet assemblies adapted for mounting on opposed faces of the said member, and means tying the centres of the magnet assemblies together for push/pull operation, say by a fastener having heads at opposite ends and adapted to engage the respective magnet assemblies, such fastener preferably comprising a pair of interengaging screw-threaded portions, and having spacer means adapted for disposition adjacent to the fastener and adapted for sandwiching between the respective magnet assemblies and the opposed faces of the said member. Another inventive aspect arises from a loudspeaker of distributed mode acoustic radiator type hereof having a transducer as described above coupled to vibrate the radiator to cause it to resonate.

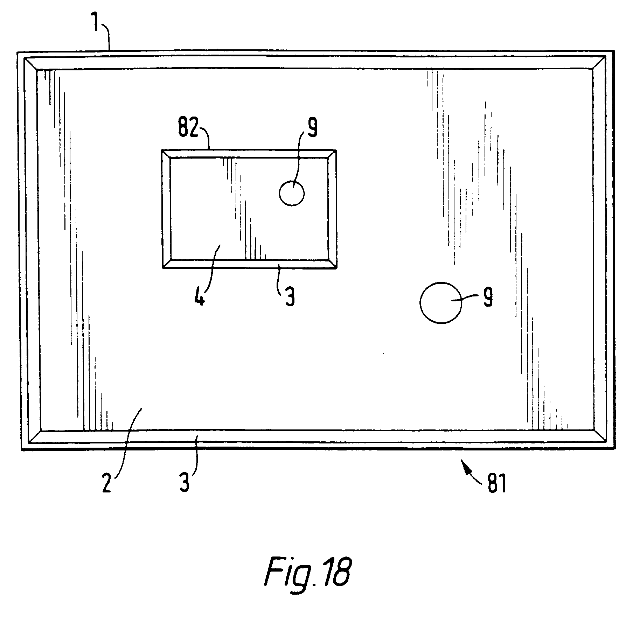

Regarding Figures 18 to 21, Figure 18 shows a panel-form loudspeaker (81) generally similar to that of Figures 1 and 2 and in which the distributed mode panel (2) is formed with a generally rectangular aperture (82) within its boundaries in which is mounted a second distributed mode sound radiating panel (4) with a resilient suspension (3) interposed between the respective panels. The panel (4) is constructed in the same manner as the panel (2), e.g. with a central core (22) separating skins (21). The panel (4) is driven by its own transducer (9) mounted wholly and exclusively on or in the panel (4) at a predetermined location to produce a high frequency acoustic output, while the panel (2) is driven by a separate transducer (9) to produce an acoustic output of lower frequency, so that the loudspeaker can readily encompass the whole acoustic spectrum.

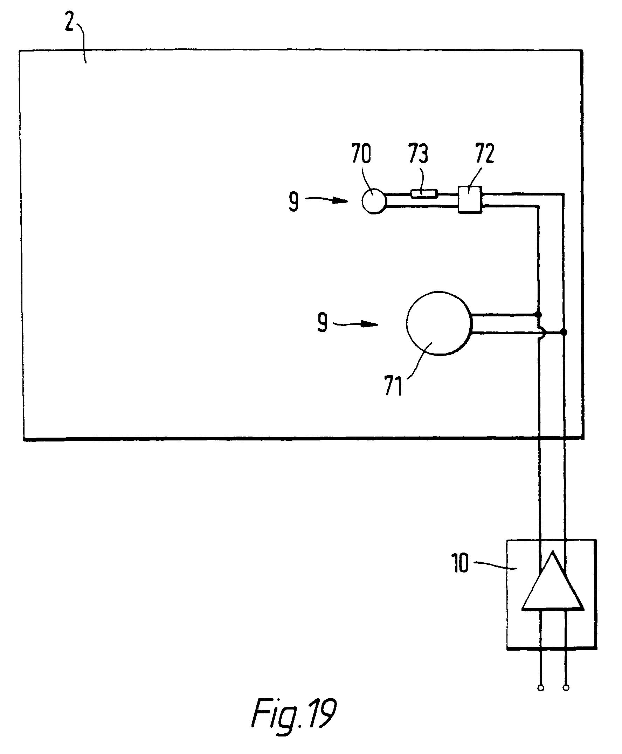

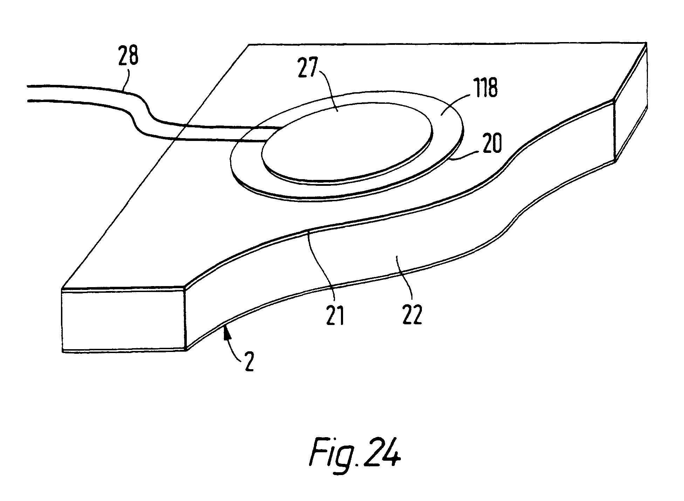

Figure 19 illustrates how a distributed mode panel (2) hereof, or example of the kind shown in Figures 1 and 2, can be driven to resonate by a pair (70,71) of transducers (9). The smaller one of the transducers (70) is a high frequency piezoelectric transducer, e.g. of the kind shown in Figure 24; and the larger one of the transducers (71) is of the electrodynamic kind, e.g. as shown in Figures 9 - 17

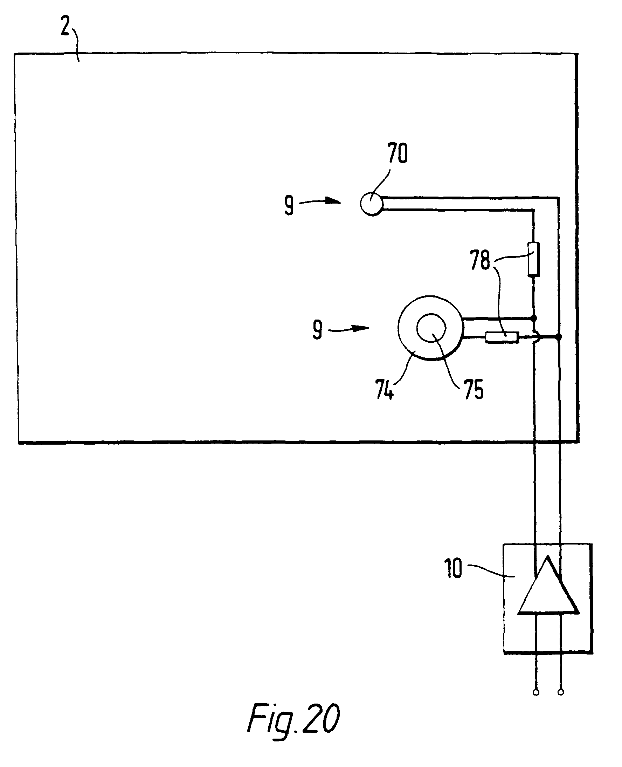

The transducers (70,71) are driven by an amplifier (10) coupled in parallel to the respective transducers with the interposition of a step-up transformer (72) and matching resistance (73) in the line to the piezo transducer in view of its relatively high voltage requirement. Figure 20 illustrates how a distributed mode panel (2) hereof, e.g. of the kind shown in Figures 1 and 2, can be driven by a pair (70,74) of transducers (9), the transducer (70) being a high frequency piezo-electric transducer e.g. of the kind shown in Figure 24 and the transducer (74) being a low frequency piezo-electric transducer of the kind shown in Figures 13 -15. Reference (75) indicates that the transducer (74) is weighted with a mass to increase its inertia. The transducers (70,74) are driven by an amplifier (10) to which they are connected in parallel, with resistors (78) interposed to provide a frequency dividing network.

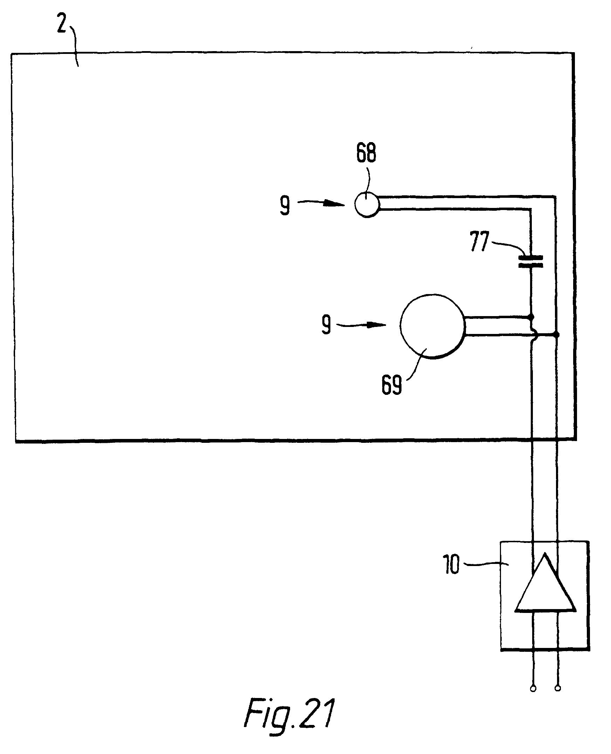

Figure 21 illustrates how a distributed mode panel (2) hereof, e.g. of the kind shown in Figures 1 and 2, can be driven by a pair (68,69) of electrodynamic transducers, e.g. of the kinds shown in Figures 9 - 17. Thetransducer (68) is intended as a high frequency driver and is thus of low inductance, whereas the transducer (69) is intended as a low frequency driver and is of high inductance. The transducers (68,69) are driven in parallel by an amplifier (10) with a capacitor (77) in the line to the transducer (68) to act as a frequency divider to pass most of the high frequency signal to the transducer (68).

Particular inventive device aspects include a panel-form loudspeaker having a distributed mode acoustic radiator and a first transducer coupled to the radiator to excite distributed mode resonance in the radiator, and having a second transducer coupled to vibrate the radiator; where the first and second transducers may be adapted to operate in different frequency ranges; where one of the transducers may be of electromagnetic type and/or one of the transducers be of piezoelectric type; the panel-form loudspeaker may have a second distributed mode acoustic radiator mounted on or in the first said radiator, and resilient suspension coupling between the first and second radiators, the first transducer being mounted wholly and exclusively on the first radiator and the second transducer being wholly and exclusively mounted on the second radiator and/or the second radiator mounted in an aperture in the first radiator.

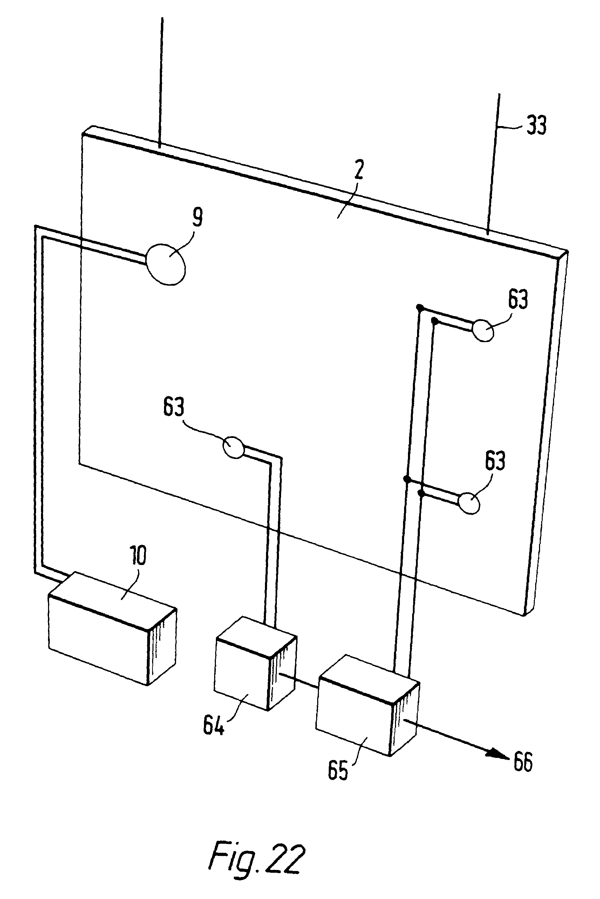

Figure 22 shows a distributed mode panel (2) hereof, say as for Figures 1 and 2, intended for use both as a loudspeaker and as a sound receiver or microphone, e.g. for use in an interactive environment. Although not shown in Figure 22, the panel (2) is mounted in a surrounding frame (1) and is attached to the frame <u>via</u> a resilient suspension (3) in the manner shown in Figures 1 and 2. The frame is suspended on a pair of wires (33), e. g. from a ceiling or on a floor standing frame (not shown). The panel is driven to resonate and produce an acoustic output by a transducer (9) which in turn is connected to and driven by an amplifier (10).

The panel also carries a pair of vibration sensing transducers (63), which may be piezo-electric benders as illustrated earlier, and are coupled in parallel to drive a signal receiver and conditioner (65) connected to an output (66). Another vibration transducer (63) on the panel (2), e.g. as earlier discussed, is coupled to drive a filter/correlator the output from which is fed to the signal receiver and conditioner (65), to provide signal correction. Such simple loudspeaker/microphone has wide scope for industrial application, e.g. for use in an inter-active environment.

Accordingly, a particular device aspect of this invention arises as a panel-form loudspeaker having a distributed mode acoustic radiator and a transducer coupled to vibrate the radiator to cause it to resonate, wherein a second transducer is coupled to the radiator to produce a signal in response to resonance of the radiator due to incident acoustic energy; preferably with the distributed mode acoustic radiator mounted in a surrounding frame by means of an interposed resilient suspension, and/or having at least two said second transducers at spaced locations on the radiator, and/or having a further transducer and means for comparing the signal generated by the or each said second transducer with that of those generated by the said second transducer(s), for which suitable comparison means may comprise a signal receiver and conditioner and signal output means.

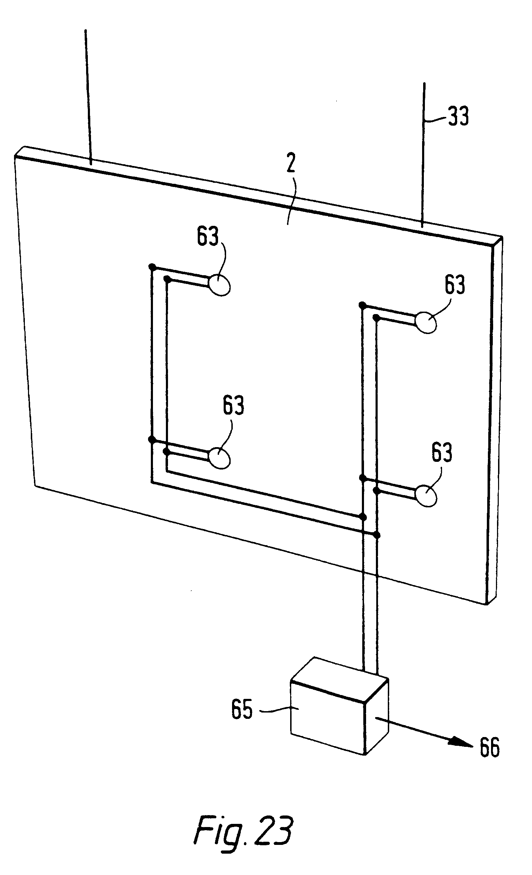

Regarding microphones, particularly in introduction to Figure 23, a distributed mode panel member generally as above and described for Figures 1 and 2 is a good receiver of sound which appears as acoustic vibration over the panel. A preferably lightweight panel structure aids sensitivity, and the vibration may be sensed by one and preferably more simple bending transducers, e.g. of piezoelectric type as described earlier. A plurality of transducers and transducer placement positions optimises the quality of coupling from the distributed panel vibrations to the desired electrical output signal. Placement should be in position(s) of high modal density, preferably variantly for each of plural transducers, inboard of the panel, while the panel itself should have the preferential actual or equivalent geometry for good modal distribution.

Sound energy incident on the panel is converted into free mode bending wave vibration, which may be sensed by optical or electrodynamic vibration transducers, and the result is a microphone. For non-critical applications a single sensor is effective, placed at a single preferred or optimum transducer location. For higher quality, the non-reciprocal nature of the free air/bending wave in panel member transduction principle concerned here needs to be taken into account. Two pertinent factors arise; firstly, providing some frequency-dependent equalisation to reach a flat frequency response; and secondly, looking to capture a broader, preferably as broad as possible, sampling of the complex vibrations of the acoustic panel. At least three transducers is preferred, and they can be inexpensive piezo -electric benders with their outputs connected in parallel. Alternatively, larger area polymer piezoelectric films may be applied, say with suitable geometric pickup patterning to define the vibration integration areas for the required optimisation of sensitivity versus frequency response.

For microphone applications it is advantageous for the panel to be light, preferably as light as feasible, to provide best available match between the radiation impedance of the air and consequent bending wave vibration in the panel. Higher or highest sensitivity is achieved with lower or lowest mass per unit volume of panels. For a single transducer, calculations for the theoretical model indicates an optimal arrangement including at least one sensing transducer location at a panel corner since all vibrational modes are 'voiced' at the corners (though not well driven/excited for a loudspeaker device hereof).

Figure 23 illustrates a distributed mode panel (2) as a said member hereof, generally as for Figures 1 and 2, as intended for use as a sound receiver or microphone will be mounted in a surrounding frame (1) and attached to the frame via a resilient suspension (3) omitted in Figure 23, but see Figures 1 and 2. The frame is suspended on a pair of wires (33), e.g. from a ceiling or a floor-standing frame (not shown). The panel is shown carrying an array of four vibration transducers (63) spaced over the panel and which may be piezo-electric transducers of the kind shown in Figure 24 below which are coupled in parallel to drive a signal receiver and conditioner (65) connected to an output (66). Full-line transducer locations are diagrammatic, and actual locations can correspond, as to centring of the transducer, with different combinations of the above indicated 3/7, 4/9, 5/13 corner-related, side-length proportion coordinates, which, as noted in Figure 3, are topographically very close together, especially for 3/7 and 4/9, and shown collectively as single outlines, perhaps even being reasonably considered as effectively a single "sweet spot" for a small panel member hereof, though accurate centring according to those coordinates is especially effective for loudspeaker embodiments as noted above.

Figure 24 shows a transducer (9) for a distributed mode panel (2) in crystalline disc-like piezoelectric bender form (27) mounted on a disc (118), e.g. of brass, which is bonded to a face of the panel (2), e.g. by an adhesive bond (20). In operation an acoustic signal applied to the transducer (9) via leads (28) will cause the piezo disc (27) to bend and thus locally resiliently deform the panel (2) to launch bending waves into the panel.

Particular device aspects of this invention include a panel-form microphone comprising a distributed mode acoustic member and at least one transducer each coupled wholly and exclusively to the member to produce a signal in response to resonance of the member due to incident acoustic energy; the member preferably being mounted in a surrounding frame by means of an interposed resilient support, and/or there being at least two said transducers at spaced locations on the member, and/or a further transducer on the member to produce a signal in response to resonance of the member due to incident acoustic energy, and/or means for comparing the signal generated by the said further transducer with that of those generated by the said transducer(s). Suitable comparison means may comprise a signal receiver and conditioner and signal output means, the distributed mode acoustic member may be a stiff lightweight panel having a cellular core sandwiched between skins, and the or each transducer may be a piezo-electric device.

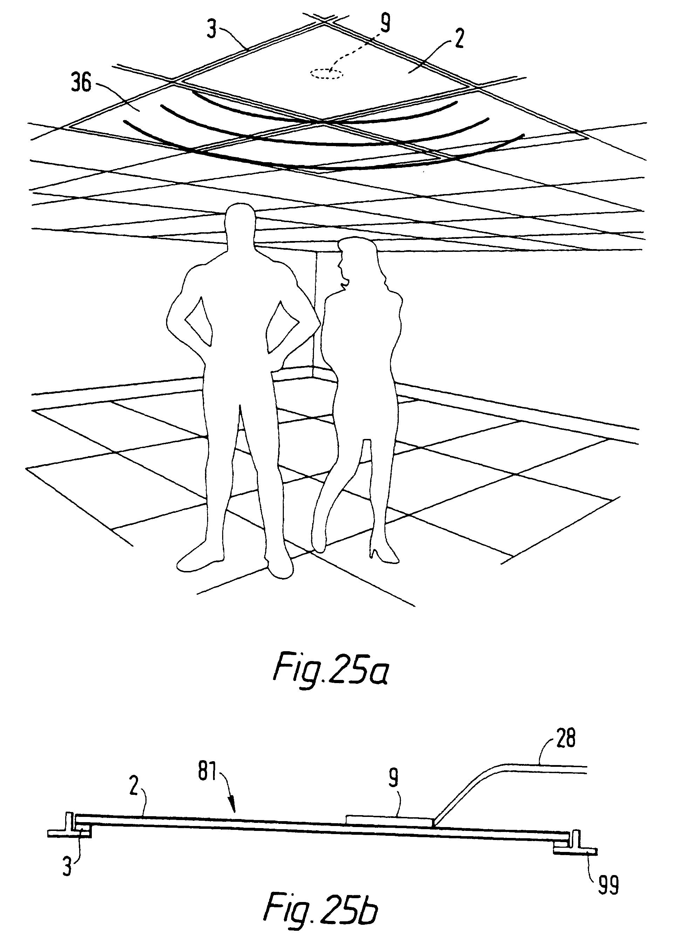

Figure 25 shows a ceiling tile (36) of the kind adapted to be supported in a grid-like suspended frame (99) to form a suspended ceiling, but which is formed as a loud-speaker (81), generally of the kind shown in Figures 1 and 2, that is to say comprising a stiff, lightweight multi-mode resonating panel (2) having a core (22) enclosed by skins (21) on both sides. The panel (2) is mounted at its periphery on a resilient suspension (3) of foam rubber which is supported on the frame (99). The suspension (3) may be attached to either the panel (2) or to the frame (99) by means of an adhesive, but the connection may be by gravity alone. The panel (2) carries a transducer (9), e.g. of the kind shown in Figures 7 to 12, to launch bending waves into the panel to cause it to resonate to produce an acoustic output.

In a preferred example of good quality, the panel (2) is made as an expanded polystyrene foam core of typically 100g/m3 density, 8mm thick, skinned with hardened aluminium alloy skins of 0.1mm. A soft foam or felt strip, some 3mm thick is fixed to the perimeter to provide a partially compliant mounting when placed in the ceiling frames and also helps to suppress any possible vibration in ceiling framing sections.

A preferred form of excitations is a unitary moving coil inertial transducer with a 25mm or 38mm voice coil, 6 ohms impedance, 40 watt power handling, with the coil bonded directly to the panel surface. A compact cup type magnet system enclosed and self sealing may also be bonded directly to the panel via a resilient decoupling ring chosen for its vibro-mechanical properties and dimensional stability.

Depending on application, a low cost form ceiling tile can be made with a plastics foam cored paper faced board material, which may have a light alloy foil layer for fire retardancy, driven by low cost piezo vibration exciters. Reduced maximum sound levels are obtained, still more than sufficient for personnel announcements, voice overs and background music distribution. The wide area coverage is maintained.

When metallic or carbon conductive skins or cores are employed the speaker may be earth bonded or grounded to maintain EMC screening of an installed structure.

Accordingly, a particular device aspect of this invention arises as a ceiling tile for a suspended ceiling and incorporating a loudspeaker, the tile being in the form of a distributed mode acoustic radiator, and a transducer being mounted wholly and exclusively on the radiator to vibrate the radiator to cause it to resonate, preferably with a resilient suspension the periphery of the radiator and by which the radiator is supported in the suspended ceiling, and/or the radiator being a stiff lightweight panel comprising a cellular core sandwiched by high modulus skins.

The essence of the aforesaid partial cutting/inner framing feature could be applied analogously to such as polystyrene foam ceiling tiles, say as rearward ribbing defining desired operative area within which preferential transducer location can be applied.

Such a ceiling tile loudspeaker does not require a frame, chassis, or acoustic baffle. The entire speaker panel is unitary and may be placed in position just like a passive decorative ceiling tile. The acoustic panel is relatively lightweight, reducing ceiling loadings and aiding installation. It may readily be made fire resistant. It can be decorated, painted or papered to render it invisible in a ceiling installation without significant acoustic impairment. Minor damage does not impair the performance as compared with diaphragm- of cone-type speakers which are very fragile. Also important is the great advantage in sound distribution given by the acoustic panel speaker. Its combination of high intelligibility and wide angle coverage means that in a typical large area installation superior acoustic performance may be achieved with around half the number of conventional installed loudspeakers, with a great saving in installed cost.

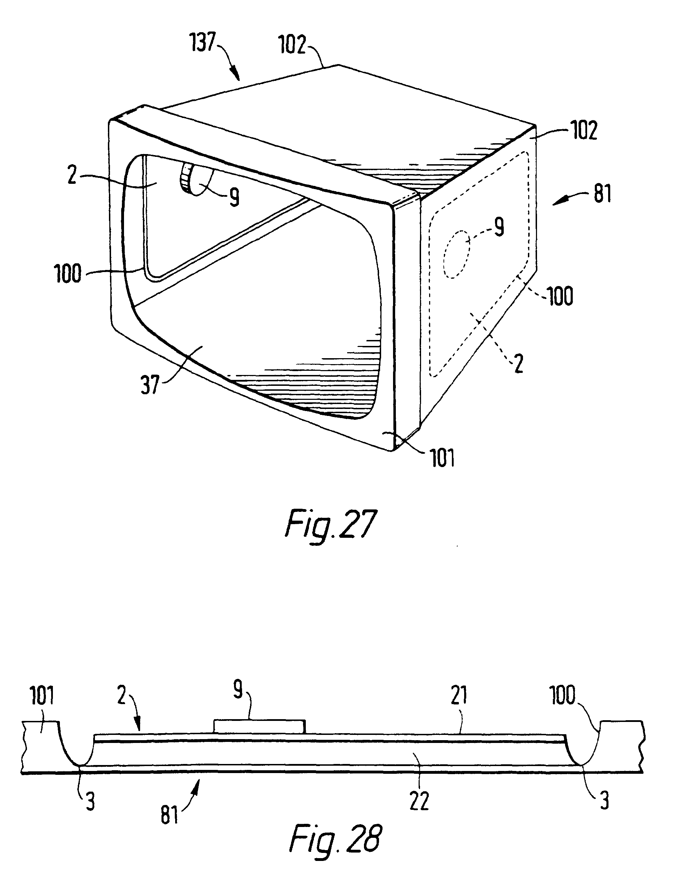

Figure 27 shows a visual display unit (137), e.g. a computer monitor or the like, having a screen (37) formed in any desired fashion, e.g. as a cathode ray tube or as a liquid crystal display. The unit (137) comprises a box-like housing (101) having opposed sides (102) each of which is formed to incorporate a multi-mode acoustic radiator (2) generally similar to that described above with reference to Figures 1 and 2 to form loudspeaker (81).

The housing (101) is moulded from plastics and the opposed sides (102) are moulded with generally rectangular relatively thin rectangular areas, in comparison to the general thickness of the housing, bounded by grooves (100) to define the radiators (2). These areas (2) are stiffened on their inner faces with a lightweight core (22) which is backed by an inner skin (21) to form a rigid lightweight multi-mode radiator panel (2) of the kind described above e.g. with reference to Figures 1 and 2. The grooves effectively define a resilient suspension (3) of the kind shown in Figures 1 and 2 and the surrounding housing (101) forms the frame (1). A transducer (9) is, in accordance with teachings hereof, attached to each panel (2) to launch/excite bending waves into the panels to cause them to resonate to produce an acoustic output.

Particular device aspects of this invention include a visual display unit comprising a display screen and a housing in which the display screen is mounted, wherein the housing carries a loudspeaker comprising a distributed mode acoustic radiator and transducer means mounted wholly and exclusively on the radiator to vibrate the radiator to cause it to resonate, preferably with the radiator being integral with the housing, e.g. an external wall thereof, and/or the radiator comprising a stiff light-weight panel having a cellular core sandwiched by skin layers, one of which skin layers can be integral with the housing, and/or said one skin layer being thinner than the average wall thickness of the housing, and/or the external wall of the housing being formed with a groove which surrounds the radiator and which can further usefully afford a resilient suspension in coupling the loudspeaker to the housing.

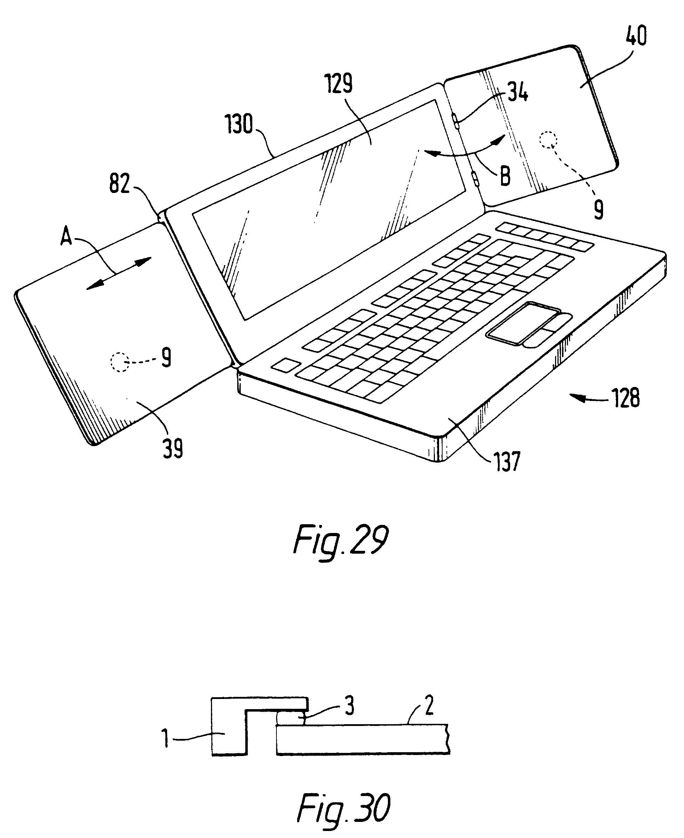

Figures 29 and 30 show a lap-top personal computer (128) having a keyboard (137) and a member (130) incorporating a visual display screen (129) and which member is provided with an opposed pair of loudspeakers (39,40) attached to the visual display member (130) to adapt the computer for multi-media applications and the like. The loudspeakers (39,40) are formed as thin rectangular panels hereof which as indicated at (39) and by arrow 'A' may be slid from the position of use indicated in the drawing into a storage position in the member (130) through a slot (82). Alternatively, as indicated at (40) and by arrow 'B' the loudspeaker panel may be folded about hinges (34) from the position of use indicated in the drawing to a storage position in which the panel (40) overlies the screen member (130).

Each of the loudspeakers (39,40) hereof is formed as a lightweight multi-mode acoustic radiator of the kind described above with reference to Figures 1 and 2. Thus each loudspeaker (39,40) comprises a stiff lightweight panel (2) having a cellular core (22) skinned on both sides with surface sheets (21), the panel (2) being supported at its periphery on a resilient suspension (3) of an elastomeric material which in turn is supported in a lightweight surrounding frame (1), e.g. of plastics. A transducer (9) is mounted on each panel (39,40) at a predetermined position as discussed above to launch/ excite bending waves in the panel (2) to produce an acoustic output. The transducer (9) may be as illustrated herein. A decorative lightweight cover (not shown) may be positioned over the panel (2) surround (3) and frame (1) to obscure the loudspeaker.

Particular device aspects of this invention include a lap-top computer comprising a combined keyboard and display screen, characterised by an opposed pair of loudspeakers attached to the computer, and in that each loudspeaker comprises a distributed mode acoustic radiator having a transducer wholly and exclusively mounted thereon to vibrate the radiator to cause it to resonate. The loudspeakers may be mounted to the display screen. The loudspeakers may be hinged on the display screen.

The display screen may comprise a housing and the loudspeakers may each be housed in a slot in the display screen housing for sliding movement between a stored position, in which the loudspeakers are substantially wholly housed in the slot, and a use position in which the loudspeakers are positioned on opposite sides of the display screen.

Each radiator may comprise a stiff lightweight panel having a cellular core sandwiched by opposed high modulus skin layers, and the panel may be supported in a surrounding frame by means of a resilient suspension.

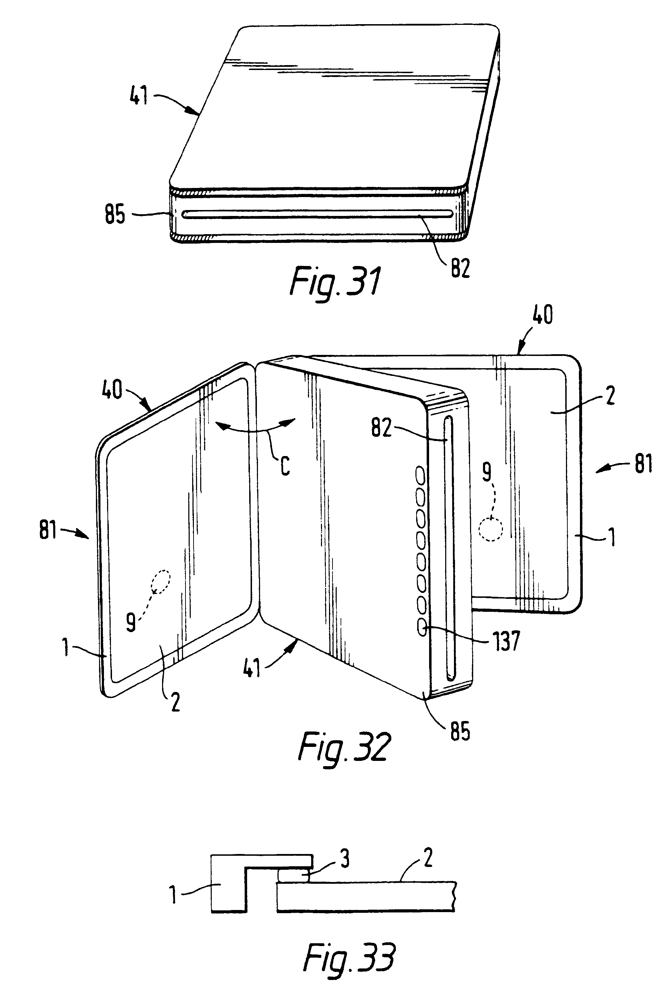

Figures 31 to 35 show a portable personal compact disc player (41) of the kind having a body (85) formed with a slot (82) through which discs are loaded into, and removed from the player and control buttons (137) by which the player is operated. The player (41) is provided with an opposed pair of loudspeakers (81) in the form of thin panel-form members (40) hinged to opposite sides of the player (41) to sandwich the player. The loudspeakers (40) are sized to be co-extensive with the player and are arranged to be hinged from the closed position shown in Figure 31 to the extended position shown in Figure 4 as indicated by arrow 'C'. In the extended position, the body (85) of the player (41) tends to act as a central baffle separating the loudspeakers (40) to improve channel separation.

Each of the panel-form loudspeakers (40) is a distributed mode acoustic radiator hereof, generally and/or as in Figures 1 and 2. Thus each loudspeaker comprises a rigid lightweight panel (2) formed from a cellular core (22) enclosed by skin layers (21 ), the panel being mounted in a surrounding resilient suspension (3), e.g. of foam rubber, which in turn is mounted in a lightweight rectangular frame (1) e.g. of plastics. A transducer (9), e.g. of the kind described with reference to Figure 24 is mounted on each panel (2) to launch/excite bending waves in the panel to cause the panel to resonate and produce an acoustic output. The transducers (9) are positioned on the respective panels (2) in predetermined locations as set out above.

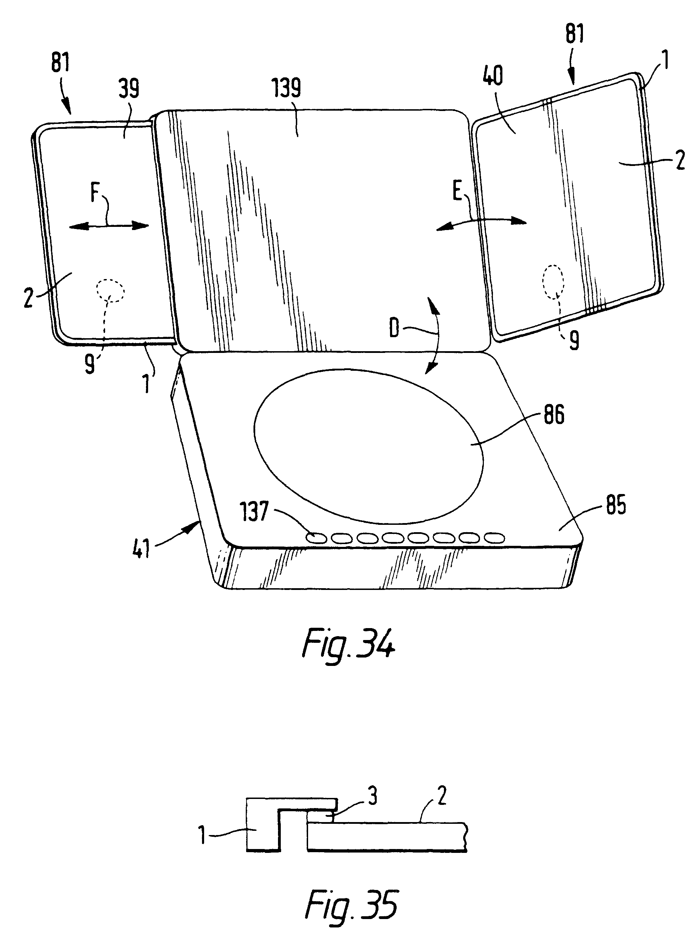

Figures 34 and 35 illustrate a portable compact disc player (41) of the kind comprising a body (85) carrying a turntable (86), operating buttons (137) and a lid (139) hinged as shown by arrow 'D' to close over the turntable. The player (41) is provided with an opposed pair of loudspeakers (81) in the form of thin panel-form members which as shown at (40) may be hinged to the sides of the lid (139) to be movable as indicated by arrow 'E' from a closed position (not shown) to the extended position shown. Alternatively as shown at (39) the panel-form loudspeakers (81) may be housed in a slot (not shown) in the lid (139) and slid as indicated by arrow 'F' between extended and retracted positions. Each of the panel-form loudspeakers (39, 40) is a distributed mode acoustic radiator hereof. Thus each loudspeaker comprises a rigid lightweight panel (2) formed from a cellular core (22) enclosed by skin layers (21), the panel being mounted in a surrounding resilient suspension (3), e.g. of foam rubber, which in turn is mounted in a lightweight rectangular frame (1) e.g. of plastics. A transducer (9), e.g. of the kind described with reference to Figure 24 is mounted on each panel (2) to launch/excite bending waves in the panel to cause the panel to resonate and produce an acoustic output. The transducer (9) are positioned on the respective panels (2) in accordance with teaching hereof

Particular device aspects of this invention include a portable compact-disc player having an opposed pair of panel-form loudspeakers attached to the player, each loudspeaker being of distributed mode acoustic radiator type hereof having a transducer mounted wholly and exclusively thereon to vibrate the radiator to cause it to resonate. The portable compact-disc player may comprise a body portion having a turntable and a lid adapted to close over the turntable, the loudspeakers being mounted on the lid, say hinged on/to the lid. Alternatively, the loudspeakers may each be housed in a slot in the lid for sliding movement between a stored position, in which the loudspeakers are substantially wholly housed in the slot, and a use position in which the loudspeakers are positioned on opposite sides of the lid.

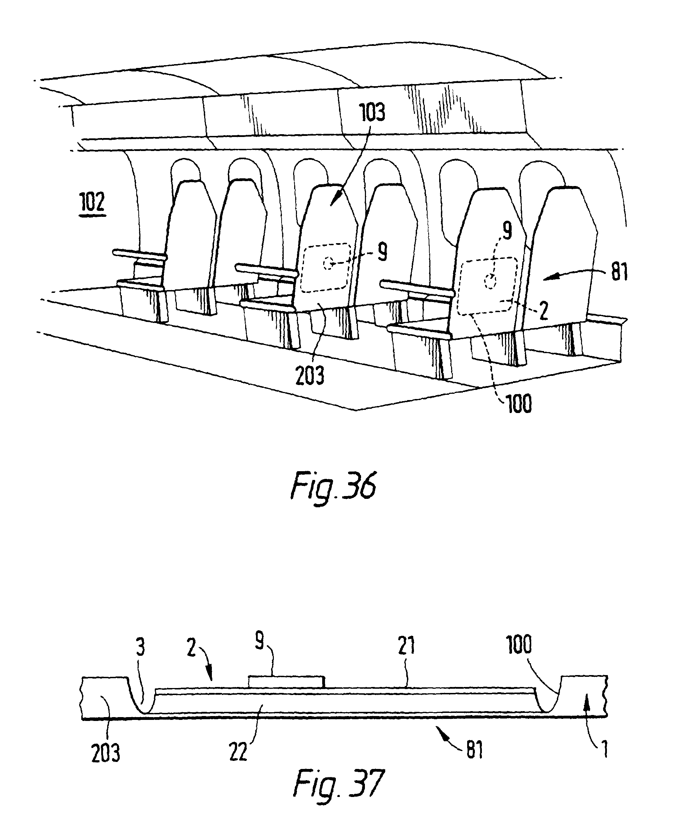

In Figures 36 and 37, a cabin (102) of a passenger vehicle, e.g. an aircraft, railway carriage, motor coach or ferry, has rows of passenger seats (103) into the backs (203) of which are incorporated loudspeakers (81). As is conventional the seat backs (203) are shells moulded from a suitable plastics material. As shown more particularly in Figure 37, the moulded backs (203) of the seats (103) are moulded with generally rectangular relatively thin areas (2) bounded by grooves (100). These areas (2) are stiffened on their inner faces with a lightweight cellular core (22) which is backed by an inner skin (21) to form a rigid lightweight multi-mode radiator panel (2) of the kind to which this invention generally and Figures 1 and 2 particularly relate. The grooves (100) effectively define a resilient suspension (3) and the surrounding seat backs (203) form the frame (1). A transducer (9), e.g. of the kind described in detail herein, is attached to each panel (2) to launch or excite bending waves in the panels to cause them to resonate to produce an acoustic output.

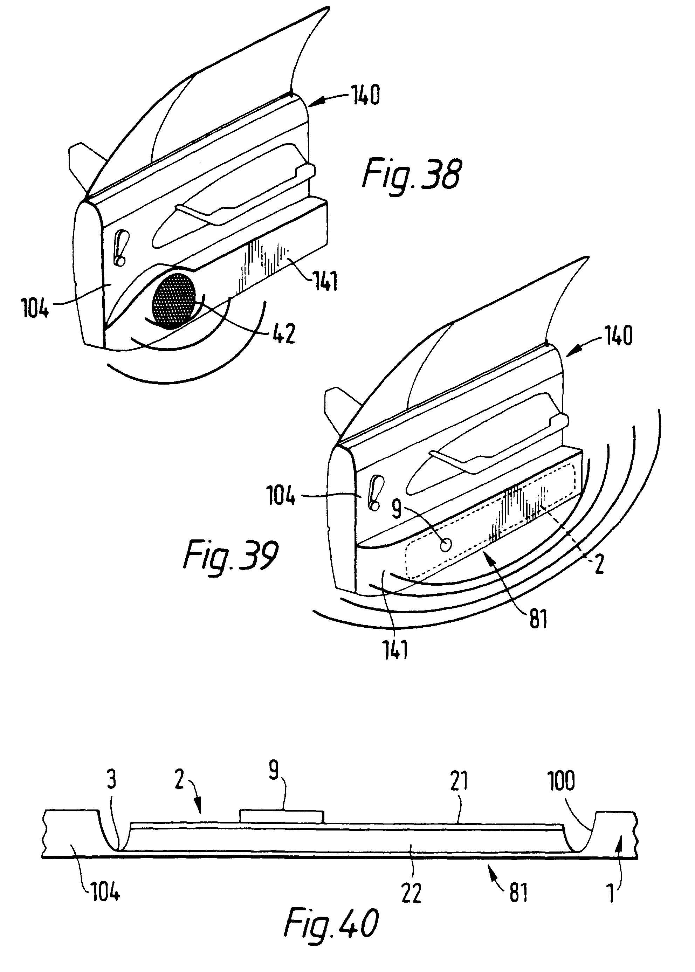

Figure 38 illustrates a conventional domestic automobile door (140) in which a conventional cone-type pistonic loudspeaker drive unit (42) is mounted in a pocket (141) in a moulded or pressed door lining (104). The normal consequence of this is that the sound radiated by the drive unit (42) is directed towards the feet of the occupant(s) of the automobile, matters being made worse by directional characteristics of conventional loudspeaker drivers.

In Figure 39 an automobile door (140) has a door lining (104) having a pocket (141) incorporating a loud-speaker (81) hereof. As usual, the door lining (104) is moulded or pressed from plastics or fibreboard. The lining is formed with a generally rectangular thin area (2) bounded by a groove (100). The area (2) is stiffened on its inner face with a lightweight cellular core (22) which is backed by an inner skin (21) to form a rigid lightweight multi-mode radiator panel (2) of the kind described above with reference to Figures 1 and 2. The groove effectively defines a resilient suspension (3) and the surrounding lining (104) forms the frame (1). A transducer (9) e.g. of the kind described in detail for Figure 24, is attached to the panel (2) to launch/excite bending waves in the panel to cause it to resonate to produce an acoustic output. The wide dispersion of sound produced by a loudspeaker hereof will provide an improved sound field for the occupants of the vehicle, with much reduced local 'hot' spots.

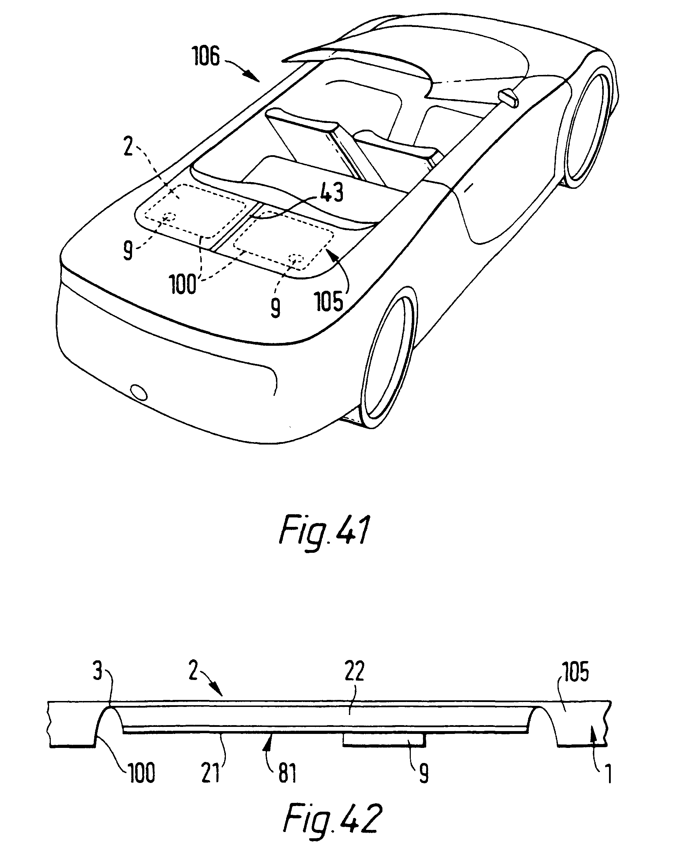

Figures 41 and 42 show an automobile (106) with loudspeakers (81) in a parcel shelf (105) towards the rear of the automobile. It will be noted that the parcel shelf is divided longitudinally by means of a structural rib (43) into two areas to produce a stereo pair of loudspeakers (81). Otherwise, the configuration of the loudspeakers is as shown in Figures 39 and 40.

Accordingly, a particular device aspect of this invention arises as a vehicle having a passenger compartment with a loudspeaker of distributed mode acoustic radiator type hereof with a transducer mounted wholly and exclusively on the radiator to vibrate/excite the radiator and cause it to resonate. The radiator may be integral with a passenger seat in the vehicle or with a door into the passenger compartment. The radiator may be integral with the interior of the passenger compartment. The vehicle may comprise a plastics moulded component in or forming part of the passenger compartment, and the radiator may be integral with the component. The radiator may comprise a stiff lightweight panel having cellular core sandwiched between skin layers, and wherein one of the skins is integral with the moulded component. The said one skin may be thin in comparison to the average wall thickness of the component. The said one skin may be surrounded by a groove in the component, the groove defining a resilient surround for the radiator. In another aspect, a vehicle component comprises a loudspeaker having a distributed mode acoustic radiator and a transducer mounted wholly and exclusively on the radiator to vibrate the radiator to cause it to resonate.

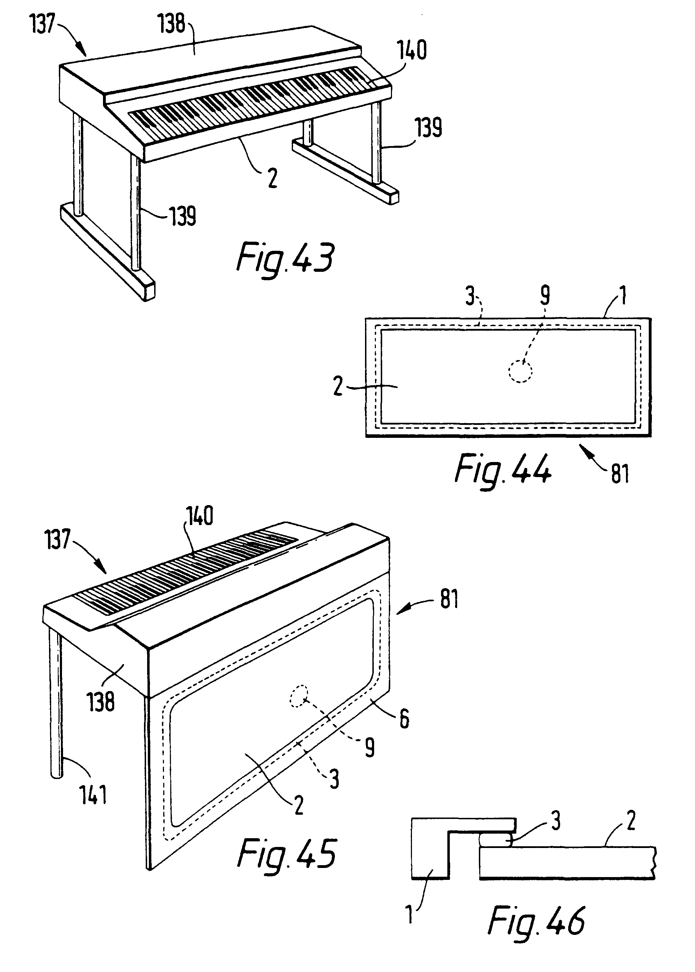

Figures 43, 44 and 45 illustrate an electronic keyboard musical instrument (137), e.g. a piano, comprising a body (138) supported on ground engaging legs (139). The body (138) is formed with a keyboard (140) by which the instrument is played. In conventional fashion the instrument is provided with a signal generator connected to the keys and with a signal amplifier driving a loudspeaker, which is a distributed mode acoustic radiator (81) hereof, see Figures 1 and 2, incorporating a stiff lightweight rectangular panel (2) mounted by its periphery in a frame (1) with an interposed resilient suspension (3) and driven by a transducer (9), all as described above with reference to Figures 1 and 2. As shown, the loudspeaker (81) forms the base of the body (138). Figure 46 illustrates an electronic keyboard musical instrument, (137) quite similar to that of Figures 43 to 45 having a body (138) having a keyboard (140). The body is supported on front legs (141) and is provided with a panel-form loudspeaker (81) as a back support of the instrument.

The loudspeaker (81) comprises a rigid lightweight distributed mode acoustic radiator panel (2) mounted by its periphery in a surrounding resilient suspension (3) e.g. of foam rubber, the suspension being supported in a baffle-like frame (6), e.g. of medium density fibreboard. A transducer (9), is attached to the panel (2) to launch bending waves into the panel to cause the panel to resonate to produce an acoustic output. The arrangement is thus of the kind shown in Figures 1 and 2. The transducer (9) will be driven by an amplifier (not shown) which is connected to receive signals produced by depression of the keys of the keyboard, in generally conventional fashion.

Particular device aspects of this invention include an electronic musical instrument having a keyboard, with a loudspeaker comprising a distributed mode acoustic radiator and a transducer mounted wholly and exclusively on the radiator to vibrate the radiator to cause it to resonate, the radiator being generally as herein, e.g. as a stiff lightweight panel having a cellular core sandwiched by a pair of high modulus skins, a frame surrounding the panel and a resilient suspension supporting the panel on the frame. The electrical musical instrument may have legs supporting the instrument above the ground and the radiator may be provided at the base of the instrument. The loudspeaker may be positioned with the radiator substantially vertical. The loud-speaker may form a ground support for the instrument.

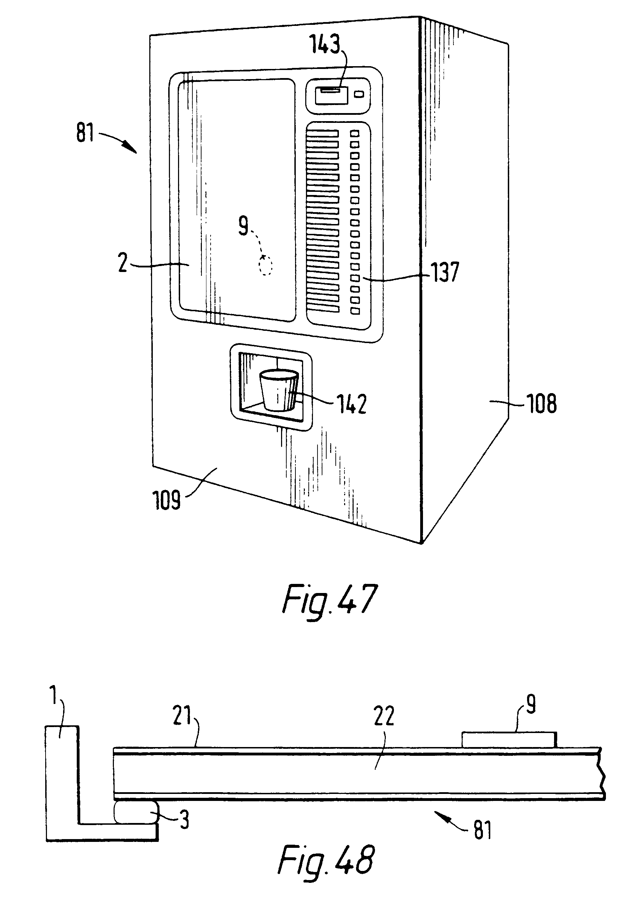

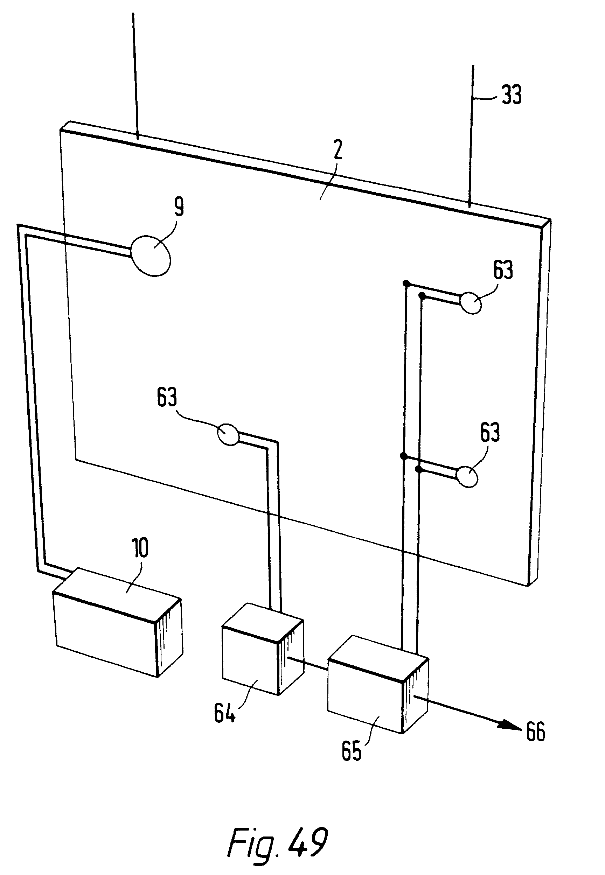

Figure 47 illustrates a vending machine (108), e.g. a drinks dispenser incorporating a loudspeaker (81) whereby the loudspeaker forms part of the front face (109) of the vending machine. The loudspeaker (81) is arranged to provide audio information as to the dispensable contents of the machine and/or the manner it is to be operated. The front (109) of the machine carries the normal coin or the like freed mechanism (143), product selector panel (137) and dispenser outlet (142). The loudspeaker (81) comprises a rectangular lightweight rigid distributed mode radiator panel (2) comprising a cellular core (22) having skin layers (21) on both faces, the panel being supported around its periphery on a resilient suspension (3), e.g. of foam rubber. The suspension is mounted in a rectangular frame (1) mounted in the front face (109) of the machine (108). Thus the loudspeaker is of the kind described in Figures 1 and 2. Visual information, e.g. in the form of graphics and text, may be applied to the panel (2) as desired. The panel (2) carries a transducer (9) hereof to excite bending wave vibration as resonation to produce an acoustic output. The machine will incorporate the required signal generator to produce the necessary messages and amplifier means (not shown) for driving the transducer (9). If desired the device can be made to be proactive by arranging that the distributed mode panel (2) is capable of use both as a loudspeaker and as a sound receiver or microphone, as shown in Figure 49.

The panel is shown driven into excitation a piezo-electric transducer (9) as shown in Figure 24, which in turn is connected to and driven by an amplifier (10). The panel also carries a pair of vibration transducers (63) which also be piezo-electric much as in the same Figure 24 which are coupled in parallel to drive a signal receiver and conditioner (65) connected to an output (66). Another vibration transducer (63) on the panel (2), e.g. of the kind shown in Figure 6 is coupled to drive a filter/ correlator the output from which is fed to the signal receiver/conditioner (65), to provide signal correction. At least one of the transducers is configured such that verbal instructions can be given to the vending machine.

Particular device aspects of this invention include a vending machines incorporating active acoustic devices hereof, e.g. in the form of loudspeakers for the purpose of providing information concerning the manner of operation of the machine or its contents, wherein a vending machine may comprise a store of articles or product to be dispensed, user-operated means for selecting the article or product to be dispensed, means, e. g. a coin freed mechanism authorising dispensing, its loudspeaker hereof allowing voice communication, conveniently along with a visual display panel afforded by the radiator, say as a stiff lightweight panel having a cellular core sandwiched between a pair of skins, the panel being surrounded by a frame and mounted in the frame by means of a resilient suspension. Such vending machine may comprise a body and the frame may be attached to or formed by the body; and may have a second transducer coupled to the radiator to produce a signal in response to resonance of the radiator due to incident acoustic energy. Preferably, at least two said second transducers are provided, at spaced locations on the radiator. A further transducer may be provided on the radiator to produce a signal in response to resonance of the radiator to due to incident acoustic energy, and means may be provided for comparing/conditioning the signal generated by the said further transducer with that of those generated by the said second transducer(s).

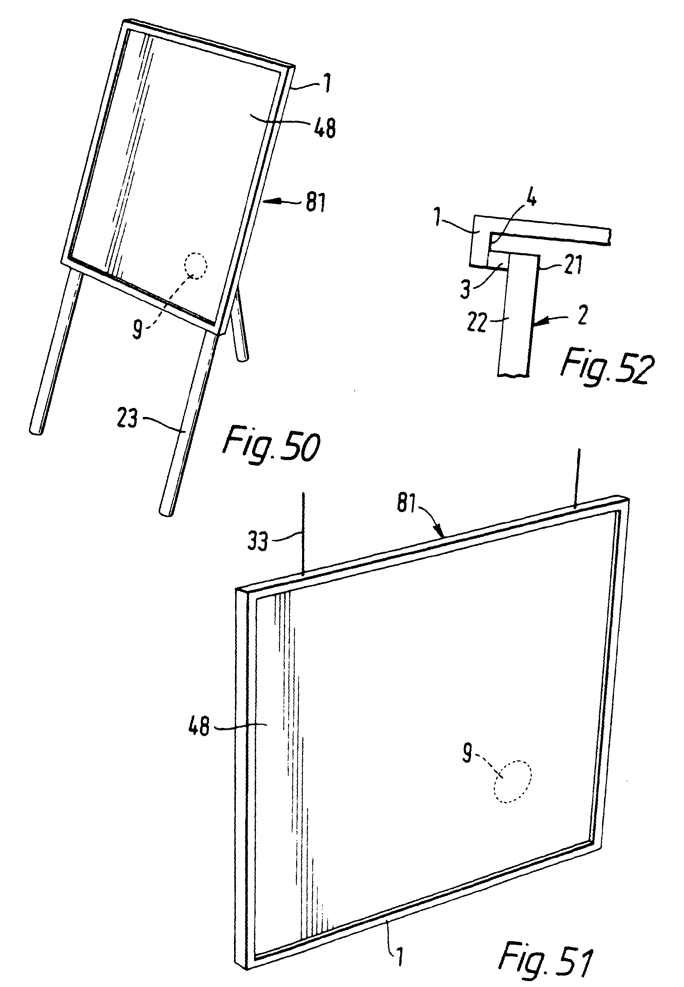

As introduction to Figures 50 to 52, the acoustic panel technology of Figures 1 and 2 and generally hereof can be applied to the design of normal board material commonly used for notices and display advertising, the normal processing of these boards e.g. lamination, screen printing or spray painting, being unhindered. The board itself may thus be specified, dimensioned and electrodynamically driven to operate as a wide coverage acoustic radiating panel a flat loudspeaker. As such, a moderate audience of up to 10 persons for a small 0.56m square metre panel or 30-50 persons for a 0.7 to 1.2 square metre size may be served at natural volume levels with highly articulate reproduction of speech and also background music or relevant sound effects, as required. Due to the naturally dispersed acoustic radiation properties of the panel, the distorting effects of local boundary reflections are minimised. A substantial physical obstruction of a proportion of the acoustic panel does not significantly impair the sound distribution.

Lower levels of sound and of electrical input power are required for a given level of articulation/intelligibility. In a preferred form the acoustic panel comprises a low cost structure of paper honeycomb or foam core 3 to 6mm thick bonded to reinforcing paper, plastic film or plastic film coated paper skins of 0.08 to 0.3mm thickness. The preferred drive for an inexpensive design using a flat surface or even embedded transducer, is piezoelectric, operated in bending or mass loaded, vibration coupled forms. These transducers have a naturally rising acoustic output with frequency which is predictably and optimally adjusted to a flat response by a combination of series resistive drive to the capacitance load of the transducer, and also by mass loading of the piezo element (for a given mass the acceleration is inversely proportional to frequency) and via the detailed specification of the mechanical properties of the board. By control of the fibrous loss factor in the skins, the visco-elastic properties of the adhesive bonding the skin to core, and the piezo element to the skin by applied surface laminates, including the backing for the displayed image or text, and the bulk properties of the core in shear and compression, the desired frequency response may be achieved.

Where higher sound levels and larger panels are concerned, alloy or part alloy skins will provide good energy coverage over the panel, with a proportionally lower loss factor which appropriately matched to a higher power moving coil type of transducer. The latter has a flat region of frequency response. Where a flat, uninterrupted surface is required on both sides of the panel, the transducer may be of the embedded type concealed within. If magnetic screening is required for the latter, thin 0.5mm mild steel foils may be included under the skin surface over the transducer area. A small gain in efficiency will also result due to improved flux linkage.

Small, low cost examples of the notice board will not require specific framing or specified damping. If of the desk or counter top form, sufficient damping is provided by the simple contact of the lower edge of the acoustic panel with the surface it is placed on. The device would have a photo frame type of back rest, effective even if fabricated in light card. Certain classes of stiff foamed plastic, e.g. unplasticised PVC, have appropriate bulk properties either self skinning or unskinned, to operate within the acoustic panel theory range. These can be used directly as acoustic panels of this type without additional stiffening skins.

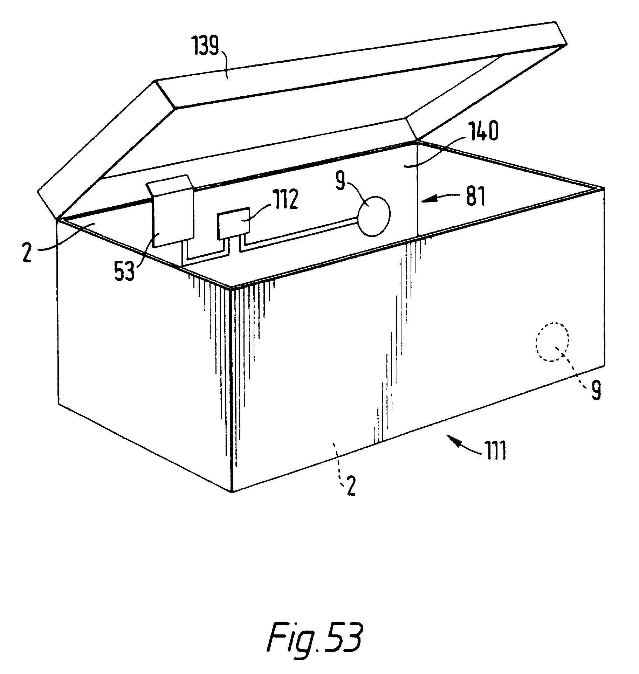

Figures 50 to 52 illustrate a noticeboard, advertising display board or the like (48) incorporating loudspeaker technology hereof, and as shown in Figures 1 and 2. Thus, a loudspeaker (81) incorporating a rigid lightweight distributed mode acoustic radiator panel (2) of the kind shown in Figures 1 and 2 has graphic information, e.g. text and/ or pictures of any desired kind printed on the panel (2). The graphic information can then be supplemented by an audio message via the loudspeaker to reinforce the message. As shown in Figure 50 the loudspeaker/display board (48) is mounted on a stand (23) in the form of an easel. Alternatively the loudspeaker/display board may be suspended on wire (33) as shown in Figure 51. Alternatively the noticeboard may be supported in any other desired manner. As shown in Figure 52, the frame (1) may incorporate a return lip (41) to conceal the resilient suspension (3) which is attached between the rear face thereof and the peripheral margin of the panel (2). A suitable transducer is as shown in Figure 24, i.e. of piezoelectric bender-on-disc type.

Particular device aspects of this invention include visual display apparatus comprising a notice or the like board in the form of a distributed mode acoustic radiator having a transducer mounted wholly and exclusively thereon to vibrate the radiator to cause it to resonate, thus be a loudspeaker which can be used to reinforce the visual information displayed thereon: where the radiator may comprise a stiff light-weight panel having a cellular core sandwiched between skin layers, a surrounding frame and a resilient suspension mounting the panel in the frame; the frame may have a return lip concealing the suspension; the skins may be of or may comprise paper and the core may comprise paper honeycomb; and the transducer may be a piezo electric bender.

Figure 53 illustrates packaging incorporating the loud-speaker technology hereof. The packaging is shown in the form of a box (111) having a hinged lid (139), the box, or at least part of it being made from a composite comprising a core of foamed plastics sandwiched between sheets of Kraft board to form a panel as shown in Figure 2, such that the box comprises a rigid, lightweight distributed mode acoustic radiator as described with reference to Figures 1 and 2. The rear panel (140) of the box is shown used to form a distributed mode radiator loudspeaker (81), although any one of the panels making up the sides of the box would be appropriate if suitably constructed. An alternative placement for the transducer (9) is shown in dotted lines.

A piezoelectric transducer (9) can be as shown in more detail in Figure 24, and is illustrated attached to the inner face of the rear panel (140) of the box and is driven by a sound generator/amplifier/ battery unit (112) also mounted on the rear panel. The unit (112) is controlled by a switch formed integrally with a hinge (53) by which the lid (139) is secured to the box, whereby the sound generator is activated when the lid is lifted. In this arrangement the edge termination of the panel (2) is formed by the corners of the box so that no additional frame (1) or suspension (3) of the kind shown in Figures 1 and 2 is required. It will be appreciated that the packaging need not be of the shape shown in the drawing, and could, for example, be shaped according to the requirements of the contents. Thus the packaging might be shaped to enclose a compact disc or the like and may be arranged to preview the contents of the compact disc or to provide other information relating thereto.

Particular device aspects of this invention include packaging comprising a board component comprising a distributed mode acoustic radiator having a transducer mounted wholly and exclusively on the radiator to vibrate the radiator to cause it to resonate; where the board may be a panel having a cellular core sandwiched between skin layers, typically a core of foamed plastics sandwiched between sheets of Kraft board; the transducer may be a piezo-electric bender, and the board may form one side of a box, which may have a lid; and means may be associated with the lid for triggering actuation of the transducer on movement of the lid relative to the box. The packaging may further comprise a signal generator, an amplifier and an electric battery.

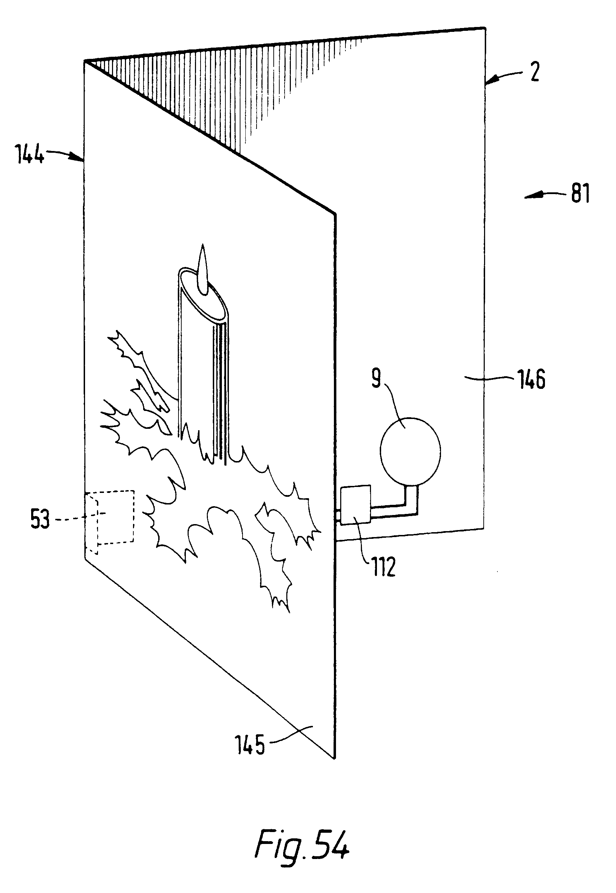

Figure 54 shows a greetings or similar card (44) incorporating loudspeaker technology hereof. The card is in the form of a folded member having a front leaf (145) and a rear leaf (146). At least the rear leaf (146) is made from a composite board consisting of a core (22) of foam plastics sandwiched by skins of Kraft board (21 ) to form a rigid lightweight distributed mode acoustic radiator panel (2) of the kind described in Figures 1 and 2. Such composite boards are known under the trade name KAPPABOARD. It has been found that a panel shaped according to the European standard 'A' series is suitable. A transducer (9) as shown in Figure 24 is attached to the rear leaf (146) to vibrate the panel (2) to cause it to resonate to produce an acoustic output. The transducer (9) is driven by a signal generator/amplifier/battery unit (112) which is actuated by a switch (53) concealed in the fold of the card so as to activate the signal generator when the card is opened. It will be noted that in this arrangement, no frame (1) or surround (3) is required. Sufficient damping of the card is provided either by the material from which the card is constructed and/or by holding the card or standing it on a surface.

Particular device aspects of this invention include a greetings or the like card having or comprising a board forming at least part of the card, the board being a distributed mode acoustic radiator having a transducer, preferably of piezo-electric bender type say a crystalline disc, mounted wholly and exclusively on the radiator to vibrate the radiator to cause it to resonate, the board preferably being a panel having a cellular core sandwiched between skin layers, say a core of foamed plastics sandwiched between sheets of Kraft board. Such board may form a leaf of the card, which may have a pair of leaves, preferably with associated means for triggering actuation of the radiator on movement of one leaf relative to the other leaf; and a greetings or the like card may comprise a signal generator, an amplifier and an electric battery on a leaf of the card.

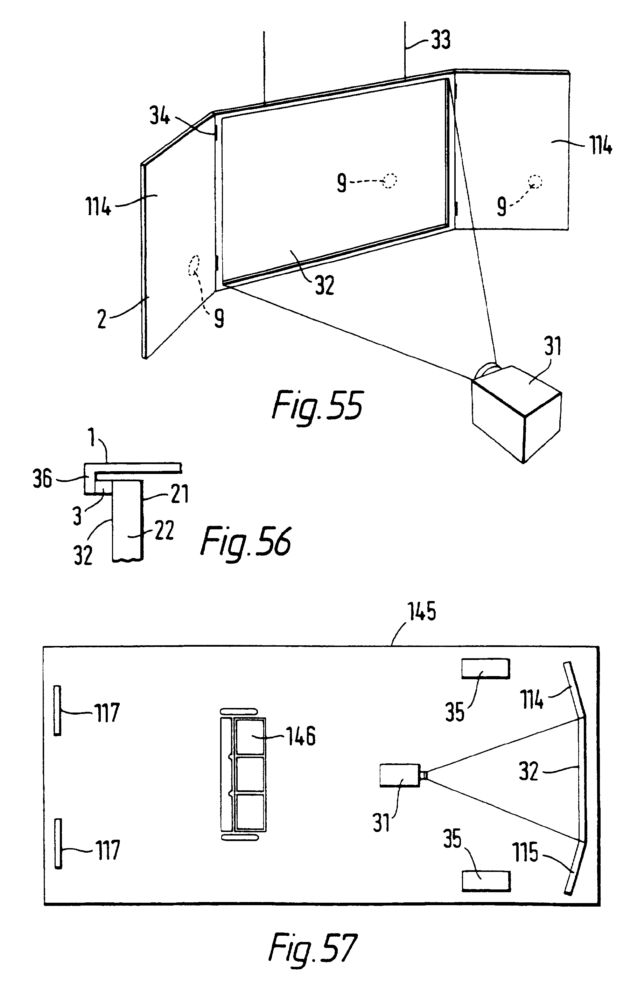

Figure 55 shows a multi-media audio-visual system comprising a moving picture projector (31) arranged to project an image onto a projection screen formed by a loudspeaker panel (32) of the kind shown in Figures 1 and 2. The latter (32) comprises a panel (2) having aluminium or carbon fibre reinforced skins (21) sandwiching a honeycomb core (22) of aluminium foil. The composite may be secured together using any epoxy adhesive. For a screen panel size of 1.22 x 1.38m, the thickness of the aluminium skins may be 300 microns. The core thickness may be 11 mm and the cell size of honeycomb may be 9.5mm. Such a panel is stiff, of low density, high modulus and is substantially isotropic as to bending stiffness.

A pair of smaller subsidiary loudspeakers (114) of the kind described in Figures 1 and 2 are hinged on opposite sides of the centre channel loudspeaker panel (32) by means of hinges (34) whereby the subsidiary panels can be hinged against the primary panel (32) when not in use and can be moved into the position as illustrated for use. The subsidiary panels (114) are arranged to receive and radiate respective left and right hand channel information, e.g. for stereo operation. The subsidiary loudspeakers (114) may comprise panels (2) having skins (21) of aluminium foil, or carbon fibre or glass fibre reinforced plastics. A decorative film, e.g. of Melanex, may be applied over one or both of the skins. The core (22) of the panels (114) may be of aluminium foil, e.g. in a honeycomb cell arrangement, or may be of paper cells. Where paper is employed it may be impregnated with a plastics material such as a phenolic compound to improve the stiffness of the paper. The cell size may be in the range 3 to 6mm and the core thickness may be of the order of 3 to 10mm. Where the skins are of aluminium foil they may be 25 to 100 microns in thickness. An epoxy adhesive may be used to assemble the panel.

Stereo, i.e. two-channel sound reproduction, involves the creation of sound stage illusion containing the properties of source location, perspective and the ambience of the original recording. Stereo with conventional speakers is strong on aspects of phantom source location and in some cases perspective, but is weaker in respect of the expression of natural space and ambience. This is because the near point source nature of conventional pistonic speakers makes it easy aurally to identify their physical location, which in conflict with the desire for overall stereo image localisation.

It is often said that as reproducing devices the loudspeakers should disappear into the sound stage illusion. Part of the problem lies in the relatively narrow forward radiating directivity of conventional speakers. Additionally, the sound balance to the sides and rear of the enclosure, sound which strongly drives the reverberant sound field in the room, is coloured and unbalanced with significant variations in frequency response. This detracts from the sense of natural acoustic space and ambience.

The embodiment of Figure 55 employs a pair of acoustic panel speakers for left and right channels which are set in complex vibration over the whole surface over a wide frequency range typically 100Hz to 20kHz. The central/primary loudspeaker panel (32) is shown suspended on suspension means (33) but alternatively the panel may be supported e.g. on a floor stand.

Figure 57 shows how the projection apparatus may be arranged in a room (145) equipped with seating (146). The apparatus has a projector (31) projecting an image onto the screen (32) and also includes a pair of subwoofers (35), which may be of conventional construction, at the sides of the room to improve bass audio extension and a pair of rear effect loudspeakers (117) i. e. so-called ambience speakers, at the rear of the room. Suitably the rear speakers (117) are also of the kind shown in Figures 1 and 2 in view of their wide and even sound dispersion characteristics. The rear effect loudspeakers may be of the same construction as the subsidiary loudspeakers (114).

A distributed mode panel loudspeaker hereof can have remarkable non-directional properties. For acoustic reproduction of ambience channels of a sound system, the energy must be widely distributed, ideally from non-directional sources. It is important that the sound source is not well localised otherwise the perception of a large ambient space, the simulated acoustic region behind the listener, is unsatisfactory.

Hitherto conventional directional and/or small source speakers, generally moving coil types, have been used for ambience reproduction. Due to the intensity phenomenon of aural perception, audience members seated closer to a nearby ambience speaker find their perception strongly localised on that speaker greatly impairing the ambience effect and their whole appreciation of the multichannel sound field. The localisation may be so powerful that aural attention is drawn away from the primary front stage sound channels.

An ambience reproducing system built with one or more loudspeakers according to the teachings hereof deliver a large sound field or near uniform intensity which has deliberately poor localisation. A large audience may be handled, even with some persons in close proximity (as near as 0.5m) to the panel loudspeakers without any significant localisation of the immediate reproducing channel and with the vital property of an unimpaired aural perception of the important front channels. Greatly improved realism is achieved for the multi-channel sound reproducing system as a whole as a result of the desirable radiating characteristics of the acoustic panel sound reproducer. The ambience loudspeakers may if desired be suspended on wires and disguised, by the application of a suitable image to the panel (2) to resemble pictures.

Figure 56 shows how the frames (1) of the projection/ loudspeaker panel may be formed with a return lip (36) whereby the suspension (3) can be concealed. The frames of the subsidiary loudspeakers (114) and the ambience loudspeakers (117) may be similarly formed.

Particular device aspects of this invention include a projection screen comprising a panel having a light reflective surface, wherein the screen is a distributed mode acoustic radiator having a transducer mounted wholly and exclusively thereon to vibrate the radiator to cause it to resonate; the radiator preferably comprising a stiff light-weight panel having a cellular core sandwiched between a pair of high modulus skins, a surrounding frame, and a resilient suspension mounting the panel in the frame, the cellular core preferably being of honey-comb aluminium foil, and the skins preferably being of fibre-reinforced plastics: and/or as the projection screen comprising panel-form loudspeakers attached to opposite sides thereof to provide left and right hand channel information, say left and right hand loudspeakers being hinged on the radiator to be foldable against the radiator for storage, preferably themselves as distributed mode acoustic radiators each having a transducer mounted wholly and exclusively thereon to vibrate the radiator to cause it to resonate: and/or as audio visual apparatus characterised by a projection screen as aforesaid and/or the audio-visual apparatus comprising at least one rear channel loudspeaker in the form of a distributed mode acoustic radiator having a transducer mounted wholly and exclusively thereon to vibrate the radiator to cause it to resonate.

Such an acoustic panel built to sufficient size to serve as a projection screen for still, film and video images, is thus simultaneously a sound reproducer, with advantage as the centre or dialogue channel of home theatre equipment, and an acoustic panels hereof having good size, say over 0.6m wide, and providing very good sound coverage for audiences. Working demonstrations have shown high intelligibility and sound clarity over the whole audience region with a major advantage that persons nearest to the screen do not suffer blasting from excessive proximate sound levels, invariably aflaw of conventional direct radiating cone based speakers.

Moreover, another inventive aspect of a projection screen hereof arises in relation to conventional centre channel speakers and the ear's readiest tendency for locating the acoustic centre of a cone/diaphragm loudspeaker, so that all sounds appear to come from such concentrated small source, thus detracting from the sense of realism; whereas, for an acoustic panel hereof, its uniquely non-directional radiation property means that the sound appears to come from the general acoustic region of the screen but not from one isolated point, so that, when the image is accompanied with sound on the panel, there is a powerful synaesthetic effect, in that lack of specific sound source localisation allows the ear/brain sound-sensing combination freely to associate an imagined, virtual and undefined/approximate location for sound sources sensorally to appear to be synchronised and/or registering with locations presented by the visual image on the acoustic surface, e. g. mentally relating voices quite closely and accurately to mouths and faces. With well recorded dialogue sections, not only does a virtual or perceived acoustic image appear to track the actual visual image, but can also serve to convey the information needed for the perception to depth/perspective, so that the quality of audience involvement in the cinematic experience is substantially enhanced.

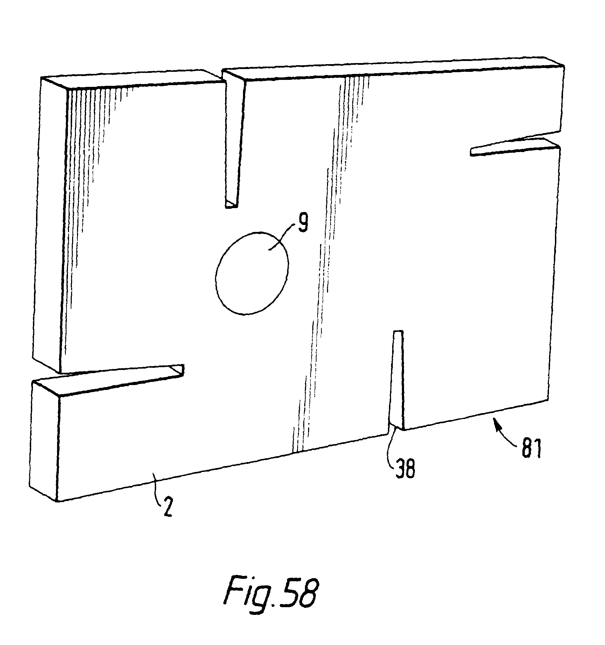

Slotting (38) for edges of resonant mode panel members hereof, see Figure 58, can also be useful in dealing with improving uniformity of bending wave action, and/or generally for controlling particular frequencies by affecting relevant resonant modes.

In relation to any desired further correction, or composition of desired frequency-related response, perhaps particularly at low or high frequency ends of operating range, say if coincidence frequency is included either at such end or medially, electronic input signal processing for a loudspeaker hereof can be provided.

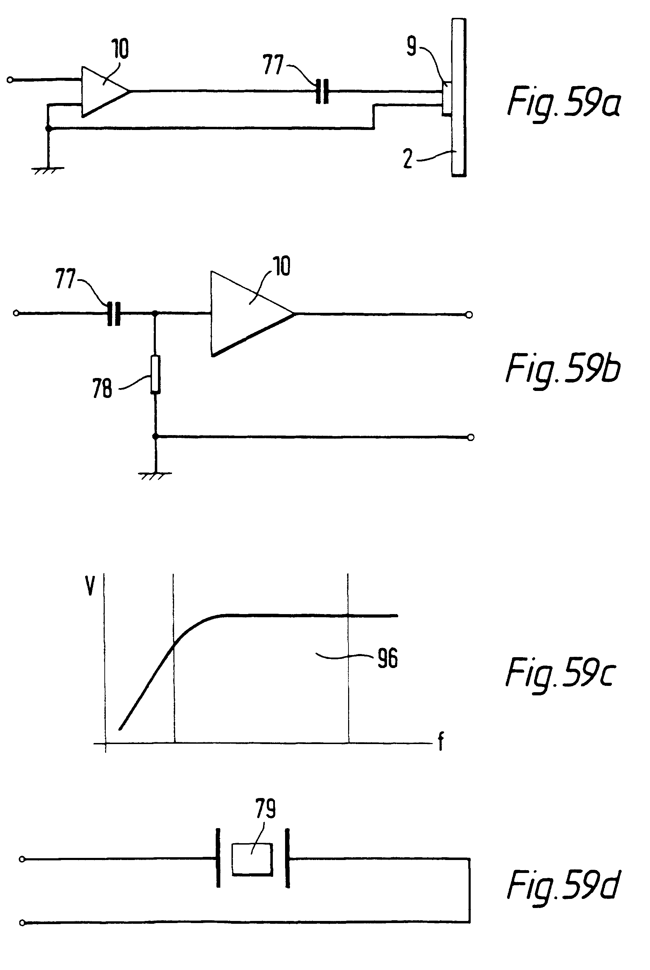

Figure 59 shows simple input signal bandwidth control through capacitor (77) and resister capacitor (78,77) amplifier (10) circuits (Figures 59a,59b) for piezoelectric transducers (9, Figure 59a; 79, Figure 59d) including assessing to a required range response (96, Figure 59c).

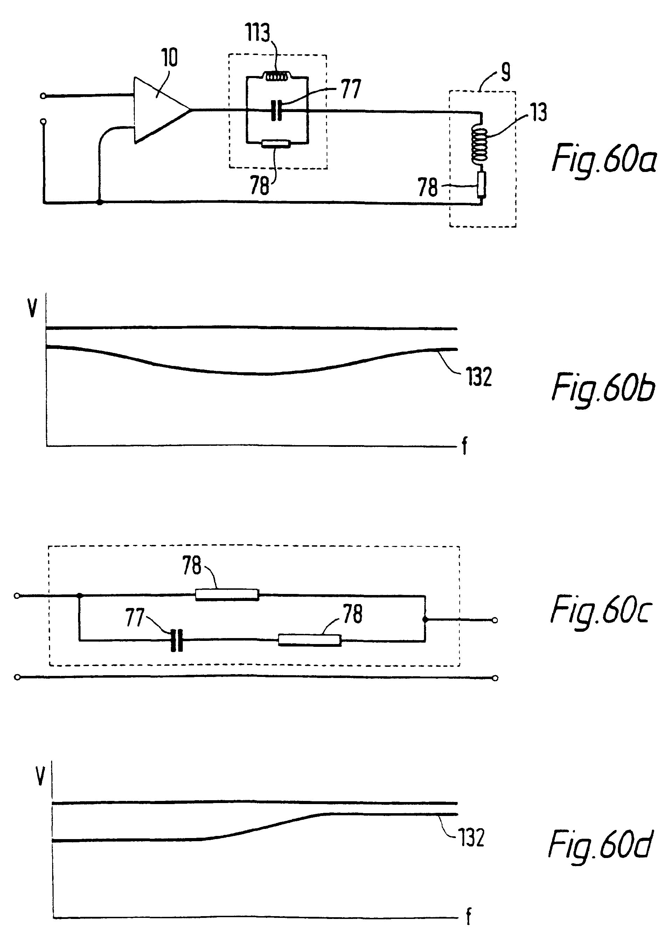

Further sample passive equalizer circuitry (compared with normal core-type cross-over networks) is indicated in Figure 60a (using amplifier 10 with parallel LCR network 113, 77, 78) and Figure 60c (parallel resistor-capacitor circuit (78, 77)) relative to particular frequency response requirements (Figures 60b, 60d) perhaps of particular relevance to dealing with included coincidence frequency effects.

Areal curving of resonant panel members hereof has been mentioned in relation to affecting bending stiffness in the dimension of the panel member concerned. However, there can be other desiderata or requirements for curved loudspeakers, or microphones, or passive reverberation, filtering or voicing panels, say unobtrusively to fit to curved surfaces, such as columns.

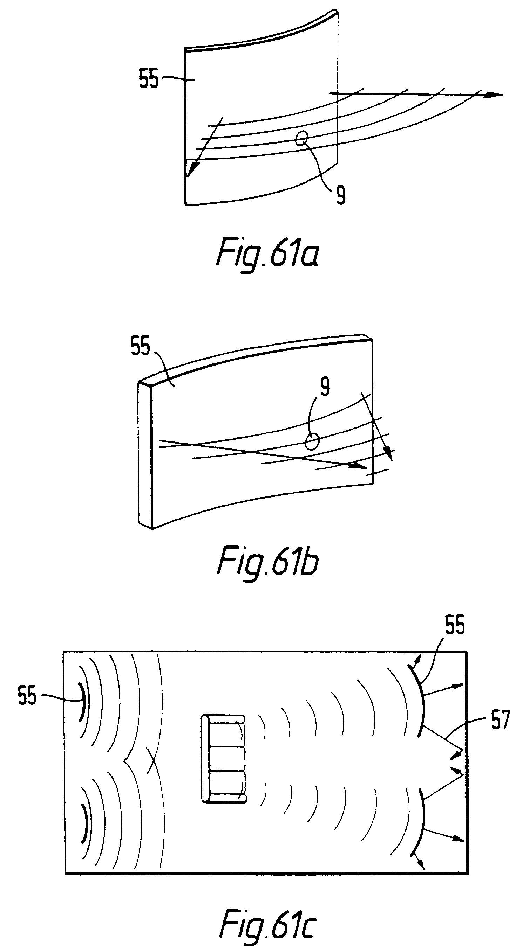

Figure 61 indicates use of curved resonant panel loudspeakers (55), or as repeaters or satellites, that demonstrate diffusion (Figure 61 a), focussing (Figure 61 b) and application in a listening room involving forward focussing loudspeakers, typically for defining stereo with diffusion (57) behind them, and rearward diffusing loudspeakers, typically for improving ambience.

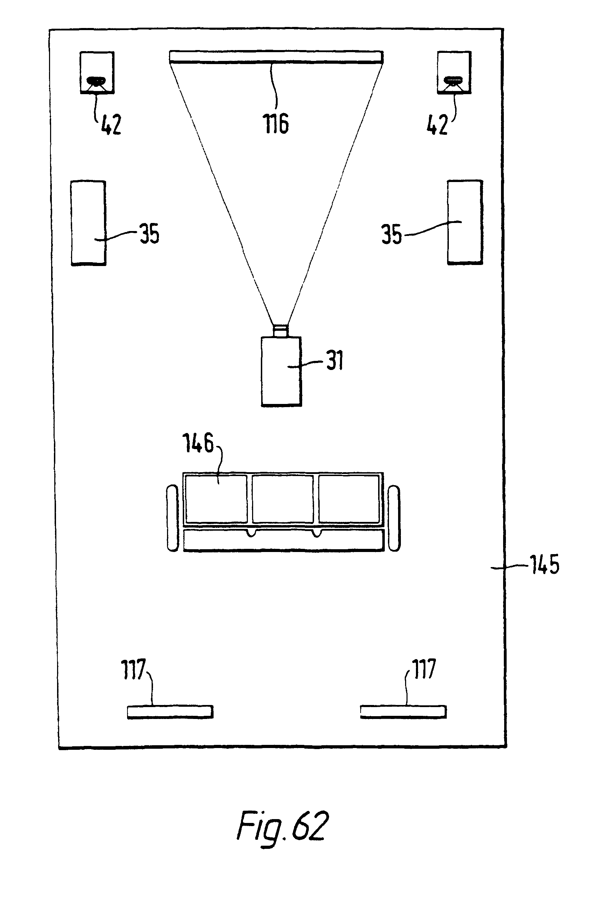

As to full five channel home theatre ambience systems, such as achievable using resonant panel loudspeaker hereof, including the screen (118) itself as the centre channel and any desired sub-woofers (35). However, particular merit is seen in systems where perhaps only rearward ambience loudspeakers are of resonant panel type, see 117 or Figure 62, perhaps because conventional core-type forward stereo loudspeakers (42) are, for some reason, actually preferred.

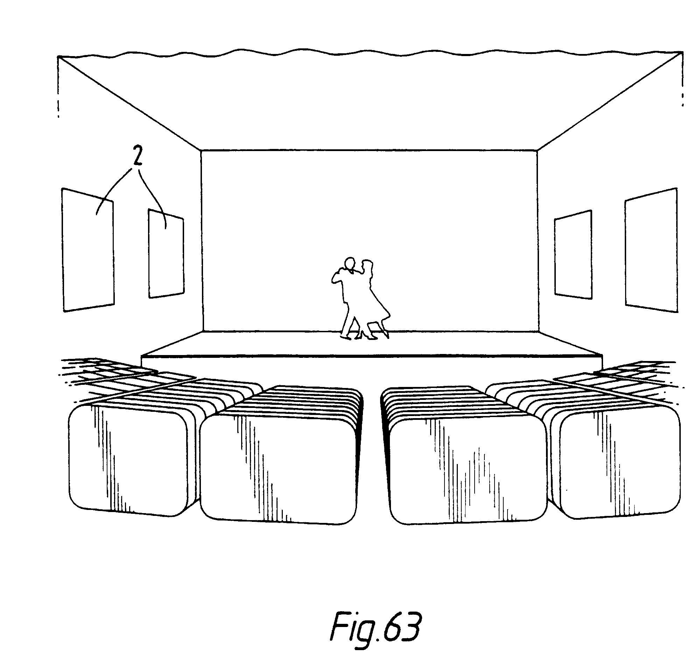

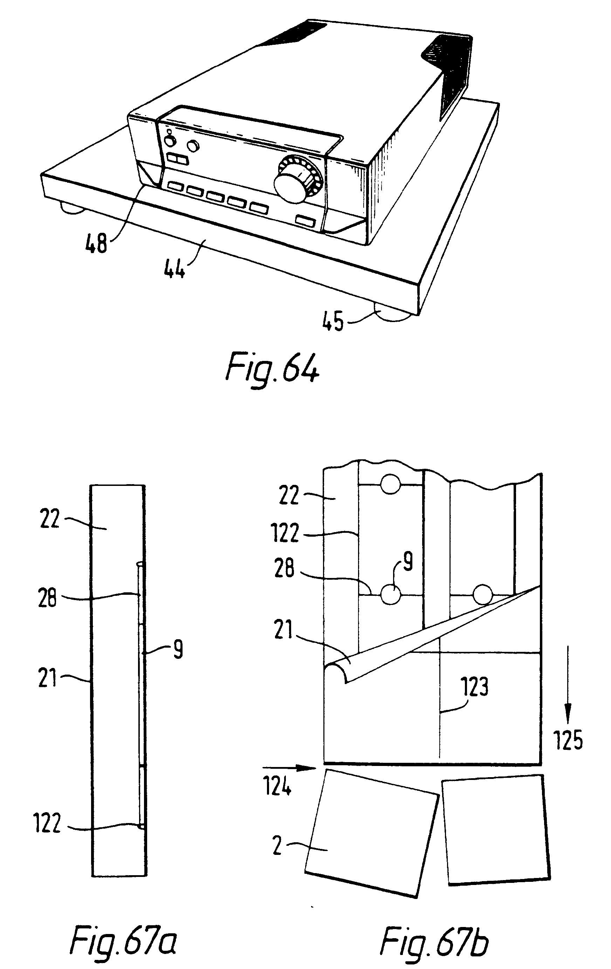

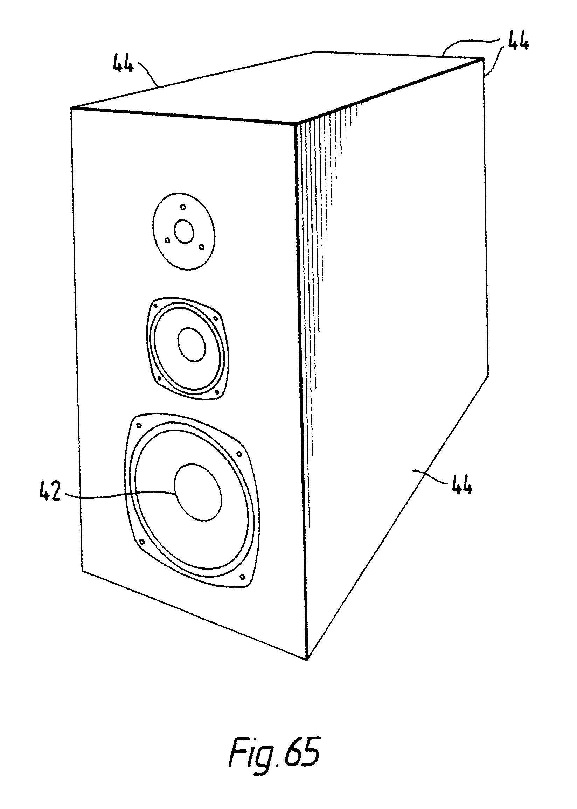

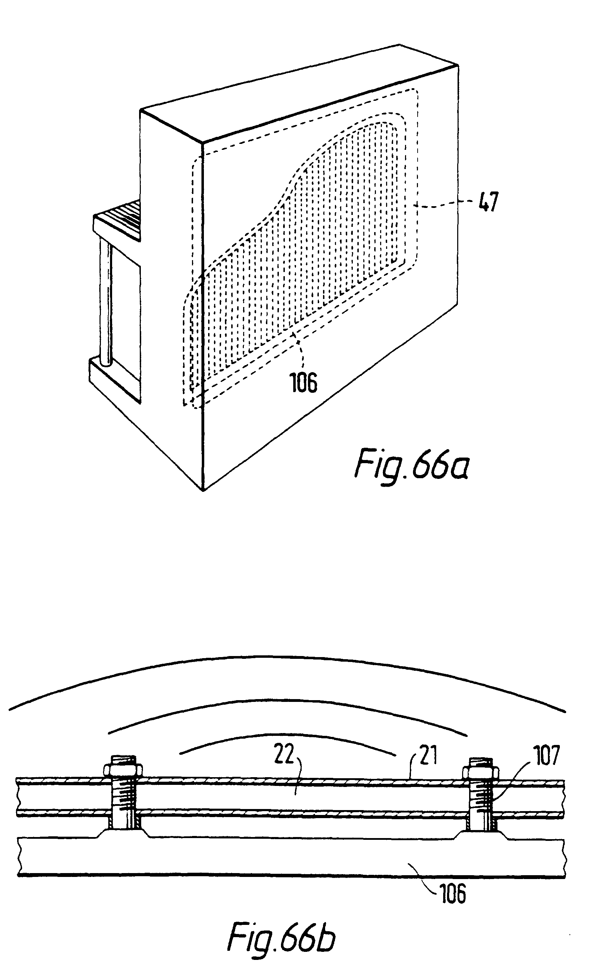

Turning to use of panel members hereof purely as passive acoustic devices, Figure 63 shows voicing for a small theatre or dance studio; and Figure 64 shows use in mounting such as a Hi-Fi unit (46), say as a base (44) shown on pads or feet (45). Figure 65 shows use as structural panels (44) of an enclosure for conventional core-type (42) loudspeaker units, and can be highly successful as to giving minimum colouration and/or even correcting room or other colouration if "varied" appropriately. Figures 66a and 66b show a panel (22) used as an upright piano sounding board (47) mounting backing onto its stringed frame 108, with fixing by studs 107 that can have a clamping or only a just retaining action, it being the case that holes through panels hereof need not be deleterious if in appropriate calculable positions, even can be beneficial in relation to specified modal frequencies. It would be feasible to so mount with good location, but no unwanted effects on vibrational performance.

Figure 67 concerns manufacture from the point where stock sheet for the cores (22), which is in a size from which several panel members (2) can result, has at least one skin applied (lower in Figure 67b); and the other skin (21) is applied (upper in Figure 67a) over as much as desired up to the whole of the core sheet after the transducers (9) are installed, conveniently along with printed wiring track (122) and transducer lead wiring (28), advantageously connected up for reeling out, before the upper of the skins (21), and fixing into shallow indenting of the core stock material. Movement shown by arrow (125) allows guillotining (124) at one desired panel dimension (length) and the other (width) can be set by width of the stock core material or by splitting as shown and leading to highly effective mass production. The panel member dimensions (length/width) are, of course, as readily determined in practising methods hereof, including for other than rectangular shapes to be finished from rectangular precursors that correspond with relevant aspect ratio determined as herein.

INDUSTRIAL APPLICABILITY

Embodiments of this invention have the same and more uses and applications than the ubiquitous conventional cone-type loudspeakers.

**Claims**

1. Method of making an acoustic device to include a member (2) extending transversely of its thickness and capable of sustaining bending waves at least over an intendedly consequentially acoustically active area of the transverse extent of said member, the member (2) having parameters such as geometric and for bending stiffness upon values of which depends its distribution of resonant modes of natural bending wave vibration over said area, the method including analysis of said distribution of resonant modes of natural bending wave vibration of said member (2) over said area; and selecting values of particular said parameters to result in said distribution of natural resonant modes being beneficial to desired achievable acoustic operation of said device over a frequency range of interest; and making, as at least a component of said device, a said member (2) with said selected values of said parameters.

2. Method according to claim 1, wherein said parameters are associated with at least two different directions through said area of said member (2).

3. Method according to claim 1 or claim 2, wherein said analysis involves assessing parts or subareas of said area for content of vibrational energy from predetermined said natural resonant modes; and said selecting is so as to reduce incidence of low vibrational energy contents of said parts or subareas.

4. Method according to claim 3, wherein said reducing is to minimise incidence of low vibrational energy contents of said parts or subareas.

5. Method according to any preceding claim, wherein said analysis involves assessing parts or subareas of said area for content of vibrational energy from predetermined said natural resonant modes, and said selecting is as to producing more even spread of vibrational energy contents of said parts or subareas.

6. Method of making an acoustic device to include a member (2) extending transversely of its thickness and capable of sustaining bending waves at least over an intendedly acoustically active area of its transverse extent involving acoustically relevant resonant modes of its natural bending wave vibration which has a characteristic distribution over said area of vibrationally more or most active regions and vibrationally less or least active regions that is dependent on values of at least two particular parameters of said member (2), the method comprising analysis of less or least and more or most vibrational activity in said regions, and selecting values corresponding to a said distribution in which regions of low or no vibrational activity are reduced towards optimum practical for further corresponding with desired achievable acoustic operation of said device; and making, as at least a component of said device, a said member (2) with said selected values of said parameters.

7. Method according to any one of claims 3 to 6, wherein one set of said resonant modes and corresponding contributions to said distribution are particularly affected by at least one of said parameters and another set of said resonant modes and corresponding contributions to said distribution are particularly affected by another of said parameters, the selected values of said one and other parameters corresponding to said contributions of said one set to said vibrationally more or most active regions being as complementary as practically achievable relative to said contributions of said other set to said vibrationally less or least active regions, and vice versa.

8. Method according to any preceding claim, wherein said analysis involves assessing frequencies of said resonant modes for spacings of their values, and said determining is as to achieving optimum practical spacings of those frequencies.

9. Method according to any preceding claim, wherein said parameters are related to at least two different conceptual frequencies to which frequencies of said resonant modes can themselves be related.

10. Method of making an acoustic device having a member (2) extending transversely of its thickness and capable of sustaining bending waves in an acoustically operative area of its transverse extent involving operatively relevant resonant modes of its natural bending wave vibration that can be related to at least two conceptual frequencies that are dependent on values of at least two particular parameters of said member (2), the method comprising analysis to determine selected values of said parameters to give values of said conceptual frequencies thus related said resonant modes at frequencies that are spaced and interleaved beneficially to achieving desired acoustic operation of said device; and making, as at least a component of said device, a said member (2) with said selected values of said parameters.

11. Method according to claim 8, 9 or 10, wherein said selected parameters assure that said conceptual frequencies are so related that there is interleaving of said resonant mode frequencies with spacings and consequent spread at or,approaching optimum for non-coincidence and evenness of such spread.

12. Method according to any one of claims 8 to 11, wherein said conceptual frequencies are each definingly affected by said selected values of different said parameters.

13. Method according to any preceding claim, wherein said selected values are of corresponding said parameters relating to geometrical configuration or shape and/or to bending stiffnesses in different directions.

14. Method according to any preceding claim, wherein said selected values are of corresponding said parameters of a similar nature and selectable by a mutually relative value, such as a ratio or a relative percentage.

15. Method according to claim 13 or 14, wherein geometrical said corresponding parameters define shape of at least said area of said member (2) for given bending stiffness(es) of said member through said area.

16. Method according to claim 15, wherein said selected values of said geometrical parameters specify a particular variation of a basic shape according to dimensions in different directions across said shape.

17. Method of making an acoustic device including the step of determining geometrical configuration of a member (2) extending transversely of its thickness in its area to be configured, said member being capable of sustaining bending waves at least over said area, the method including analysis of distribution of resonant modes of natural bending wave vibration of said member (2), which distribution will be different for different said configurations of said area as variably defined by relevant geometrical parameters, and selecting a particular relative value of said parameters for which said distribution of natural resonant modes is determined as being consonant with desired achievable acoustic device action or operation over a frequency range of interest; and making as a component of said device a said member (2) having its said area configured to said particular relative value of said geometrical parameters.

18. Method according to claim 17, wherein said geometrical parameters include dimensions in different directions across said area.

**19.** Method of making an acoustic device using a member (2) of given geometrical configuration extending transversely of its thickness and capable of sustaining bending waves over its area, the method including analysis to determine values of geometrical parameters in respective ones of two directions across said area that contribute with corresponding bending stiffnesses of said member (2) to deriving conceptual frequencies relatable to natural bending wave vibration of said member (2) being as useful as practicable within said area for achievable acoustical action of part of said member (2) relative to desired performance of said device, and determining corresponding bending stiffnesses in said directions, and defining said part as an acoustically operative area by way of means limiting passage of bending waves in said member (2) beyond said limiting means; and making, as at least a component of said device, a said member (2) with limited said operative area.

**20.** Method according to any preceding claim, wherein said analysis involves only predetermined said resonant modes that are low rather than high in said frequency range.

**21.** Method according to claim 20, wherein said predetermined resonant modes include more than twenty above natural fundamental and related conceptual frequencies further relatable to said natural bending wave vibration of said member (2).

**22.** Method according to claim 21, wherein said predetermined resonant modes include the first twenty-five or more above said natural resonant frequencies.

**23.** Method according to any preceding claim, wherein the or each said member has damping means (3, 2P) selectively applied thereto as predetermined to control frequencies corresponding to one or more said resonant modes.

**24.** Method according to claim 23, wherein said selective damping means includes damping attachments (2P) at medial positions of said area.

**25.** Method according to any preceding claim, wherein the or each said member (2) has its bounding edges coterminous with said area.

**26.** Method according to any preceding claim, wherein the or each said acoustic device (81) has a frame (1) applied about its edges so as to permit bending wave vibration thereat to a desired extent.

**27.** Method according to claim 26, wherein said frame (1) is so applied with vibration-controlling material (3) between said frame (1) and said edges.

**28.** Method according any one of claims 1 to 26, wherein said area is defined within said transverse extent of said member (2) by means (22C) adversely affecting passage of bending waves beyond said area.

**29.** Active acoustic device obtainable by the method of any one of claims 1 to 28, comprising transducer means (9) coupled to the member (2) at an asymmetric off-centre position off axes or lines that join points of maximum/minimum dimensions or directions of geometrical parameters away from the corners and edges of the member to provide a beneficial coupling to, and distribution of, resonant modes for use as a loudspeaker or microphone.

**30.** Acoustic device according to claim 29, wherein the member (9) has a substantially rectangular acoustically operative area, and the transducer means (9) is located at a position substantially corresponding to 3/7 and/or 4/9 and/or 5/13 of lengths of sides of the member (2) used as co-ordinates from a corner of the area or member (2).

**31.** Acoustic device comprising a member (2) extending transversely of its thickness and capable of sustaining bending waves in an acoustically operative area of its transverse extent involving operatively relevant resonant modes of its natural bending wave vibration that can be related to at least two conceptual frequencies that are dependent on selected values of at least two parameters of said member (2), wherein said member has values of said parameters predetermined to give values of said conceptual frequencies thus related said resonant modes at frequencies that are spaced and interleaved beneficially to achieving desired acoustic operation of said device, and transducer means (9) coupled to the member (2), and wherein the member (9) has a substantially rectangular acoustically operative area, and the transducer means (9) is located at a position substantially corresponding to 3/7 and/or 4/9 and/or 5/13 of lengths of sides of the member (2) used as coordinates from a corner of the area or member (2).

**32.** Acoustic device according to claim 31, wherein said selected parameters assure that said conceptual frequencies are so related that there is interleaving of said resonant mode frequencies with spacings and consequent spread at or approaching optimum for non-coincidence and evenness of such spread.

**33.** Acoustic device according to claim 31 or 32, wherein said conceptual frequencies are each definingly affected by said selected values of different said parameters.

34. Acoustic device according to any one of claims 31 to 33, wherein said selected values are of corresponding said parameters relating to geometrical configuration or shape and/or to bending stiffnesses in different directions.

35. Acoustic device according to any one of claims 31 to 34, wherein said selected values are of corresponding said parameters of a similar nature and selectable by a mutually relative value, such as a ratio or a relative percentage.

36. Acoustic device according to claim 34 or 35, wherein geometrical said corresponding parameters define shape of at least said area of said member (2) for given bending stiffness(es) of said member (2) through said area.

37. Acoustic device according to claim 36, wherein said selected values of said geometrical parameters specify a particular variation of a basic shape according to dimensions in different directions across said shape.

38. Acoustic device comprising a member (2) extending transversely of its thickness and capable of sustaining bending waves, wherein the member (2) has a geometrical configuration determining natural bending wave vibration over its area with resonant modes relatable to at least two conceptual frequencies, and a relationship between said conceptual frequencies such that predetermined lower frequency resonant modes arising from said conceptual frequencies are correlated by at least some of vibrationally more or most active regions of said area for those said modes related to one of said conceptual frequencies being shared by or corresponding to vibrationally less or least active regions related to those said modes of the other of said conceptual frequencies, wherein dimensions of said member (2) determining said conceptual frequencies are in different directions across said area, wherein said directions are substantially mutually perpendicular, wherein said area is of substantially rectangular shape with length and width as geometrical parameters or dimensions, and transducer means (9) coupled to the member (2) at a position substantially corresponding to 3/7 and/or 4/9 and/or 5/13 of lengths of sides of the member (2) used as co-ordinates from a corner of the area or member (2).

39. Acoustic device according to claim 38, wherein said substantially rectangular area has substantially equal bending stiffnesses along its length and width, which are unequal dimensionally by about 13.4% or about 37%.

40. Acoustic device according to claim 38 or claim 39, wherein said area is short of true rectangle corners for at least one diagonal dimension by an amount beneficially relating attributable resonant modes to those arising from length and width dimensions.

41. Acoustic device according to claim 40, wherein said amount is between about 10% and about 15% for diagonal bending stiffness(es) not differing substantially from bending stiffness(e) in the length and width directions.

42. Acoustic device according to claim 38 or claim 39, wherein said substantially rectangular area has diagonal bending stiffness(es) different from bending stiffness(es) in the directions of its length and width by an amount beneficially relating attributable resonant modes to those arising from its length and width dimensions.

43. Acoustic device comprising a member (2) extending transversely of its thickness and capable of sustaining bending waves, wherein the member (2) has a geometrical configuration determining natural bending wave vibration over its area with resonant modes relatable to at least two conceptual frequencies, and a relationship between said conceptual frequencies such that predetermined lower frequency resonant modes arising from said conceptual frequencies are correlated by at least some of vibrationally more or most active regions of said area for those said modes related to one of said conceptual frequencies being shared by or corresponding to vibrationally less or least active regions related to those said modes of the other of said conceptual frequencies, and wherein said area is of substantially true elliptical shape with its major and minor axes as said geometrical parameters or dimensions and transducer means (9) coupled to the member (2) at an asymmetric off-centre position away from the edges of the member to provide a beneficial coupling to, and distribution of, resonant modes.

44. Acoustic device according to claim 43, wherein the ratio of the major and minor axes is substantially 1.182:1, and wherein the transducer means (9) is located at coordinate positions relative to the centre of the member (2) substantially 0.43 and 0.2 along the half-major and half-minor axes.

45. Acoustic device according to claim 43, wherein said member has substantially equal bending stiffnesses along its major and minor axes, which are dimensionally unequal by of about 18.2% or about 34%.

46. Acoustic device comprising a member (2) extending transversely of its thickness and capable of sustaining bending waves, wherein the member (2) has a geometrical configuration determining natural bending wave vibration over its area with resonant modes relatable to at least two conceptual frequencies, and a relationship between said conceptual frequencies such that predetermined lower frequency resonant modes arising from said conceptual frequencies are correlated by at least some of vibrationally more or most active regions of said area for those said modes related to one of said conceptual frequencies being shared by or corresponding to vibrationally less or least active regions related to those said modes of the other of said conceptual frequencies, wherein said directions are substantially mutually perpendicular, and wherein said area is of substantially super-elliptical shape with its major and minor axes as said geometrical parameters to be determined dimensionally for any particular super-ellipse defining power factor(s), and transducer means (9) coupled to the member (2) at an asymmetric off-centre position away from the edges of the member to provide a beneficial coupling to, and distribution of, resonant modes.

**47.** Acoustic device comprising a member (2) extending transversely of its thickness and capable of sustaining bending waves, wherein the member (2) has a geometrical configuration determining natural bending wave vibration over its area with resonant modes relatable to at least two conceptual frequencies, and a relationship between said conceptual frequencies such that predetermined lower frequency resonant modes arising from said conceptual frequencies are correlated by at least some of vibrationally more or most active regions of said area for those said modes related to one of said conceptual frequencies being shared by or corresponding to vibrationally less or least active regions related to those said modes of the other of said conceptual frequencies, wherein said directions are substantially. mutually perpendicular and wherein said area is of substantially super-elliptical shape with its super-ellipse defining power factor to be determined for any particular relative dimensional value(s) of its major and minor axes, and transducer means (9) coupled to the member (2) at an asymmetric off-centre position away from the edges of the member to provide a beneficial coupling to, and distribution of, resonant modes.

**48.** Acoustic device according to claim 46 or 47, wherein said member (2) has substantially equal bending stiffnesses along said major and minor axes, which are dimensionally unequal by of about 13% to about 22%, or about 32%, and said defining power factor is about 3.5 to about 4.

**49.** Acoustic device according to claim 44, wherein said directions are substantially mutually perpendicular, and wherein said member (2) is of composite shape and has substantially equal bending stiffnesses along and transversely of a common major axis for parts of said area substantially corresponding to super-elliptical and true elliptical, respectively, merged with said common major axis with said elliptical part favoured by about 1.1-1.3:1, and an aspect ratio favouring said common major axis by about 1.2:1.

**50.** Acoustic device according to any one of claims 37, 43, 46 and 47, wherein said member (2) has different bending stiffnesses in said directions, and said dimensions are such as to give as near as is practicable substantially equivalent results for said resonant modes as achieved for substantially equal bending stiffness(es) in said directions, including any appropriate scaling.

**51.** Acoustic device according to claim 50, wherein said equivalent results include relationship of conceptual frequencies to which said resonant modes of interest are relatable.

**52.** Acoustic device according to any one of claims 32 to 51, wherein the or each said member (2) has damping means (3, 2P) selectively applied thereto as predetermined to control frequencies corresponding to one or more said resonant modes.

**53.** Acoustic device according to claim 52, wherein said selective damping means includes damping attachments (2P) at medial positions of said area.

**54.** Acoustic device according to any one of claims 34 to 53, wherein the or each said member (2) has its bounding edges coterminous with said area.

**55.** Acoustic device according to any one of claims 31 to 54, wherein the or each said acoustic device has a frame (1) applied about its edges so as to permit bending wave vibration thereat to a desired extent.

**56.** Acoustic device according to claim 55, wherein said frame (1) is so applied with vibration-controlling material (3) between said frame (1) and said edges.

**57.** Acoustic device according any one of claims 31 to 56, wherein said area is defined within said transverse extent of said member (2) by means (22C) adversely affecting passage of bending waves beyond said area.

**58.** Acoustic device according to any one of claims 31 to claim 57, wherein said member (2) has an operative acoustic frequency range spanning more than 4KHz.

**59.** Acoustic device according to any one of claims 31 to. 57, wherein said member (2) has an operative acoustic frequency range that includes the coincidence frequency.

**60.** Acoustic device according to any one of claims 31 to 57, wherein said member (2) has an operative acoustic frequency range that is wholly below the coincidence frequency.

**61.** Acoustic device according to any one of claims 31 to 60, wherein said member (2) has a ratio of bending stiffness to mass per unit area consistent, for particular size of said member (20), with a lowest bending wave frequency lower than the acoustic operating frequency range of said device.

**62.** Acoustic device according to claim 61, wherein said lowest bending wave frequency is at least 20Hz.

**63.** Acoustic device according to claim 61 or claim 62, wherein said lowest bending wave frequency is at less than half, preferably about a third, of bottom of the acoustic operating frequency range.

**64.** Acoustic device according to claim 61, 62 or 63, wherein said member (2) has bending stiffness between minima of about 0.1 to about 1,000 and maxima of about 4 to about 3,500 Newton-metres, and mass per unit area between minima of about 0.05 to about 1.5 and maxima of about 1 and about 4 kilograms/square metre, depending on size/application.

**65.** Acoustic device according to any one of claims 31 to 64, wherein said member (2) is a stiff light-weight structure of laminated sandwich-type nature having a stiff cellular core (22) and adhered skins (21) to propagate bending waves and sustain said resonant modes at frequencies of interest.

**66.** Acoustic device according to claim 65, wherein said cellular core (22) has shear modulus of at least about 10 megapascals and adhered skin (21) Young's modulus of at least about 1 gigapascal.

**67.** Acoustic device according to claim 65, wherein said member (2), at least for sizes below about 0.1 square metre and lowest bending wave frequencies above about 100Hz, has a bending stiffness that can be below about 10 Newton-metres, core shear modulus that can be as low as about 10 megapascals or less and skins' Young's modulus in the range from about 0.5 to about 2.5 gigapascals.

**68.** Acoustic device according to claim 65, wherein said member (2), at least for sizes between about 0.1 and about 0.3 square metre and lowest bending wave frequencies as low as about 70Hz, has bending stiffness between about 5 and about 50 or more Newtonmetres, core shear modulus that is usually above 10 megapascals typically about 15 megapascals up to about 80 or more megapascals, and skins' Young's modulus of at least about 2 gigapascals up to about 70 or more giga-pascals.

**69.** Acoustic device according to claim 65, wherein said member (2), at least for sizes between about 0.3 and about 1 square metres, has a lowest bending wave frequency that can be as low as about 50Hz, a bending stiffness usually above about 20 Newtonmetres typically about 50 up to about 500 or more Newtonmetres, core shear modulus that is usually above about 10 typically about between about 20 and about 90 megapascals, and skins' Young's modulus of at least about 2 gigapascals feasibly up to at least about 70 gigapascals.

**70.** Acoustic device according to claim 65, wherein said member (2), at least for sizes over about 1 up to perhaps 5 square metres or more and lowest bending wave frequency that can be as low as about 25 to 70Hz, has bending stiffness above about 25 Newtonmetres, core shear modulus usually over 30 megapascals, and skins' Young's modulus of at least about 20 gigapascals ranging up to at least about 1,000 gigapascals.

**71.** Acoustic device according to any one of claims 65 to 70, wherein said core (22) has cells capable of contributing useful additional volume-related high frequency non-bending wave resonances.

**72.** Acoustic device according to any one of claims 65 to 70, wherein said core (22) has structure capable of contributing useful additional high frequency compression/recovery non-bending wave resonances.

**73.** Acoustic device according to any one of claims 65 to 67, wherein said core (22) has cells cooperating with said skins (21) to afford useful tiny drum-like additional high frequency non-bending wave resonances.

**74.** Acoustic device according to any one of claims 32 to 73, wherein compliance of supporting said member (2) affords useful additional low frequency non-bending wave resonances.

**75.** Acoustic device according to any one of claims 65 to 73, wherein compliance of mounting said transducer means (9) to said member core (22) affords useful additional low frequency non-bending wave resonances.

**76.** Acoustic device according to any one of claims 29 to 75, wherein said transducer means (9) has at least a movable bending wave operative part thereof mechanically coupled to said member predominantly resistively.

**77.** Acoustic device according to any one of claims 29 to 76, wherein said transducer means (9) is of piezo-electric type.

**78.** Acoustic device according to any one of claims 29 to 76, wherein said transducer means (9) is of electromagnetic coil-and-magnet type.

**79.** Acoustic device according to claim 78, wherein said electromagnetic transducer means (9) is of moving-coil type.

**80.** Acoustic device according to any one of claims 29 to 79, wherein said transducer means (9) is surface-mounted to said member (2).

**81.** Acoustic device according to any one of claims 29 to 80, wherein said transducer means (9) has at least a movable bending wave operative part mounted in a recess into the thickness of said member (2).

**82.** Acoustic device according to any one of claims 29 to 81, wherein said transducer means (9) has its movable bending wave operative part mounted to occupy less than 0.1% of surface area of said member (2).

**83.** Acoustic device according to any one of claims 29 to 82, wherein said transducer means (9) has its movable bending wave operative part of mass about 1 to 2 times that of portion of said member (2) covered or removed to accommodate said part.

**84.** Acoustic device according to any one of claims 29 to 83, wherein said transducer means (9) is wholly carried by said member (2).

**85.** Acoustic device according to any one of claims 29 to 84, wherein said member (2) has a substantially super-elliptical acoustically operative said area, and said transducer means (9) is located at a position inside outer edge of said area or member (2) by about 15% of a line to its centre.

**86.** Method according to any one of claims 1 to 28, wherein said analysis extends to assessing vibrational energy content of parts or subareas of said area for contributions from predetermined said natural resonant modes, the method further comprising determining at least one location within said area for bending wave transducer means (9) by first finding at least one region of said area having said contributions from high or highest numbers of said predetermined resonant modes.

**87.** Method according to any one of claims 1 to 28, wherein said analysis extends to assessing vibrational energy content of parts or subareas of said area for contributions from said predetermined natural resonant modes, the method further comprising determining two or more locations within said area for bending wave transducer means by first finding regions collectively having contributions from most up to all of said predetermined resonant modes.

**88.** Method of making an acoustic device having a member (2) extending transversely of its thickness in an area of prescribed configuration and capable of sustaining bending waves over said area, the method comprising determining location in said area for bending wave transducer means (9) by analysis of distribution of vibrational energy from predetermined resonant modes of natural bending wave vibration of said member (2) over said area, and identifying at least one region in said area at which high or highest numbers of said predetermined resonant modes contribute significant vibrational energy.

**89.** Method according to claim 88, wherein two or more locations for bending wave transducer means (9) are identified at regions in said area that in combination have significant vibrational energy contributions from most or all of said predetermined resonant modes.

**90.** Method according to any one of claims 86 to 89, wherein said analysis additionally or alternatively identifies two or more regions of said area that have substantially complementary vibrational energy contributions from said predetermined resonant modes.

**91.** Method according to any one of claims 86 to 90, comprising the step of mounting transducer means (9) to couple with at least those of said resonant modes contributing to a said region.

**92.** Active acoustic device according to any one of claims 29 to 85 as a panel-form loudspeaker (81), comprising a said member (2) with said transducer means (9) mounted to the member as vibration exciter means to cause the member (2) to resonate forming an acoustic radiator to provide acoustic output when resonating, and a baffle (6,8) surrounding and supporting the radiator.

**93.** Panel-form loudspeaker according to claim 92, comprising resilient suspension (3, 17) between the radiator and the baffle (6, 8) to support the radiator in the baffle (6, 8).

94. Panel-form loudspeaker according to claim 93, wherein the resilient suspension (3, 17) is of an elastomeric material.

95. Panel-form loudspeaker according to any one of claims 92 to 94, wherein the vibration exciter (9) is mounted wholly and exclusively on the radiator.

96. Panel-form loudspeaker according to any one of claims 92 to 95, wherein the baffle (8) is formed as an enclosure having an open backed front box portion (52) adapted to be mounted on a wall or the like.

97. Panel-form loudspeaker according to claim 96, wherein the front box portion (52) is adapted to be mounted to align with a cavity (110) in the wall.

98. Active acoustic device according to any one of claims 29 to 85 as a panel-form loudspeaker (81), comprising said member (2) as a resonant acoustic radiator having a periphery, said transducer means mounted to the radiator to cause the member to vibrate and resonate in providing acoustic output from the radiator, and a frame (1) supporting the radiator round its periphery with resilient suspension means coupled between the frame and the.radiator periphery, the transducer means (9) being coupled between the radiator and the frame (1) and further adapted to move the radiator pistonically.

99. Panel-form loudspeaker according to claim 98, wherein the frame (1) has a portion surrounding the radiator.

100.Panel-form loudspeaker according to claim 98 or claim 99, wherein the resilient suspension (3) is of an elastomeric material.

101.Panel-form loudspeaker according to claim 99, or claim 100 when dependent on claim 98, wherein the frame (1) comprises a floor stand (23) having a ground engaging portion (83), a substantially upright portion (84) extending from the ground engaging portion and a plurality of arms (85) extending from the upright portion, the distal ends of which arms connect to the frame portion (1) surrounding the radiator.

102.Panel-form loudspeaker according to claim 101, wherein the radiator is rectangular, and the arms (85) extend near to the corners of the radiator.

103.Panel-form loudspeaker according to claim 101 or claim 102, wherein the transducer (9) is mounted on or adjacent to the upright portion (84) of the frame.

104.Panel-form loudspeaker according to any one of claims 101 to 103, wherein the transducer (9) is mounted on a lug (88) projecting from the upright portion.

105.Panel-form loudspeaker according to any one of claims 98 to 104, comprising a balancing pair of transducers (9).

106.Panel-form loudspeaker according to any one of claims 98 to 105, wherein the radiator comprises a lightweight core (22) separating a pair of high modulus lightweight skins (21).

107.Active acoustic device according to any one of claims 29 or claim 85 in a loudspeaker (81), comprising an enclosure, said member (2) as an acoustic radiator in the enclosure, a compliant suspension (71) mounting the radiator in the enclosure for pistonic movement, relative thereto, said transducer means mounted wholly and exclusively on the radiator to cause the member to vibrate and resonate in providing acoustic output from the radiator, and means (11) for varying the air pressure in the enclosure to cause the radiator to move pistonically.

108.A loudspeaker according to claim 107, wherein the air pressure varying means (11) comprises an air pump.

109.A loudspeaker according to claim 108, wherein the air pump comprises a subsidiary enclosure (185), a pistonic driver (42) mounted in the subsidiary enclosure and means (90) coupling the interiors of the respective enclosures such that air pressure waves produced by motion of the pistonic driver are transmitted to the said enclosure (8).

110.A loudspeaker according to claim 109, comprising acoustically absorbent means (51) in the said enclosure (8) and/or in the subsidiary enclosure.

111.Active acoustic device according to any one of claims 29 to 85, wherein the transducer means (9) is an inertial vibration transducer comprising a motor coil assembly (13,18) including having a coil (13) rigidly fixed to a tubular member (18), a magnet assembly (15) disposed concentrically with respect to the motor coil assembly, and resilient means (19,136) supporting the magnet assembly for axial movement relative to the motor coil assembly, the tubular member (18) being adapted to be rigidly mounted to said member (2).

112.Active acoustic device according to claim 111, wherein the tubular member (18) is rigidly mounted directly to the member (2) by adhesive means (16,20).

113. Active acoustic device according to claim 111 or 112, wherein the resilient means (19,136) comprises mutually opposed elastomeric members disposed on opposite sides of the magnet assembly.

114. Active acoustic device according to claim 111, 112 or 113, comprising caps (59,119) closing the axial ends of the tubular member (18), the resilient means (19,136) being mounted on the caps.

115. Active acoustic device according to any one of claims 111 to 114 wherein the coil (13) is mounted on the inner face of the tubular member (18).

116. Active acoustic device according to any one of claims 111 to 115, wherein the motor coil assembly (13,18) is adapted for reception in a correspondingly shaped cavity (120) in the radiator (2).

117. Active acoustic device according to claim 114 or claim 115 or claim 116 when dependent on claim 113, wherein the caps (59) comprise the resilient means (136).

118. Active acoustic device according to claim 117, wherein each said cap (59) comprises an annular compliant roll surround (136).

119. Active acoustic device according to claim 117 or claim 118, comprising magnetic shields (121) over the caps (59).

120. Active acoustic device according to any one of claims 111 to 115, wherein the motor coil assembly (13,18) is adapted to be rigidly fixed to a face of the radiator (2).

121. Active acoustic device according to claim 120, wherein the magnet assembly (15) comprises opposed generally disc like pole pieces (14), the periphery of one of which is disposed within and adjacent to the motor coil assembly (13,18), the periphery of the other of which pole pieces is formed with a flange (162) arranged to lie adjacent to and to surround the motor coil assembly.

122. Active acoustic device according to claim 121, wherein a resilient member (17) is sandwiched between one of the pole pieces and a face of the radiator.

123. Active acoustic device according to any one of claims 111 to 120, wherein the magnet assembly (15) comprises an opposed pair of magnets (15) sandwiching a pole piece (14).

124. Active acoustic device according to any one of claims 111 to 123, comprising complementary magnet assemblies and motor coil assemblies on opposite faces of the radiator, and means (93) tying the magnet assemblies together for push-pull operation.

125. Active acoustic device according to any one of claims 29 to 85, wherein the transducer means comprises an inertial vibration transducer including a plate-like piezoelectric bender (27), and means adapted to mount the bender on a said member (2) to be vibrationally excited, the arrangement being such that a substantial part of the bender (27) is spaced from the member (2) for movement relative thereto.

126. Active acoustic device according to claim 125, wherein the bender mounting means (93) is disposed substantially centrally of the plate-like bender (27).

127. Active acoustic device according to claim 125 or claim 126, comprising a mass (25) secured to the periphery of the bender.

128. Active acoustic device according to claim 125, 126 or 127, wherein the mounting means (93) is a lightweight rigid member.

129. Active acoustic device according to any one of claims 125 to 128, wherein the piezo-electric bender (27) is of crystalline form.

130. Active acoustic device according to any one of claims 29 to 85, wherein the transducer means comprises a vibration transducer (9) to vibrate said member at a face thereof, the vibration transducer (9) comprising a motor coil assembly (13, 18) having a coil (18) rigidly fixed to a tubular member (18), the motor coil assembly being adapted to be fixed to the said face of the member (2); and a magnet assembly (15) having opposed disc-like pole pieces (14), the periphery of one of which pole pieces is arranged to be disposed within and adjacent to the motor coil assembly, and the periphery of the other of which pole pieces is formed with a surrounding flange (90) adapted to surround and to be disposed adjacent to the motor coil assembly, the magnet assembly (15) being adapted to be secured at its centre to excite said member (2).

131. Active acoustic device according to claim 130, comprising fixing means (93) to secure the magnet assembly (15) to the member (2).

**132.** Active acoustic device according to claim 131, wherein the fixing means (93) comprises a fastener (91,92) adapted to engage in a cavity (29) in the member (2).

**133.** Active acoustic device according to claim 132, wherein the fastener (91,92) comprises a spacer (127) for spacing the peripheries of the pole pieces (14) from the said member (2).

**134.** Active acoustic device according to any one of claims 130 to 133, comprising complementary motor coil assemblies (13,18) and magnet assemblies (15) adapted for mounting on opposed faces of the said member (2), and means (93) tying .the centres of the magnet assemblies (15) together for push/pull operation.

**135.** Active acoustic device according to claim 134, wherein the fastener (91,92) has heads (95) at opposite ends and adapted to engage the respective magnet assemblies, the fastener (91,92) comprising a pair of interengaging screw-threaded portions (94,96), and spacer means (19) adapted for disposition adjacent to the fastener and adapted for sandwiching between the respective magnet assemblies and the opposed faces of the said member (2).

**136.** Active acoustic device according to any one of claims 111 to 135 in the form of a loudspeaker.

**137.** A panel form loudspeaker (81) comprising an acoustic device according to any one of claims 29 to 85, said member being a resonant acoustic radiator with said transducer means comprising first and second transducers coupled to the radiator at spaced positions each to cause the member to resonate and provide acoustic output from the radiator.

**138.** Panel-form loudspeaker according to claim 137, wherein the first and second transducers (9) are adapted to operate in different frequency ranges.

**139.** Panel-form loudspeaker according to claim 137 or 138, wherein the first and second transducers (9) are mounted wholly and exclusively on the radiator.

**140.** Panel-form loudspeaker according to claim 137, 138 or 139, wherein one of the transducers is electromagnetic.

**141.** Panel-form loudspeaker according to any one of claims 137 to 140, wherein one of the transducers is piezoelectric.

**142.** Active acoustic device according to any one of claims 29 to 85 as a panel-form loudspeaker, comprising first and second said members each with associated first and second said transducer means, respectively, coupled thereto each to cause its associated said member to vibrate and resonate in producing acoustic output.

**143.** Panel-form loudspeaker according to any one of claims 137 to 141, comprising a second member (4) also with associated said transducer means (9) to cause it to vibrate and resonate in providing acoustic output, the second member (4) being mounted on or in the first said member (2) and a resilient suspension (3) coupling the first and second members (2, 4).

**144.** Panel-form loudspeaker according to claim 143, wherein the second member (4) is mounted in an aperture (82) in the first member (2).

**145.** Panel-form loudspeaker according to claim 143 or claim 144, wherein the second transducer is mounted wholly and exclusively on the second member (4).

**146.** A panel-form combined loudspeaker-and-microphone comprising an acoustic device according to any one of claims 29 to 85, said member being a resonant acoustic radiator when vibrationally excited by a first transducer of said transducer means, the radiator having a second transducer coupled thereto to produce an output signal in response to resonance of the radiator due to incident acoustic energy.

**147.** Panel-form combined loudspeaker-and-microphone according to claim 146, wherein the first and second transducers (9, 63) are mounted wholly and exclusively on the radiator.

**148.** Panel-form combined loudspeaker-and-microphone according to claim 146 or claim 147, comprising at least two said second transducers (63).

**149.** Panel-form combined loudspeaker-and-microphone according to claim 148, comprising a further transducer (63) associated with the radiator to produce a signal in response to resonance of the radiator due to incident acoustic energy, and means (64, 65) for comparing the signal generated by the said further transducer with that of those generated by the said second transducer(s).

**150.** Panel-form combined loudspeaker-and-microphone according to claim 149, wherein the comparison means comprises a signal receiver and conditioner (65) and signal output means (66).

**151.** A panel-form microphone comprising an acoustic device according to any one of claims 29 to 85, said member being an acoustically excited element, and said transducer means is coupled wholly and exclusively to said member to produce a signal in response to resonance of the member due to incident acoustic energy.

**152.** Panel-form microphone according to claim 151, comprising at least two said transducers (9, 63) at different locations on said member.

**153.** Panel-form microphone according to claim 151 or claim 152, wherein the or each transducer (9, 63) is a piezoelectric device.

**154.** Active acoustic device or panel-form loudspeaker and/or panel-form microphone according to any one of claims 137 to 153, comprising a frame (1) supporting the radiator (2), and a resilient suspension (3) by which the radiator is attached to the frame.

**155.** Active acoustic device or panel-form loudspeaker and/or panel-form microphone according to claim 154, wherein the frame (1) surrounds the radiator, and the suspension is attached to the edge of the radiator.

**156.** A suspended ceiling tile (36) comprising an acoustic device according to any one of claims 29 to 85 as a panel-form acoustic radiator or loudspeaker, wherein said member has said transducer means (9) mounted wholly and exclusively thereon to vibrationally excite said member and cause it to vibrate and resonate in providing acoustic output.

**157.** Suspended ceiling tile according to claim 156, wherein the member (2) comprises a cellular core (22) sandwiched by high modulus skins (21).

**158.** Suspended ceiling tile according to claim 157, wherein the cellular core (22) is of foamed plastics (97).

**159.** Suspended ceiling tile according to claim 156, 157 or 158, comprising resilient suspension (3) disposed at the periphery of the radiator (2) to support the radiator in a suspended ceiling frame (99).

**160.** Suspended ceiling tile according to any one of claims 156 to 159, wherein the transducer (9) is an inertial vibration transducer.

**161.** A visual display apparatus comprising an acoustic device or panel-form loudspeaker and/or panel-form microphone according to any one of claims 29 to 85, 154 or 155, with said member being the visual display apparatus comprising a notice or the like board (48) to which notices or the like can be fixed e.g. with pins, and said transducer means (9) mounted wholly and exclusively on said member (2) to cause it to vibrate and resonate forming an acoustic radiator which provides acoustic output when resonating.

**162.** Visual display apparatus according to claim 161 with claim 158, wherein the frame (1) has a return lip (4) concealing the suspension (3).

**163.** Visual display apparatus according to claim 161, wherein the radiator (2) has a cellular core (22) sandwiched between skin layers (21) of paper.

**164.** Visual display apparatus according to claim 163, wherein the core (22) is of paper honeycomb.

**165.** Visual display apparatus according to any one of claims 161 to 164, wherein the transducer (9) is a piezoelectric bender.

**166.** Display screen comprising an acoustic device or panel-form loudspeaker and/or panel-form microphone according to any one of claims 29 to 85, 154 or 155, with said member as a reflective or light emitting surface, and said transducer means (9) mounted wholly and exclusively on said member to cause it to vibrate and resonate as an acoustic radiator providing acoustic output when resonating.

**167.** Display screen according to claim 166, wherein the member (2) is of stiff lightweight construction having a cellular core (22) of honeycomb aluminium foil sandwiched between a pair of high modulus skins (21).

**168.** Display screen according to claim 167, wherein the skins (21) are of fibre reinforced plastics.

**169.** Display screen according to any one of claims 166 to 168 as dependent on claim 153, comprising panel-form loudspeakers (114) attached to opposite sides of the frame (1) to provide left and right hand channel information.

**170.** Display screen according to claim 169, wherein the left and right hand loudspeakers (114) are hinged on the frame (1) to be foldable against the radiator (2) for storage.

**171.** Display screen according to claim 169 or claim 170, wherein each of the left and right hand loudspeakers (114) is an active acoustic device according to any one of claims 29 to 85.

**172.** Display screen according to any one of claims 166 to 171, wherein the panel (2) is a projection screen.

**173.** An audio visual apparatus, comprising a display screen according to claim 169 as a part.

**174.** Audio visual apparatus according to claim 173, further comprising at least one rear channel loudspeaker (117) comprising an active acoustic device according to any one of claims 29 to 85, 157 or 158.

**175.** Packaging comprising an acoustic device according to claim 29 with said member as a board component part of the packaging, with a transducer of said transducer means (9) mounted wholly and exclusively on said member to cause it to vibrate and resonate as an acoustic radiator providing an acoustic output when resonating.

**176.** Packaging according to claim 175, wherein the member (2) comprises a cellular core (22) of foamed plastics sandwiched between skin layers (21) comprising sheets of Kraft board (21).

**177.** Packaging according to claim 175 or 176, wherein the transducer (19) is a piezo-electric bender.

**178.** Packaging according to claim 177, wherein the bender (9) is crystalline.

**179.** Packaging according to any one of claims 175 to 178, wherein the member (2) forms one side of a box (111).

**180.** Packaging according to claim 179, wherein the box (111) has a lid (139), and means (53) associated with the lid for triggering actuation of the transducer (9) on movement of the lid relative to the box.

**181.** Packaging according to claim 180, comprising a signal generator, an amplifier and an electric battery (112) to drive the transducer.

**182.** Greetings or the like card (144) comprising an active acoustic device according to any one of claims 29 to 85, wherein said member (2) is a board forming at least part of the card, said transducer means (9) includes a transducer mounted wholly and exclusively on the board to cause it to vibrate and resonate as an acoustic resonator providing acoustic output when resonating.

**183.** Greetings or the like card according to claim 182, wherein the member (2) has a cellular core (22) of foamed plastics sandwiched between skin layers (21) comprising sheets of Kraft board (21).

**184.** Greetings or the like card according to claim 182 or claim 183, wherein the transducer (9) is a piezo-electric bender.

**185.** Greetings or the like card according to claim 184, wherein the bender (9) is crystalline.

**186.** Greetings or the like card according to any one of claims 182 to 185, comprising a pair of leaves (145,146), and means (53) associated with the leaves for triggering actuation of the transducer (9) on movement of one leaf relative to the other leaf.

**187.** Greetings or the like card according to claim 186, comprising a signal generator, an amplifier and an electric battery (112) on a leaf of the card to drive the transducer.

**188.** Greetings or the like card according to any one of claims 182 to 187, wherein the member (2) is adapted to receive printed matter.

**189.** Host device or apparatus comprising an acoustic device according to any one of claims 29 to 85, 154 or 155 as a component.

**190.** Host device or apparatus according to claim 189, wherein said component is integral with a part of the host device or apparatus.

**191.** Host device or apparatus according to claim 190, wherein said member (2) comprises a cellular core (22) sandwiched by skin layers (21), one of which skin layers is integral with said part of the host device or apparatus.

**192.** Host device or apparatus according to claim 191, wherein said one skin layer (21) is thinner than average thickness of said part of the host device or apparatus.

**193.** Host device or apparatus according to claim 192, wherein said part of the host device or apparatus is formed with a groove (100) into its thickness and surrounding said member (2) to define a resilient suspension (3) coupling the active acoustic device to said part of the host device or apparatus.

**194.** Host device or apparatus according to any one of claims 190 to 193, wherein said part of the host device or apparatus is an external wall.

**195.** A visual display unit comprising an acoustic device according to any one of claims 29 to 85, as a loudspeaker within it and also having a display screen (37) in the housing (101), said member (2) having said transducer means (9) mounted wholly and exclusively thereon to cause it to vibrate and resonate as an acoustic radiator providing acoustic output when resonating.

**196.** Visual display unit according to claim 195, wherein the display unit is a host apparatus according to claim 188 and said housing is said part in accordance with any one of claims 190 to 194.

197. Lap-top computer comprising an acoustic device or devices, the or each according to any one of claims 29 to 85, 144 or 155, as loudspeakers and comprising a keyboard and a display screen, wherein the or each loudspeaker comprises a said member (2) with said transducer means (9) mounted wholly and exclusively thereon to cause it to vibrate and resonate as an acoustic radiator providing acoustic output when resonating.

198. Lap-top computer (128) according to claim 197, wherein a said member (2) constitutes the display screen.

199. Lap-top computer (128) according to claim 197 or 198, wherein each of an opposed pair of panel-form loudspeakers (39,40), has its said member (2) attached to the computer.

200. Lap-top computer according to claim 199, wherein the opposed pair of panel-form loudspeakers (39,40) are mounted to the display screen (129).

201. Lap-top computer-according to claim 200, wherein the opposed pair of panel-form loudspeakers (40) are hinged to the display screen (129).

202. Lap-top computer according to claim 200, wherein the display screen (129) comprises a housing (130) and the loudspeakers (39) are each housed in a slot in the display screen housing (130) for sliding movement between a stored position, in which the loudspeakers are substantially wholly housed in the slot, and a use position in which the loudspeakers are positioned on opposite sides of the display screen.

203. A portable compact-disc player comprising acoustic devices according to any one of claims 29 to 85, 154 or 155, as an opposed pair of panel-form loudspeakers attached to it, each said loudspeaker comprises a said member (2) with a said transducer means (9) mounted wholly and exclusively to said member (2) to cause it to vibrate and resonate as an acoustic radiator providing acoustic output when resonating.

204. Portable compact-disc player according to claim 203, comprising a body portion (85) having a turntable (86) and by a lid (139) adapted to close over the turntable, wherein the loudspeakers (81) are mounted to the lid.

205. Portable compact-disc player according to claim 204, wherein the loudspeakers (81) are hinged to the lid.

206. Portable compact-disc player according to claim 204, wherein the loudspeakers (81) are each housed in a slot in the lid (139) for sliding movement between a stored position, in which the loudspeakers are substantially wholly housed in the slot, and a use position in which the loudspeakers are positioned on opposite sides of the lid.

207. Active acoustic device according to any one of claims 29 to 85, 154 or 157, wherein the device is a vehicle component in the form of a loudspeaker (81) with said member (2) having associated said transducer means (9) to cause it to vibrate and resonate as an acoustic radiator providing acoustic output when resonating.

208. A vehicle having a passenger compartment being a host device or apparatus according to claim 189, wherein the component is in the passenger compartment.

209. Vehicle according to claim 208, wherein the host device is in accordance with any one of claims 190 to 194.

210. Vehicle according to claim 209, wherein the component concerned is a passenger seat (103).

211. Vehicle according to claim 209, wherein the component concerned is lining (104) of a door (140).

212. An electronic musical instrument having a keyboard (140) and an acoustic device according to any one of claims 29 to 85, 154 or 155, as a loudspeaker in the loudspeaker comprising a said member of stiff lightweight form, and said transducer means (9) is mounted wholly and exclusively on said member (2) to cause it to vibrate and resonate as an acoustic radiator providing acoustic output when resonating.

213. An electronic musical instrument (137) having a keyboard (140) being a host device or apparatus according to claim 189, the component being a loudspeaker (81)

214. Electronic musical instrument according to claim 212 or claim 213, comprising a body (137) having a base, and legs (139) supporting the body above the ground, wherein said member (2) is positioned at the base of the body.

215. Electronic musical instrument according to claim 214, wherein the loudspeaker (81) is positioned with said member (2) substantially vertical.

216. Electronic musical instrument according to claim 215 with claim 154, wherein the frame forms a ground support for the instrument.

217. A vending machine of the kind comprising a store of articles or product to be dispensed comprising an acoustic device according to any one of claims 29 to 85, 154 or 155 as a loudspeaker and user operated means for selecting the article or product to be dispensed, means e.g. a coin-freed mechanism authorising dispensing, and a dispensing outlet, said loudspeaker comprising a said member (2) with a transducer of said transducer means (9) mounted wholly and exclusively on said member to cause it to vibrate and resonate as an acoustic radiator providing an acoustic output when resonating.

218. A vending machine of the kind comprising a store of articles or product to be dispensed being a host device or apparatus according to claim 189, comprising user operated means (137) for selecting the article or product to be dispensed, means (143) e. g. a coin-freed mechanism authorising dispensing, a dispensing outlet (142) and a loudspeaker (81), and the component is a loudspeaker or a microphone or a combined loudspeaker and microphone.

219. Vending machine according to claim 217 or claim 218, wherein said member or component (2) forms a visual display means.

220. Vending machine according to claim 217, 218 or 219, with claim 154, comprising a body (108), and the frame (1) is on or integral with the body.

221. Vending machine according to any one of claims 217 to 220, comprising second transducer means (3) coupled to the radiator (12) for microphone action by producing a signal in response to resonance of the radiator due to incident acoustic energy.

222. Vending machine according to claim 221, wherein the second transducer means is as claimed in claim 148, 149 or 150.

**Patentansprüche**

1. Verfahren zum Herstellen einer akustischen Vorrichtung mit einem Bauteil (2), das sich quer zu seiner Dicke erstreckt und imstande ist, zumindest über eine absichtlich indirekt akustisch aktive Fläche der Querausdehnung des Bauteils Biegewellen aufrechtzuerhalten, wobei das Bauteil (2) Parameter aufweist, wie etwa geometrische und für die Biegesteifigkeit, von deren Werten seine Verteilung von Resonanzmoden einer natürlichen Biegewellenschwingung über die Fläche abhängt, wobei das Verfahren eine Analyse der Verteilung der Resonanzmoden der natürlichen Biegewellenschwingung des Bauteils (2) über die Fläche umfasst sowie ein Auswählen von Werten bestimmter der Parameter, die zu einer Verteilung der Eigenresonanzmoden führen, welche für einen gewünschten erzielbaren akustischen Betrieb der Vorrichtung über einen interessierenden Frequenzbereich vorteilhaft ist, und ein Herstellen des Bauteils (2) mit den ausgewählten Werten der Parameter als zumindest eine Komponente der Vorrichtung.

2. Verfahren nach Anspruch 1, wobei die Parameter wenigstens zwei verschiedene Richtungen durch die Fläche des Bauteils (2) betreffen.

3. Verfahren nach Anspruch 1 oder Anspruch 2, wobei die Analyse ein Bewerten von Teilen oder Teilflächen der Fläche im Hinblick auf einen Schwingungsenergieinhalt beinhaltet, der von den vorbestimmten Eigenresonanzmoden stammt und das Auswählen so erfolgt, dass das Vorkommen niedriger Schwingungsenergieinhalte der Teile oder Teilflächen verringert wird.

4. Verfahren nach Anspruch 3, wobei das Verringern darin besteht, das Vorkommen niedriger Schwingungsenergieinhalte der Teile oder Teilflächen zu minimieren.

5. Verfahren nach einem der vorhergehenden Ansprüche, wobei die Analyse ein Bewerten von Teilen oder Teilflächen der Fläche im Hinblick auf einen Schwingungsenergieinhalt beinhaltet, der von den vorbestimmten Eigenresonanzmoden stammt, und das Auswählen derart erfolgt, dass eine gleichmäßigere Ausbreitung der Schwingungsenergieinhalte der Teile oder Teilflächen hervorgerufen wird.

6. Verfahren zum Herstellen einer akustischen Vorrichtung mit einem Bauteil (2), das sich quer zu seiner Dicke erstreckt und imstande ist, zumindest über eine absichtlich akustisch aktive Fläche seiner Querausdehnung Biegewellen aufrechtzuerhalten, die akustisch relevante Resonanzmoden seiner natürlichen Biegewellenschwingung beinhalten, welche eine charakteristische Verteilung von schwingungsmäßig aktiveren oder aktivsten Gebieten und schwingungsmäßig weniger oder am wenigsten aktiven Gebieten über die Fläche aufweist, die von Werten zumindest zweier bestimmter Parameter des Bauteils (2) abhängig ist, wobei das Verfahren eine Analyse einer geringeren oder geringsten und einer größeren oder größten Schwingungsaktivität in den Gebieten umfasst sowie ein Auswählen von Werten, die einer Verteilung entsprechen, bei der Gebiete geringer oder keiner Schwingungsaktivität auf ein Optimum hin verringert sind, das für eine weitere Übereinstimmung mit einem gewünschten erzielbaren akustischen Betrieb der Vorrichtung möglich ist, und ein Herstellen des Bauteils (2) mit den ausgewählten Werten der Parameter zumindest als eine Komponente der Vorrichtung.

7. Verfahren nach einem der Ansprüche 3 bis 6, wobei ein Satz der Resonanzmoden und entsprechende Beiträge zu der Verteilung durch mindestens einen der Parameter besonders beeinflusst werden und ein anderer Satz der Resonanzmoden und entsprechende Beiträge zu der Verteilung durch einen anderen der Parameter besonders beeinflusst werden, wobei die ausgewählten Werte des einen und des anderen Parameters, die den Beiträgen des einen Satzes zu den schwingungsmäßig aktiveren oder aktivsten Gebieten entsprechen, soweit praktisch erreichbar zu den Beiträgen des anderen Satzes zu den schwingungsmäßig weniger oder am wenigsten aktiven Gebieten komplementär sind und umgekehrt.

8. Verfahren nach einem der vorhergehenden Ansprüche, wobei die Analyse ein Bewerten von Frequenzen der Resonanzmoden nach Abständen ihrer Werte beinhaltet und das Bestimmen derart erfolgt, dass optimale mögliche Abstände dieser Frequenz erreicht werden.

9. Verfahren nach einem der vorhergehenden Ansprüche, wobei sich die Parameter auf mindestens zwei verschiedene konzeptionelle Frequenzen beziehen, auf die ihrerseits Frequenzen der Resonanzmoden bezogen werden können.

10. Verfahren zum Herstellen einer akustischen Vorrichtung mit einem Bauteil (2), das sich quer zu seiner Dicke erstreckt und imstande ist, in einer akustisch wirksamen Fläche seiner Querausdehnung Biegewellen aufrechtzuerhalten, die betriebsmäßig relevante Resonanzmoden seiner natürlichen Biegewellenschwingung beinhalten, welche auf mindestens zwei konzeptionelle Frequenzen bezogen werden können, die von Werten mindestens zweier bestimmter Parameter des Bauteils (2) abhängig sind, wobei das Verfahren eine Analyse umfasst, um ausgewählte Werte der Parameter zu bestimmen, sodass Werte der solchermaßen mit den Resonanzmoden in Beziehung stehenden konzeptionellen Frequenzen bei Frequenzen erhalten werden, die vorteilhaft beabstandet und verschachtelt sind, um einen gewünschten akustischen Betrieb der Vorrichtung zu erzielen, sowie ein Herstellen des Bauteils (2) mit den ausgewählten Werten der Parameter als zumindest eine Komponente der Vorrichtung.

11. Verfahren nach Anspruch 8, 9 oder 10, wobei die ausgewählten Parameter gewährleisten, dass die konzeptionellen Frequenzen so in Beziehung stehen, dass eine Verschachtelung der Resonanzmodenfrequenzen mit Abständen und einer sich ergebenden Ausbreitung bei oder nahe einem Optimum für eine Nicht-Koinzidenz und Gleichmäßigkeit einer solchen Ausbreitung vorliegt.

12. Verfahren nach einem der Ansprüche 8 bis 11, wobei die konzeptionellen Frequenzen durch die ausgewählten Werte der verschiedenen Parameter jeweils definierend beeinflusst werden.

13. Verfahren nach einem der vorhergehenden Ansprüche, wobei die ausgewählten Werte von den entsprechenden Parametern stammen, die sich auf eine geometrische Konfiguration oder Form und/oder auf Biegesteifigkeiten in unterschiedlichen Richtungen beziehen.

14. Verfahren nach einem der vorhergehenden Ansprüche, wobei die ausgewählten Werte von den entsprechenden Parametern einer ähnlichen Art stammen und durch einen gegenseitig relativen Wert wie etwa ein Verhältnis oder einen relativen Prozentanteil auswählbar sind.

15. Verfahren nach Anspruch 13 oder 14, wobei die entsprechenden geometrischen Parameter eine Form zumindest der Fläche des Bauteils (2) für eine gegebene Biegesteifigkeit (Biegesteifigkeiten) des Bauteils durch die Fläche definieren.

16. Verfahren nach Anspruch 15, wobei die ausgewählten Werte der geometrischen Parameter eine bestimmte Abweichung einer Grundform gemäß Abmessungen in unterschiedlichen Richtungen über die Form angeben.

17. Verfahren zum Herstellen einer akustischen Vorrichtung, umfassend den Schritt des Bestimmens einer geometrischen Konfiguration eines Bauteils (2), das sich quer zu seiner Dicke in seiner zu konfigurierenden Fläche erstreckt und imstande ist, zumindest über die Fläche Biegewellen aufrechtzuerhalten, wobei das Verfahren eine Analyse der Verteilung von Resonanzmoden einer natürlichen Biegewellenschwingung des Bauteils (2) umfasst, welche Verteilung für verschiedene Konfigurationen der Fläche, wie sie durch relevante geometrische Parameter unterschiedlich definiert sind, verschieden ist, sowie ein Auswählen eines bestimmten relativen Werts der Parameter, für den die Verteilung der Eigenresonanzmoden als vereinbar mit einer gewünschten erreichbaren Wirkung oder einem gewünschten erreichbaren Betrieb der akustischen Vorrichtung über einen interessierenden Frequenzbereich bestimmt wird, und ein Herstellen des Bauteils (2), dessen Fläche mit dem bestimmten relativen Wert der geometrischen Parameter konfiguriert ist, als eine Komponente der Vorrichtung.

18. Verfahren nach Anspruch 17, wobei die geometrischen Parameter Abmessungen in unterschiedlichen Richtungen über die Fläche umfassen.

19. Verfahren zum Herstellen einer akustischen Vorrichtung unter Verwendung eines Bauteils (2) einer gegebenen geometrischen Konfiguration, das sich quer zu seiner Dicke erstreckt und imstande ist, über seine Fläche Biegewellen aufrechtzuerhalten, wobei das Verfahren eine Analyse zur Bestimmung von Werten geometrischer Parameter in zwei jeweiligen Richtungen über die Fläche umfasst, welche mit entsprechenden Biegesteifigkeiten des Bauteils (2) beitragen, um konzeptionelle Frequenzen herzuleiten, die zu einer natürlichen Biegewellenschwingung des Bauteils (2) in Bezug setzbar sind, die innerhalb der Fläche für eine erreichbare akustische Wirkung eines Teils des Bauteils (2) in Bezug auf eine gewünschte Funktion der Vorrichtung so nützlich wie möglich ist, sowie ein Bestimmen entsprechender Biegesteifigkeiten in den Richtungen und ein Festlegen des Teils als akustisch wirksame Fläche durch Mittel, welche einen Durchgang von Biegewellen in dem Bauteil (2) über die Begrenzungsmittel hinaus begrenzen, sowie ein Herstellen des Bauteils (2) mit der begrenzten wirksamen Fläche zumindest als Komponente der Vorrichtung.

20. Verfahren nach einem der vorhergehenden Ansprüche, wobei die Analyse nur vorbestimmte Resonanzmoden beinhaltet, die in dem Frequenzbereich eher niedrig als hoch sind.

21. Verfahren nach Anspruch 20, wobei die vorbestimmten Resonanzmoden mehr als zwanzig oberhalb einer natürlichen Grundfrequenz und verwandter konzeptioneller Frequenzen umfassen, die ferner in Beziehung zu der natürlichen Biegewellenschwingung des Bauteils (2) setzbar sind.

22. Verfahren nach Anspruch 21, wobei die vorbestimmten Resonanzmoden die ersten fünfundzwanzig oder mehr oberhalb der Eigenresonanzfrequenzen umfassen.

23. Verfahren nach einem der vorhergehenden Ansprüche, wobei das oder jedes Bauteil Dämpfmittel (3, 2P) aufweist, die selektiv daran angebracht sind und dazu vorbestimmt sind, Frequenzen entsprechend einem oder mehr der Resonanzmoden zu steuern.

24. Verfahren nach Anspruch 23, wobei die selektiven Dämpfmittel Dämpfzusätze (2P) an mittleren Positionen der Fläche umfassen.

25. Verfahren nach einem der vorhergehenden Ansprüche, wobei die Begrenzungsränder des oder jedes Bauteils (2) an die Fläche angrenzen.

26. Verfahren nach einem der vorhergehenden Ansprüche, wobei die oder jede akustische Vorrichtung (81) einen Rahmen (1) aufweist, der so um ihre Ränder herum angebracht ist, dass er dort bis zu einem gewünschten Maß eine Biegewellenschwingung ermöglicht ist.

27. Verfahren nach Anspruch 26, wobei der Rahmen (1) mit einem schwingungssteuernden Material (3) zwischen dem Rahmen (1) und den Rändern angebracht ist.

28. Verfahren nach einem der Ansprüche 1 bis 26, wobei die Fläche innerhalb der Querausdehnung des Bauteils (2) durch Mittel (22C) definiert ist, welche einen Durchgang von Biegewellen über die Fläche hinaus ungünstig beeinflussen.

29. Aktive akustische Vorrichtung, die mittels des Verfahrens nach einem der Ansprüche 1 bis 28 erhältlich ist, umfassend mit dem Bauteil (2) gekoppelte Wandlermittel (9) an einer asymmetrischen mittenversetzten Position weg von Achsen oder Linien, welche Punkte maximaler/minimaler Maße oder Richtungen geometrischer Parameter im Abstand von den Ecken und Rändern des Bauteils verbinden, um eine vorteilhafte Kopplung mit und Verteilung von Resonanzmoden für eine Verwendung als Lautsprecher oder Mikrofon vorzusehen.

30. Akustische Vorrichtung nach Anspruch 29, wobei das Bauteil (9) eine im wesentlichen rechteckige akustisch wirksame Fläche besitzt und die Wandlermittel an einer Position angeordnet sind, welche im wesentlichen 3/7 und/oder 4/9 und/oder 5/13 der Länge von Seiten des Bauteils (2) entspricht, die als Koordinaten von einer Ecke der Fläche oder des Bauteils (2) verwendet werden.

31. Akustische Vorrichtung mit einem Bauteil (2), dass sich quer zu seiner Dicke erstreckt und imstande ist, in einer akustisch wirksamen Fläche seiner Querausdehnung Biegewellen aufrechtzuerhalten, die betriebsmäßig relevante Resonanzmoden seiner natürlichen Biegewellenschwingung beinhalten, welche zu mindestens zwei konzeptionellen Frequenzen in Bezug setzbar sind, die von ausgewählten Werten zumindest zweier Parameter des Bauteils (2) abhängig sind, wobei das Bauteil Werte der Parameter besitzt, die so vorbestimmt sind, dass Werte der so mit den Resonanzmoden in Beziehung stehenden konzeptionellen Frequenzen bei Frequenzen erhalten werden, die vorteilhaft beabstandet und verschachtelt sind, um einen gewünschten akustischen Betrieb der Vorrichtung zu erzielen, und mit Wandlermitteln (9), welche mit dem Bauteil (2) gekoppelt sind, wobei das Bauteil (9) eine im wesentlichen rechteckige akustisch wirksame Fläche aufweist und die Wandlermittel (9) an einer Position angeordnet sind, welche im wesentlichen 3/7 und/oder 4/9 und/oder 5/13 der Länge von Seiten des Bauteils (2) entspricht, die als Koordinaten von einer Ecke der Fläche oder des Bauteils (2) verwendet werden.

32. Akustische Vorrichtung nach Anspruch 31, wobei die ausgewählten Parameter gewährleisten, dass die konzeptionellen Frequenzen in einem solchen Zusammenhang stehen, dass eine Verschachtelung der Resonanzmodenfrequenzen mit Abständen und einer sich ergebenden Ausbreitung bei oder nahe einem Optimum für eine Nicht-Koinzidenz und Gleichmäßigkeit einer solchen Ausbreitung vorliegt.

33. Akustische Vorrichtung nach Anspruch 31 oder 32, wobei die konzeptionellen Frequenzen durch die ausgewählten Werte der verschiedenen Parameter jeweils definierend beeinflusst sind.

34. Akustische Vorrichtung nach einem der Ansprüche 31 bis 33, wobei die ausgewählten Werte von entsprechenden Parametern stammen, die eine geometrische Konfiguration oder Form und/oder Biegesteifigkeiten in unterschiedlichen Richtungen betreffen.

35. Akustische Vorrichtung nach einem der Ansprüche 31 bis 34, wobei die ausgewählten Werte von entsprechenden Parametern einer ähnlichen Art stammen und durch einen gegenseitig relativen Wert, wie etwa ein Verhältnis oder einen relativen Prozentanteil, auswählbar sind.

36. Akustische Vorrichtung nach Anspruch 34 oder 35, wobei die entsprechenden geometrischen Parameter eine Form zumindest der Fläche des Bauteils (2) für eine gegebene Biegesteifigkeit (Biegesteifigkeiten) des Bauteils (2) durch die Fläche definieren.

37. Akustische Vorrichtung nach Anspruch 36, wobei die ausgewählten Werte der geometrischen Parameter eine bestimmte Abweichung einer Grundform gemäß Abmessungen in unterschiedlichen Richtungen über die Form angeben.

38. Akustische Vorrichtung mit einem Bauteil (2), das sich quer zu seiner Dicke erstreckt und imstande ist, Biegewellen aufrechtzuerhalten, wobei das Bauteil (2) eine geometrische Konfiguration aufweist, die eine natürliche Biegewellenschwingung über seine Fläche mit Resonanzmoden, welche auf mindestens zwei konzeptionelle Frequenzen beziehbar sind, sowie einen Zusammenhang zwischen den konzeptionellen Frequenzen, derart, dass sich aus den konzeptionellen Frequenzen ergebende vorbestimmte Resonanzmoden niedrigerer Frequenz dadurch korreliert sind, dass zumindest einige schwingungsmäßig aktivere oder aktivste Gebiete der Fläche für solche Moden, die auf eine der konzeptionellen Frequenzen bezogen sind, von schwingungsmäßig weniger oder am wenigsten aktiven Gebieten, die Moden der anderen der konzeptionellen Frequenzen betreffen, geteilt werden oder diesen entsprechen, wobei Abmessungen des Bauteils (2), die diese konzeptionellen Frequenzen bestimmen, in unterschiedlichen Richtungen über die Fläche liegen, wobei diese Richtungen im wesentlichen orthogonal zueinander liegen, wobei die Fläche eine im wesentlichen rechteckige Form mit einer Länge und Breite als geometrischen Parametern oder Maßen besitzt und wobei Wandlermittel (9) mit dem Bauteil (2) an einer Position gekoppelt sind, die im wesentlichen 3/7 und/oder 4/9 und/oder 5/13 der Länge von Seiten des Bauteils (2) entspricht, die als Koordinaten von einer Ecke der Fläche oder des Bauteils (2) verwendet werden.

39. Akustische Vorrichtung nach Anspruch 38, wobei die im wesentlichen rechteckige Fläche im wesentlichen gleiche Biegesteifigkeiten längs ihrer Länge und Breite besitzt, die um etwa 13,4% oder etwa 37% abmessungsmäßig ungleich sind.

40. Akustische Vorrichtung nach Anspruch 38 oder Anspruch 39, wobei die Fläche für zumindest eine diagonale Abmessung um einen Betrag von echten rechtwinkligen Ecken abweicht, der zuzuschreibende Resonanzmoden vorteilhaft auf solche bezieht, die sich aus den Längen- und Breitenabmessungen ergeben.

41. Akustische Vorrichtung nach Anspruch 40, wobei der Betrag zwischen etwa 10% und etwa 15% für eine diagonale Biegesteifigkeit (Biegesteifigkeiten) liegt, die sich von der Biegesteifigkeit (Biegesteifigkeiten) in den Längen- und Breitenrichtungen nicht wesentlich unterscheidet.

42. Akustische Vorrichtung nach Anspruch 38 oder Anspruch 39, wobei die im wesentlichen rechteckige Fläche eine diagonale Biegesteifigkeit (Biegesteifigkeiten) besitzt, die sich von der Biegesteifigkeit (Biegesteifigkeiten) in den Richtungen ihrer Länge und Breite um einen Betrag unterscheidet, der zuzuschreibende Resonanzmoden vorteilhaft auf solche bezieht, die sich aus ihren Längen- und Breitenabmessungen ergeben.

**43.** Akustische Vorrichtung mit einem Bauteil (2), das sich quer zu seiner Dicke erstreckt und imstande ist, Biegewellen aufrechtzuerhalten, wobei das Bauteil (2) eine geometrische Konfiguration besitzt, die eine natürliche Biegewellenschwingung über seine Fläche mit Resonanzmoden bestimmt, welche auf mindestens zwei konzeptionelle Frequenzen beziehbar sind, sowie einen Zusammenhang zwischen den konzeptionellen Frequenzen, derart, dass aus diesen konzeptionellen Frequenzen sich ergebende vorbestimmte Resonanzmoden niedrigerer Frequenz dadurch korreliert sind, dass zumindest einige schwingungsmäßig aktivere oder aktivste Gebiete der Fläche für solche Moden, die auf eine der konzeptionellen Frequenzen bezogen sind, von schwingungsmäßig weniger oder am wenigsten aktiven Gebieten, die Moden der anderen der konzeptionellen Frequenzen betreffen, geteilt werden oder diesen entsprechen, und wobei die Fläche eine im wesentlichen echte elliptische Form besitzt, deren Haupt- und Nebenachse als geometrische Parameter oder Maße dienen, und wobei Wandlermittel (9) mit dem Bauteil (2) an einer asymmetrischen mittenversetzten Position weg von den Rändern des Bauteils gekoppelt sind, um eine vorteilhafte Kopplung mit und eine vorteilhafte Verteilung der Resonanzmoden vorzusehen.

**44.** Akustische Vorrichtung nach Anspruch 43, wobei das Verhältnis der Hauptund Nebenachse im wesentlichen 1,182:1 ist und wobei die Wandlermittel (9) an Koordinatenpositionen relativ zur Mitte des Bauteils (2) im wesentlichen 0,43 und 0,2 längs der Halbhaupt- und Halbnebenachse angeordnet sind.

**45.** Akustische Vorrichtung nach Anspruch 43, wobei das Bauteil im wesentlichen gleiche Biegesteifigkeiten längs seiner Haupt- und Nebenachse aufweist, die um etwa 18,2% oder etwa 34% abmessungsmäßig ungleich sind.

**46.** Akustische Vorrichtung mit einem Bauteil (2), das sich quer zu seiner Dicke erstreckt und imstande ist, Biegewellen aufrechtzuerhalten, wobei das Bauteil (2) eine geometrische Konfiguration aufweist, die eine natürliche Biegewellenschwingung über seine Fläche mit Resonanzmoden bestimmt, welche auf mindestens zwei konzeptionelle Frequenzen beziehbar sind, sowie einen Zusammenhang zwischen den konzeptionellen Frequenzen, derart, dass aus diesen konzeptionellen Frequenzen sich ergebende vorbestimmte Resonanzmoden niedrigerer Frequenz dadurch korreliert sind, dass zumindest einige schwingungsmäßig aktivere oder aktivste Gebiete der Fläche für solche Moden, die auf eine der konzeptionellen Frequenzen bezogen sind, von schwingungsmäßig weniger oder am wenigsten aktiven Gebieten, die Moden der anderen der konzeptionellen Frequenzen betreffen, geteilt werden oder diesen entsprechen, wobei die Richtungen im wesentlichen orthogonal zueinander sind und wobei die Fläche eine im wesentliche superelliptische Form besitzt, deren Haupt- und Nebenachsen als die geometrischen Parameter dienen, die für irgendeinen bestimmten, eine Superellipse definierenden Potenzfaktor (Potenzfaktoren) abmessungsmäßig zu bestimmen sind, und wobei Wandlermittel (9) mit dem Bauteil (2) an einer asymmetrischen mittenversetzten Position weg von den Rändern des Bauteils gekoppelt sind, um eine vorteilhafte Kopplung mit und eine vorteilhafte Verteilung der Resonanzmoden vorzusehen.

**47.** Akustische Vorrichtung mit einem Bauteil (2), welches sich quer zu seiner Dicke erstreckt und imstande ist, Biegewellen aufrechtzuerhalten, wobei das Bauteil (2) eine geometrische Konfiguration besitzt, die eine natürliche Biegewellenschwingung über seine Fläche mit Resonanzmoden bestimmt, welche auf mindestens zwei konzeptionelle Frequenzen beziehbar sind, und einen Zusammenhang zwischen den konzeptionellen Frequenzen, derart, dass aus diesen konzeptionellen Frequenzen sich ergebende vorbestimmte Resonanzmoden niedrigerer Frequenz dadurch korreliert sind, dass zumindestens einige schwingungsmäßig aktivere oder aktivste Gebiete der Fläche für solche Moden, die auf eine der konzeptionellen Frequenzen bezogen sind, von schwingungsmäßig weniger oder am wenigsten aktiven Gebieten, die Moden der anderen der konzeptionellen Frequenzen betreffen, geteilt werden oder diesen entsprechen, wobei die Richtungen im wesentlichen orthogonal zueinander sind und wobei die Fläche eine im wesentlichen superelliptische Form besitzt, deren die Superellipse definierender Potenzfaktor für irgendeinen bestimmten relativen Abmessungswert (Abmessungswerte) ihrer Haupt- und Nebenachse zu bestimmen ist, und wobei Wandlermittel (9) mit dem Bauteil (2) an einer asymmetrischen mittenversetzten Position weg von den Rändern des Bauteils gekoppelt sind, um eine vorteilhafte Kopplung mit und eine vorteilhafte Verteilung der Resonanzmoden vorzusehen.

**48.** Akustische Vorrichtung nach Anspruch 46 oder 47, wobei das Bauteil (2) im wesentlichen gleiche Biegesteifigkeiten längs der Haupt- und Nebenachse besitzt, die um etwa 13% bis etwa 22% oder etwa 32% abmessungsmäßig ungleich sind, und wobei der definierende Potenzfaktor etwa 3,5 bis etwa 4 beträgt.

**49.** Akustische Vorrichtung nach Anspruch 44, wobei die Richtungen im wesentlichen orthogonal zueinander sind und wobei das Bauteil (2) von zusammengesetzter Form ist und im wesentlichen gleiche Biegesteifigkeiten längs und quer zu einer gemeinsamen Hauptachse für Teile der Fläche besitzt, die im wesentlichen einer Superellipse bzw. einer echten Ellipse entsprechen und mit der gemeinsamen Hauptachse verschmolzen sind, wobei der elliptische Teil um etwa 1,1 - 1,3:1 bevorzugt ist, und mit einem Seitenverhältnis, das die gemeinsame Hauptachse um etwa 1,2:1 bevorzugt.

50. Akustische Vorrichtung nach einem der Ansprüche 37, 43, 46 und 47, wobei das Bauteil (2) unterschiedliche Biegesteifigkeiten in den Richtungen besitzt und wobei die Abmessungen derart sind, dass soweit wie möglich im wesentlichen äquivalente Ergebnisse für die Resonanzmoden erhalten werden, wie sie für im wesentlichen gleiche Biegesteifigkeit(en) in den Richtungen erzielt werden, einschließlich eines geeigneten Normierung.

51. Akustische Vorrichtung nach Anspruch 50, wobei die äquivalenten Ergebnisse eine Beziehung konzeptioneller Frequenzen umfassen, auf die die interessierenden Resonanzmoden beziehbar sind.

52. Akustische Vorrichtung nach einem der Ansprüche 32 bis 51, wobei das oder jedes Bauteil (2) Dämpfmittel (3, 2P) aufweist, welche selektiv daran angebracht sind und dazu vorbestimmt sind, Frequenzen entsprechend einem oder mehr der Resonanzmoden zu steuern.

53. Akustische Vorrichtung nach Anspruch 52, wobei die selektiven Dämpfmittel Dämpfzusätze (2P) an mittleren Positionen der Flächen umfassen.

54. Akustische Vorrichtung nach einem der Ansprüche 34 bis 53, wobei die Begrenzungsränder des oder jedes Bauteils (2) an die Fläche angrenzen.

55. Akustische Vorrichtung nach einem der Ansprüche 31 bis 54, wobei die oder jede akustische Vorrichtung einen Rahmen (1) aufweist, der um ihre Ränder herum so angebracht ist, dass dort bis zu einem gewissen Maß eine Biegewellenschwingung gestattet ist.

56. Akustische Vorrichtung nach Anspruch 55, wobei der Rahmen (1) mit einem schwingungssteuernden Material (3) zwischen dem Rahmen (1) und den Rändern solchermaßen angebracht ist.

57. Akustische Vorrichtung nach einem der Ansprüche 31 bis 56, wobei die Fläche innerhalb der Querausdehnung des Bauteils (2) durch Mittel (22C) begrenzt ist, welche den Durchgang von Biegewellen über die Fläche hinaus ungünstig beeinflussen.

58. Akustische Vorrichtung nach einem der Ansprüche 31 bis Anspruch 57, wobei das Bauteil (2) einen mehr als 4kHz überspannenden akustischen Arbeitsfrequenzbereich aufweist.

59. Akustische Vorrichtung nach einem der Ansprüche 31 bis 57, wobei das Bauteil (2) einen akustischen Arbeitsfrequenzbereich aufweist, der die Koinzidenzfrequenz umfasst.

60. Akustische Vorrichtung nach einem der Ansprüche 31 bis 57, wobei das Bauteil (2) einen akustischen Arbeitsfrequenzbereich aufweist, der vollständig unterhalb der Koinzidenzfrequenz liegt.

61. Akustische Vorrichtung nach einem der Ansprüche 31 bis 60, wobei das Bauteil (2) ein Verhältnis der Biegesteifigkeit zur Masse pro Einheitsfläche aufweist, das für eine bestimmte Größe des Bauteils (20) konsistent mit einer niedrigsten Biegewellenfrequenz unterhalb des akustischen Arbeitsfrequenzbereichs der Vorrichtung ist.

62. Akustische Vorrichtung nach Anspruch 61, wobei die unterste Biegewellenfrequenz mindestens 20Hz ist.

63. Akustische Vorrichtung nach Anspruch 61 oder Anspruch 62, wobei die unterste Biegewellenfrequenz bei weniger als der Hälfte, vorzugsweise etwa einem Drittel, der Untergrenze des akustischen Arbeitsfrequenzbereichs liegt.

64. Akustische Vorrichtung nach Anspruch 61, 62 oder 63, wobei das Bauteil (2) eine maximale Biegesteifigkeit zwischen dem Minimum von etwa 0,1 bis etwa 1000 und dem Maximum von etwa 4 bis etwa 3500 Newtonmeter und eine Masse pro Einheitsfläche zwischen dem Minimum von etwa 0,05 bis etwa 1,5 und dem Maximum von etwa 1 und etwa 4 Kilogramm/Quadratmeter abhängig von der Größe/Anwendung aufweist.

65. Akustische Vorrichtung nach einem der Ansprüche 31 bis 64, wobei das Bauteil (2) eine steife leichtgewichtige Struktur laminierter sandwichartiger Natur mit einem steifen zellularen Kern (22) und angeklebten Häuten (21) ist, um Biegewellen zu führen und die Resonanzmoden bei interessierenden Frequenzen aufrechtzuerhalten.

66. Akustische Vorrichtung nach Anspruch 65, wobei der zellulare Kern (22) einen Schermodul von mindestens etwa 10 Megapascal und die anklebte Haut (21) einen Young-Modul von mindestens etwa 1 Gigapascal aufweist.

67. Akustische Vorrichtung nach Anspruch 65, wobei das Bauteil (2) zumindest für Größen unterhalb etwa 0,1 Quadratmeter und niedrigste Biegewellenfrequenzen oberhalb etwa 100Hz eine Biegesteifigkeit besitzt, die unterhalb etwa 10 Newtonmeter liegen kann, einen Kern-Schermodul, der so niedrig wie etwa 10 Megapascal oder weniger sein kann, und einen Young-Modul der Häute im Bereich von etwa 0,5 bis etwa 2,5 Gigapascal.

68. Akustische Vorrichtung nach Anspruch 65, wobei das Bauteil (2) zumindest für Größen zwischen etwa 0,1 und etwa 0,3 Quadratmeter und unterste Biegewellenfrequenzen so niedrig wie etwa 70 Hz eine Biegesteifigkeit zwischen etwa 5 und etwa 50 oder mehr Newtonmeter, einen Kern-Schermodul, der üblicherweise oberhalb 10 Megapascal liegt und typischerweise etwa 15 Megapascal bis etwa 80 oder mehr Megapascal beträgt, und einen Young-Modul der Häute von mindestens etwa 2 Gigapascal bis zu etwa 70 oder mehr Gigapascal aufweist.

69. Akustische Vorrichtung nach Anspruch 65, wobei das Bauteil (2) zumindest für Größen zwischen etwa 0,3 und etwa 1 Quadratmeter eine niedrigste Biegewellenfrequenz aufweist, die so niedrig wie etwa 50 Hz sein kann, eine Biegesteifigkeit, die üblicherweise oberhalb etwa 20 Newtonmeter liegt und typischerweise etwa 50 bis zu etwa 500 oder mehr Newtonmeter beträgt, einen Kem-Schermodul, der üblicherweise oberhalb etwa 10, typischerweise etwa zwischen etwa 20 und etwa 90 Megapascal liegt, und einen Young-Modul der Häute von mindestens etwa 2 Gigapascal möglicherweise bis zu mindestens etwa 70 Gigapascal.

70. Akustische Vorrichtung nach Anspruch 65, wobei das Bauteil (2) zumindest für Größen über etwa 1 bis zu vielleicht 5 Quadratmeter oder mehr und einer untersten Biegewellenfrequenz, die so niedrig wie etwa 25 bis 70Hz sein kann, eine Biegesteifigkeit oberhalb etwa 25 Newtonmeter, einen Kern-Schermodul von üblicherweise über 30 Megapascal und einen Young-Modul der Häute von mindestens etwa 20 Gigapascal hochreichend bis zu mindestens etwa 1000 Gigapascal aufweist.

71. Akustische Vorrichtung nach einem der Ansprüche 65 bis 70, wobei der Kern (22) Zellen aufweist, die dazu fähig sind, nützliche zusätzliche volumenbezogene hochfrequente Nichtbiegewellenresonanzen beizutragen.

72. Akustische Vorrichtung nach einem der Ansprüche 65 bis 70, wobei der Kern (22) eine Struktur aufweist, die dazu fähig ist, nützliche zusätzliche hochfrequenteDruck/Erhohlungs-Nichtbiegewellenresonanzen beizutragen.

73. Akustische Vorrichtung nach einem der Ansprüche 65 bis 67, wobei der Kern (22) Zellen aufweist, welche mit den Häuten (21) zusammenwirken, um nützliche winzige trommelartige zusätzliche hochfrequente Nichtbiegewellenresonanzen zu liefern.

74. Akustische Vorrichtung nach einem der Ansprüche 32 bis 73, wobei die Nachgiebigkeit der Abstützung des Bauteils (2) nützliche zusätzliche niederfrequente Nichtbiegewellenresonanzen liefert.

75. Akustische Vorrichtung nach einem der Ansprüche 65 bis 73, wobei die Nachgiebigkeit der Anbringung der Wandlermittel (9) an dem Bauteilkern (22) nützliche zusätzliche niederfrequente Nichtbiegewellenresonanzen liefert.

76. Akustische Vorrichtung nach einem der Ansprüche 29 bis 75, wobei die Wandlermittel (9) mindestens einen bewegbaren biegewellenwirksamen Teil aufweisen, der mit dem Bauteil vorwiegend resistiv mechanisch gekoppelt ist.

77. Akustische Vorrichtung nach einem der Ansprüche 29 bis 76, wobei die Wandlermittel (9) vom piezoelektrischen Typ sind.

78. Akustische Vorrichtung nach einem der Ansprüche 29 bis 76, wobei die Wandlermittel (9) vom elektromagnetischen Spule-und-Magnet-Typ sind.

79. Akustische Vorrichtung nach Anspruch 78, wobei die elektromagnetischen Wandlermittel (9) vom Schwingspulentyp sind.

80. Akustische Vorrichtung nach einem der Ansprüche 29 bis 79, wobei die Wandlermittel (9) an dem Bauteil (2) oberflächenmontiert sind.

81. Akustische Vorrichtung nach einem der Ansprüche 29 bis 80, wobei die Wandlermittel wenigstens einen beweglichen biegewellenwirksamen Teil aufweisen, der in einer Ausnehmung in der Dicke des Bauteils (2) angebracht ist.

82. Akustische Vorrichtung nach einem der Ansprüche 29 bis 81, wobei der bewegbare biegewellenwirksame Teil der Wandlermittel (9) so angebracht ist, dass er weniger als 0,1% der Flächengröße des Bauteils (2) einnimmt.

83. Akustische Vorrichtung nach einem der Ansprüche 29 bis 82, wobei der bewegbare biegewellenwirksame Teil der Wandlermittel (9) eine Masse besitzt, die etwa das 1- bis 2-fache derjenigen eines zur Unterbringung des Teils abgedeckten oder entfernten Abschnitts des Bauteils (2) ist.

**84.** Akustische Vorrichtung nach einem der Ansprüche 29 bis 83, wobei die Wandlermittel (9) vollständig von dem Bauteil (2) getragen sind.

**85.** Akustische Vorrichtung nach einem der Ansprüche 29 bis 84, wobei das Bauteil (2) eine im wesentlichen superelliptische akustisch wirksame Fläche aufweist und die Wandlermittel (9) an einer Position angeordnet sind, die um innerhalb des Außenrands der Fläche oder des Bauteils (2) um etwa 15 % einer Linie zu dessen Mitte liegt.

**86.** Verfahren nach einem der Ansprüche 1 bis 28, wobei sich die Analyse auf eine Bewertung eines Schwingungsenergieinhalts von Teilen oder Teilflächen der Fläche für Beiträge der vorbestimmten Eigenresonanzmoden erstreckt, wobei das Verfahren ferner das Bestimmen wenigstens einer innerhalb der Fläche liegenden Stelle für Biegewellenwandlermittel (9) umfasst, indem zunächst mindestens ein Gebiet der Fläche aufgefunden wird, das die Beiträge von hohen oder höchsten Zahlen der vorbestimmten Resonanzmoden aufweist.

**87.** Verfahren nach einem der Ansprüche 1 bis 28, wobei sich die Analyse auf eine Bewertung eines Schwingungsenergieinhalts von Teilen oder Teilfläche der Fläche für Beiträge der vorbestimmten Eigenresonanzmoden erstreckt, wobei das Verfahren ferner die Bestimmung von zwei oder mehr innerhalb der Fläche liegenden Stellen für Biegewellenwandlermittel umfasst, indem zunächst Gebiete aufgefunden werden, die zusammen Beiträge von den meisten bis allen vorbestimmten Resonanzmoden aufweisen.

**88.** Verfahren zum Herstellen einer akustischen Vorrichtung mit einem Bauteil (2), das sich quer zu seiner Dicke in einer Fläche vorgeschriebener Konfiguration erstreckt und imstande ist, Biegewellenschwingungen über die Fläche aufrechtzuerhalten, wobei das Verfahren die Bestimmung einer Stelle in der Fläche für Biegewellenwandlermittel (9) umfasst, indem die Verteilung von Schwingungsenergie vorbestimmter Resonanzmoden einer natürlichen Biegewellenschwingung des Bauteils (2) über die Fläche analysiert wird und mindestens ein Gebiet in der Fläche identifiziert wird, in dem hohe oder höchste Zahlen der vorbestimmten Resonanzmoden eine signifikante Schwingungsenergie beitragen.

**89.** Verfahren nach Anspruch 88, wobei zwei oder mehr Stellen für Biegewellenwandlermittel (9) in Gebieten in der Fläche ausgemacht werden, die in Kombination signifikante Schwingungsenergiebeiträge von den meisten oder allen der vorbestimmten Resonanzmoden aufweisen.

**90.** Verfahren nach einem der Ansprüche 86 bis 89, wobei die Analyse zusätzlich oder alternativ zwei oder mehr Gebiete der Fläche identifiziert, die im wesentlichen komplementäre Schwingungsenergiebeiträge von den vorbestimmten Resonanzmoden aufweisen.

**91.** Verfahren nach einem der Ansprüche 86 bis 90, umfassend den Schritt der Anbringung von Wandlermitteln (9) zur Kopplung zumindest mit solchen der Resonanzmoden, welche zu einem Gebiet beitragen.

**92.** Aktive akustische Vorrichtung nach einem der Ansprüche 29 bis 85 als das Bauteil (2) umfassender plattenförmiger Lautsprecher (81), wobei die Wandlermittel (9) als Schwingungsanregungsmittel an dem Bauteil angebracht sind, um zu bewirken, dass das Bauteil unter Bildung eines akustischen Strahlers in Resonanz tritt, um bei resonanter Schwingung eine akustische Ausgabe zu liefern, und mit einer den Strahler umgebenden und tragenden Schallwand (6, 8).

**93.** Plattenförmiger Lautsprecher nach Anspruch 92, umfassend eine federnde Aufhängung (3, 17) zwischen dem Strahler und der Schallwand (6, 8) zur Halterung des Strahlers in der Schallwand (6, 8).

**94.** Plattenförmiger Lautsprecher nach Anspruch 93, wobei die federnde Aufhängung (3, 17) aus einem elastomeren Material ist.

**95.** Plattenförmiger Lautsprecher nach einem der Ansprüche 92 bis 94, wobei der Schwingungsanreger (9) vollständig und ausschließlich an dem Strahler angebracht ist.

**96.** Plattenförmiger Lautsprecher nach einem der Ansprüche 92 bis 95, wobei die Schallwand (8) als Gehäuse mit einem offenen verstärkten vorderen Kastenteil (52) ausgebildet ist, der zur Anbringung an einer Wand oder dergleichen ausgebildet ist.

**97.** Plattenförmiger Lautsprecher nach Anspruch 96, wobei der vordere Kastenteil (52) zur Anbringung in Ausrichtung zu einem Hohlraum (110) in der Wand ausgelegt ist.

**98.** Aktive akustische Vorrichtung nach einem der Ansprüche 29 bis 85 als plattenförmiger Lautsprecher (81), mit dem Bauteil (2) als akustischem Resonanzstrahler mit einem Umfang, wobei die Wandlermittel an dem Strahler angebracht sind, um das Bauteil unter Bereitstellung einer akustischen Ausgabe von dem Strahler in Schwingung zu versetzen und es in Resonanz treten zu lassen, und mit einem Rahmen (1), welcher den Strahler rund um dessen Umfang trägt, wobei federnde Aufhängungsmittel zwischen dem Rahmen und dem Strahlerumfang angeordnet sind, wobei die Wandlermittel (9) zwischen dem Strahler und dem Rahmen (1) angeordnet sind und ferner dazu ausgelegt sind, den Strahler kolbenartig zu bewegen.

99. Plattenförmiger Lautsprecher nach Anspruch 98, wobei der Rahmen (1) einen den Strahler umgebenden Abschnitt aufweist.

100. Plattenförmiger Lautsprecher nach Anspruch 98 oder Anspruch 99, wobei die federnde Aufhängung (3) aus einem elastomeren Material ist.

101. Plattenförmiger Lautsprecher nach Anspruch 99 oder Anspruch 100, soweit abhängig von Anspruch 98, wobei der Rahmen (1) einen Bodenständer (23) mit einem Bodeneingriffsabschnitt (83), einem sich vom Bodeneingriffsabschnitt erstreckenden, im wesentlichen aufrechten Abschnitt (84) sowie einer Mehrzahl sich von dem aufrechten Abschnitt erstreckender Arme (85) umfasst, wobei die distalen Enden der Arme mit dem den Strahler umgebenden Rahmenabschnitt (1) verbunden sind.

102. Plattenförmiger Lautsprecher nach Anspruch 101, wobei der Strahler rechteckig ist und die Arme (85) nahe der Ecken des Strahlers verlaufen.

103. Plattenförmiger Lautsprecher nach Anspruch 101 oder Anspruch 102, wobei der Wandler (9) an dem aufrechten Abschnitt (84) des Rahmens oder diesem benachbart angebracht ist.

104. Plattenförmiger Lautsprecher nach einem der Ansprüche 101 bis 103, wobei der Wandler (9) an einem von dem aufrechten Abschnitt vorstehenden Ansatz (88) angebracht ist.

105. Plattenförmiger Lautsprecher nach einem der Ansprüche 98 bis 104, umfassend ein ausgleichendes Paar von Wandlern (9).

106. Plattenförmiger Lautsprecher nach einem der Ansprüche 98 bis 105, wobei der Strahler einen leichtgewichtigen Kern (22) umfasst, welcher ein Paar leichtgewichtiger Häute (21) hohen Moduls trennt.

107. Aktive akustischen Vorrichtung nach einem der Ansprüche 29 oder Anspruch 85 in einem Lautsprecher (81), mit einem Gehäuse, dem Bauteil (2) als akustischem Strahler in dem Gehäuse, einer nachgiebigen Aufhängung (71), welche den Strahler in dem Gehäuse zur kolbenartigen Relativbewegung hält, den Wandlermitteln, die vollständig und ausschließlich an dem Strahler angebracht sind, um das Bauteil unter Bereitstellung einer akustischen Ausgabe von dem Strahler in Schwingung zu versetzen und es in Resonanz treten zu lassen, und Mitteln (11) zur Veränderung des Luftdrucks in dem Gehäuse, um zu bewirken, dass sich der Strahler kolbenartig bewegt.

108. Lautsprecher nach Anspruch 107, wobei die Luftdruckveränderungsmittel (11) eine Luftpumpe umfassen.

109. Lautsprecher nach Anspruch 108, wobei die Luftpumpe ein Zusatzgehäuse (185), einen in dem Zusatzgehäuse angebrachten Kolbentreiber (42) sowie die Innenräume der Gehäuse derart koppelnde Mittel (90) umfasst, dass durch Bewegung des Kolbentreibers erzeugte Luftdruckwellen zu dem Gehäuse (8) übertragen werden.

110. Lautsprecher nach Anspruch 109, umfassend akustisch absorbierende Mittel (51) in dem Gehäuse (8) und/oder in dem Zusatzgehäuse.

111. Aktive akustische Vorrichtung nach einem der Ansprüche 29 bis 85, wobei die Wandlermittel (9) ein Intertialschwingungswandler sind, welcher eine Motorspulenbaugruppe (13, 18) mit einer starr an einem rohrartigen Element (18) befestigten Spule (13), eine konzentrisch in Bezug auf die Motorspulenbaugruppe angeordnete Magnetbaugruppe (15) sowie Federmittel (19, 136) umfasst, welche die Magnetbaugruppe zur axialen Bewegung relativ zu der Motorspulenbaugruppe abstützen, wobei das rohrförmige Element (18) zur starren Anbringung an dem Bauteil (2) ausgelegt ist.

112. Aktive akustische Vorrichtung nach Anspruch 111, wobei das rohrförmige Element (18) durch Klebmittel (16, 20) unmittelbar an dem Bauteil (2) starr angebracht ist.

113. Aktive akustische Vorrichtung nach Anspruch 111 oder 112, wobei die Federmittel (19, 136) wechselseitig gegenüberliegende elastomere Elemente umfassen, welche auf gegenüberliegenden Seiten der Magnetbaugruppe angeordnet sind.

114. Aktive akustische Vorrichtung nach Anspruch 111, 112 oder 113, umfassend Kappen (59, 119), welche die axialen Enden des rohrförmigen Elements (18) verschließen, wobei die Federmittel (19, 136) an den Kappen angebracht sind.

115. Aktive akustische Vorrichtung nach einem der Ansprüche 111 bis 114, wobei die Spule (13) an der Innenseite des rohrförmigen Elements (18) angebracht ist.

116. Aktive akustische Vorrichtung nach einem der Ansprüche 111 bis 115, wobei die Motorspulenbaugruppe (13, 18) zur Aufnahme in einem entsprechend geformten Hohlraum (120) in dem Strahler (2) ausgeführt ist.

117. Aktive akustische Vorrichtung nach Anspruch 114 oder Anspruch 115 oder Anspruch 116 sofern abhängig von Anspruch 113, wobei die Kappen (59) die Federmittel (136) umfassen.

118. Aktive akustische Vorrichtung nach Anspruch 117, wobei jede Kappe (59) eine ringförmige nachgiebige Rolleneinfassung (136) umfasst.

119. Aktive akustische Vorrichtung nach Anspruch 117 oder Anspruch 118, umfassend Magnetschilde (121) über den Kappen (59).

120. Aktive akustische Vorrichtung nach einem der Ansprüche 111 bis 115, wobei die Motorspulenbaugruppe (13, 18) zur starren Befestigung an einer Seite des Strahlers (2) ausgeführt ist.

121. Aktive akustische Vorrichtung nach Anspruch 120, wobei die Magnetbaugruppe (15) entgegengesetzt angeordnete, allgemein scheibenartige Polstücke (14) umfasst, wobei der Umfang eines derselben innerhalb der Motorspulenbaugruppe (13, 18) und dieser benachbart angeordnet ist, wobei der Umfang des anderen der Polstücke mit einem Flansch (162) ausgeführt ist, welcher so angeordnet ist, dass er der Motorspulenbaugruppe benachbart liegt und diese umgibt.

122. Aktive akustische Vorrichtung nach Anspruch 121, wobei ein Federelement (117) sandwichartig zwischen einem der Polstücke und einer Seite des Strahlers angeordnet ist.

123. Aktive akustische Vorrichtung nach einem der Ansprüche 111 bis 120, wobei die Magnetbaugruppe (15) ein gegenüberliegendes Paar von Magneten (15) umfasst, welche ein Polstück (14) sandwichartig zwischen sich aufnehmen.

124. Aktive akustische Vorrichtung nach einem der Ansprüche 111 bis 123, umfassend komplementäre Magnetbaugruppen und Motorspulenbaugruppen auf gegenüberliegenden Seiten des Strahlers, sowie Mittel (93), welche die Magnetbaugruppen für einen Zug-Druck-Betrieb verbinden.

125. Aktive akustische Vorrichtung nach einem der Ansprüche 29 bis 85, wobei die Wandlermittel einen Intertialschwingungswandler mit einem plattenartigen piezoelektrischen Biegeteil (27) sowie Mittel umfassen, welche zur Anbringung des Biegeteils an dem schwingungsmäßig anzuregenden Bauteil (2) ausgeführt sind, wobei die Anordnung derart ist, dass ein wesentlicher Teil des Biegeteils (27) Abstand von dem Bauteil (2) zur Bewegung relativ zu diesem aufweist.

126. Aktive akustische Vorrichtung nach Anspruch 125, wobei die Biegeteil-Anbringungsmittel (93) im wesentlichen in der Mitte des plattenartigen Biegeteils (27) angeordnet sind.

127. Aktive akustische Vorrichtung nach Anspruch 125 oder Anspruch 126, umfassend eine am Umfang des Biegeteils befestigte Masse (25).

128. Aktive akustische Vorrichtung nach Anspruch 125, 126 oder 127, wobei die Anbringungsmittel (93) ein leichtgewichtiges starres Element sind.

129. Aktive akustische Vorrichtung nach einem der Ansprüche 125 bis 128, wobei das piezoelektrische Biegeteil (27) von kristalliner Form ist.

130. Aktive akustische Vorrichtung nach einem der Ansprüche 29 bis 85, wobei die Wandlermittel einen Schwingungswandler (9) zur Inschwingungsetzung des Bauteils an einer Seite desselben umfassen, wobei der Schwingungswandler (9) eine Motorspulenbaugruppe (13, 18) mit einer starr an einem rohrförmigen Element (18) befestigten Spule (18) umfasst, wobei die Motorspulenbaugruppe zur Befestigung an der Seite des Bauteils (2) ausgeführt ist, sowie eine Magnetbaugruppe (15) mit gegenüberliegenden scheibenartigen Polstücken (14), wobei der Umfang eines der Polstücke zur Anordnung innerhalb der Motorspulenbaugruppe und dieser benachbart ausgeführt ist und der Umfang des anderen der Polstücke mit einem umgebenden Flansch (90) ausgeführt ist, welcher dazu ausgelegt ist, die Motorspulenbaugruppe zu umgeben und dieser benachbart angeordnet zu werden, wobei die Magnetbaugruppe (15) dazu ausgelegt ist, an ihrer Mitte befestigt zu werden, um das Bauteil (2) anzuregen.

131. Aktive akustische Vorrichtung nach Anspruch 130, umfassend Befestigungsmittel (93) zur Befestigung der Magnetbaugruppe (15) an dem Bauteil (2).

132. Aktive akustische Vorrichtung nach Anspruch 131, wobei die Befestigungsmittel (93) ein Befestigungsorgan (91, 92) umfassen, welches dazu ausgelegt ist, in einen Hohlraum (29) in dem Bauteil (2) einzugreifen.

133. Aktive akustische Vorrichtung nach Anspruch 132, wobei das Befestigungsorgan (91, 92) ein Abstandsstück (127) umfasst, um die Umfänge der Polstücke (14) im Abstand von dem Bauteil (2) zu halten.

**134.** Aktive akustische Vorrichtung nach einem der Ansprüche 130 bis 133, umfassend komplementäre Motorspulenbaugruppen (13, 18) und Magnetbaugruppen (15), welche zur Abringung an gegenüberliegenden Seiten des Bauteils (2) ausgelegt sind, sowie Mittel (93), um die Mitten der Magnetbaugruppen (15) für einen Zug-Druck-Betrieb zu verbinden.

**135.** Aktive akustische Vorrichtung nach Anspruch 134, wobei das Befestigungsorgan (91, 92) Köpfe an gegenüberliegenden Enden aufweist, welche zum Eingriff mit den Magnetbaugruppen ausgelegt sind, wobei das Befestigungsorgan (91, 92) ein Paar gegenseitig in Eingriff stehender Schraubgewindeabschnitte (94, 96) sowie Abstandsmittel (19) umfasst, welche dazu ausgelegt sind, dem Befestigungsorgan benachbart angeordnet zu werden, und zur sandwichartigen Anordnung zwischen den Magnetbaugruppen und den gegenüberliegenden Seiten des Bauteils (2) ausgelegt sind.

**136.** Aktive akustische Vorrichtung nach einem der Ansprüche 111 bis 135 in Form eines Lautsprechers.

**137.** Plattenförmiger Lautsprecher (81) mit einer akustischen Vorrichtung nach einem der Ansprüche 29 bis 85, wobei das Bauteil ein akustischer Resonanzstrahler ist, wobei die Wandlermittel einen ersten und einen zweiten Wandler umfassen, welche an im Abstand voneinander liegenden Positionen mit dem Strahler gekoppelt sind, um jeweils zu bewirken, dass das Bauteil in Resonanz tritt und eine akustische Ausgabe von dem Strahler liefert.

**138.** Platteförmiger Lautsprecher nach Anspruch 137, wobei der erste und zweite Wandler (9) dazu ausgelegt sind, in verschiedenen Frequenzbereichen zu arbeiten.

**139.** Plattenförmiger Lautsprecher nach Anspruch 137 oder 138, wobei der erste und zweite Wandler (9) vollständig und ausschließlich an dem Strahler angebracht sind.

**140.** Plattenförmiger Lautsprecher nach Anspruch 137, 138 oder 139, wobei einer der Wandler elektromagnetisch ist.

**141.** Plattenförmiger Lautsprecher nach einem der Ansprüche 137 bis 140, wobei einer der Wandler piezoelektrisch ist.

**142.** Aktive akustische Vorrichtung nach einem der Ansprüche 29 bis 85 als plattenförmiger Lautsprecher, umfassend ein erstes und ein zweites Bauteil mit jeweils zugehörigen ersten bzw. zweiten damit gekoppelten Wandlermitteln, die jeweils ihr zugehöriges Bauteil unter Erzeugung einer akustischen Ausgabe schwingen lassen und in Resonanz bringen.

**143.** Plattenförmiger Lautsprecher nach einem der Ansprüche 137 bis 141, umfassend ein zweites Bauteil (4) ebenfalls mit zugehörigen Wandlermitteln (9), um es unter Bereitstellung einer akustischen Ausgabe schwingen zu lassen und in Resonanz zu bringen, wobei das zweite Bauteil (4) an oder in dem ersten Bauteil (2) angebracht ist und eine federnde Aufhängung (3) das erste und zweite Bauteil (2, 4) koppelt.

**144.** Plattenförmiger Lautsprecher nach Anspruch 143, wobei das zweite Bauteil (4) in einer Öffnung (82) in dem ersten Bauteil (2) angeordnet ist.

**145.** Plattenförmiger Lautsprecher nach Anspruch 143 oder Anspruch 144, wobei der zweite Wandler vollständig und ausschließlich an dem zweiten Bauteil (4) angebracht ist.

**146.** Plattenförmige Lautsprecher- und Mikrofon-Kombination mit einer akustischen Vorrichtung nach einem der Ansprüche 29 bis 85, wobei das Bauteil ein akustischer Resonanzstrahler ist, wenn es durch einen ersten Wandler der Wandlermittel schwingungsmäßig angeregt wird, wobei mit dem Strahler ein zweiter Wandler gekoppelt ist, um ein Ausgangssignal in Antwort auf eine Resonanz des Strahlers infolge eintreffender akustischer Energie zu erzeugen.

**147.** Plattenförmige Lautsprecher- und Mikrofon-Kombination nach Anspruch 146, wobei der erste und zweite Wandler (9, 63) vollständig und ausschließlich an dem Strahler angebracht sind.

**148.** Plattenförmige Lautsprecher- und Mikrofon-Kombination nach Anspruch 146 oder Anspruch 147, umfassend mindestens zwei zweite Wandler (63).

**149.** Plattenförmige Lautsprecher- und Mikrofon-Kombination nach Anspruch 148, umfassend einen weiteren dem Strahler zugeordneten Wandler (63) zur Erzeugung eines Signals in Antwort auf eine Resonanz des Strahlers infolge eintreffender akustischer Energie sowie Mittel (64, 65) zum Vergleichen des von dem weiteren Wandler erzeugten Signals mit dem oder denen, die von dem zweiten Wandler (Wandlern) erzeugt werden.

**150.** Plattenförmige Lautsprecher- und Mikrofon-Kombination nach Anspruch 149, wobei die Vergleichermittel einen Signalempfänger und -konditionierer (65) und Signalausgabemittel (66) umfassen.

**151.** Plattenförmiges Mikrofon mit einer akustischen Vorrichtung nach einem der Ansprüche 29 bis 85, wobei das Bauteil ein akustisch angeregtes Element ist und die. Wandlermittel vollständig und ausschließlich mit dem Bauteil gekoppelt sind, um ein Signal in Antwort auf eine Resonanz des Bauteils infolge eintreffender akustischer Energie zu erzeugen.

**152.** Plattenförmiges Mikrofon nach Anspruch 151, umfassend mindestens zwei der Wandler (9, 62) an verschiedenen Stellen an dem Bauteil.

**153.** Plattenförmiges Mikrofon nach Anspruch 151 oder Anspruch 152, wobei der oder jeder Wandler (9, 63) ein piezoelektrisches Bauelement ist.

**154.** Aktive akustische Vorrichtung oder plattenförmiger Lautsprecher und/oder plattenförmiges Mikrofon nach einem der Ansprüche 137 bis 153, umfassend einen den Strahler (2) abstützenden Rahmen (1) sowie eine federnde Aufhängung (3), mittels welcher der Strahler an dem Rahmen angebracht ist.

**155.** Aktive akustische Vorrichtung oder plattenförmiger Lautsprecher und/oder plattenförmiges Mikrofon nach Anspruch 154, wobei der Rahmen (1) den Strahler umgibt und die Aufhängung am Rand des Strahlers angebracht ist.

**156.** Aufgehängte Deckenkachel (36) mit einer akustischen Vorrichtung nach einem der Ansprüche 29 bis 85 als plattenförmiger akustischer Strahler oder Lautsprecher, wobei die Wandlermittel (9) vollständig und ausschließlich an dem Bauteil angebracht sind, um das Bauteil schwingungsmäßig anzuregen und zu bewirken, dass es unter Bereitstellung einer akustischen Ausgabe in Schwingung versetzt wird und in Resonanz tritt.

**157.** Aufgehängte Deckenkachel nach Anspruch 156, wobei das Bauteil (2) einen zellularen Kern (22) umfasst, welcher sandwichartig zwischen Häuten (21) hohen Moduls angeordnet ist.

**158.** Aufgehängte Deckenkachel nach Anspruch 157, wobei der zellulare Kern (22) aus geschäumtem Kunststoff (97) besteht.

**159.** Aufgehängte Deckenkachel nach Anspruch 156, 157 oder 158, umfassend eine federnde Aufhängung (3), welche am Umfang des Strahlers (2) angeordnet ist, um den Strahler in einem aufgehängten Deckenrahmen (99) abzustützen.

**160.** Aufgehängte Deckenkachel nach einem der Ansprüche 156 bis 159, wobei der Wandler (9) ein Intertialschwingungswandler ist.

**161.** Sichtanzeigegerät mit einer akustischen Vorrichtung oder einem plattenförmigen Lautsprecher und/oder einem plattenförmigen Mikrofon nach einem der Ansprüche 29 bis 85, 154 oder 155, wobei das Bauteil das Sichtanzeigegerät mit einer Anschlagtafel (48) oder dergleichen ist, an der Notizen oder dergleichen z.B. mit Nadeln befestigt werden können, und wobei die Wandlermittel (9) vollständig und ausschließlich an dem Bauteil (2) angebracht sind, um es unter Bildung eines akustischen Strahlers schwingen und in Resonanz treten zu lassen, welcher eine akustische Ausgabe liefert, wenn er in Resonanz schwingt.

**162.** Sichtanzeigegerät nach Anspruch 161 mit Anspruch 158, wobei der Rahmen (1) eine zurückgesetzte Kante (4) aufweist, welche die Aufhängung (3) verbirgt.

**163.** Sichtanzeigegerät nach Anspruch 161, wobei der Strahler (2) einen zellularen Kern (22) aufweist, welcher sandwichartig zwischen Hautschichten (21) aus Papier aufgenommen ist.

**164.** Sichtanzeigegerät nach Anspruch 163, wobei der Kern (22) aus einer papiernen Wabenstruktur besteht.

**165.** Sichtanzeigegerät nach einem der Ansprüche 161 bis 164, wobei der Wandler (9) ein piezoelektrisches Biegeelement ist.

**166.** Anzeigeschirm mit einer akustischen Vorrichtung oder einem plattenförmigen Lautsprecher und/oder einem plattenförmigen Mikrofon nach einem der Ansprüche 29 bis 85, 154 oder 155, mit dem Bauteil als reflektierende oder lichtemittierende Oberfläche und den Wandlermitteln (9), die vollständig und ausschließlich an dem Bauteil angebracht sind, um es als akustischer Strahler schwingen und in Resonanz treten zu lassen, welcher eine akustische Ausgabe liefert, wenn er in Resonanz schwingt.

**167.** Anzeigeschirm nach Anspruch 166, wobei das Bauteil (2) aus einer steifen Leichtkonstruktion mit einem zellularen Kern (22) aus Aluminiumfolie mit Wabenstruktur besteht, der zwischen einem Paar Häute (21) mit hohem Modul sandwichartig aufgenommen ist.

**168.** Anzeigeschirm nach Anspruch 167, wobei die Häute (21) aus faserverstärktem Kunststoff bestehen.

**169.** Anzeigeschirm nach einem der Ansprüche 166 bis 168 soweit abhängig von Anspruch 153, umfassend plattenförmige Lautsprecher (114), welche auf gegenüberliegenden Seiten des Rahmens (1) angebracht sind, um links- und rechtsseitige Kanalinformationen bereitzustellen.

**170.** Anzeigeschirm nach Anspruch 169, wobei der linke und rechte Lautsprecher (114) so an dem Rahmen (1) angelenkt sind, dass sie zur Aufbewahrung zu dem Strahler (2) hin umklappbar sind.

**171.** Anzeigeschirm nach Anspruch 169 oder Anspruch 170, wobei der linke und rechte Lautsprecher (114) jeweils eine aktive akustische Vorrichtung nach einem der Ansprüche 29 bis 85 sind.

**172.** Anzeigeschirm nach einem der Ansprüche 166 bis 171, wobei die Platte (2) ein Projektionsschirm ist.

**173.** Audiovisuelles Gerät, umfassend einen Anzeigeschirm nach Anspruch 169 als ein Teil.

**174.** Audiovisuelles Gerät nach Anspruch 173, ferner umfassend mindestens einen Lautsprecher (117) für einen hinteren Kanal, welcher eine aktive akustische Vorrichtung nach einem der Ansprüche 29 bis 85, 157 oder 158 umfasst.

**175.** Verpackung mit einer akustischen Vorrichtung nach Anspruch 29 mit dem Bauteil als Plattenkomponente der Verpackung, wobei ein Wandler der Wandlermittel (9) vollständig und ausschließlich an dem Bauteil angebracht ist, um es als akustischer Strahler schwingen und in Resonanz treten zu lassen, der eine akustische Ausgabe liefert, wenn er in Resonanz schwingt.

**176.** Verpackung nach Anspruch 175, wobei das Bauteil (2) einen zellularen Kern (22) aus geschäumtem Kunststoff umfasst, welcher sandwichartig zwischen Hautschichten (21) angeordnet ist, die Lagen von Kraftpappe (21) umfassen.

**177.** Verpackung nach Anspruch 175 oder 176, wobei der Wandler (19) ein piezoelektrisches Biegeelement ist.

**178.** Verpackung nach Anspruch 177, wobei das Biegeelement (9) kristallin ist.

**179.** Verpackung nach einem der Ansprüche 175 bis 178, wobei das Bauteil (2) eine Seite einer Kiste (111) bildet.

**180.** Verpackung nach Anspruch 179, wobei die Kiste (111) einen Deckel (139) sowie Mittel (53) aufweist, welche dem Deckel zugeordnet sind, um auf eine Bewegung des Deckels relativ zu der Kiste hin eine Aktivierung des Wandlers (9) auszulösen.

**181.** Verpackung nach Anspruch 180, umfassend einen Signalgenerator, einen Verstärker sowie eine elektrische Batterie (112) zur Ansteuerung des Wandlers.

**182.** Gruß- oder ähnliche Karte (144), umfassend eine aktive akustische Vorrichtung nach einem der Ansprüche 29 bis 85, wobei das Bauteil (2) eine Platte bzw. Tafel ist, die zumindest einen Teil der Karte bildet, wobei die Wandlermittel (9) einen Wandler umfassen, welcher vollständig und ausschließlich an der Tafel angebracht ist, um diese als akustischer Resonator schwingen und in Resonanz treten zu lassen, welcher eine akustische Ausgabe liefert, wenn er in Resonanz schwingt.

**183.** Gruß- oder ähnliche Karte nach Anspruch 182, wobei das Bauteil (2) einen zellularen Kern (22) aus geschäumtem Kunststoff aufweist, welcher sandwichartig zwischen Hautschichten (21) angeordnet ist, die Lagen aus Kraftpappe (21) umfassen.

**184.** Gruß- oder ähnliche Karte nach Anspruch 182 oder Anspruch 183, wobei der Wandler (9) ein piezoelektrisches Biegeelement ist.

**185.** Gruß- oder ähnliche Karte nach Anspruch 184, wobei das Biegeelement (9) kristallin ist.

**186.** Gruß- oder ähnliche Karte nach einem der Ansprüche 182 bis 185, umfassend ein Paar von Blättern (145, 146) sowie Mittel, welche den Blättern zugeordnet sind, um auf eine Bewegung eines Blatts relativ zu dem anderen Blatt hin eine Aktivierung des Wandlers (9) auszulösen.

**187.** Gruß- oder ähnliche Karte nach Anspruch 186, umfassend einen Signalgenerator, einen Verstärker sowie eine elektrische Batterie (112) an einem Blatt der Karte, um den Wandler anzusteuern.

**188.** Gruß- oder ähnliche Karte nach einem der Ansprüche 182 bis 187, wobei das Bauteil (2) zur Aufnahme bedruckten Materials ausgeführt ist.

**189.** Trägergerät oder -vorrichtung, umfassend eine akustische Vorrichtung nach einem der Ansprüche 29 bis 85, 154 oder 155 als eine Komponente.

**190.** Trägergerät oder -vorrichtung nach Anspruch 189, wobei die Komponente integral mit einem Teil des Trägergeräts oder der Trägervorrichtung ist.

**191.** Trägergerät oder -vorrichtung nach Anspruch 190, wobei das Bauteil (2) einen zellularen Kern (22) umfasst, welcher sandwichartig zwischen Hautschichten (21) aufgenommen ist, wobei eine der Hautschichten integral mit dem Teil des Trägergeräts oder der Trägervorrichtung ist.

**192.** Trägergerät oder -vorrichtung nach Anspruch 191, wobei die eine Hautschicht (21) dünner als eine mittlere Dicke des Teils des Trägergeräts oder der Trägervorrichtung ist.

**193.** Trägergerät oder -vorrichtung nach Anspruch 192, wobei der Teil des Trägergeräts oder der Trägervorrichtung mit einer in seine Dicke hineingehenden und das Bauteil (2) umgebenden Rille (100) ausgeführt ist, um eine federnde Aufhängung (3) zu bilden, welche die aktive akustische Komponente mit dem Teil des Trägergeräts oder der Trägervorrichtung koppelt.

**194.** Trägergerät oder -vorrichtung nach einem der Ansprüche 190 bis 193, wobei der Teil des Trägergeräts oder der Trägervorrichtung eine Außenwand ist.

**195.** Sichtanzeigeeinheit, umfassend eine akustische Vorrichtung nach einem der Ansprüche 29 bis 85 als Lautsprecher darin und außerdem mit einem Anzeigeschirm (37) in dem Gehäuse (101) wobei das Bauteil (2) die Wandlermittel (9) aufweist, die vollständig und ausschließlich daran angebracht sind, um es als akustischer Strahler schwingen und in Resonanz treten zu lassen, welcher eine akustische Ausgabe liefert, wenn er in Resonanz schwingt.

**196.** Sichtanzeigeeinheit nach Anspruch 195, wobei die Anzeigeeinheit eine Trägervorrichtung nach Anspruch 188 ist und das Gehäuse der Teil nach einem der Ansprüche 190 bis 194 ist.

**197.** Laptopcomputer, umfassend eine akustische Vorrichtung oder Vorrichtungen jeweils nach einem der Ansprüche 29 bis 85, 144 oder 155 als Lautsprecher und mit einer Tastatur und einem Anzeigeschirm, wobei der oder jeder Lautsprecher das Bauteil (2) mit den Wandlermitteln (9) umfasst, welche vollständig und ausschließlich daran angebracht sind, um es als akustischer Strahler schwingen und in Resonanz treten zu lassen, welcher eine akustische Ausgabe liefert, wenn er in Resonanz schwingt.

**198.** Laptopcomputer (128) nach Anspruch 197, wobei das Bauteil (2) den Anzeigeschirm bildet.

**199.** Laptopcomputer (128) nach Anspruch 197 oder 198, wobei das Bauteil (2) jedes eines Paars gegenüberliegender plattenförmiger Lautsprecher (39, 40) an dem Computer angebracht ist.

**200.** Laptopcomputer nach Anspruch 199, wobei das Paar gegenüberliegender plattenförmiger Lautsprecher (39, 40) an dem Anzeigeschirm (129) angebracht ist.

**201.** Laptopcomputer nach Anspruch 200, wobei das Paar gegenüberliegender plattenförmiger Lautsprecher (40) an dem Anzeigeschirm (29) angelenkt ist.

**202.** Laptopcomputer nach Anspruch 200, wobei der Anzeigeschirm (129) ein Gehäuse umfasst und wobei die Lautsprecher (39) jeweils in einem Schlitz in dem Anzeigeschirmgehäuse (130) zur Schiebebewegung zwischen einer Aufbewahrungsposition, in der die Lautsprecher im wesentlichen vollständig in dem Schlitz aufgenommen sind, und einer Gebrauchsposition, in der die Lautsprecher auf gegenüberliegenden Seiten des Anzeigeschirms angeordnet sind, untergebracht sind.

**203.** Tragbares Compaktdisk-Abspielgerät, umfassend akustische Vorrichtungen nach einem der Ansprüche 29 bis 85, 154 oder 155 als Paar daran angebrachter, gegenüberliegender plattenförmiger Lautsprecher, wobei jeder Lautsprecher das Bauteil (2) umfasst, wobei die Wandlermittel (9) vollständig und ausschließlich an dem Bauteil (2) angebracht sind, um es als akustischer Strahler schwingen und in Resonanz treten zu lassen, der eine akustische Ausgabe liefert, wenn er in Resonanz schwingt.

**204.** Tragbares Compaktdisk-Abspielgerät nach Anspruch 203, umfassend einen Körperabschnitt (85) mit einem Drehteller (86) und einem Deckel (139), welcher dazu ausgebildet ist, sich verschließend über den Drehteller zu legen, wobei die Lautsprecher (81) an dem Deckel angebracht sind.

**205.** Tragbares Compaktdisk-Abspielgerät nach Anspruch 204, wobei die Lautsprecher (81) an dem Deckel angelenkt sind.

**206.** Tragbares Compaktdisk-Abspielgerät nach Anspruch 204, wobei die Lautsprecher (81) jeweils in einem Schlitz in dem Deckel (139) zur Schiebebewegung zwischen einer Aufbewahrungsposition, in der die Lautsprecher im wesentlichen vollständig in dem Schlitz untergebracht sind, und einer Gebrauchsposition, in der die Lautsprecher auf gegenüberliegenden Seiten des Deckels angeordnet sind, aufgenommen sind.

**207.** Aktive akustische Vorrichtung nach einem der Ansprüche 29 bis 85, 154 oder 157, wobei die Vorrichtung eine Fahrzeugkomponente in Form eines Lautsprechers (81) ist, wobei dem Bauteil (2) Wandlermittel (9) zugeordnet sind, um es als akustischer Strahler schwingen und in Resonanz treten zu lassen, der eine akustische Ausgabe liefert, wenn er in Resonanz schwingt.

**208.** Fahrzeug mit einer Fahrgastzelle als Trägergerät oder -vorrichtung nach Anspruch 189, wobei sich die Komponente in der Fahrgastzelle befindet.

**209.** Fahrzeug nach Anspruch 208, wobei das Trägergerät gemäß einem der Ansprüche 190 bis 194 ist.

**210.** Fahrzeug nach Anspruch 209, wobei die betreffende Komponente ein Fahrgastsitz (103) ist.

**211.** Fahrzeug nach Anspruch 209, wobei die betreffende Komponente eine Verkleidung (104) einer Tür (140) ist.

**212.** Elektronisches Musikinstrument mit einer Tastatur (140) und einer akustischen Vorrichtung nach einem der Ansprüche 29 bis 85, 154 oder 155 als Lautsprecher, wobei der Lautsprecher das Bauteil mit einer steifen leichtgewichtigen Form umfasst und die Wandlermittel (9) vollständig und ausschließlich an dem Bauteil (2) angebracht sind, um es als akustischer Strahler schwingen und in Resonanz treten zu lassen, der eine akustische Ausgabe liefert, wenn er in Resonanz schwingt.

**213.** Elektronisches Musikinstrument (137) mit einer Tastatur (140) als Trägergerät oder -vorrichtung nach Anspruch 189, wobei die Komponente ein Lautsprecher (81) ist.

**214.** Elektronisches Musikinstrument nach Anspruch 212 oder Anspruch 213, umfassend einen Körper (137) mit einer Basis und Beinen (139), welche den Körper über dem Boden halten, wobei das Bauteil (2) an der Basis des Körpers angeordnet ist.

**215.** Elektronisches Musikinstrument nach Anspruch 214, wobei der Lautsprecher (81) so angeordnet ist, dass das Bauteil (2) im wesentlichen vertikal ist.

**216.** Elektronisches Musikinstrument nach Anspruch 215 mit Anspruch 154, wobei der Rahmen eine Bodenabstützung für das Instrument bildet.

**217.** Verkaufsmaschine der Art, die einen Vorrat an abzugebenden Gegenständen oder Produkten umfasst, umfassend eine akustische Vorrichtung nach einem der Ansprüche 29 bis 85, 154 oder 155 als Lautsprecher sowie benutzerbetätigte Mittel zum Auswählen des abzugebenden Gegenstands oder Produkts, die Abgabe authorisierende Mittel, z.B. einen münzbetätigten Mechanismus, sowie einen Abgabeauslass, wobei der Lautsprecher das Bauteil (2) umfasst, wobei ein Wandler der Wandlermittel (9) vollständig und ausschließlich an dem Bauteil angebracht ist, um es als akustischer Strahler schwingen und in Resonanz treten zu lassen, der eine akustische Ausgabe liefert, wenn er in Resonanz schwingt.

**218.** Verkaufsmaschine der Art, die einen Vorrat an abzugebenden Gegenständen oder Produkten umfasst, als Trägergerät oder -vorrichtung nach Anspruch 189, umfassend benutzerbetätigte Mittel (137) zum Auswählen des abzugebenden Gegenstands oder Produkts, Mittel (143), z.B. einen münzbetätigten Mechanismus, welche die Abgabe authorisieren, einen Abgabeauslass (142) sowie einen Lautsprecher (81), wobei die Komponente ein Lautsprecher oder ein Mikrofon oder eine Lautsprecher- und Mikrofon-Kombination ist.

**219.** Verkaufsmaschine nach Anspruch 217 oder Anspruch 218, wobei das Bauteil oder die Komponente (2) ein Sichtanzeigemittel bildet.

**220.** Verkaufsmaschine nach Anspruch 217, 218 oder 219 mit Anspruch 154, umfassend einen Körper (108), wobei der Rahmen (1) an dem Körper oder integral mit diesem ist.

**221.** Verkaufsmaschine nach einem der Ansprüche 217 bis 220, umfassend zweite Wandlermittel (3), welche mit dem Strahler (12) zum Mikrofonbetrieb durch Erzeugung eines Signals in Antwort auf eine Resonanz des Strahlers infolge eintreffender akustischer Energie gekoppelt sind.

**222.** Verkaufsmaschine nach Anspruch 221, wobei die zweiten Wandlermittel so sind, wie in Anspruch 148, 149 oder 150 beansprucht.

**Revendications**

**1.** Procédé de fabrication d'un dispositif acoustique de façon qu'il comprenne un élément (2) s'étendant transversalement à son épaisseur et capable d'entretenir des ondes de flexion au moins sur une zone acoustiquement active, volontairement et par conséquence, de l'étendue transversale de cet élément, l'élément (2) ayant des paramètres tels que des paramètres géométriques et de rigidité de flexion, des valeurs desquels dépend sa distribution de modes résonnants de vibration naturelle d'ondes de flexion sur la zone précitée, le procédé comprenant l'analyse de la distribution de modes résonnants de vibration naturelle d'ondes de flexion de l'élément (2) sur cette zone; et la sélection de valeurs de certains particuliers des paramètres précités de façon que la distribution de modes résonnants naturels soit avantageuse pour le fonctionnement acoustique désiré auquel le dispositif peut parvenir, sur une gamme de fréquences considérée; et la réalisation, au moins sous la forme d'un composant du dispositif, de l'élément précité (2) avec les valeurs sélectionnées des paramètres.

2.   Procédé selon la revendication 1, dans lequel les paramètres sont associés à au moins deux directions différentes sur la zone précitée de l'élément (2).

3.   Procédé selon la revendication 1 ou la revendication 2, dans lequel l'analyse fait intervenir l'évaluation de parties ou de sous-zones de la zone précitée, en ce qui concerne leur contenu en énergie vibratoire, à partir de certains prédéterminés des modes résonnants naturels; et la sélection est effectuée de façon à réduire l'incidence de faibles contenus en énergie vibratoire de ces parties ou sous-zones.

4.   Procédé selon la revendication 3, dans lequel la réduction vise à minimiser l'incidence de faibles contenus en énergie vibratoire des parties ou sous-zones.

5.   Procédé selon l'une quelconque des revendications précédentes, dans lequel l'analyse fait intervenir l'évaluation de parties ou de sous-zones de la zone précitée en ce qui concerne le contenu en énergie vibratoire, à partir de certains prédéterminés des modes résonnants naturels, et la sélection est effectuée de façon à produire un étalement plus uniforme de contenus en énergie vibratoire de ces parties ou sous-zones.

6.   Procédé de fabrication d'un dispositif acoustique de façon qu'il comprenne un élément (2) s'étendant transversalement à son épaisseur et capable d'entretenir des ondes de flexion au moins sur une zone volontairement acoustiquement active de son étendue transversale, faisant intervenir des modes résonnants, pertinents au point de vue acoustique, de sa vibration naturelle d'ondes de flexion qui a une distribution caractéristique sur la zone précitée de régions plus actives ou les plus actives, au point de vue vibratoire, et de régions moins actives, ou les moins actives, au point de vue vibratoire, qui dépend de valeurs d'au moins deux paramètres particuliers de cet élément (2), le procédé comprenant l'analyse de l'activité vibratoire plus faible ou la plus faible, et plus forte ou la plus forte, dans ces régions, et la sélection de valeurs correspondant à une distribution dans laquelle des régions d'activité vibratoire faible ou nulle sont réduites vers un optimum pratique pour correspondre davantage à un fonctionnement acoustique désiré du dispositif, auquel il est possible de parvenir; et la réalisation, pour au moins un composant du dispositif, de l'élément (2) avec ces valeurs sélectionnées des paramètres.

7.   Procédé selon l'une quelconque des revendications 3 à 6, dans lequel un ensemble des modes résonnants et des contributions correspondantes à la distribution précitée, sont particulièrement affectés par l'un au moins des paramètres, et un autre ensemble des modes résonnants et des contributions correspondantes à la distribution sont particulièrement affectés par un autre des paramètres, les valeurs sélectionnées de l'un et de l'autre paramètres correspondant à la condition selon laquelle les contributions de l'ensemble mentionné en premier aux régions plus actives ou les plus actives au point de vue vibratoire, sont aussi complémentaires qu'il est possible d'y parvenir en pratique, des contributions de l'autre ensemble aux régions moins actives, ou les moins actives, au point de vue vibratoire, et inversement.

8.   Procédé selon l'une quelconque des revendications précédentes, dans lequel l'analyse fait intervenir l'évaluation de fréquences des modes résonnants, en ce qui concerne des espacements de leurs valeurs, et la détermination précitée vise à parvenir à des espacements pratiques optimaux de ces fréquences.

9.   Procédé selon l'une quelconque des revendications précédentes, dans lequel les paramètres sont liés à au moins deux fréquences théoriques différentes auxquelles on peut associer des fréquences des modes résonnants elles-mêmes.

10.  Procédé de fabrication d'un dispositif acoustique ayant un élément (2) s'étendant transversalement à son épaisseur et capable d'entretenir des ondes de flexion dans une zone acoustiquement active de son étendue transversale, faisant intervenir des modes résonnants fonctionnellement pertinents de sa vibration naturelle d'ondes de flexion, qui peuvent être associés à au moins deux fréquences théoriques qui dépendent de valeurs d'au moins deux paramètres particuliers de l'élément (2), le procédé comprenant une analyse pour déterminer des valeurs sélectionnées des paramètres pour donner des valeurs des fréquences théoriques ainsi associées aux modes résonnants, à des fréquences qui sont espacées et entrelacées de manière avantageuse p.our obtenir un fonctionnement acoustique désiré du dispositif; et la réalisation, sous la forme d'au moins un composant du dispositif, de l'élément (2) ayant les valeurs sélectionnées des paramètres.

11.  Procédé selon la revendication 8, 9 ou 10, dans lequel les paramètres sélectionnés font en sorte que les fréquences théoriques soient liées de manière qu'il y ait un entrelacement des fréquences de modes résonnants avec des espacements et un étalement résultant correspondant à l'optimum, ou s'approchant de celui-ci, pour la non-coïncidence et l'uniformité de cet étalement.

12. Procédé selon l'une quelconque des revendications 8 à 11, dans lequel chacune des fréquences théoriques est affectée de manière définissante par les valeurs sélectionnées des différents paramètres.

13. Procédé selon l'une quelconque des revendications précédentes, dans lequel les valeurs sélectionnées sont celles de paramètres correspondants concernant la configuration géométrique ou la forme et/ou les rigidités de flexion dans différentes directions.

14. Procédé selon l'une quelconque des revendications précédentes, dans lequel les valeurs sélectionnées sont celles de paramètres correspondants d'une nature similaire et pouvant être sélectionnés par une valeur relative mutuelle, telle qu'un rapport ou un pourcentage relatif.

15. Procédé selon la revendication 13 -ou 14, dans lequel les paramètres géométriques correspondants définissent une forme au moins de la zone précitée de l'élément (2), pour une ou plusieurs rigidités de flexion données de l'élément sur l'étendue de cette zone.

16. Procédé selon la revendication 15, dans lequel les valeurs sélectionnées des paramètres géométriques spécifient une variation particulière d'une forme de base conformément à des dimensions dans différentes directions sur l'étendue de cette forme.

17. Procédé de fabrication d'un dispositif acoustique comprenant l'étape de détermination d'une configuration géométrique d'un élément (2) s'étendant transversalement à son épaisseur dans sa zone à configurer, cet élément étant capable d'entretenir des ondes de flexion au moins sur cette zone, le procédé comprenant l'analyse de la distribution de modes résonnants de vibration naturelle d'ondes de flexion de l'élément (2), cette distribution étant différente pour différentes configurations de la zone, comme défini de manière variable par des paramètres géométriques pertinents, et la sélection d'une valeur relative particulière des paramètres pour laquelle la distribution de modes résonnants naturels est déterminée comme étant en accord avec une action ou un fonctionnement désiré du dispositif acoustique, auquel il est possible de parvenir, sur une gamme de fréquences considérée; et la réalisation, pour un composant du dispositif, d'un l'élément (2) dont la zone précitée est configurée conformément à la valeur relative particulière des paramètres géométriques.

18. Procédé selon la revendication 17, dans lequel les paramètres géométriques comprennent des dimensions dans différentes directions sur l'étendue de la zone.

19. Procédé de fabrication d'un dispositif acoustique utilisant un élément (2) de configuration géométrique donnée s'étendant transversalement à son épaisseur, et capable d'entretenir des ondes de flexion sur sa zone, le procédé comprenant une analyse pour déterminer des valeurs de paramètres géométriques dans des directions respectives parmi deux directions dans la zone, qui contribuent avec des rigidités de flexion correspondantes de l'élément (2) à définir des fréquences théoriques pouvant être associées à une vibration naturelle d'ondes de flexion de l'élément (2), qui sont aussi utiles que possible en pratique à l'intérieur de la zone pour une action acoustique à laquelle il est possible de parvenir pour une partie de l'élément (2), en relation avec des performances désirées du dispositif, et la détermination des rigidités de flexion correspondantes dans ces directions, et la définition de la partie précitée comme étant une zone acoustiquement active, à l'aide de moyens limitant le passage d'ondes de flexion dans l'élément (2) au-delà des moyens de limitation; et la réalisation, sous la forme d'un composant du dispositif, d'un élément (2) avec cette zone active limitée.

20. Procédé selon l'une quelconque des revendications précédentes, dans lequel l'analyse fait intervenir seulement des modes résonnants prédéterminés qui sont bas, plutôt que hauts, dans la gamme de fréquences.

21. Procédé selon la revendication 20, dans lequel les modes résonnants prédéterminés comprennent plus de vingt modes au-dessus des fréquences fondamentales naturelles et des fréquences théoriques associées pouvant en outre être associés à la vibration naturelle d'ondes de flexion de l'élément (2).

22. Procédé selon la revendication 21, dans lequel les modes résonnants prédéterminés comprennent les vingt-cinq premiers, ou plus, au-dessus des fréquences résonnantes naturelles.

23. Procédé selon l'une .quelconque des revendications précédentes, dans lequel l'élément, ou chacun d'eux, comporte des moyens d'amortissement (3, 2P) qui lui sont appliqués sélectivement d'une manière prédéterminée pour maîtriser des fréquences correspondant à un ou plusieurs des modes résonnants.

24. Procédé selon la revendication 23, dans lequel les moyens d'amortissement sélectifs comprennent des structures d'amortissement rapportées (2P) dans des positions intermédiaires de la zone précitée.

25. Procédé selon l'une quelconque des revendications précédentes, dans lequel les bords qui limitent l'élément (2), ou chaque élément, coïncident avec la zone précitée.

26. Procédé selon l'une quelconque des revendications précédentes, dans lequel le dispositif acoustique (81) ou chacun d'eux a un cadre (1) appliqué autour de ses bords, de façon à permettre une vibration d'ondes de flexion à cet emplacement, dans une mesurée désirée.

27. Procédé selon la revendication 26, dans lequel le cadre (1) est appliqué avec un matériau de maîtrise de vibration (3) entre le cadre (1) et les bords.

28. Procédé selon l'une quelconque des revendications 1 à 26, dans lequel la zone précitée est définie à l'intérieur de l'étendue transversale de l'élément (2) par des moyens (22C) affectant défavorablement le passage d'ondes de flexion au-delà de la zone précitée.

29. Dispositif acoustique actif pouvant être obtenu par le procédé de l'une quelconque des revendications 1 à 28, comprenant des moyens à transducteur (9) couplés à l'élément (2) à une position excentrée asymétrique, décalée par rapport à des axes ou des lignes qui joignent des points de dimensions maximales / minimales ou des directions de paramètres géométriques, ne coïncidant pas avec des coins et des bords de l'élément, pour procurer un couplage avantageux vers des modes résonnants, et une distribution avantageuse de ces derniers, pour l'utilisation comme un haut-parleur ou un microphone.

30. Dispositif acoustique selon la revendication 29, dans lequel l'élément (9) a une zone active au point de vue acoustique pratiquement rectangulaire, et les moyens à transducteur (9) sont placés à une position qui correspond pratiquement à 3/7 et/ou 4/9 et/ou 5/13 des longueurs de côtés de l'élément (2) utilisées comme des coordonnées à partir d'un coin de la zone ou de l'élément (2).

31. Dispositif acoustique comprenant un élément (2) s'étendant transversalement à son épaisseur et capable d'entretenir des ondes de flexion dans une zone de son étendue transversale active au point de vue acoustique, faisant intervenir des modes résonnants fonctionnellement pertinents de sa vibration d'ondes de flexion naturelle qui peuvent être associés à au moins deux fréquences théoriques qui dépendent de valeurs sélectionnées d'au moins deux paramètres de l'élément (2), dans lequel l'élément a des valeurs desdits paramètres prédéterminées pour donner des valeurs des fréquences théoriques ainsi être associés aux modes résonnants à des fréquences qui sont espacées et entrelacées avantageusement pour obtenir un fonctionnement acoustique désiré du dispositif, et des moyens à transducteur (9) couplés à l'élément (2), et dans lequel l'élément (9) a une zone active au point de vue acoustique pratiquement rectangulaire, et les moyens à transducteur (9) sont placés à une position correspondant pratiquement à 3/7 et/ou 4/9 et/ou 5/13 de longueurs de côtés de l'élément (2) utilisées comme des coordonnées à partir d'un coin de la zone ou de l'élément (2).

32. Dispositif acoustique selon la revendication 31, dans lequel les paramètres sélectionnés garantissent que les fréquences théoriques sont associées de manière qu'il y ait un entrelacement des fréquences de modes résonnants, avec des espacements et un étalement résultant correspondant à l'optimum, ou s'approchant de celui-ci, pour la non-coïncidence et l'uniformité de cet étalement.

33. Dispositif acoustique selon la revendication 31 ou 32, dans lequel chacune des fréquences théoriques est affectée, d'une manière qui la définit, par les valeurs sélectionnées des différents paramètres.

34. Procédé selon l'une quelconque des revendications 31 à 33, dans lequel les valeurs sélectionnées sont celles de paramètres correspondants concernant la configuration géométrique ou la forme et/ou les rigidités de flexion dans différentes directions.

35. Dispositif acoustique selon l'une quelconque des revendications 31 à 34, dans lequel les valeurs sélectionnées sont celles de paramètres correspondants d'une nature similaire et pouvant être sélectionnées par une valeur relative mutuelle, telle qu'un rapport ou un pourcentage relatif.

36. Dispositif acoustique selon la revendication 34 ou 35, dans lequel.les paramètres géométriques correspondants définissent la forme d'au moins la zone précitée de l'élément (2), pour une ou plusieurs rigidités de flexion données de l'élément (2) sur cette zone.

37. Dispositif acoustique selon la revendication 36, dans lequel les valeurs sélectionnées des paramètres géométriques spécifient une variation particulière d'une forme de base conformément à des dimensions dans différentes directions sur la forme précitée.

**38.** Dispositif acoustique comprenant un élément (2) s'étendant transversalement à son épaisseur et capable d'entretenir des ondes de flexion, dans lequel l'élément (2) a une configuration géométrique déterminant une vibration d'ondes de flexion naturelle sur sa zone, avec des modes résonnants pouvant être associés à au moins deux fréquences théoriques, et une relation entre ces fréquences théoriques telle que des modes résonnants de fréquence inférieure prédéterminés résultant desdites fréquences théoriques soient corrélés par au moins certaines des régions plus actives, ou les plus actives, au point de vue vibratoire, de ladite zone pour les modes associés à l'une des fréquences théoriques qui sont partagés par des régions moins actives, ou les moins actives, au point de vue vibratoire, ou qui correspondent à de telles régions, associées aux modes de l'autre des fréquences théoriques, dans lequel des dimensions de l'élément (2) déterminant les fréquences théoriques sont dirigées dans différentes directions à travers ladite zone, dans lequel ces directions sont pratiquement mutuellement perpendiculaires, dans lequel ladite zone a une forme pratiquement rectangulaire avec une longueur et une largeur comme paramètres géométriques ou dimensions, et des moyens à transducteur (9) couplés à l'élément (2) à une position correspondant pratiquement à 3/7 et/ou 4/9 et/ou 5/13 de longueurs de côtés de l'élément (2) utilisées comme des coordonnées à partir d'un coin de la zone ou de l'élément (2).

**39.** Dispositif acoustique selon la revendication 38, dans lequel la zone pratiquement rectangulaire a des rigidités de flexion pratiquement égales dans les directions de sa longueur et de sa largeur, qui diffèrent dimensionnellement d'environ 13,4% ou environ 37%.

**40.** Dispositif acoustique selon la revendication 38 ou la revendication 39, dans lequel la zone précitée est raccourcie par rapport à des sommets d'un rectangle vrai, sur au moins une dimension diagonale, d'une quantité associant de façon avantageuse des modes résonnants attribuables à ceux qui résultent des dimensions de longueur et de largeur.

**41.** Dispositif acoustique selon la revendication 40, dans lequel la quantité précitée est comprise entre environ 10% et environ 15% pour une ou plusieurs rigidités de flexion en diagonale ne différant pas notablement de la rigidité ou des rigidités de flexion dans les directions de la longueur et de la largeur.

**42.** Dispositif acoustique selon la revendication 38 ou la revendication 39, dans lequel la zone pratiquement rectangulaire a une rigidité ou des rigidités de flexion en diagonale qui diffèrent de la rigidité ou des rigidités de flexion dans les directions de sa longueur et de sa largeur, d'une quantité associant avantageusement des modes résonnants attribuables à ceux qui résultent de ses dimensions de longueur et de largeur.

**43.** Dispositif acoustique comprenant un élément (2) s'étendant transversalement à son épaisseur et capable d'entretenir des ondes de flexion, dans lequel l'élément (2) a une configuration géométrique déterminant une vibration d'ondes de flexion naturelle sur sa zone, avec des modes résonnants pouvant être associés à au moins deux fréquences théoriques, et une relation entre ces fréquences théoriques telle que des modes résonnants de fréquence inférieure prédéterminés résultant desdites fréquences théoriques soient corrélés par au moins certaines des régions plus actives, ou les plus actives, au point de vue vibratoire, de ladite zone pour les modes associés à l'une des fréquences théoriques qui sont partagés par des régions moins actives, ou les moins actives, au point de vue vibratoire, ou qui correspondent à de telles régions, associées aux modes de l'autre des fréquences théoriques, et dans lequel ladite zone a pratiquement une forme elliptique vraie avec ses grand axe et petit axe pour lesdits paramètres ou dimensions géométriques, et des moyens à transducteur (9) couplés à l'élément (2) dans une position excentrée asymétrique éloignée des bords de l'élément, pour procurer un couplage avantageux vers des modes résonnants, et une distribution avantageuse de modes résonnants.

**44.** Dispositif acoustique selon la revendication 43, dans lequel le rapport entre les grand et petit axes est pratiquement de 1,182:1, et dans lequel les moyens à transducteur (9) sont placés à des positions de coordonnées par rapport au centre de l'élément (2) situées pratiquement à 0,43 et 0,2 le long du demi grand axe et du demi petit axe.

**45.** Dispositif acoustique selon la revendication 43, dans lequel l'élément a des rigidités de flexion pratiquement égales selon ses grand et petit axes, qui sont dimensionnellement inégaux d'environ 18,2% ou d'environ 34%.

**46.** Dispositif acoustique comprenant un élément (2) s'étendant transversalement à son épaisseur et capable d'entretenir des ondes de flexion, dans lequel l'élément (2) a une configuration géométrique déterminant une vibration d'ondes de flexion naturelle sur sa zone, avec des modes résonnants pouvant être associés à au moins deux fréquences théoriques, et une relation entre ces fréquences théoriques telle que des modes résonnants de fréquence inférieure prédéterminés résultant desdites fréquences théoriques soient corrélés par au moins certaines des régions plus actives, ou les plus actives, au point de vue vibratoire, de ladite zone pour les modes associés à l'une des fréquences théoriques qui sont partagés par des régions moins actives, ou les moins actives, au point de vue vibratoire, ou qui correspondent à de telles régions, associées aux modes de l'autre des fréquences théoriques, et dans lequel ladite zone a pratiquement une forme super-elliptique avec ses grand et petit axes pour lesdits paramètres géométriques à déterminer au point de vue dimensionnel pour n'importe quel(s) exposant(s) particulier(s) définissant une super-ellipse, et des moyens à transducteur (9) couplés à l'élément (2) à une position excentrée asymétrique distante des bords de l'élément, pour procurer un couplage avantageux vers des modes résonnants, et une distribution avantageuse de modes résonnants.

**47.** Dispositif acoustique comprenant un élément (2) s'étendant transversalement à son épaisseur et capable d'entretenir des ondes de flexion, dans lequel l'élément (2) a une configuration géométrique déterminant une vibration d'ondes de flexion naturelle sur sa zone, avec des modes résonnants pouvant être associés à au moins deux fréquences théoriques, et une relation entre ces fréquences théoriques telle que des modes résonnants de fréquence inférieure prédéterminés résultant desdites fréquences théoriques soient corrélés par au moins certaines des régions plus actives, ou les plus actives, au point de vue vibratoire, de ladite zone pour les modes associés à l'une des fréquences théoriques qui sont partagés par des régions moins actives, ou les moins actives, au point de vue vibratoire, ou qui correspondent à de telles régions, associées aux modes de l'autre des fréquences théoriques, dans lequel lesdites directions sont pratiquement mutuellement perpendiculaires et dans lequel ladite zone a une forme pratiquement super-elliptique avec son exposant définissant la super-ellipse à déterminer pour n'importe quelle(s) valeur(s) dimensionnelle(s) relative(s) particulière(s) de ses grand et petit axes, et des moyens à transducteur (9) couplés à l'élément (2) à une position excentrée asymétrique distante des bords de l'élément, pour procurer un couplage avantageux vers des modes résonnants, et une distribution avantageuse de modes résonnants.

**48.** Dispositif acoustique selon la revendication 46 ou 47, dans lequel l'élément (2) a des rigidités de flexion pratiquement égales selon les grand et petit axes, qui sont dimensionnellement inégaux d'environ 13% à environ 22%, ou d'environ 32%, et l'exposant définissant est d'environ 3,5 à environ 4.

**49.** Dispositif acoustique selon la revendication 44, dans lequel lesdites directions sont pratiquement mutuellement perpendiculaires, et dans lequel l'élément (2) a une forme composite et il a des rigidités de flexion pratiquement égales dans la direction d'un grand axe commun, et transversalement à cette direction, pour des parties de la zone correspondant pratiquement respectivement à des formes super-elliptique et elliptique vraie, réunies avec le grand axe commun, avec la partie elliptique favorisée d'environ 1,1-1,3 : 1, et un rapport de forme favorisant le grand axe commun d'environ 1,2 : 1.

**50.** Dispositif acoustique selon l'une quelconque des revendications 37, 43, 46 et 47, dans lequel l'élément (2) a des rigidités de flexion différentes dans les directions précitées, et les dimensions sont telles qu'elles donnent, dans toute la mesure du possible, des résultats pour les modes résonnants qui sont pratiquement équivalents à ce qui est obtenu pour une ou plusieurs rigidités de flexion pratiquement égales dans les directions précitées, comprenant toute application d'un facteur d'échelle approprié.

**51.** Dispositif acoustique selon la revendication 50, dans lequel les résultats équivalents comprennent une relation de fréquences théoriques auxquelles les modes résonnants considérés peuvent être associés.

**52.** Dispositif acoustique selon l'une quelconque des revendications 32 à 51, dans lequel l'élément (2) ou chacun d'eux comporte des moyens d'amortissement (3, 2P) qui lui sont appliqués sélectivement d'une manière prédéterminée pour commander des fréquences correspondant à un ou plusieurs des modes résonnants.

**53.** Dispositif acoustique selon la revendication 52, dans lequel les moyens d'amortissement sélectifs comprennent des structures d'amortissement rapportées (2P) dans des positions intermédiaires de la zone précitée.

**54.** Dispositif acoustique selon l'une quelconque des revendications 34 à 53, dans lequel les bords qui limitent l'élément (2), ou chaque élément, coïncident avec la zone précitée.

**55.** Dispositif acoustique selon l'une quelconque des revendications 31 à 54, dans lequel le dispositif acoustique ou chacun d'eux a un cadre (1) appliqué autour de ses bords, de façon à permettre une vibration d'ondes de flexion à cet emplacement, dans une mesurée désirée.

**56.** Dispositif acoustique selon la revendication 55, dans lequel le cadre (1) est appliqué avec un matériau de maîtrise de vibration (3) entre le cadre (1) et les bords.

57. Dispositif acoustique selon l'une quelconque des revendications 31 à 56, dans lequel la zone précitée est définie à l'intérieur de l'étendue transversale de l'élément (2) par des moyens (22C) affectant défavorablement le passage d'ondes de flexion au-delà de la zone précitée.

58. Dispositif acoustique selon l'une quelconque des revendications 31 à 57, dans lequel l'élément (2) a une gamme de fréquences acoustiques de fonctionnement s'étendant sur plus de 4 kHz.

59. Dispositif acoustique selon l'une quelconque des revendications 31 à 57, dans lequel l'élément (2) a une gamme de fréquences acoustiques de fonctionnement qui contient la fréquence de coïncidence.

60. Dispositif acoustique selon l'une quelconque des revendications 31 à 57, dans lequel l'élément (2) a une gamme de fréquences acoustiques de fonctionnement qui est entièrement au-dessous de la fréquence de coïncidence.

61. Dispositif acoustique selon l'une quelconque des revendications 31 à 60, dans lequel l'élément (2) a un rapport entre la rigidité de flexion et la masse par unité d'aire qui est en accord, pour une taille particulière de l'élément (20), avec une plus basse fréquence d'ondes de flexion inférieure à la gamme de fréquences acoustiques de fonctionnement du dispositif.

62. Dispositif acoustique selon la revendication 61, dans lequel la plus basse fréquence d'ondes de flexion est au moins de 20 Hz.

63. Dispositif acoustique selon la revendication 61 ou la revendication 62, dans lequel la plus basse fréquence d'ondes de flexion est à moins de la moitié, et de préférence environ au tiers, du bas de la gamme de fréquences acoustiques de fonctionnement.

64. Dispositif acoustique selon la revendication 61, 62 ou 63, dans lequel l'élément (2) a une rigidité de flexion comprise entre des minimums d'environ 0,1 à environ 1000 et des maximums d'environ 4 à environ 3500 newtons-mètres, et une masse par unité d'aire comprise entre des minimums d'environ 0,05 à environ 1,5 et des maximums d'environ 1 à environ 4 kilogrammes/mètre carré, en fonction de la taille/application.

65. Dispositif acoustique selon l'une quelconque des revendications 31 à 64, dans lequel l'élément (2) est une structure rigide et légère de nature feuilletée, de type sandwich, ayant une âme cellulaire rigide (22) et des peaux (21) collées, pour faire propager des ondes de flexion et entretenir des modes résonnants à des fréquences présentant un intérêt.

66. Dispositif acoustique selon la revendication 65, dans lequel l'âme cellulaire (22) a un module de cisaillement d'au moins environ 10 mégapascals, et le module d'Young de la peau collée (21) est au moins d'environ 1 gigapascal.

67. Dispositif acoustique selon la revendication 65, dans lequel l'élément (2), au moins pour des tailles inférieures à environ 0,1 mètre carré et des fréquences d'ondes de flexion les plus basses supérieures à environ 100 Hz, a une rigidité de flexion qui peut être inférieure à environ 10 newtons-mètres, un module de cisaillement de l'âme qui peut être aussi faible qu'environ 10 mégapascals ou moins, et un module d'Young des peaux dans la gamme allant d'environ 0,5 à environ 2,5 gigapascals.

68. Dispositif acoustique selon la revendication 65, dans lequel l'élément (2), au moins pour des tailles comprises entre environ 0,1 et environ 0,3 mètre carré, et des fréquences d'ondes de flexion les plus basses aussi faibles qu'environ 70 Hz, a une rigidité de flexion comprise entre environ 5 et environ 50 newtons-mètres, ou plus, un module de cisaillement de l'âme qui est habituellement supérieur à 10 mégapascals, de façon caractéristique d'environ 15 mégapascals jusqu'à environ 80 mégapascals, ou plus, et un module d'Young des peaux d'au moins environ 2 gigapascals jusqu'à environ 70 gigapascals, ou plus.

69. Dispositif acoustique selon la revendication 65, dans lequel l'élément (2), au moins pour des tailles comprises entre environ 0,3 et environ 1 mètre carré, a une plus basse fréquence d'ondes de flexion qui peut être aussi basse qu'environ 50 Hz; une rigidité de flexion habituellement supérieure à environ 20 newtons-mètres, et de façon caractéristique d'environ 50 jusqu'à environ 500 newtons-mètres, ou plus, un module de cisaillement de l'âme qui est habituellement supérieur à environ 10 et de façon caractéristique approximativement compris entre environ 20 et environ 90 mégapascals, et un module d'Young des peaux d'au moins environ 2 gigapascals, pouvant s'élever jusqu'à environ 70 gigapascals.

70. Dispositif acoustique selon la revendication 65, dans lequel l'élément (2), au moins pour des tailles supérieures à environ 1 et s'élevant peut-être jusqu'à 5 mètres carrés, ou plus, et une plus basse fréquence d'ondes de flexion qui peut être aussi basse qu'environ 25 à 70 Hz, a une rigidité de flexion supérieure à environ 25 newtons-mètres, un module de cisaillement de l'âme habituellement supérieur à 30 mégapascals, et un module d'Young des peaux d'au moins environ 20 gigapascals, allant jusqu'à au moins environ 1000 gigapascals.

**71.** Dispositif acoustique selon l'une quelconque des revendications 65 à 70, dans lequel l'âme (22) a des cellules capables d'apporter des résonances supplémentaires utiles, liées au volume, de haute fréquence, qui ne correspondent pas à des ondes de flexion.

**72.** Dispositif acoustique selon l'une quelconque des revendications 65 à 70, dans lequel l'âme (22) a une structure capable d'apporter des résonances supplémentaires utiles de fréquence élevée, de compression/récupération, ne correspondant pas à des ondes de flexion.

**73.** Dispositif acoustique selon l'une quelconque des revendications 65 à 67, dans lequel l'âme (22) a des cellules coopérant avec les peaux (21) pour produire des résonances supplémentaires utiles de haute fréquence, semblables à de minuscules tambours, ne correspondant pas à des ondes de flexion.

**74.** Dispositif acoustique selon l'une quelconque des revendications 32 à 73, dans lequel la souplesse du support de l'élément (2) produit des résonances supplémentaires utiles de basse fréquence, ne correspondant pas à des ondes de flexion.

**75.** Dispositif acoustique selon la revendication 65 à 73, dans lequel la souplesse de montage des moyens à transducteur (9) sur l'âme (22) de l'élément procure des résonances supplémentaires utiles, de basse fréquence, ne correspondant pas à des ondes de flexion.

**76.** Dispositif acoustique selon l'une quelconque des revendications 29 à 75, dans lequel les moyens à transducteur (9) ont au moins une partie mobile d'eux-mêmes, active au point de vue des ondes de flexion, en couplage mécanique avec l'élément, d'une manière résistive de façon prédominante.

**77.** Dispositif acoustique selon l'une quelconque des revendications 29 à 76, dans lequel les moyens à transducteur (9) sont de type piézoélectrique.

**78.** Dispositif acoustique selon l'une quelconque des revendications 29 à 76, dans lequel les moyens à transducteur (9) sont de type à bobine électromagnétique et aimant.

**79.** Dispositif acoustique selon la revendication 78, dans lequel les moyens à transducteur électromagnétiques (9) sont du type à bobine mobile.

**80.** Dispositif acoustique selon l'une quelconque des revendications 29 à 79, dans lequel les moyens à transducteur (9) sont montés en surface sur l'élément (2).

**81.** Dispositif acoustique selon l'une quelconque des revendications 29 à 80, dans lequel les moyens à transducteur (9) ont au moins une partie mobile, active du point de vue des ondes de flexion, montée dans une cavité dans l'épaisseur de l'élément (2).

**82.** Dispositif acoustique selon l'une quelconque des revendications 29 à 81, dans lequel la partie mobile, active en ce qui concerne les ondes de flexion, des moyens à transducteur (9), est montée de façon à occuper moins de 0,1% de l'aire de surface de l'élément (2).

**83.** Dispositif acoustique selon l'une quelconque des revendications 29 à 82, dans lequel la partie mobile, active en ce qui concerne les ondes de flexion, des moyens à transducteur (9), a une masse d'environ 1 à 2 fois celle de la région de l'élément (2) qui est recouverte ou enlevée pour recevoir la partie précitée.

**84.** Dispositif acoustique selon l'une quelconque des revendications 29 à 83, dans lequel le moyen à transducteur (9) est porté entièrement par l'élément (2).

**85.** Dispositif acoustique selon l'une quelconque des revendications 29 à 84, dans lequel l'élément (2) a une zone active au point de vue acoustique pratiquement super-elliptique, et les moyens à transducteur (9) sont placés à une position située à l'intérieur du bord extérieur de la zone ou de l'élément (2), d'environ 15% d'une ligne dirigée vers son centre.

**86.** Procédé selon l'une quelconque des revendications 1 à 28, dans lequel l'analyse est étendue pour déterminer le contenu en énergie vibratoire de parties ou de sous-zones de la zone précitée, en ce qui concerne des contributions de modes résonnants naturels prédéterminés, le procédé comprenant en outre la détermination d'au moins un emplacement à l'intérieur de la zone pour des moyens à transducteur (9) d'ondes de flexion, en trouvant d'abord au moins une région de cette zone ayant les contributions précitées de nombres élevés, ou les plus élevés, des modes résonnants prédéterminés.

**87.** Procédé selon l'une quelconque des revendications 1 à 28, dans lequel l'analyse est étendue à la détermination du contenu en énergie vibratoire de parties ou de sous-zones de la zone précitée, pour des contributions des modes résonnants naturels prédéterminés, le procédé comprenant en outre la détermination de deux emplacements, ou plus, à l'intérieur de la zone, pour des moyens à transducteur d'ondes de flexion, en trouvant tout d'abord des régions ayant collectivement des contributions de la plupart jusqu'à la totalité des modes résonnants prédéterminés.

88. Procédé de fabrication d'un dispositif acoustique ayant un élément (2) s'étendant transversalement à son épaisseur dans une zone de configuration déterminée, et capable d'entretenir des ondes de flexion dans cette zone, le procédé comprenant la détermination de l'emplacement dans la zone pour des moyens à transducteur d'ondes de flexion (9), par une analyse de la distribution d'énergie vibratoire provenant de modes résonnants prédéterminés d'une vibration naturelle d'ondes de flexion de l'élément (2) sur cette zone, et l'identification d'au moins une région dans la zone à laquelle des nombres élevés ou les plus élevés des modes résonnants prédéterminés apportent une contribution significative à l'énergie vibratoire.

89. Procédé selon la revendication 88, dans lequel deux emplacements ou plus pour des moyens à transducteur d'ondes de flexion (9) sont identifiés à des régions dans la zone qui, en combinaison, ont des contributions importantes d'énergie vibratoire de la majeure partie ou de la totalité des modes résonnants prédéterminés.

90. Procédé selon l'une quelconque des revendications 86 à 89, dans lequel l'analyse identifie en plus, ou à la place, deux régions, ou plus, de la zone qui ont des contributions d'énergie vibratoire pratiquement complémentaires de la part des modes résonnants prédéterminés.

91. Procédé selon l'une quelconque des revendications 86 à 90, comprenant l'étape de montage des moyens à transducteur (9) de façon qu'ils soient couplés avec au moins ceux des modes résonnants qui apportent une contribution à une région précitée.

92. Dispositif acoustique selon l'une quelconque des revendications 29 à 85, consistant en un haut-parleur (81) en forme de panneau comprenant un élément précité (2) avec les moyens à transducteur (9) montés sur l'élément à titre de moyens excitateurs de vibration, pour faire résonner l'élément (2) en formant un radiateur acoustique qui produit une émission acoustique lorsqu'il résonne, et un écran acoustique (6, 8) entourant et supportant le radiateur.

93. Haut-parleur en forme de panneau selon la revendication 92, comprenant une suspension élastique (3, 17) entre le radiateur et l'écran acoustique (6, 8), pour supporter le radiateur dans l'écran acoustique (6, 8).

94. Haut-parleur en forme de panneau selon la revendication 93, dans lequel la suspension élastique (3, 17) consiste en un élastomère.

95. Haut-parleur en forme de panneau selon l'une quelconque des revendications 92 à 94, dans lequel l'excitateur de vibration (9) est monté entièrement et exclusivement sur le radiateur.

96. Haut-parleur en forme de panneau selon l'une quelconque des revendications 92 à 95, dans lequel l'écran acoustique (8) est réalisé sous la forme d'une enceinte ayant une partie de boîte avant (52), dont l'arrière est ouvert, adaptée pour être montée sur un mur ou autres.

97. Haut-parleur en forme de panneau selon la revendication 96, dans lequel la partie de boîte avant (52) est adaptée pour être montée de façon à être alignée avec une cavité (110) dans le mur.

98. Dispositif acoustique actif selon l'une quelconque des revendications 29 à 85 consistant en un haut-parleur en forme de panneau (81) comprenant l'élément précité (2) à titre de radiateur acoustique résonnant ayant une périphérie, les moyens à transducteur montés sur le radiateur pour faire vibrer et résonner l'élément, en produisant une émission acoustique à partir du radiateur, et un cadre (1) supportant le radiateur à sa périphérie avec des moyens de suspension élastiques couplés entre le cadre et la périphérie du radiateur, les moyens à transducteur (9) étant couplés entre le radiateur et le cadre (1) et étant en outre adaptés pour déplacer le radiateur par une action de piston.

99. Haut-parleur en forme de panneau selon la revendication 98, dans lequel le cadre (1) a une partie entourant le radiateur.

100. Haut-parleur en forme de panneau selon la revendication 98 ou la revendication 99, dans lequel la suspension élastique (3) consiste en un élastomère.

101. Haut-parleur en forme de panneau selon la revendication 99, ou la revendication 100 lorsqu'elle dépend de la revendication 98, dans lequel le cadre (1) comprend un pied (23) ayant une partie (83) venant en contact avec le sol, une partie (84) pratiquement verticale s'étendant à partir de la partie qui vient en contact avec le sol, et un ensemble de bras (85), s'étendant à partir de la partie verticale, les extrémités distales de ces bras étant reliées à la partie de cadre (1) qui entoure le radiateur.

102. Haut-parleur en forme de panneau selon la revendication 101, dans lequel le radiateur est rectangulaire, et les bras (85) s'étendent au voisinage des coins du radiateur.

103. Haut-parleur en forme de panneau selon la revendication 101 ou la revendication 102, dans lequel le transducteur (9) est monté sur la partie verticale (84) du cadre, ou en position adjacente à celle-ci.

104. Haut-parleur en forme de panneau selon l'une quelconque des revendications 101 à 103, dans lequel le transducteur (9) est monté sur une patte (88) qui fait saillie à partir de la partie verticale.

105. Haut-parleur en forme de panneau selon l'une quelconque des revendications 98 à 104, comprenant une paire équilibrée de transducteurs (9).

106. Haut-parleur en forme de panneau selon l'une quelconque des revendications 98 à 105, dans lequel le radiateur comprend une âme (22) légère séparant une paire de peaux (21) légères et à module élevé.

107. Dispositif acoustique actif selon l'une quelconque des revendications 29 à 85, dans un haut-parleur (81) comprenant une enceinte, l'élément (2) précité à titre de radiateur acoustique dans l'enceinte, une suspension souple (71) montant le radiateur dans l'enceinte pour qu'il accomplisse un mouvement de piston par rapport à celle-ci, les moyens à transducteurs montés entièrement et exclusivement sur le radiateur pour faire en sorte que l'élément vibre et résonne en produisant une émission acoustique à partir du radiateur, et des moyens (11) pour faire varier la pression d'air dans l'enceinte, pour que le radiateur se déplace avec un mouvement de piston.

108. Un haut-parleur selon la revendication 107, dans lequel les moyens de variation de pression (11) comprennent une pompe à air.

109. Un haut-parleur selon la revendication 108, dans lequel la pompe à air comprend une enceinte auxiliaire (185), un excitateur à mouvement de piston (42) monté dans l'enceinte auxiliaire et des moyens (90) couplant les intérieurs des enceintes respectives, de façon que les ondes de pression d'air qui sont produites par le mouvement de l'excitateur à mouvement de piston soient transmises à l'enceinte (8).

110. Un haut-parleur selon la revendication 109, comprenant des moyens absorbants au point de vue acoustique (51) dans l'enceinte (8) et/ou dans l'enceinte auxiliaire.

111. Dispositif acoustique actif selon l'une quelconque des revendications 29 à 85, dans lequel les moyens à transducteur (9) sont un transducteur de vibration inertiel comprenant une structure de bobine motrice (13, 18) ayant une bobine (13) fixée de façon rigide à un élément tubulaire (18), une structure d'aimants (15) disposée de façon concentrique par rapport à la structure de bobine motrice, et des moyens élastiques (19, 136) supportant la structure d'aimants pour lui permettre d'accomplir un mouvement axial par rapport à la structure de bobine motrice, l'élément tubulaire (18) étant adapté pour être monté de façon rigide sur l'élément (2).

112. Dispositif acoustique actif selon la revendication 111, dans lequel l'élément tubulaire (18) est monté directement de façon rigide sur l'élément (2) par des moyens adhésifs (16, 20).

113. Dispositif acoustique actif selon la revendication 111 ou 112, dans lequel les moyens élastiques (19, 136) comprennent des éléments en élastomère mutuellement opposés, disposés sur des côtés opposés de la structure d'aimants.

114. Dispositif acoustique actif selon la revendication 111, 112 ou 113, comprenant des chapeaux (59, 119) fermant les extrémités axiales de l'élément tubulaire (18), les moyens élastiques (19, 136) étant montés sur les chapeaux.

115. Dispositif acoustique actif selon l'une quelconque des revendications 111 à 114, dans lequel la bobine (13) est montée sur la face intérieure de l'élément tubulaire (18).

116. Dispositif acoustique actif selon l'une quelconque des revendications 111 à 115, dans lequel la structure de bobine motrice (13, 18) est adaptée pour être reçue dans une cavité (120) de forme correspondante dans le radiateur (2).

117. Dispositif acoustique actif selon la revendication 114 ou la revendication 115 ou la revendication 116 lorsqu'elles dépendent de la revendication 113, dans lequel les chapeaux (59) comprennent les moyens élastiques (136).

118. Dispositif acoustique actif selon la revendication 117, dans lequel chaque chapeau (59) comprend un pourtour (136) ondulé, souple, de forme annulaire.

**119.** Dispositif acoustique actif selon la revendication 117 ou la revendication 118, comprenant des blindages magnétiques (121) au-dessus des chapeaux (59).

**120.** Dispositif acoustique actif selon l'une quelconque des revendications 111 à 115, dans lequel la structure de bobine motrice (13, 18) est adaptée pour être fixée de façon rigide sur une face du radiateur (2).

**121.** Dispositif acoustique actif selon la revendication 120, dans lequel la structure d'aimants (15) comprend des pièces polaires (14) opposées, ayant une forme générale semblable à un disque, la périphérie de l'une d'elles étant disposée à l'intérieur de la structure de bobine motrice (13, 18), et en position adjacente à cette dernière, et la périphérie de l'autre pièce polaire comportant un rebord (162) qui est disposé de façon à s'étendre en position adjacente à la structure de bobine motrice, et à entourer cette dernière.

**122.** Dispositif acoustique actif selon la revendication 121, dans lequel un élément élastique (17) est intercalé entre l'une des pièces polaires et une face du radiateur.

**123.** Dispositif acoustique actif selon l'une quelconque des revendications 111 à 120, dans lequel la structure d'aimants (15) comprend une paire opposée d'aimants (15) entre lesquels une pièce polaire (14) est intercalée.

**124.** Dispositif acoustique actif selon l'une quelconque des revendications 111 à 123, comprenant des structures d'aimants et des structures de bobine motrice complémentaires sur des faces opposées du radiateur, et des moyens (93) reliant ensemble les structures d'aimants pour un fonctionnement symétrique.

**125.** Dispositif acoustique actif selon l'une quelconque des revendications 29 à 85, dans lequel les moyens à transducteur comprennent un transducteur de vibration inertiel comprenant un vibrateur piézoélectrique (27) à mouvement de flexion, en forme de plaquette, et des moyens adaptés pour monter le vibrateur à mouvement de flexion sur l'élément (2) à exciter en vibration, la disposition étant telle qu'une partie notable du vibrateur (27) à mouvement de flexion est espacée de l'élément (2) pour pouvoir se déplacer par rapport à lui.

**126.** Dispositif acoustique actif selon la revendication 125, dans lequel les moyens de montage (93) du vibrateur à mouvement de flexion sont disposés de façon pratiquement centrale sur le vibrateur (27) à mouvement de flexion en forme de plaquette.

**127.** Dispositif acoustique actif selon la revendication 125 ou la revendication 126, comprenant une masse (25) fixée à la périphérie du vibrateur à mouvement de flexion.

**128.** Dispositif acoustique actif selon la revendication 125, 126 ou 127, dans lequel les moyens de montage (93) consistent en un élément rigide et léger.

**129.** Dispositif acoustique actif selon l'une quelconque des revendications 125 à 128, dans lequel le vibrateur piézoélectrique (27) à mouvement de flexion est de forme cristalline.

**130.** Dispositif acoustique actif selon l'une quelconque des revendications 29 à 85, dans lequel les-moyens à transducteur comprennent un transducteur de vibration (9) pour faire vibrer l'élément sur une face de celui-ci, le transducteur de vibration (9) comprenant une structure de bobine motrice (13, 18) ayant une bobine (18) fixée de façon rigide à un élément tubulaire (18), la structure de bobine motrice étant adaptée pour être fixée sur la face précitée de l'élément (2); et une structure d'aimant (15) ayant des pièces polaires (14) opposées, semblables à des disques, la périphérie de l'une de ces pièces polaires étant disposée à l'intérieur de la structure de bobine motrice, et en position adjacente à celle-ci, et la périphérie de l'autre des pièces polaires comportant un rebord entourant (90) adapté pour entourer la structure de bobine motrice et pour être disposé en position adjacente à cette dernière, la structure d'aimant (15) étant adaptée pour être fixée en son centre pour exciter l'élément (2).

**131.** Dispositif acoustique actif selon la revendication 130, comprenant des moyens de fixation (93) pour fixer la structure d'aimant (15) à l'élément (2).

**132.** Dispositif acoustique actif selon la revendication 131, dans lequel les moyens de fixation (93) comprennent un organe de fixation (91, 92) adapté pour pénétrer dans une cavité (29) dans l'élément (2).

**133.** Dispositif acoustique actif selon la revendication 132, dans lequel l'organe de fixation (91, 92) comprend une entretoise (127) pour écarter les périphéries des pièces polaires (14) par rapport à l'élément (2).

**134.** Dispositif acoustique actif selon l'une quelconque des revendications 130 à 133, comprenant des structures de bobine motrice (13, 18) et des structures d'aimant (15) complémentaires, adaptées pour être montées sur des faces opposées de l'élément (2), et des moyens (93) reliant ensemble les centres des structures d'aimant (15), pour un fonctionnement symétrique.

**135.** Dispositif acoustique actif selon la revendication 134, dans lequel l'organe de fixation (91, 92) a des têtes (95) à des extrémités opposées, et il est adapté pour venir en contact avec les structures d'aimant respectives, l'organe de fixation (91, 92) comprenant une paire de parties filetées (94, 96) s'engageant l'une dans l'autre, et des moyens d'espacement (19) adaptés pour être disposés de façon adjacente à l'organe de fixation et adaptés pour être intercalés entre les structures d'aimant respectives et les faces en regard de l'élément (2).

**136.** Dispositif acoustique actif selon l'une quelconque des revendications 111 à 135 ayant la forme d'un haut-parleur.

**137.** Un haut-parleur en forme de panneau (81) comprenant un dispositif acoustique selon l'une quelconque des revendications 29 à 85, l'élément précité étant un radiateur acoustique résonnant et les moyens à transducteur comprenant des premier et second transducteurs couplés au radiateur à des positions espacées, chacun d'eux étant destiné à faire résonner l'élément et à produire une émission acoustique à partir du radiateur.

**138.** Haut-parleur en forme de panneau selon la revendication 137, dans lequel les premier et second transducteurs (9) sont adaptés pour fonctionner dans différentes gammes de fréquences.

**139.** Haut-parleur en forme de panneau selon la revendication 137 ou 138, dans lequel les premier et second transducteurs (9) sont montés entièrement et exclusivement sur le radiateur.

**140.** Haut-parleur en forme de panneau selon la revendication 137, 138 ou 139, dans lequel l'un des transducteurs est électromagnétique.

**141.** Haut-parleur en forme de panneau selon l'une quelconque des revendications 137 à 140, dans lequel l'un des transducteurs est piézoélectrique.

**142.** Dispositif acoustique actif selon l'une quelconque des revendications 29 à 85, consistant en un haut-parleur en forme de panneau, comprenant des premier et second éléments précités, chacun d'eux étant respectivement associé à des premiers et seconds moyens à transducteur, qui leur sont respectivement couplés pour faire en sorte que leur élément associé vibre et résonne en produisant une émission acoustique.

**143.** Haut-parleur en forme de panneau selon l'une quelconque des revendications 137 à 141, comprenant un second élément (4) ayant également des moyens à transducteur (9) associés pour faire en sorte qu'il vibre et résonne en produisant une émission acoustique, le second élément (4) étant monté sur ou dans le premier élément (2); et une suspension élastique (3) couplant les premier et second éléments (2, 4).

**144.** Haut-parleur en forme de panneau selon la revendication 143, dans lequel le second élément (4) est monté dans une ouverture (82) dans le premier élément (2).

**145.** Haut-parleur en forme de panneau selon la revendication 143 ou la revendication 144, dans lequel le second transducteur est monté entièrement et exclusivement sur le second élément (4).

**146.** Un haut-parleur et microphone combiné en forme de panneau, comprenant un dispositif acoustique selon l'une quelconque des revendications 29 à 85, l'élément étant un radiateur acoustique résonnant lorsqu'il est excité en vibration par un premier transducteur des moyens à transducteur, le radiateur ayant un second transducteur qui lui est couplé pour produire un signal de sortie en réponse à la résonance du radiateur sous l'effet d'énergie acoustique incidente.

**147.** Haut-parleur et microphone combiné en forme de panneau selon la revendication 146, dans lequel les premier et second transducteurs (9, 63) sont montés entièrement et exclusivement sur le radiateur.

**148.** Haut-parleur et microphone combiné en forme de panneau selon la revendication 146 ou la revendication 147, comprenant au moins deux des seconds transducteurs (63).

**149.** Haut-parleur et microphone combiné en forme de panneau selon la revendication 148, comprenant un transducteur supplémentaire (63) associé au radiateur pour produire un signal en réponse à la résonance du radiateur sous l'effet d'énergie acoustique incidente, et des moyens (64, 65) pour comparer le signal qui est produit par le transducteur supplémentaire avec ceux qui sont produits par le ou les seconds transducteurs.

**150.** Haut-parleur et microphone combiné en forme de panneau selon la revendication 149, dans lequel les moyens de comparaison comprennent un récepteur et conditionneur de signal (65) et des moyens de sortie de signal (66).

**151.** Un microphone en forme de panneau comprenant un dispositif acoustique selon l'une quelconque des revendications 29 à 85, l'élément précité étant un élément excité de façon acoustique et les moyens à transducteur étant couplés entièrement et exclusivement à l'élément pour produire un signal en réponse à la résonance de l'élément sous l'effet d'énergie acoustique incidente.

152. Microphone en forme de panneau selon la revendication 151, comprenant au moins deux des transducteurs (9, 63) à différents emplacements sur l'élément.

153. Microphone en forme de panneau selon la revendication 151 ou la revendication 152, dans lequel le ou chaque transducteur (9, 63) est un dispositif piézoélectrique.

154. Dispositif acoustique actif ou haut-parleur en forme de panneau et/ou microphone en forme de panneau selon l'une quelconque des revendications 137 à 153, comprenant un cadre (1) supportant le radiateur (2), et une suspension élastique (3) par laquelle le radiateur est fixé au cadre.

155. Dispositif acoustique actif ou haut-parleur en forme de panneau et/ou microphone en forme de panneau selon la revendication 154, dans lequel le cadre (1) entoure le radiateur, et la suspension est fixée au bord du radiateur.

156. Une dalle de plafond suspendu (36) comprenant un dispositif acoustique selon l'une quelconque des revendications 29 à 85, en tant que radiateur acoustique ou haut-parleur en forme de panneau, dans laquelle les moyens à transducteur (9) sont montés entièrement et exclusivement sur l'élément, pour exciter cet élément en vibration et pour le faire vibrer et résonner en produisant une émission acoustique.

157. Une dalle de plafond suspendu selon la revendication 156, dans laquelle l'élément (2) comprend une âme cellulaire (22) intercalée entre des peaux (21) à module élevé.

158. Dalle de plafond suspendu selon la revendication 157, dans laquelle l'âme cellulaire (22) est en matière plastique moussée (97).

159. Dalle de plafond suspendu selon la revendication 156, 157 ou 158, comprenant une suspension élastique (3) disposée à la périphérie du radiateur (2) pour supporter le radiateur dans un châssis (99) de plafond suspendu.

160. Dalle de plafond suspendu selon l'une quelconque des revendications 156 à 159, dans laquelle le transducteur (9) est un transducteur de vibration inertiel.

161. Un appareil de présentation visuelle comprenant un dispositif acoustique ou un haut-parleur en forme de panneau et/ou un microphone en forme de panneau selon l'une quelconque des revendications 29 à 85, 154 ou 155, l'élément précité étant l'appareil de présentation visuelle comprenant un tableau du genre tableau d'affichage (48) sur lequel des annonces ou autres peuvent être fixées, par exemple avec des punaises, et les moyens à transducteur (9) montés entièrement et exclusivement sur l'élément (2) pour le faire vibrer et résonner en formant un radiateur acoustique qui produit une émission acoustique lorsqu'il résonne.

162. Appareil de présentation visuelle selon la revendication 161 en combinaison avec la revendication 158, dans lequel le cadre (1) comporte une lèvre en retour (4) qui cache la suspension (3).

163. Appareil de présentation visuelle selon la revendication 161, dans lequel le radiateur (2) a une âme cellulaire (22) intercalée entre des couches de peau (21) en papier.

164. Appareil de présentation visuelle selon la revendication 163, dans lequel l'âme (22) est une structure du type nid d'abeilles en papier.

165. Appareil de présentation visuelle selon l'une quelconque des revendications 161 à 164, dans lequel le transducteur (9) est un vibrateur piézoélectrique à mouvement de flexion.

166. Ecran de visualisation comprenant un dispositif acoustique ou un haut-parleur en forme de panneau et/ou un microphone en forme de panneau selon l'une quelconque des revendications 29 à 85, 154 ou 155, avec l'élément précité à titre de surface réfléchissante ou émettant de la lumière, et les moyens à transducteur (9) montés entièrement et exclusivement sur l'élément pour le faire vibrer et résonner comme un radiateur acoustique produisant une émission acoustique lorsqu'il résonne.

167. Ecran de visualisation selon la revendication 166, dans lequel l'élément (2) a une structure légère et rigide ayant une âme cellulaire (22) en feuille d'aluminium à structure en nid d'abeilles intercalée entre une paire de peaux (21) à module élevé.

168. Ecran de visualisation selon la revendication 167, dans lequel les peaux (21) sont en matière plastique renforcée par des fibres.

169. Ecran de visualisation selon l'une quelconque des revendications 166 à 168, rattachées à la revendication 153, comprenant des haut-parleurs en forme de panneau (114) fixés sur des côtés opposés du cadre (1) pour fournir de l'information de canal gauche et de canal droit.

**170.** Ecran de visualisation selon la revendication 169, dans lequel les haut-parleurs (114) gauche et droit sont articulés sur le cadre (1) pour pouvoir être repliés contre le radiateur (2) pour le rangement.

**171.** Ecran de visualisation selon la revendication 169 ou la revendication 170, dans lequel chacun des haut-parleurs (114) gauche et droit est un dispositif acoustique actif selon l'une quelconque des revendications 29 à 85.

**172.** Ecran de visualisation selon l'une quelconque des revendications 166 à 171, dans lequel le panneau (2) est un écran de projection.

**173.** Un appareil audiovisuel comprenant, à titre de composant, un écran de visualisation selon la revendication 169.

**174.** Appareil audiovisuel selon la revendication 173, comprenant en outre au moins un haut-parleur de voie arrière (117) comprenant un dispositif acoustique actif selon l'une quelconque des revendications 29 à 85, 157 ou 158.

**175.** Emballage comprenant un dispositif acoustique selon la revendication 29 avec l'élément précité à titre de panneau faisant partie de l'emballage, avec un transducteur des moyens à transducteur (9) monté entièrement et exclusivement sur l'élément pour le faire vibrer et résonner à la manière d'un radiateur acoustique produisant une émission acoustique lorsqu'il résonne.

**176.** Emballage selon la revendication 175, dans lequel l'élément (2) comprend une âme cellulaire (22) en matière plastique sous forme de mousse intercalée entre des couches de peau (21) comprenant des feuilles de papier kraft (21).

**177.** Emballage selon la revendication 175 ou 176, dans lequel le transducteur (19) est un vibrateur piézoélectrique à mouvement de flexion.

**178.** Emballage selon la revendication 177, dans lequel le vibrateur piézoélectrique (9) à mouvement de flexion est cristallin.

**179.** Emballage selon l'une quelconque des revendications 175 à 178, dans lequel l'élément (2) forme un côté d'une boîte (111).

**180.** Emballage selon la revendication 179, dans lequel la boîte (111) a un couvercle (139), et des moyens (53) associés au couvercle pour déclencher l'actionnement du transducteur (9) sous l'effet du mouvement du couvercle par rapport à la boîte.

**181.** Emballage selon la revendication 180, comprenant un générateur de signal, un amplificateur et une pile électrique (112) pour exciter le transducteur.

**182.** Carte de voeux (144) ou de type similaire comprenant un dispositif acoustique actif selon l'une quelconque des revendications 29 à 85, dans laquelle l'élément (2) est un panneau formant au moins une partie de la carte, et les moyens à transducteur (9) comprennent un transducteur monté entièrement et exclusivement sur le panneau pour le faire vibrer et résonner comme un résonateur acoustique produisant une émission acoustique lorsqu'il résonne.

**183.** Carte de voeux ou de type similaire selon la revendication 182, dans laquelle l'élément (2) a une âme cellulaire (22) en matière plastique sous forme de mousse intercalée entre des couches de peau (21) comprenant de feuilles de papier kraft (21).

**184.** Carte de voeux ou de type similaire selon la revendication 182 ou la revendication 183, dans laquelle le transducteur (9) est un vibrateur piézoélectrique à mouvement de flexion.

**185.** Carte de voeux ou de type similaire selon la revendication 184, dans laquelle le vibrateur (9) à mouvement de flexion est cristallin.

**186.** Carte de voeux ou de type similaire selon l'une quelconque des revendications 182 à 185, comprenant une paire de feuilles (145, 146), et des moyens (53) associés aux feuilles pour déclencher l'actionnement du transducteur (9) sous l'effet du mouvement d'une feuille par rapport à l'autre feuille.

**187.** Carte de voeux ou de type similaire selon la revendication 186, comprenant un générateur de signal, un amplificateur et une pile électrique (112) sur une feuille de la carte pour exciter le transducteur.

**188.** Carte de voeux ou de type similaire selon l'une quelconque des revendications 182 à 187, dans laquelle l'élément (2) est adapté pour être imprimé.

**189.** Dispositif ou appareil hôte comprenant, à titre de composant, un dispositif acoustique selon l'une quelconque des revendications 29 à 85, 154 ou 155.

**190.** Dispositif ou appareil hôte selon la revendication 189, dans lequel le composant est intégré à une partie du dispositif ou de l'appareil hôte.

**191.** Dispositif ou appareil hôte selon la revendication 190, dans lequel l'élément (2) comprend une âme cellulaire (22) intercalée entre des couches de peau (21), l'une de ces couches de peau étant intégrée à la partie précitée du dispositif ou de l'appareil hôte.

**192.** Dispositif ou appareil hôte selon la revendication 191, dans lequel la couche de peau (21) précitée est plus mince que l'épaisseur moyenne de la partie précitée du dispositif ou de l'appareil hôte.

**193.** Dispositif ou appareil hôte selon la revendication 192, dans lequel la partie précitée du dispositif ou de l'appareil hôte comporte une rainure (100) formée dans son épaisseur et entourant l'élément (2), pour définir une suspension élastique (3) couplant le dispositif acoustique actif à la partie précitée du dispositif ou de l'appareil hôte.

**194.** Dispositif ou appareil hôte selon l'une quelconque des revendications 190 à 193, dans lequel la partie précitée du dispositif ou de l'appareil hôte est une paroi externe.

**195.** Unité de visualisation comprenant un dispositif acoustique selon l'une quelconque des revendications 29 à 85, à titre de haut-parleur incorporé à l'intérieur, et ayant également un écran de visualisation (37) dans le coffret (101), les moyens à transducteur (9) étant montés entièrement et exclusivement sur l'élément (2) pour le faire vibrer et résonner comme un radiateur acoustique produisant une émission acoustique lorsqu'il résonne.

**196.** Unité de visualisation selon la revendication 195, dans laquelle l'unité de visualisation est un appareil hôte selon la revendication 188, et le coffret est la partie précitée conforme à l'une quelconque des revendications 190 à 194.

**197.** Ordinateur portable comprenant, en tant que haut-parleurs, un ou plusieurs dispositifs acoustiques, ce dispositif ou chacun d'eux étant conforme à l'une quelconque des revendications 29 à 85, 144 ou 155, et comprenant un clavier et un écran de visualisation, dans lequel le haut-parleur ou chacun d'eux comprend un élément précité (2) avec les moyens à transducteur (9) montés entièrement et exclusivement sur lui pour le faire vibrer et résonner comme un radiateur acoustique produisant une émission acoustique lorsqu'il résonne.

**198.** Ordinateur portable (128) selon la revendication 197, dans lequel un élément précité (2) constitue l'écran de visualisation.

**199.** Ordinateur portable (128) selon la revendication 197 ou 198, dans lequel l'élément (2) de chaque haut-parleur d'une paire opposée de haut-parleurs en forme de panneau (39, 40), est fixé à l'ordinateur.

**200.** Ordinateur portable selon la revendication 199, dans lequel les haut-parleurs de la paire opposée de haut-parleurs en forme de panneau (39, 40) sont montés sur l'écran de visualisation (129).

**201.** Ordinateur portable selon la revendication 200, dans lequel les haut-parleurs de la paire opposée de haut-parleurs en forme de panneau (40) sont articulés sur l'écran de visualisation (129).

**202.** Ordinateur portable selon la revendication 200, dans lequel l'écran de visualisation (129) comprend un boîtier (130) et chacun des haut-parleurs (39) est logé dans une fente dans le boîtier (130) de l'écran de visualisation, pour accomplir un mouvement coulissant entre une position de rangement, dans laquelle les haut-parleurs sont pratiquement entièrement logés dans la fente, et une position d'utilisation dans laquelle les haut-parleurs sont placés sur des côtés opposés de l'écran de visualisation.

**203.** Un lecteur de disques compacts portable comprenant des dispositifs acoustiques selon l'une quelconque des revendications 29 à 85, 154 ou 155, sous la forme d'une paire opposée de haut-parleurs en forme de panneau qui sont fixés au lecteur, chaque haut-parleur comprenant un élément précité (2) avec des moyens à transducteur (9) montés entièrement et exclusivement sur l'élément (2) pour le faire vibrer et résonner comme un radiateur acoustique produisant une émission acoustique lorsqu'il résonne.

**204.** Lecteur de disques compacts portable selon la revendication 203, comprenant une partie de corps (85) ayant un plateau tournant (86) et un couvercle (139) adapté pour se fermer sur le plateau tournant, dans lequel les haut-parleurs (81) sont montés sur le couvercle.

**205.** Lecteur de disques compacts portable selon la revendication 204, dans lequel les haut-parleurs (81) sont articulés sur le couvercle.

**206.** Lecteur de disques compacts portable selon la revendication 204, dans lequel chacun des haut-parleur (81) est logé dans une fente dans le couvercle (139), pour accomplir un mouvement coulissant entre une position de rangement, dans laquelle les haut-parleurs sont pratiquement entièrement logés dans la fente, et une position d'utilisation dans laquelle les haut-parleurs sont placés sur des côtés opposés du couvercle.

**207.**Dispositif acoustique actif l'une quelconque des revendications 29 à 85, 154 ou 157, ce dispositif étant un composant de véhicule sous la forme d'un haut-parleur (81), l'élément précité (2) comportant les moyens à transducteur (9) associés, pour le faire vibrer et résonner comme un radiateur acoustique produisant une émission acoustique lorsqu'il résonne.

**208.**Un véhicule ayant un compartiment de passagers qui est un dispositif ou un appareil hôte selon la revendication 189, dans lequel le composant est dans le compartiment de passagers.

**209.**Véhicule selon la revendication 208, dans lequel le dispositif hôte est conforme à l'une quelconque des revendications 190 à 194.

**210.**Véhicule selon la revendication 209, dans lequel le composant concerné est un siège de passager (103).

**211.**Véhicule selon la revendication 209, dans lequel le composant concerné est une garniture (104) d'une portière (140).

**212.**Un instrument de musique électronique ayant un clavier (140) et un dispositif acoustique selon l'une quelconque des revendications 29 à 85, 154 ou 155, à titre de haut-parleur, le haut-parleur comprenant un élément précité ayant une structure légère et rigide, et les moyens à transducteur (9) sont montés entièrement et exclusivement sur l'élément (2) pour le faire vibrer et résonner comme un radiateur acoustique produisant une émission acoustique lorsqu'il résonne.

**213.**Un instrument de musique électronique (137) ayant un clavier (140), qui est un dispositif ou un appareil hôte selon la revendication 189, le composant étant un haut-parleur (81).

**214.**Instrument de musique électronique selon la revendication 212 ou la revendication 213, comprenant un corps (137) ayant une base, et des pieds (139) supportant le corps au-dessus du sol, dans lequel l'élément (2) est placé à la base du corps.

**215.**Instrument de musique électronique selon la revendication 214, dans lequel le haut-parleur (81) est positionné avec l'élément (2) pratiquement vertical.

**216.**Instrument de musique électronique selon la revendication 215 combinée à la revendication 154, dans lequel le cadre forme un support sur le sol pour l'instrument.

**217.**Un distributeur automatique du genre comprenant un magasin d'articles ou de produit à distribuer, comprenant en tant que haut-parleur un dispositif acoustique selon l'une quelconque des revendications 29 à 85, 154 ou 155, et des moyens actionnés par un utilisateur pour sélectionner l'article ou le produit à distribuer, des moyens, par exemple un mécanisme libéré par une pièce de monnaie, autorisant la distribution, et un orifice de distribution, le haut-parleur comprenant un élément (2) précité avec un transducteur des moyens à transducteur (9) monté entièrement et exclusivement sur l'élément pour le faire vibrer et résonner comme un radiateur acoustique produisant une émission acoustique lorsqu'il résonne.

**218.**Un distributeur automatique du genre comprenant un magasin d'articles ou de produit à distribuer, qui est un dispositif ou un appareil hôte selon la revendication 189, comprenant des moyens actionnés par un utilisateur (137) pour sélectionner l'article ou le produit à distribuer, des moyens (143), par exemple un mécanisme libéré par une pièce de monnaie, autorisant la distribution, un orifice de distribution (142) et un haut-parleur (81), et dans lequel le composant est un haut-parleur ou un microphone, ou un haut-parleur et microphone combiné.

**219.**Distributeur automatique selon la revendication 217 ou 218, dans lequel l'élément ou composant (2) forme un moyen de visualisation.

**220.**Distributeur automatique selon la revendication 217, 218 ou 219, en combinaison avec la revendication 154, comprenant un bâti (108), et le cadre (1) est placé sur le bâti ou est intégré à ce dernier.

**221.**Distributeur automatique selon l'une quelconque des revendications 217 à 220, comprenant des seconds moyens à transducteur (3) couplés au radiateur (12) pour effectuer une action de microphone en produisant un signal en réponse à la résonance du radiateur sous l'effet d'énergie acoustique incidente.

**222.**Distributeur automatique selon la revendication 221, dans lequel les seconds moyens à transducteur sont conformes à la revendication 148, 149 ou 150.

*Fig. 1*

Fig. 2a

Fig. 2b

Fig.3a

Fig.3b

Fig.3c

Fig.3d

*Fig.4*

Fig.5a

Fig.5b

Fig.6a

Fig.6b

*Fig. 7a*

*Fig. 7b*

*Fig. 7c*

*Fig. 8*

Fig. 9

Fig.10

*Fig.11a*

*Fig.11b*

*Fig.11c*

*Fig.12*

Fig.13

Fig.14

*Fig.15*

*Fig. 16*

Fig.17

*Fig.18*

*Fig.19*

Fig.20

Fig.21

Fig. 22

Fig. 23

Fig.24

*Fig.25a*

*Fig.25b*

Fig.27

Fig. 28

Fig.29

Fig.30

*Fig. 31*

*Fig. 32*

*Fig. 33*

Fig.34

Fig. 35

Fig.36

Fig. 37

Fig.38

Fig.39

Fig.40

Fig. 41

Fig. 42

Fig.43

Fig.44

Fig.45

Fig.46

143

81

9

2

137

142

108

109

*Fig.47*

1

21

22

9

3

81

*Fig.48*

Fig. 49

Fig.50

Fig.51

Fig.52

Fig.53

*Fig.54*

*Fig.55*

*Fig.56*

*Fig.57*

Fig.58

Fig.59a

Fig.59b

Fig.59c

Fig.59d

Fig.60a

Fig.60b

Fig.60c

Fig.60d

*Fig.61a*

*Fig.61b*

*Fig.61c*

Fig.62

Fig.63

48
44
45

Fig.64

22
28
21
9
122

Fig.67a

22
122
28
9
21
123
125
124
2

Fig.67b

Fig.65

*Fig.66a*

*Fig.66b*